# EUROPEAN PATENT APPLICATION

(11) **EP 4 141 484 A1**
(43) Date of publication of application: **01.03.2023**
(21) Application number: 21792089.1
(22) Date of filing: 09.02.2021
(51) Int. Cl.: G01S 13/87, H04W 72/02

(54) **COMMUNICATION DEVICE AND SENSING METHOD**

(30) Priority: 24.04.2020 JP 2020077688
(71) Applicant: Panasonic Intellectual Property Corporation of America, Torrance, CA 90504 (US)
(72) Inventor: MURAKAMI, Yutaka, Osaka-shi, Osaka 540-6207 (JP)
(74) Representative: Grünecker Patent- und Rechtsanwälte PartG mbB
(86) International application number: PCT/JP2021/004752
(87) International publication number: WO 2021/215080

(57) **Abstract**

A communication device according to the present invention comprising: a transmission unit that transmits request information requesting sensing of a target; a reception unit that receives result information indicating a sensing result, from a first communication device that has sensed the target according to the request information; and a control unit that determines a state of the target on the basis of the sensing result indicated in the result information and a sensing result of the target that has been sensed by the communication device.

## Description

### Technical Field

The present disclosure relates to a communication apparatus and a sensing method.

### Background Art

Non-Patent Literatures (hereinafter, each referred to as "NPL") 1 and 2 disclose that a pulse signal is used for sensing of an object. NPL 3 discloses sensing of an object based on a frequency modulated continuous wave (FMCW) scheme and a phase modulated continuous wave (PMCW) scheme. Further, NPL 4 discloses that an orthogonal frequency division multiplexing (OFDM) signal is used for sensing of an object.

### Citation List

### Non-Patent Literature

NPL 1
   S. Schuster, S. Scheiblhofer, R. Feger, and A. Stelzer, "Signal model and statistical analysis for the sequential sampling pulse radar technique," in Proc. IEEE Radar Conf, 2008, pp. 1-6, 2008
NPL 2
   D. Cao, T. Li, P. Kang, H. Liu, S. Zhou, H. Su, "Single-Pulse Multi-Beams Operation of Phased Array Radar", 2016 CIE International Conference on Radar (RADAR), pp. 1-4, 2016
NPL 3
   A. Bourdoux, K. Parashar, and M. Bauduin, "Phenomenology of mutual interference of FMCW and PMCW automotive radars," in 2017 IEEE Radar Conference (Radar Conf.), pp. 1709-1714, 2017
NPL 4
   J. Fink, F. K. Jondral, "Comparison of OFDM radar and chirp sequence radar," in 2015 16th International Radar Symposium (IRS), pp. 315-320, 2015

### Summary of Invention

The 5th Generation Mobile Communication System has been discussing position estimation, and the Institute of Electrical and Electronics Engineers (IEEE) has been discussing sensing of an object in a wireless local area network (LAN).

However, a method for performing position estimation and specific specifications for performing sensing of an object have not been developed.

One non-limiting and exemplary embodiment facilitates providing a communication apparatus, which performs sensing of an object, and a sensing method.

### Solution to Problem

A communication apparatus according to an exemplary embodiment of the present disclosure is a communication apparatus including: a transmitter that transmits request information for requesting sensing of a target; a receiver that receives result information indicating a sensing result from a first communication apparatus in which the sensing of the target has been performed in accordance with the request information; and a controller that determines a state of the target based on the sensing result indicated in the result information and a sensing result of sensing of the target that has been performed in the communication apparatus.

A sensing method according to an exemplary embodiment of the present disclosure is a sensing method in a communication apparatus and includes: transmitting request information for requesting sensing of a target; receiving result information indicating a sensing result from a first communication apparatus in which the sensing of the target has been performed in accordance with the request information; and determining a state of the target based on the sensing result indicated in the result information and a sensing result of sensing of the target that has been performed in the communication apparatus.

It should be noted that general or specific embodiments may be implemented as a system, a method, an integrated circuit, a computer program, a storage medium, or any selective combination thereof.

According to an exemplary embodiment of the present disclosure, the communication apparatus is capable of performing sensing of an object.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an example of a configuration of an apparatus that performs sensing;
FIG. 2 illustrates an example of a configuration of an apparatus that performs sensing;
FIG. 3 illustrates an example of a configuration of an apparatus that performs communication and sensing;
FIG. 4 illustrates an example of a communication system;
FIG. 5 illustrates a configuration example of a frame for data transmission;
FIG. 6A illustrates a configuration example of a frame for sensing;
FIG. 6B illustrates a configuration example of a frame for sensing;
FIG. 7 illustrates an example of a frame state in a time axis of a certain frequency band;
FIG. 8 illustrates another example of a frame state in a time axis of a certain frequency band;
FIG. 9 illustrates a time-frequency example of signals transmitted by a base station;
FIG. 10 illustrates a time-frequency example of signals transmitted by terminals;
FIG. 11 illustrates a system configuration example provided for describing an example of triangulation;
FIG. 12 illustrates a system configuration example;
FIG. 13 is a diagram provided for describing an example of information on sensing capability;
FIG. 14 illustrates a procedure example for sensing in the system example in FIG. 12;
FIG. 15A is a diagram provided for describing an acquisition example of distance information;
FIG. 15B is a diagram provided for describing an acquisition example of distance information;
FIG. 15C is a diagram provided for describing an acquisition example of distance information;
FIG. 15D is a diagram provided for describing an acquisition example of distance information;
FIG. 15E is a diagram provided for describing an acquisition example of distance information;
FIG. 15F is a diagram provided for describing an acquisition example of distance information;
FIG. 16 illustrates another procedure example for sensing;
FIG. 17 is a diagram provided for describing an example of base station selection;
FIG. 18 illustrates a system configuration example;
FIG. 19 illustrates a procedure example for sensing in the system example in FIG. 18;
FIG. 20 illustrates another procedure example for sensing in the system example in FIG. 18;
FIG. 21A illustrates a configuration example of an apparatus and a base station;
FIG. 21B illustrates a configuration example of an apparatus and a base station;
FIG. 22 illustrates an exemplary state when an apparatus and a base station are performing a sensing operation;
FIG. 23A illustrates a system configuration example;
FIG. 23B illustrates a procedure example for sensing;
FIG. 24 illustrates an example of a configuration of the apparatus (base station) in FIGS. 12 and 23A;
FIG. 25 illustrates a transmission antenna-related configuration example;
FIG. 26 illustrates an example of a frame of a signal for sensing;
FIG. 27 illustrates an example of a configuration of a signal for sensing;
FIG. 28 illustrates an example of a configuration of a signal for sensing;
FIG. 29 illustrates a system configuration example;
FIG. 30 is a diagram provided for describing an example of information on sensing capability;
FIG. 31 illustrates a procedure example for sensing in the system example in FIG. 29;
FIG. 32A is a diagram provided for describing an acquisition example of distance information;
FIG. 32B is a diagram provided for describing an acquisition example of distance information;
FIG. 32C is a diagram provided for describing an acquisition example of distance information;
FIG. 32D is a diagram provided for describing an acquisition example of distance information;
FIG. 32E is a diagram provided for describing an acquisition example of distance information;
FIG. 32F is a diagram provided for describing an acquisition example of distance information;
FIG. 32G is a diagram provided for describing an acquisition example of distance information;
FIG. 32H is a diagram provided for describing an acquisition example of distance information;
FIG. 33 illustrates another procedure example for sensing;
FIG. 34 illustrates yet another procedure example for sensing;
FIG. 35 illustrates still another procedure example for sensing;
FIG. 36 illustrates a system configuration example;
FIG. 37 illustrates a procedure example for sensing in the system example in FIG. 36;
FIG. 38 illustrates another procedure example for sensing;
FIG. 39 illustrates yet another procedure example for sensing;
FIG. 40 illustrates still another procedure example for sensing;
FIG. 41 illustrates exemplary transmission frames;
FIG. 42 illustrates exemplary transmission frames;
FIG. 43 illustrates exemplary transmission frames;
FIG. 44 illustrates exemplary transmission frames;
FIG. 45 illustrates exemplary transmission frames;
FIG. 46 illustrates exemplary transmission frames;
FIG. 47 illustrates exemplary transmission frames;
FIG. 48 illustrates exemplary transmission frames;
FIG. 49 illustrates exemplary transmission frames;
FIG. 50 illustrates exemplary transmission frames;
FIG. 51 illustrates a system configuration example;
FIG. 52 illustrates a system configuration example;
FIG. 53 illustrates a system configuration example;
FIG. 54 illustrates a system configuration example;
FIG. 55A illustrates an operation example when apparatuses and a base station perform sensing;
FIG. 55B illustrates an operation example when the apparatuses and the base station perform sensing;
FIG. 56A illustrates an operation example when the apparatuses and the base station perform sensing;
FIG. 56B illustrates an operation example when the apparatuses and the base station perform sensing;
FIG. 57 illustrates a system configuration example;
FIG. 58 illustrates a system configuration example;
FIG. 59 illustrates a system configuration example;
FIG. 60A illustrates an operation example when apparatuses and a base station perform sensing;
FIG. 60B illustrates an operation example when the apparatuses and the base station perform sensing;
FIG. 61A illustrates an operation example when the apparatuses and the base station perform sensing; and
FIG. 61B illustrates an operation example when the apparatus and the base station perform sensing.

### Description of Embodiments

Hereinafter, embodiments of the present disclosure will be described in detail with reference to the accompanying drawings. However, a detailed description more than necessary may be omitted, such as a detailed description of an already well-known matter and a duplicate description for a substantially identical configuration, to avoid unnecessary redundancy of the following description and to facilitate understanding by the person skilled in the art.

Note that, the accompanying drawings and the following description are provided for the person skilled in the art to sufficiently understand the present disclosure, and are not intended to limit the subject matter described in the claims.

Hereinafter, sensing may include estimation of the position of an object, detection of an object, grasping the outer shape of an object, estimation of movement of an object, and estimation of a gesture of an object. An object to be subjected to sensing may also be referred to as a target object. Further, living things such as humans and animals also become objects to be subjected to sensing. As a matter of course, objects to be subjected to sensing may not be living things.

The main purpose of estimation of the position of an object is to estimate a position of an object. Estimation of the position of an object may include estimating both detection of an object and movement of the object. The position of an object may be estimated by means of triangulation using a radio wave, light, an ultrasound wave, or the like. Movement of an object may be detected by using a Doppler frequency. Further, estimation of a gesture of an object may also be performed. Note that, the above description is an example, and the present disclosure is not limited thereto.

The main purpose of detection of an object is to detect an object. Detection of an object may include specifying an object. An object may be detected by using detection of reflection of a radio wave, light, an ultrasound wave, or the like, and/or detection of a reflected wave. Detection of an object may or may not include estimation of the position of an object. Note that, the above description is an example, and the present disclosure is not limited thereto.

The main purpose of grasping the outer shape of an object is to detect the outer shape of an object. Grasping the outer shape of an object may include, for example, specifying an object. Further, grasping the outer shape of an object may also include, for example, a change or movement of the outer shape of an object. The outer shape of an object may be grasped by using a pulsed spread spectrum signal, and/or a signal with a certain band. Grasping the outer shape of an object may or may not include estimation of the position of an object. Further, estimation of a gesture of an object may also be performed. Note that, the above description is an example, and the present disclosure is not limited thereto.

Estimation of the position of an object, detection of an object, grasping the outer shape of an object, estimation of movement of an object, and estimation of a gesture of an object may also be referred to as estimation of the state of an object. In other words, the state of an object may include at least one of the position of the object, detection (presence or absence) of the object, the outer shape of the object, movement of the object, and/or a gesture of the object. Further, the gesture of the object may also be included in the movement of the object.

In the present disclosure, the terminal may have a communication function. The terminal may also have a function of sensing of an object. The terminal may also have a communication function and a function of sensing of an object. The AP or the base station may or may not have a function of sensing of an object. The AP or the base station has at least a function of communicating with the terminal. The terminal may also be referred to as an apparatus or a communication apparatus.

### (Embodiment 1)

First, configurations of an apparatus related to the present disclosure that performs sensing and an apparatus related to the present disclosure that performs communication and sensing, or the like will be described. Note that, the sensing method in an apparatus having a sensing function (capability), such as an apparatus that perform sensing and an apparatus that performs communication and sensing, may be any scheme of methods described herein, for example.

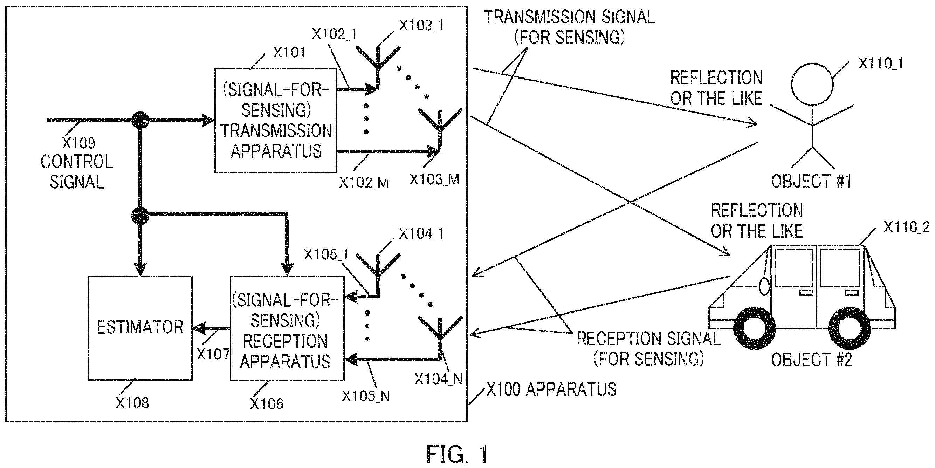

FIG. 1 illustrates an example of a configuration of apparatus X100 that performs sensing by transmitting a signal for sensing and receiving the signal for sensing that has reflected off an object around apparatus X100 and has returned. Apparatus X100 performs sensing of an object by transmitting a signal for sensing and receiving the signal for sensing that has reflected off an object around apparatus X100 and has returned.

Transmission apparatus X101 generates transmission signals X102_1 to X102_M. Transmission signals X102_1 to X102_M are signals for sensing. Transmission apparatus X101 transmits transmission signals X102_1 to X102_M, which have been generated, from antennas X103_1 to X103_M, respectively. Here, the number of antennas used for transmission is M, where M is an integer larger than or equal to 1 or an integer larger than or equal to 2.

For example, transmission apparatus X101 may generate transmission signals X102_1 to X102_M by multiplying the same sensing signal by coefficients determined for each antenna, and transmit transmission signals X102_1 to X102_M from antennas X103_1 to X103_M to perform directivity control for the sensing signal. Further, for example, transmission apparatus X101 may generate transmission signals X102_1 to X102_M by multiplying a plurality of sensing signals by coefficients determined for each sensing signal and each antenna, respectively, and combining the resulting plurality of sensing signals, and transmit transmission signals X102_1 to X102_M from antennas X103_1 to X103_M. Thus, it is possible to perform directivity control for each sensing signal.

The coefficients determined for each antenna or the coefficients determined for each sensing signal and each antenna are expressed as complex numbers or real numbers. The amplitudes and/or phases of sensing signals transmitted from each antenna vary depending on the values of the coefficients. However, the coefficients may be one. In this case, a sensing signal generated by transmission apparatus X 101 is transmitted as it is from an antenna for which the coefficient value is one.

Note that, transmission apparatus X101 may also transmit a transmission signal without performing directivity control. For example, transmission apparatus X101 may output a plurality of sensing signals as they are as transmission signals from the corresponding antennas, respectively, and transmit the plurality of sensing signals from antennas X103_1 to X103_M.

Although a case where there is a plurality of signals for sensing and there is a plurality of antennas has been described above, the number of signals for sensing generated by transmission apparatus X101 and the number of antennas that transmit signals for sensing may be one, respectively.

Signals for sensing transmitted from antennas X103_1 to X103_M are reflected off object #1 (X110_1) or object #2 (X110_2). The reflected signals for sensing are received by antennas X104_1 to X104_N included in apparatus X 100. Here, the number of antennas that receive signals for sensing is N, where N is an integer larger than or equal to one or an integer larger than or equal to two. Number M of antennas used for transmission may be the same as or different than number N of antennas used for reception.

Reception signals X105_1 to X105_N received by antennas X104_1 to X104_N are inputted into reception apparatus X106. For example, reception apparatus X106 performs, on reception signals X105_1 to X105_N, filter processing of extracting a frequency band, in which signals for sensing are transmitted, or only channel components in the frequency band, frequency conversion processing of conversion from a radio frequency band to an intermediate frequency band (IF) and/or to a frequency band of a baseband signal, weighting/combining processing on N reception signals, and/or the like, and outputs estimation signal X107.

Coefficients used in the weighting/combining processing on the N reception signals may be configured for each of reception signals X105_1 to X105_N. Apparatus X100 can perform reception directivity control by changing the values of the coefficients. The coefficients may be estimated in advance, or reception signals X105_1 to X105_N may be used to estimate coefficients in which the amplitude or signal-to-noise ratio (CNR) of a sensing signal component after the weighting/combining processing is larger than that in a case where other coefficients are used, or exceeds a predetermined threshold.

Further, reception apparatus X106 may use a plurality of sets of N coefficients corresponding to reception signals X105_1 to X105_N to acquire signals having directivities corresponding to each set of coefficients at the same time. Note that, reception apparatus X106 may not perform the weighting/combining processing.

Estimator X108 performs sensing, that is, estimation processing on the surrounding environment by using estimation signal X107. Details of the estimation processing performed by estimator X108 will be described later.

Control signal X109 is a control signal that is inputted into transmission apparatus X101, reception apparatus X106, and estimator X108, and instructs transmission apparatus X101, reception apparatus X106, and estimator X108 to perform sensing, performs sensing range instruction and control of sensing timing for transmission apparatus X101, reception apparatus X106, and estimator X108, and/or the like.

An example of the configuration of apparatus X100 has been described thus far.

Note that, although a case where signals generated by apparatus X100 are transmitted from M antennas and signals received by N antennas are subjected to signal processing by reception apparatus X106 has been described as an example in FIG. 1, the configuration of the apparatus that performs the sensing method described herein is not limited thereto.

For example, a plurality of transmission antenna processors that transmits signals may be each formed of a plurality of antenna units each of which includes a plurality of antennas. Here, the plurality of antenna units may have the same directivity and directivity control function, or ranges in which directivity control can be performed may differ between the antenna units. At this time, one transmission apparatus X101 may select an antenna unit to be used for sensing signal transmission from among the plurality of antenna units, or the same sensing signal may be transmitted from the plurality of antenna units at the same time.

Further, transmission apparatus X101 may switch between transmitting one sensing signal from one antenna unit and transmitting one sensing signal from a plurality of antenna units at the same time. Further, apparatus X100 may include a plurality of transmission apparatuses X101 or may include one transmission apparatus X101 for each antenna unit.

In the same manner, a plurality of reception antenna processors that receives signals may be each formed of a plurality of antenna units each of which includes a plurality of antennas. Here, the plurality of antenna units may have the same directivity control capabilities such as directivity control range and directivity control accuracy, or directivity control capabilities may differ between the antenna units. Further, the plurality of antenna units may be disposed such that the directivity control capabilities such as directivity control range and directivity control accuracy are the same, but spatial areas in which directivity control can be performed differ. At this time, one reception apparatus X106 may select an antenna unit that acquires reception signals from among a plurality of antenna units, or signals received from a plurality of antenna units may be subjected to signal processing at the same time.

Further, reception apparatus X106 may also switch between subjecting only reception signals received from one antenna unit to signal processing and subjecting reception signals received from a plurality of antenna units to signal processing at the same time. Further, apparatus X100 may include a plurality of reception apparatuses X106, and may include one reception apparatus X106 for each antenna unit.

Further, apparatus X100 may also include a plurality of antennas that can be used for both transmission and reception of signals, rather than including a plurality of antennas for transmission and a plurality of antennas for reception separately. In this case, apparatus X100 may select and switch between using each antenna for transmission and using each antenna for reception, or may temporally switch between using a plurality of antennas for transmission and using a plurality of antennas for reception.

Further, apparatus X100 may include a transmission and reception antenna processor that can be used commonly for both signal transmission and signal reception. Here, the transmission and reception antenna processor includes a plurality of antenna units, and can switch between using each antenna unit for transmission and using each antenna unit for reception. Apparatus X100 may also include a selector that selects and switches between an antenna unit used to transmit a signal generated by transmission apparatus X101 and an antenna unit used to receive a signal to be subjected to signal processing by reception apparatus X106.

In a case where sensing signals are transmitted by using a plurality of antenna units at the same time, the directivities of the signals transmitted from each antenna unit may be the same or different. In a case where apparatus X100 transmits sensing signals with the same directivity from a plurality of antenna units, there is a possibility that the distances that the sensing signals reach can be lengthened or the distances to reflection positions at which the reflected sensing signals are receivable can be lengthened.

Note that, the number of antennas that form the antenna unit described above does not need to be the same between the antenna units and may vary between the antenna units.

Next, the estimation processing performed by estimator X108 will be described as an example.

For example, estimator X108 estimates the distance between apparatus X100 and an object that has reflected a sensing signal. Estimation of the distance between apparatus X100 and an object that has reflected a sensing signal can be derived, for example, by detecting a delay time between the time of transmission of the sensing signal and the time of reception thereof, and multiplying the delay time by the propagation velocity of the electromagnetic wave.

Estimator X108 may estimate the direction of arrival of a reception signal, that is, the direction of an object that has reflected a sensing signal by using a direction-of-arrival estimation method such as a multiple signal classification (MUSIC) method, for example. Estimator X108 can estimate the position of an object that has reflected a transmitted signal by estimating the direction in addition to the distance between apparatus X100 and an object.

For example, estimator X108 can estimate the position of an object by performing triangulation by using information on direction-of-arrival estimation by the MUSIC method or the like, the positions of transmission antennas, the positions of reception antennas, and the direction of transmission directivity control, or the like. Estimator X108 may detect an object, movement of an object, the material of an object, and the like by using a reception signal. Further, estimator X108 may also estimate detection of an object, the position of an object, movement of an object, and the like by an estimation method other than triangulation. Note that, the method described herein can be mentioned as an example of the sensing method.

The position of an object may be expressed in a polar coordinate system or in a three-dimensional orthogonal coordinate system. The origin of the coordinate system may be, for example, an arbitrary position in apparatus X100, and the axes in the coordinate system may be oriented arbitrarily.

Note that, in a case where a device including apparatus X100 includes a plurality of radio sensors or other distance sensors having the same configuration as or a different configuration from that of apparatus X100 in addition to apparatus X100, the origins and axes of coordinate systems of data acquired by each sensor may be common among the sensors or may be unique to each sensor. Estimator X108 may output position information expressed in the unique coordinate systems described above as it is or may perform conversion into a common coordinate system in the device and output the common coordinate system. The converted coordinate system may be a coordinate system unique to the device or may be a coordinate system common to those of other devices, such as a coordinate system that is the same as a three-dimensional map data utilized by the device.

Further, estimator X108 may estimate distances to an object that has reflected signals in each of a plurality of directions and acquire three-dimensional coordinates of a plurality of estimated reflection positions as a point cloud. Note that, the format of data of a plurality of distance measurement results acquired by estimator X108 may not be a point cloud format including three-dimensional coordinate values, but may be, for example, a distance image format or any other format. In a case where the distance image format is used, positions (coordinates) of a distance image in a two-dimensional plane correspond to directions of arrival of reception signals viewed from apparatus X100, and distances to an object in directions corresponding to pixel positions of each image are stored as pixel sample values.

Further, estimator X108 may also perform recognition processing such as estimation of the shape of an object by using the above-described point cloud data or distance image data. For example, estimator X108 can regard and extract "one or more points of positions which are close to each other and whose distances are within a predetermined range", a plurality of points or an image area as the same object, and estimate the shape of an object based on the positional relationship of the one or plurality of points or the shape of the image area. Estimator X108 may perform identification of an object subjected to sensing as recognition processing using an estimation result of the shape of an object. In this case, for example, estimator X108 performs identification whether an object in a sensing range is a person or an animal, performs identification of the type of the object, and the like.

Note that, the recognition processing performed by estimator X108 may not be identification of an object. For example, as the recognition processing, estimator X108 may detect the number of persons, automobiles, or the like in a sensing range, and/or may estimate the face position, posture or the like of a detected person. As recognition processing different from the above-described recognition processing, estimator X108 may perform processing such as face authentication in which it is determined whether the shape of the face of a detected person matches that of a person registered in advance, which person the detected person is, or the like.

Further, estimator X108 may also measure the distance between apparatus X100 and an object at different timings a plurality of times to acquire a temporal change in the distance between apparatus X100 and the object or in the position of a detected point. In this case, estimator X108 may also estimate the velocity, acceleration and the like of a moving object as recognition processing that uses a temporal change in the distance between apparatus X100 and the object or in the position of the point. For example, estimator X108 may also estimate the velocity, movement direction and the like of an automobile driving in a sensing range.

Note that, the recognition processing performed by estimator X108 using a temporal change in a distance or in the position of a point may not be estimation of the velocity and acceleration of an object. For example, estimator X108 may detect based on a change in the posture of a detected person whether the person has performed a specific action, and may utilize apparatus X100 as a gesture-inputting device for an electronic device such as a smart phone, a tablet, and a personal computer.

The estimation of the velocity of a moving object described above may be derived by comparing the frequency of a transmitted sensing signal with the frequency of a received reflected signal to estimate a change in frequency due to a Doppler effect received by the reflected signal.

Next, the sensing signal used in transmission apparatus X101 and reception apparatus X106 will be described as an example.

Apparatus X100 may transmit, for example, the pulse signal disclosed in NPLs 1 and 2 as a signal for sensing. Apparatus X100 transmits the pulse signal in a frequency band used for sensing, and measures the distance to an object that has reflected the signal for sensing, based on a delay time between the time of transmission of the pulse signal and the time of reception of a reflected signal.

As another example of the signal for sensing, apparatus X100 may use the signal in the FMCW scheme or the PMCW scheme described in NPL 3. The FMCW signal is a signal obtained by converting a chirp signal, whose frequency has been temporally changed, into a radio frequency. As estimation processing that uses a FMCW signal, estimator X108 superimposes a signal to be transmitted from transmission apparatus X101 and a signal received by reception apparatus X106 with a mixer. As a result, the superimposed signal becomes a signal having an intermediate frequency in accordance with the time of flight of the received signal so that the distance to an object that has reflected the FMCW signal is measured by detecting a frequency component included in the superimposed signal.

As another example of the signal for sensing, apparatus X100 may use a signal obtained by frequency-converting a modulated signal having a predetermined frequency into a signal of a frequency band used for sensing. In this case, for example, estimator X108 can estimate the distance to an object that has reflected a signal for sensing, based on a difference between the phase of a modulation component of a signal to be transmitted from transmission apparatus X101 and the phase of a modulation component of a signal received by reception apparatus X106.

Further, estimator X108 may also compare the frequency of a transmitted modulated signal with the frequency of a received modulated signal to thereby detect a variation in frequency due to a Doppler effect between the reflection of a sensing signal and the reception thereof, and estimate the movement velocity and direction of a moving object. Note that, there may be a plurality of frequency components included in a modulated signal and, for example, multicarrier transmission including a plurality of frequency components, such as an OFDM signal, may be used as the modulated signal described in NPL 4.

Examples of the signal for sensing are not limited to the above examples. The signal for sensing may be a signal modulated by a modulation scheme, may be an unmodulated carrier, or any other signal may be used.

As described above, apparatus X100 may use a plurality of antennas to transmit a plurality of sensing signals at the same time, or may use a plurality of antenna units each of which includes a plurality of antennas to transmit a plurality of sensing signals at the same time.

Here, as an example, a case where a distance is measured based on a difference between the time of transmission of a sensing signal and the time of reception of a reflected signal has been described as the estimation processing performed by estimator X108. However, the estimation processing performed by estimator X108 is not limited to the case described above.

For example, estimator X108 may estimate a transmission path state based on a received reflected signal and perform recognition processing based on a temporal change in the estimated transmission path state and comparison of the estimated transmission path state with an average value of past estimated transmission path states and/or a feature amount to determine whether an object is present in a sensing range, to detect the presence or absence of movement of an object, and the like. Further, estimator X108 may also detect the presence or absence of rainfall based on an attenuation situation of a reception signal, or the like.

Further, an example in which a reflected wave of a transmitted sensing signal is used for sensing has been described here. However, the apparatus that performs sensing by using a sensing signal is not limited to the apparatus that transmits the sensing signal.

For example, reception apparatus X106 of apparatus X100 may receive a sensing signal transmitted from another apparatus and, based on the reception signal, estimator X108 may determine that the other apparatus is in a range in which the sensing signal reaches and may estimate the direction of the other apparatus. Further, estimator X108 may also estimate the distance to the other apparatus based on the signal strength of the received sensing signal.

Further, reception apparatus X106 of apparatus X100 may also transmit a sensing signal such that another apparatus can use the sensing signal for sensing. The sensing signal to be transmitted at this time may be a sensing signal to be transmitted for apparatus X100 to perform sensing by using a reflected wave or may be periodically transmitted for another apparatus to perform sensing. Further, in a case where apparatus X100 receives a sensing signal transmitted from another apparatus, apparatus X100 may use transmission apparatus X101 to transmit a sensing signal in the direction in which the reception signal has been received. Note that, the sensing signal to be transmitted to another apparatus may be transmitted without performing directivity control. Further, the sensing signal may also be generated by the method described herein.

Further, although FIG. 1 illustrates an example in which apparatus X100 that performs sensing receives signals reflected off objects #1 and #2, apparatus X100 may use signals obtained by reflecting off objects #1 and #2 and further reflecting off other object(s) or matter to estimate detection of an object, the distance to an object, the position of an object, and the like.

Next, an example of a sensing method that uses radio waves different from those in FIG. 1 will be described.

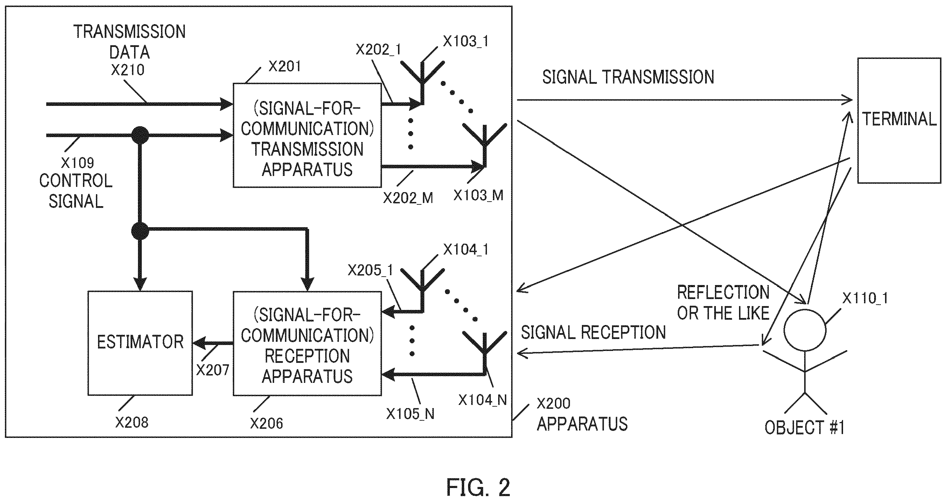

FIG. 2 illustrates an example of a configuration of apparatus X200 that performs sensing by using radio waves. In the configuration illustrated in FIG. 2, the configuration elements having the same functions as those in the configuration illustrated in FIG. 1 are denoted by the same reference signs, and detailed descriptions thereof will be omitted.

Apparatus X200 differs from apparatus X100 in that apparatus X200 performs sensing by using a modulated signal for sensing and/or a modulated signal for communication. Here, for example, apparatus X200 transmits signals and the terminal as the communication partner captures a change between the signals transmitted by apparatus X200 to estimate the position and size of an object (for example, object #1 in FIG. 2), the distance to an object (for example, object #2 in FIG. 2), or the like. Note that, in a case where apparatus X200 transmits a modulated signal for communication, data communication with the terminal is also possible. Hereinafter, a case in which sensing is performed by using a modulated signal for communication will be described.

Transmission apparatus X201 inputs control signal X109 and transmission data X210, and performs error correction coding processing, modulation processing, precoding, multiplexing processing and/or the like to generate transmission signals for communication X202_1 to X202_M. Apparatus X200 transmits transmission signals X202_1 to X202_M from antennas X103_1 to X103_M, respectively.

The number of transmission signals and the number of antennas used for transmission are the same as described with respect to FIG. 1, and may be two or more or may be one. The description with reference to FIG. 2 differs from the description with reference to FIG. 1 in that the transmission signal in the description with reference to FIG. 1 includes a sensing signal component, whereas the transmission signal in FIG. 2 includes a component of a signal of modulated transmission data. However, transmission apparatus X201 and transmission apparatus X101 are the same in terms of being capable of performing directivity control by coefficients used in weighting/combining processing for generating a transmission signal. Further, in the same manner as apparatus X100, apparatus X200 may include one antenna unit including a plurality of antennas or may include a plurality of antenna units.

In a case where directivity control is performed, transmission apparatus X101 of FIG. 1 performs transmission directivity control in a direction in which sensing is to be performed, whereas transmission apparatus X201 of FIG. 2 performs transmission directivity control such that communication quality with the terminal as the communication partner improves. However, transmission apparatus X201 may perform transmission signal directivity control toward a direction in which sensing is to be performed, or may perform directivity control such that the terminal as the communication partner can use a signal transmitted by apparatus X200 to obtain a desirable sensing result in performing sensing.

In a case where transmission apparatus X201 performs directivity control for sensing by the terminal, transmission apparatus X201 transmits a signal by using a coefficient designated by the terminal. The signal to be transmitted here may or may not include a signal component modulated by using transmission data. The signal that does not include a signal component modulated by using transmission data is a signal modulated by a value known on a side of the terminal, such as a preamble and a reference signal, for example. Further, transmission apparatus X201 may perform different directivity controls depending on whether a signal including a signal component modulated by using transmission data is transmitted or a signal including no signal component modulated by using transmission data is transmitted.

Note that, the terminal obtains data (performs communication) as well as performs sensing by receiving a modulated signal transmitted by apparatus X200.

Further, the terminal may transmit signals and apparatus X200 as the communication partner may capture a change between the signals transmitted by the terminal to estimate the position and size of an object (for example, object #1 in FIG. 2), the distance to an object (for example, object #1 in FIG. 2), the type and material of an object (for example, object #1 in FIG. 2), and the like. Note that, in a case where the terminal transmits a modulated signal for communication, data communication with apparatus X200 is also possible.

For example, apparatus X200 uses antennas X104_1 to X104_N to receive modulated signals transmitted by the terminal. Reception apparatus X206 inputs control signal X109 and reception signals X205_1 to X205_N and performs demodulation processing, error correction decoding processing and the like to acquire reception data. Further, reception apparatus X206 outputs, as estimation signal X207, transmission path characteristics and the like obtained by reception processing.

Coefficients used in the weighting/combining processing on the N reception signals can be configured for each of reception signals X105_1 to X105_N, and reception directivity control can be performed by changing the values of the coefficients. The coefficients may be estimated in advance, or reception signals X105_1 to X105_N may be used to estimate coefficients in which the amplitude or signal-to-noise ratio (CNR) of a sensing signal component after the weighting/combining processing is larger than that in a case where other coefficient are used, or exceeds a predetermined threshold. Further, reception apparatus X206 may use a plurality of sets of N coefficients corresponding to reception signals X105_1 to X105_N to acquire signals having directivities corresponding to each set of coefficients at the same time.

Estimator X208 inputs control signal X109 and estimation signal X207, and performs estimation processing by using estimation signal X207. Estimator X208 estimates the surrounding environment, such as whether an object is present around, based on transmission path characteristics included in estimation signal X207, for example. Further, estimator X208 may also detect movement of an object, approach of an object or the like based on a temporal change in the transmission path characteristics.

For example, estimator X208 may estimate the direction of arrival of a reception signal, that is, the direction of an object that has reflected a sensing signal, by using a direction-of arrival estimation method such as the MUSIC method. For example, estimator X208 may estimate the position of an object by performing triangulation by using information on direction-of-arrival estimation by the MUSIC method or the like, the positions of antennas (for example, the positions of the transmission apparatus and the reception apparatus), and the direction of transmission directivity control, or the like. Estimator X208 may also detect an object, movement of an object, the material of an object, and the like by using a reception signal.

For example, estimator X208 performs the aforementioned estimation processing, for example, signal processing in accordance with an event to be detected, such as the presence or absence of an object and the presence or absence of movement of an object as described above, on estimation signal X207. At this time, the estimation processing is performed, for example, based on a determination result of whether a feature amount extracted by the signal processing exceeds a predetermined threshold.

Estimator X208 may perform the estimation processing based on signal processing other than the signal processing exemplified above. For example, the estimation processing may also be performed with a model created by machine learning using a neural network having a multi-layered structure. In a case where a model created by machine learning using a neural network having a multi-layered structure is utilized in the estimation processing, estimator X208 may perform predetermined preprocessing on estimation signal X207 and then input the preprocessed data into the model created by the machine learning using the neural network having the multi-layered structure.

Further, estimator X208 may also use information on a frequency band used for communication, a channel number in the frequency band, or the like. Further, estimator X208 may also use the address of a communication apparatus that has transmitted a received signal for communication or the address of a communication apparatus that is the destination of the signal. Thus, by using information on a received signal for communication, such as a frequency band and the address of a communication apparatus, it is possible to perform a comparison between signals for communication, in which conditions, such as the positions of communication apparatuses, which have transmitted signals, and directivities used when signals are transmitted, are the same or similar, and there is a possibility that the estimation accuracy will improve.

A case where sensing is performed by using a signal for communication transmitted by a communication partner has been described above. Although FIG. 2 illustrates the configuration of apparatus X200 in which transmission apparatus X201 and antennas X103_1 to X103_M, which are the configurations for performing transmission processing, and reception apparatus X206 and antennas X104_1 to X104_N, which are the configurations for performing reception processing, are different, the configuration of apparatus X200 is not limited thereto.

For example, transmission apparatus X201 and reception apparatus X206 may be realized as one configuration element, and/or a plurality of antennas may be commonly used for transmission and reception. Further, in the same manner as in the description with reference to FIG. 1, the plurality of antennas for transmission in apparatus X200 may be formed of a plurality of antenna units, and the plurality of antennas for reception in apparatus X200 may be formed of a plurality of antenna units. Further, the plurality of antennas for transmission and the plurality of antennas for reception in apparatus X200 may be formed as a common transmission and reception antenna processor.

Further, a signal for sensing may be used instead of a signal for communication. That is, a first apparatus may use a signal for sensing transmitted by another apparatus to estimate the position and size of an object (for example, object #1 in FIG. 2), the distance to an object (for example, object #1 in FIG. 2), the type and material of an object (for example, object #1 in FIG. 2), and the like.

The sensing method using a signal for communication may also be utilized for the same purpose as the example described with reference to FIG. 1 in which a sensing signal is transmitted to another apparatus. That is, apparatus X200 may also use a signal for communication transmitted from another apparatus such as a terminal, based on transmission path characteristics and the like of the signal, not for sensing the surrounding environment, but for determining that the other apparatus is in a range in which the signal for communication reaches or for estimating the direction of the other apparatus.

Note that, apparatus X200 may perform only a demodulation operation without performing a sensing operation when receiving a modulated signal for communication transmitted by, for example, the terminal as the communication partner.

Next, an apparatus that performs communication and sensing will be described.

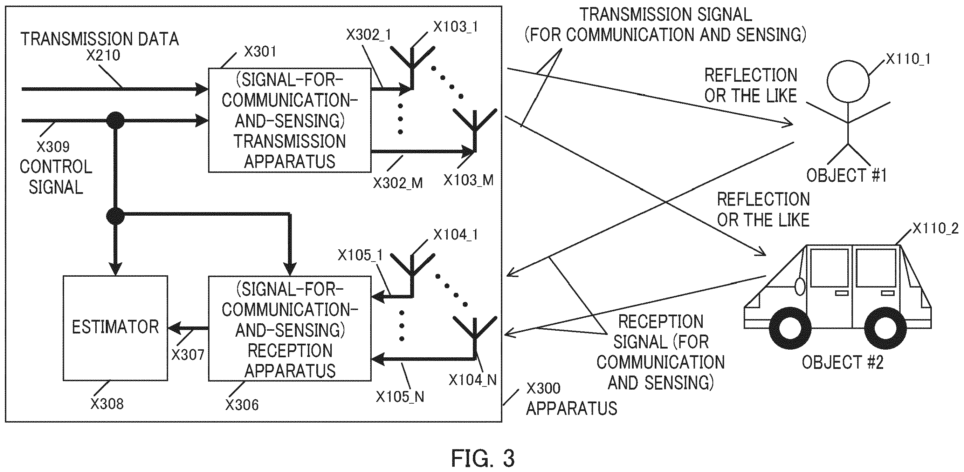

FIG. 3 illustrates an example of a configuration of apparatus X300 that performs communication and sensing. In the configuration illustrated in FIG. 3, the configurations having the same functions as those in the configurations illustrated in FIGS. 1 and 2 are denoted by the same reference signs, and detailed descriptions thereof will be omitted.

Apparatus X300 performs both sensing using a modulated signal for sensing and sensing using a modulated signal for communication.

That is, transmission apparatus X301 of apparatus X300 has a function of transmitting a signal for sensing in the same manner as transmission apparatus X101, and a function of transmitting a signal for communication to another communication apparatus in the same manner as transmission apparatus X201.

In addition, reception apparatus X306 of apparatus X300 has a function of receiving a signal for sensing in the same manner as reception apparatus X106, and a function of receiving a signal for communication transmitted by another communication apparatus in the same manner as reception apparatus X206.

Further, estimator X308 performs both estimation processing using a signal for sensing in the same manner as estimator X108, and estimation processing using a signal for communication in the same manner as estimator X208.

In the processing performed by each configuration element of apparatus X300, the processing of transmitting and receiving signals for sensing is the same as with apparatus X100 illustrated in FIG. 1, and the processing for transmitting and receiving signals for communication is the same as with apparatus X200 illustrated in FIG. 2. Accordingly, descriptions thereof will be omitted.

Although FIG. 3 illustrates the configuration of apparatus X300 in which transmission apparatus X301 and antennas X103_1 to X103_M, which perform transmission processing, and reception apparatus X306 and antennas X104_1 to X104_N, which perform reception processing, are different, the configuration of apparatus X300 is not limited thereto. For example, transmission apparatus X301 and reception apparatus X306 may be realized as one configuration element, and one or more antennas or a plurality of antennas may be used commonly for transmission and reception.

Apparatus X300 may also include, apart from the transmission apparatus for communication, a transmission apparatus for sensing. At this time, the transmission apparatus for communication and the transmission apparatus for sensing may use the same one or more antennas or the same plurality of antennas by switching, or may include one or more antennas or a plurality of antennas for communication and one or more antennas or a plurality of antennas for sensing, where the one or more antennas or the plurality of antennas for communication differ from the one or more antennas or the plurality of antennas for sensing.

Note that, transmission apparatus X301 for signals for communication and sensing may switch between transmitting a signal for sensing and transmitting a modulated signal for communication based on mode information included in control signal X309 and transmit the signal from the antenna. That is, a mode for transmitting a signal for sensing and a mode for transmitting a modulated signal for communication may be present. Further, transmission apparatus X301 for communication and sensing may also transmit a signal obtained by combining a signal for sensing and a modulated signal for communication.

Apparatus X300 may also include, apart from the reception apparatus for communication, a reception apparatus for sensing. At this time, the reception apparatus for communication and the reception apparatus for sensing may use the same one or more antennas or the same plurality of antennas by switching, or may include one or more antennas or a plurality of antennas for communication and one or more antennas or a plurality of antennas for sensing, where the one or more antennas or the plurality of antennas for communication differ from the one or more antennas or the plurality of antennas for sensing.

Further, apparatus X300 may also include a transmission apparatus for communication, a transmission apparatus for sensing, a reception apparatus for communication, and a reception apparatus for sensing separately from each another. Further, apparatus X300 may also include a transmission-reception apparatus for communication and a transmission-reception apparatus for sensing. Further, apparatus X300 may also include a transmission-reception apparatus for communication, a transmission apparatus for sensing, and a reception apparatus for sensing.

Further, in FIG. 3, in the same manner as in the descriptions with reference to FIGS. 1 and 2, one or more antennas for transmission or a plurality of antennas for transmission may be formed of one or more antenna units or a plurality of antenna units, and one or more antennas for reception or a plurality of antennas for reception may be formed of one or more antenna units or a plurality of antenna units. Further, the one or more antennas for transmission or the plurality of antennas for transmission and the one or more antennas for reception or the plurality of antennas for reception may be formed as a common transmission and reception antenna processor.

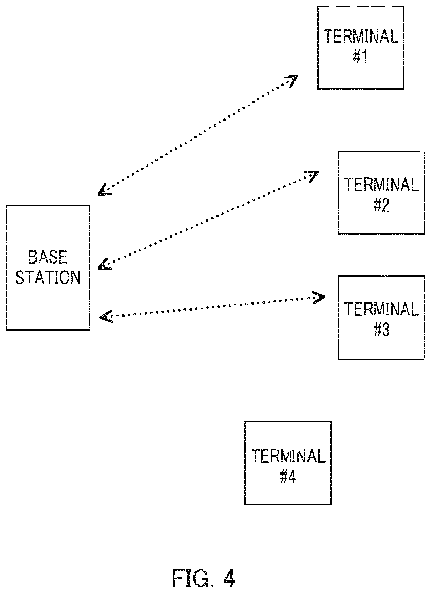

FIG. 4 illustrates an example of a communication system according to the present invention. As an example, a base station and terminals communicate with each other. The base station has at least a communication function, and therefore has the configuration of apparatus X200 in FIG. 2 or apparatus X300 in FIG. 3.

The terminal may or may not have a communication function. For example, terminal #4 in FIG. 4 may have a function of sensing of an object and may not have a communication function. Thus, the terminals having a communication function (terminals #1, #2, and #3 in FIG. 3) have the configuration of apparatus X200 in FIG. 2 or apparatus X300 in FIG. 3. The terminal having no communication function (terminal #4 in FIG. 3) has the configuration of apparatus X100 in FIG. 1.

Hereinafter, an exemplary embodiment in a case where a modulated signal for communication and a signal for sensing are present in the same frequency band will be described.

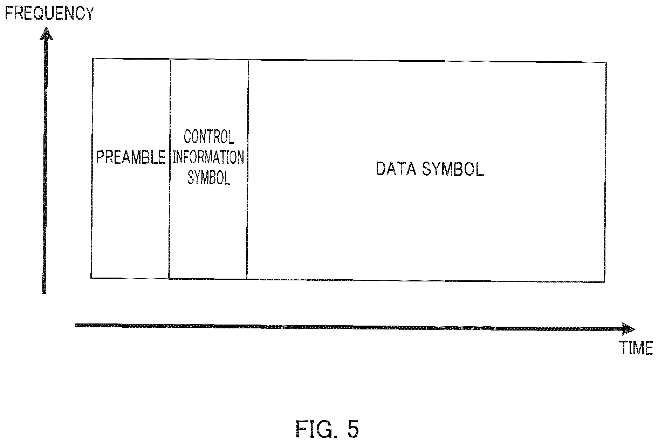

FIG. 5 illustrates a configuration example of a frame for data transmission transmitted by a base station and a terminal having a communication function. The preamble illustrated in FIG. 5 is, for example, a symbol for a communication partner to perform signal detection, time synchronization, frequency synchronization, channel estimation, frequency offset estimation, and the like.

The control information symbol is a symbol for transmitting information on a data size, a method of transmitting a data symbol (for example, a modulation and coding scheme (MCS) such as the number of transmission streams and an error correction coding method), and the like.

The data symbol is a symbol for transmitting data. The data symbol may include other symbols (for example, a reference symbol, a pilot symbol, a pilot carrier, or the like).

The frame configuration for the frame for data transmission is not limited to the above example. The frame for data transmission may include symbols other than those illustrated in FIG. 5.

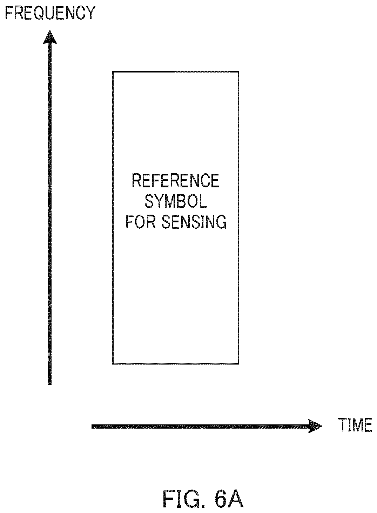

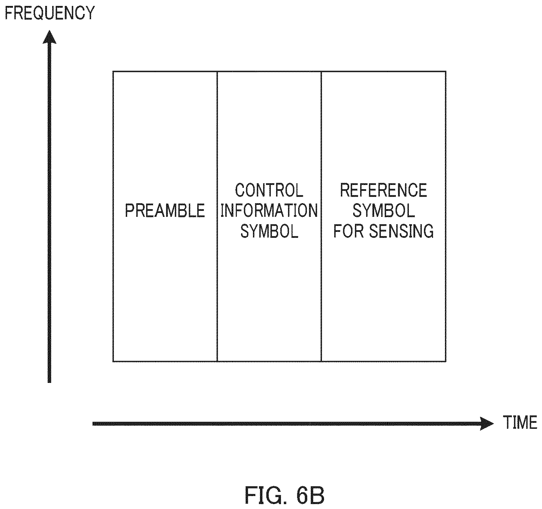

FIGS. 6A and 6B illustrate configuration examples of a frame for sensing transmitted by a base station and a terminal which have a sensing function. FIG. 6A illustrates a first example of the frame for sensing and FIG. 6B illustrates a second example of the frame for sensing.

The first example of the frame for sensing in FIG. 6A is formed of a reference symbol for sensing. However, other symbols may also be included in the frame for sensing.

The base station and the terminal perform sensing processing by using the reference symbol for sensing in FIG. 6A. The base station and the terminal may temporally continuously transmit reference symbols for sensing. Note that, although the term "reference symbol for sensing" is used, an unmodulated signal or a signal such as a carrier wave may also be used. In this regard, the same applies to FIG. 6B.

The second example of the frame for sensing in FIG. 6B is formed of, for example, a preamble, a control information symbol, and a reference symbol for sensing. However, other symbols may also be included in the frame for sensing.

The base station and the terminal perform sensing processing by using the reference symbol for sensing in FIG. 6B.

The preamble in FIG. 6B is, for example, a symbol for a communication partner to perform signal detection, time synchronization, frequency synchronization, channel estimation, frequency offset estimation, and the like. Note that, it is assumed that the base station and the terminal which have a communication function can also detect this preamble. For example, the configuration of the preamble may be the same (or may not be the same) as that of the preamble in FIG. 5.

In this way, the base station and the terminal which has a communication function can know the presence of a frame for sensing so that it is possible to obtain the effect that interference between a frame for sensing and a frame for communication can be reduced.

The control information symbol in FIG. 6B is a symbol including information on a reference symbol for sensing. The control information symbol may also include other information.

Examples of the information on a reference symbol for sensing include as follows:
- The type of a sensing reference signal, which is assumed to be designatable from a plurality of symbol types, for example;
- The frequency band of a sensing reference signal, which is assumed to be designatable from a plurality of frequency bands, for example; and
- The time domain of a sensing reference signal, which is assumed to be designatable from a plurality of time intervals, for example.

The base station and the terminal which have a sensing function can configure a desired sensing accuracy by designating the information on a reference symbol for sensing in the control information symbol. However, the information in the control information symbol is not limited thereto.

The base station and the terminal perform sensing processing by using the reference symbol for sensing in FIG. 6B. The base station and the terminal may temporally continuously transmit reference symbols for sensing.

The configuration of the frame for sensing is not limited to those in FIGS. 6A and 6B. The frame for sensing may include symbols other than those illustrated in FIGS. 6A and 6B.

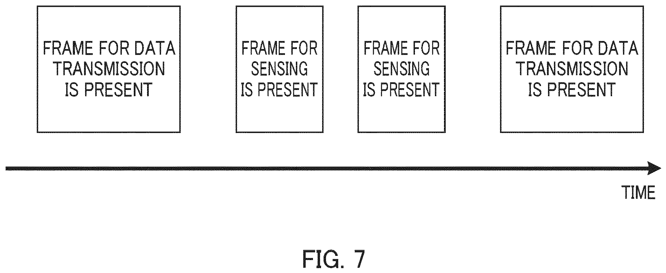

FIG. 7 illustrates an example of a frame state in a time axis of a certain frequency band. As illustrated in FIG. 7, for example, the base station may switch between the frame for data transmission and the frame for sensing for transmission thereof. The terminal may switch between the frame for data transmission and the frame for sensing for transmission thereof.

It is desirable that the base station and the terminal transmit frames and perform control such that the frames do not overlap at a certain frequency, that is, the frames do not interfere with each other as in FIG. 7, for example.

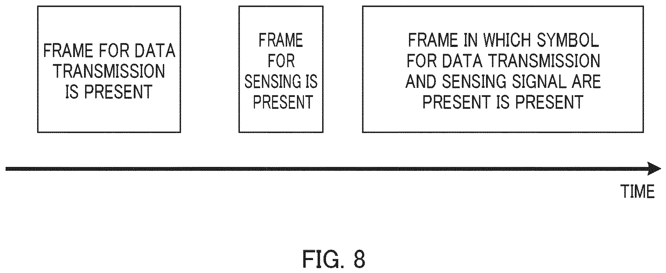

FIG. 8 illustrates another example of a frame state in a time axis of a certain frequency band. As illustrated in FIG. 8, for example, the base station may switch among the frame for data transmission, the frame for sensing, and the frame, in which a symbol for data transmission and a sensing signal are present, for transmission thereof. The terminal may switch among the frame for data transmission, the frame for sensing, and the frame, in which a symbol for data transmission and a sensing signal are present, for transmission thereof.

The base station and the terminal transmit frames and perform control such that the frames do not overlap at a certain frequency, that is, the frames do not interfere with each other as in FIG. 8, for example.

Note that, although a case where the frequency (or frequency band) of a signal transmitted by a base station and the frequency (or frequency band) of a signal transmitted by a terminal are partially the same or are the same has been described above as an example, the present disclosure is not limited to this example, and the frequency (or frequency band) of a signal transmitted by a base station and the frequency (or frequency band) of a signal transmitted by a terminal may be different. At this time, the temporal timing when the base station transmits a signal and the temporal timing when the terminal transmits a signal are not limited to the example described above as long as the signals do not interfere with each other, and the timings may be the same or may be different.

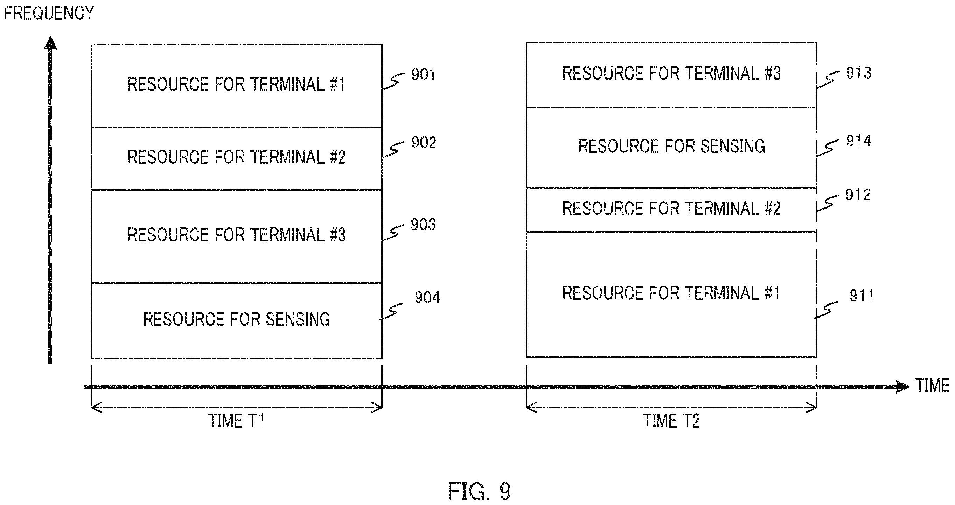

Another example when the base station in FIG. 4 transmits a signal will be described. FIG. 9 illustrates an exemplary state when a base station transmits signals, in which the horizontal axis indicates time and the vertical axis indicates frequency. Note that, it is assumed that the base station transmits, as the signal, a signal using a multicarrier transmission method such as orthogonal frequency division multiplexing (OFDM), for example.

In FIG. 9, "RESOURCE FOR TERMINAL #1 901" indicates a resource to be transmitted by the base station to terminal #1 in FIG. 4, "RESOURCE FOR TERMINAL #2 902" indicates a resource to be transmitted by the base station to terminal #2 in FIG. 4, "RESOURCE FOR TERMINAL #3 903" indicates a resource to be transmitted by the base station to terminal #3 in FIG. 4, and "RESOURCE FOR SENSING 904" indicates a resource to be transmitted by the base station in FIG. 4 for sensing. In FIG. 9, it is assumed that "RESOURCE FOR TERMINAL #1 901", "RESOURCE FOR TERMINAL #2 902", "RESOURCE FOR TERMINAL #3 903" and "RESOURCE FOR SENSING 904" are present in time T 1.

"RESOURCE FOR TERMINAL #1 911" indicates a resource to be transmitted by the base station to terminal #1 in FIG. 4. "RESOURCE FOR TERMINAL #2 912" indicates a resource to be transmitted by the base station to terminal #2 in FIG. 4. "RESOURCE FOR TERMINAL #3 913" indicates a resource to be transmitted by the base station to terminal #3 in FIG. 4. "RESOURCE FOR SENSING 914" indicates a resource to be transmitted by the base station in FIG. 4 for sensing. In FIG. 9, it is assumed that "RESOURCE FOR TERMINAL #1 911", "RESOURCE FOR TERMINAL #2 912", "RESOURCE FOR TERMINAL #3 913" and "RESOURCE FOR SENSING 914" are present in time T2.

As described above, it is assumed that frequency allocation for the resources for terminals and the resources for sensing can be changed timewise. Note that, the allocation method for the resources for terminals and the resources for sensing in time and frequency is not limited to the example in FIG. 9.

"RESOURCE FOR TERMINAL #1 901" and "RESOURCE FOR TERMINAL #1 911" may include data for terminal #1 in FIG. 4 and may include a signal for sensing. Further, these resources may include control information and include a reference signal that allows time synchronization, frequency synchronization, frequency offset estimation, phase noise estimation, and the like. Further, these resources may include signals other than those described above.

"RESOURCE FOR TERMINAL #2 902" and "RESOURCE FOR TERMINAL #2 912" may include data for terminal #2 in FIG. 4 and may include a signal for sensing. Further, these resources may include control information and include a reference signal that allows time synchronization, frequency synchronization, frequency offset estimation, phase noise estimation, and the like. Further, these resources may include signals other than those described above.

"RESOURCE FOR TERMINAL #3 903" and "RESOURCE FOR TERMINAL #3 913" may include data for terminal #3 in FIG. 4 and may include a signal for sensing. Further, these resources may include control information and include a reference signal that allows time synchronization, frequency synchronization, frequency offset estimation, phase noise estimation, and the like. Further, these resources may include signals other than those described above.

"RESOURCE FOR SENSING 904" and "RESOURCE FOR SENSING 914" include a signal for sensing for the base station in FIG. 4 to perform sensing. These resources may include control information and include a reference signal that allows time synchronization, frequency synchronization, frequency offset estimation, phase noise estimation, and the like. Further, these resources may include signals other than those described above.

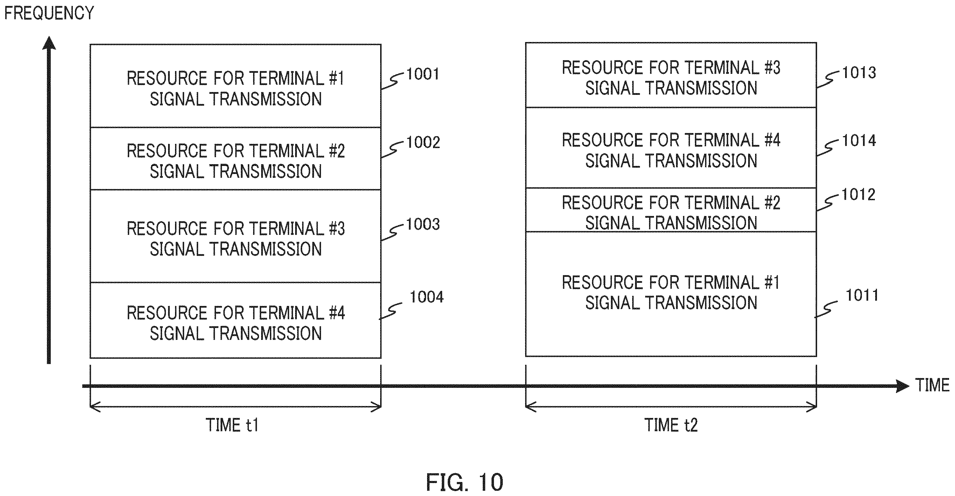

An example when terminals #1, #2, #3, and #4 in FIG. 4 transmit signals will be described. FIG. 10 illustrates an example of a state when terminals #1, #2, #3, and #4 in FIG. 4 transmit signals, in which the horizontal axis indicates time and the vertical axis indicates frequency. Note that, it is assumed that terminals #1, #2, #3, and #4 transmit, as the signals, signals using a multicarrier transmission method such as OFDM, for example. For example, terminal #1 transmits resource for terminal #1 signal transmission 1001 and resource for terminal #1 signal transmission 1011.

In FIG. 10, "RESOURCE FOR TERMINAL #1 SIGNAL TRANSMISSION 1001" indicates a resource transmitted by terminal #1 in FIG. 4 to the base station, "RESOURCE FOR TERMINAL #2 SIGNAL TRANSMISSION 1002" indicates a resource transmitted by terminal #2 in FIG. 4 to the base station, "RESOURCE FOR TERMINAL #3 SIGNAL TRANSMISSION 1003" indicates a resource transmitted by terminal #3 in FIG. 4 to the base station, and "RESOURCE FOR TERMINAL #4 SIGNAL TRANSMISSION 1004" indicates a resource transmitted by terminal #4 in FIG. 4 to the base station. In FIG. 10, it is assumed that "RESOURCE FOR TERMINAL #1 SIGNAL TRANSMISSION 1001", "RESOURCE FOR TERMINAL #2 SIGNAL TRANSMISSION 1002", "RESOURCE FOR TERMINAL #3 SIGNAL TRANSMISSION 1003", and "RESOURCE FOR TERMINAL #4 SIGNAL TRANSMISSION 1004" are present in time t1.

"RESOURCE FOR TERMINAL #1 SIGNAL TRANSMISSION 1011" indicates a resource transmitted by terminal #1 in FIG. 4 to the base station. "RESOURCE FOR TERMINAL #2 SIGNAL TRANSMISSION 1012" indicates a resource transmitted by terminal #2 in FIG. 4 to the base station. "RESOURCE FOR TERMINAL #3 SIGNAL TRANSMISSION 1013" indicates a resource transmitted by terminal #3 in FIG. 4 to the base station. "RESOURCE FOR TERMINAL #4 SIGNAL TRANSMISSION 1004" indicates a resource transmitted by terminal #4 in FIG. 4 to the base station. In FIG. 10, it is assumed that "RESOURCE FOR TERMINAL #1 SIGNAL TRANSMISSION 1011", "RESOURCE FOR TERMINAL #2 SIGNAL TRANSMISSION 1012", "RESOURCE FOR TERMINAL #3 SIGNAL TRANSMISSION 1013", and "RESOURCE FOR TERMINAL #4 SIGNAL TRANSMISSION 1014" are present in time t2.

As described above, it is assumed that frequency allocation for the resources for terminal signal transmission can be changed timewise. Note that, the allocation method for the resources for terminal signal transmission in time and frequency is not limited to the example in FIG. 10.

"RESOURCE FOR TERMINAL #1 SIGNAL TRANSMISSION 1001" and "RESOURCE FOR TERMINAL #1 SIGNAL TRANSMISSION 1011" may include data for the base station in FIG. 4 and may include a signal for sensing. Further, these resources may include control information and include a reference signal that allows time synchronization, frequency synchronization, frequency offset estimation, phase noise estimation, and the like. Further, these resources may include signals other than those described above.

"RESOURCE FOR TERMINAL #2 SIGNAL TRANSMISSION 1002" and "RESOURCE FOR TERMINAL #2 SIGNAL TRANSMISSION 1012" may include data for the base station in FIG. 4 and may include a signal for sensing. Further, these resources may include control information and include a reference signal that allows time synchronization, frequency synchronization, frequency offset estimation, phase noise estimation, and the like. Further, these resources may include signals other than those described above.

"RESOURCE FOR TERMINAL #3 SIGNAL TRANSMISSION 1003" and "RESOURCE FOR TERMINAL #3 SIGNAL TRANSMISSION 1013" may include data for the base station in FIG. 4 and may include a signal for sensing. Further, these resources may include control information and include a reference signal that allows time synchronization, frequency synchronization, frequency offset estimation, phase noise estimation, and the like. Further, these resources may include signals other than those described above.

"RESOURCE FOR TERMINAL #4 SIGNAL TRANSMISSION 1004" and "RESOURCE FOR TERMINAL #4 SIGNAL TRANSMISSION 1014" may include data for the base station in FIG. 4 and may include a signal for sensing. Further, these resources may include control information and include a reference signal that allows time synchronization, frequency synchronization, frequency offset estimation, phase noise estimation, and the like. Further, these resources may include signals other than those described above.

Note that, the signals for sensing herein, such as the frames for sensing and the resources for sensing, include signals capable of realizing sensing. As examples of the "signals capable of realizing sensing", albeit not limited thereto, pilot symbols, pilot signals, reference symbols, reference signals, preambles, mid-ambles, known signals, known symbols, and the like are applicable. Further, data may be transmitted by "signals capable of realizing sensing".

The triangulation has been described above. Hereinafter, methods of triangulation other than the triangulation described above will be described.

### First Method:

Triangulation can be realized by performing processing A, processing B, processing C, and processing D each of which will be described below.

### Processing A:

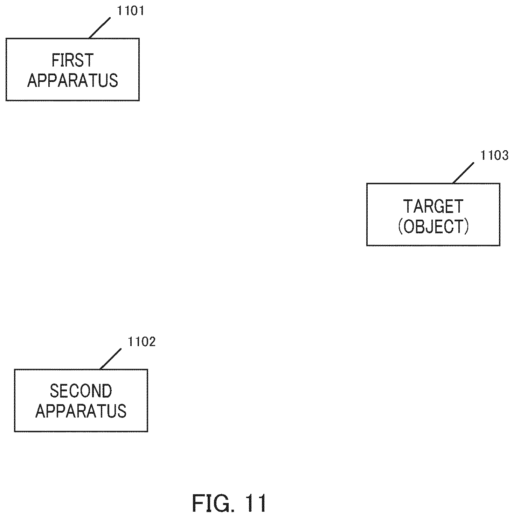

FIG. 11 illustrates a system configuration example provided for describing an example of triangulation. In FIG. 11, first apparatus 1101 transmits a signal by using a radio wave, for example. This signal reflects off second apparatus 1102, and first apparatus 1101 obtains this reflected signal to thereby acquire (recognize) a "distance between first apparatus 1101 and second apparatus 1102".

Further, as another method, second apparatus 1102 transmits a signal by using a radio wave, for example. First apparatus 1101 obtains this signal to thereby acquire the "distance between first apparatus 1101 and second apparatus 1102".

Note that, first apparatus 1101 and second apparatus 1102 may share information on the "distance between first apparatus 1101 and second apparatus 1102".

### Processing B:

First apparatus 1101 transmits a signal by using a radio wave, for example. This signal reflects off target (object) 1103, and first apparatus 1101 obtains this reflected signal to thereby acquire a "distance between first apparatus 1101 and target (object) 1103". Note that, first apparatus 1101 and second apparatus 1102 may share information on the "distance between first apparatus 1101 and target (object) 1103".

### Processing C:

Second apparatus 1102 transmits a signal by using a radio wave, for example. This signal reflects off target (object) 1103, and second apparatus 1102 obtains this reflected signal to thereby acquire a "distance between second apparatus 1102 and target (object) 1103". Note that, second apparatus 1102 and first apparatus 1101 may share information on the "distance between second apparatus 1102 and target (object) 1103".

### Processing D:

First apparatus 1101 and/or second apparatus 1102 have/has acquired information on the "distance between first apparatus 1101 and second apparatus 1102", information on the "distance between first apparatus 1101 and target (object) 1103", and information on the "distance between second apparatus 6602 and target (object) 1103" by processing A, processing B, and processing C, and perform(s) triangulation by using these pieces of information to acquire (calculate) the position of target (object) 1103.

### Second Method:

Triangulation can be realized by performing processing E, processing F, processing G, and processing H each of which will be described below.

### Processing E:

In FIG. 11, it is assumed that first apparatus 1101 and/or second apparatus 1102 retain(s) information on a "distance between first apparatus 1101 and second apparatus 1102" at the time of installation, for example.

### Processing F:

First apparatus 1101 transmits a signal by using a radio wave, for example. This signal reflects off target (object) 1103, and first apparatus 1101 obtains this reflected signal to thereby acquire a "distance between first apparatus 1101 and target (object) 1103". Note that, first apparatus 1101 and second apparatus 1102 may share information on the "distance between first apparatus 1101 and target (object) 1103".

### Processing G:

Second apparatus 1102 transmits a signal by using a radio wave, for example. This signal reflects off target (object) 1103, and second apparatus 1102 obtains this reflected signal to thereby acquire a "distance between second apparatus 1102 and target (object) 1103". Note that, second apparatus 1102 and first apparatus 1101 may share information on the "distance between second apparatus 1102 and target (object) 1103".

### Processing H:

First apparatus 1101 and/or second apparatus 1102 have/has acquired information on the "distance between first apparatus 1101 and second apparatus 1102", information on the "distance between first apparatus 1101 and target (object) 1103", and information on the "distance between second apparatus 1102 and target (object) 1103" by processing E, processing F, and processing G, and perform(s) triangulation by using these pieces of information to acquire (calculate) the position of target (object) 1103. Note that, first apparatus 1101 and second apparatus 1102 may form one apparatus.

### Third Method:

Triangulation can be realized by performing processing XA, processing XB, processing XC, and processing XD each of which will be described below.

### Processing XA:

In FIG. 11, first apparatus 1101 transmits a signal by using a radio wave, for example. This signal reflects off second apparatus 1102, and first apparatus 1101 obtains this reflected signal to thereby acquire a "distance between first apparatus 1101 and second apparatus 1102".

As another method, second apparatus 1102 transmits a signal by using a radio wave, for example. First apparatus 1101 obtains this signal to thereby be capable of acquiring the "distance between first apparatus 1101 and second apparatus 1102".

Note that, first apparatus 1101 and second apparatus 1102 may share information on the "distance between first apparatus 1101 and second apparatus 1102".

### Processing XB:

First apparatus 1101 transmits a signal by using a radio wave, for example. This signal reflects off target (object) 1103, and first apparatus 1101 obtains this reflected signal to thereby acquire a "direction (of arrival) of first apparatus 1101 and target (object) 1103". Note that, first apparatus 1101 and second apparatus 1102 may share information on the "direction (of arrival) of first apparatus 1101 and target (object) 1103". Note that, first apparatus 1101 obtains a "direction (of arrival) of second apparatus 1102 and target (object) 1103" to thereby be capable of obtaining an estimated value of an "angle formed by a first line segment and a second line segment" where "the first line segment is a line segment formed by first apparatus 1101 and second apparatus 1102" and "the second line segment is a line segment formed by first apparatus 1101 and target (object) 1103, for example.

### Processing XC:

Second apparatus 1102 transmits a signal by using a radio wave, for example. This signal reflects off target (object) 1103, and second apparatus 1102 obtains this reflected signal to thereby acquire the "direction (of arrival) of second apparatus 1102 and target (object) 1103". Note that, second apparatus 1102 and first apparatus 1101 may share information on the "direction (of arrival) of second apparatus 1102 and target (object) 1103". Note that, second apparatus 1102 obtains the "direction (of arrival) of first apparatus 1101 and target (object) 1103" to thereby be capable of obtaining an estimated value of an "angle formed by the first line segment and a third line segment" where "the first line segment is a line segment formed by first apparatus 1101 and second apparatus 1102" and "the third line segment is a line segment formed by second apparatus 1102 and target (object) 1103, for example.

### Processing XD:

First apparatus 1101 and/or second apparatus 1102 have/has acquired information on the "distance between first apparatus 1101 and second apparatus 1102", information on the "direction (of arrival) of first apparatus 1101 and target (object) 1103", and information on the "direction (of arrival) of second apparatus 1102 and target (object) 1103" by processing XA, processing XB, and processing XC, and performs triangulation by using these pieces of information to thereby be capable of acquiring the position of target (object) 1103.

### Fourth Method:

Triangulation can be realized by performing processing XE, processing XF, processing XG, and processing XH each of which will be described below.

### Processing XE:

In FIG. 11, it is assumed that first apparatus 1101 and/or second apparatus 1102 retain(s) information on a "distance between first apparatus 1101 and second apparatus 1102" at the time of installation, for example.

### Processing XF:

First apparatus 1101 transmits a signal by using a radio wave, for example. This signal reflects off target (object) 1103, and first apparatus 1101 obtains this reflected signal to thereby acquire a "direction (of arrival) of first apparatus 1101 and target (object) 1103". Note that, first apparatus 1101 and second apparatus 1102 may share information on the "direction (of arrival) of first apparatus 1101 and target (object) 1103". Note that, first apparatus 1101 obtains a "direction (of arrival) of second apparatus 1102 and target (object) 1103" to thereby be capable of obtaining an estimated value of an "angle formed by a first line segment and a second line segment" where "the first line segment is a line segment formed by first apparatus 1101 and second apparatus 1102" and "the second line segment is a line segment formed by first apparatus 1101 and target (object) 1103, for example.

### Processing XG:

Second apparatus 1102 transmits a signal by using a radio wave, for example. This signal reflects off target (object) 1103, and second apparatus 1102 obtains this reflected signal to thereby acquire the "direction (of arrival) of second apparatus 1102 and target (object) 1103". Note that, second apparatus 1102 and first apparatus 1101 may share information on the "direction (of arrival) of second apparatus 1102 and target (object) 1103". Note that, second apparatus 1102 obtains the "direction (of arrival) of first apparatus 1101 and target (object) 1103" to thereby be capable of obtaining an estimated value of an "angle formed by the first line segment and a third line segment" where "the first line segment is a line segment formed by first apparatus 1101 and second apparatus 1102" and "the third line segment is a line segment formed by second apparatus 1102 and target (object) 1103, for example.

### Processing XH:

First apparatus 1101 and/or second apparatus 1102 have/has acquired information on the "distance between first apparatus 1101 and second apparatus 1102", information on the "direction (of arrival) of first apparatus 1101 and target (object) 1103", and information on the "direction (of arrival) of second apparatus 1102 and target (object) 1103" by processing XE, processing XF, and processing XG, and performs triangulation by using these pieces of information to thereby be capable of acquiring the position of target (object) 1103. Note that, first apparatus 1101 and second apparatus 1102 may form one apparatus.

In the present embodiment, a sensing method related to the present invention has been described above. The present invention to be described below makes it possible to perform highly-accurate "sensing of position estimation, detection of an object, distance estimation, and the like" by using the sensing method described in the present embodiment, for example. Note that, the sensing method described in the present embodiment is merely an example, and the sensing method is not limited to that described in the present embodiment.

### (Embodiment 2)

In the present embodiment, a "sensing system" or "sensing and communication system" using the sensing method described in Embodiment 1 will be described.

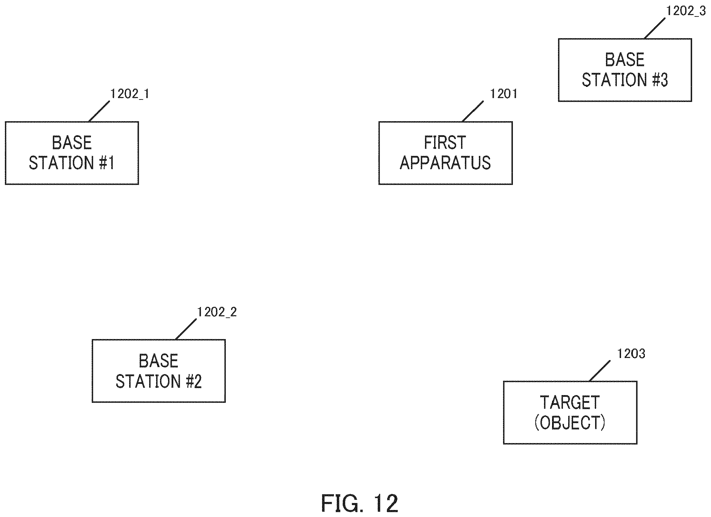

FIG. 12 illustrates an example of the "sensing system" or "sensing and communication system" in the present embodiment.

In FIG. 12, base station #1 of 1202_1, base station #2 of 1202_2, and base station #3 of 1202_3 communicate with a terminal.

First apparatus 1201 is, for example, a terminal, and communicates with base station #1 of 1202_1 and/or base station #2 of 1202_2 and/or base station #3 of 1202_3.

Target (object) 1203 is a target object whose position is estimated by sensing.

In the present embodiment, a method of performing "the triangulation described in Embodiment 1 with first apparatus 1201 and base station #1 of 1202_1", "the triangulation described in Embodiment 1 with first apparatus 1201 and base station #2 of 1202_2", and the "triangulation described in Embodiment 1 with first apparatus 1201 and base station #3 of 1202_3" will be described as an example.

It is assumed that first apparatus 1201 is an apparatus having a function of performing sensing described in Embodiment 1. Further, it is assumed that first apparatus 1201 has a communication function and communicates with, for example, base station #1 of 1202_1, bases station #2 of 1202_2, and base station #3 of 1202_3.

Here, it is assumed that first apparatus 1201 performs sensing for performing triangulation. At this time, first apparatus 1201 performs sensing with one of base station #1 of 1202_1, base station #2 of 1202_2, base station #3 of 1202_3 to realize triangulation. However, it is supposed that there is/are a base station(s) that does/do not correspond to sensing due to factors such as the size of the base station(s) and the time of the installation.

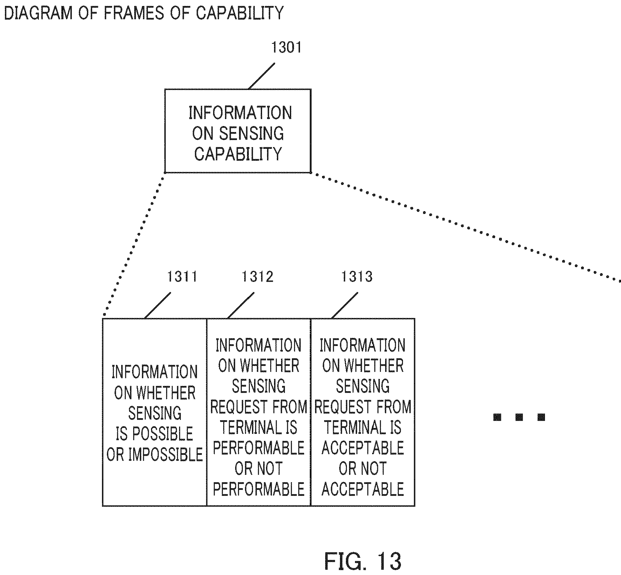

Accordingly, it is assumed that base stations such as base station #1 of 1202_1, base station #2 of 1202_2, and base station #3 of 1202_3 transmit control information including information on sensing capability 1301 as illustrated in subsequent FIG. 13.

Note that, it is assumed that the control information including information on sensing capability 1301 is transmitted by a base station using a physical broadcast channel (PBCH), a physical downlink shared channel (PDSCH) or a physical downlink control channel (PDCCH), for example. The channel through which the above control information is transmitted is not limited to the examples described above.

FIG. 13 is a diagram provided for describing an example of information on sensing capability. As illustrated in FIG. 13, it is assumed that information on sensing capability 1301 includes at least one of "INFORMATION ON WHETHER SENSING IS POSSIBLE OR IMPOSSIBLE 1311", "INFORMATION ON WHETHER SENSING REQUEST FROM TERMINAL IS PERFORMABLE OR NOT PERFORMABLE 1312", and/or "INFORMATION ON WHETHER SENSING REQUEST FROM TERMINAL IS ACCEPTABLE OR NOT ACCEPTABLE 1313".

It is assumed that specific examples of "INFORMATION ON WHETHER SENSING IS POSSIBLE OR IMPOSSIBLE 1311", "INFORMATION ON WHETHER SENSING REQUEST FROM TERMINAL IS PERFORMABLE OR NOT PERFORMABLE 1312", and "INFORMATION ON WHETHER SENSING REQUEST FROM TERMINAL IS ACCEPTABLE OR NOT ACCEPTABLE 1313" are as follows.

"INFORMATION ON WHETHER SENSING IS POSSIBLE OR IMPOSSIBLE 1311":

This information is used to notify, for example, a terminal, a repeater, other base station(s) or the like of "whether a base station is capable of performing sensing".

Thus, in a case where at least information that "sensing is performable" is included as "INFORMATION ON WHETHER SENSING IS POSSIBLE OR IMPOSSIBLE 1311", it is assumed that a base station that transmits information 1311 has a sensing function. Further, it is assumed that this base station has a communication function. Note that, since the specific configuration has already been described in Embodiment 1, a description thereof will be omitted.

"INFORMATION ON WHETHER SENSING REQUEST FROM TERMINAL IS PERFORMABLE OR NOT PERFORMABLE 1312":
This information is used to notify, for example, a terminal or the like of information on "whether sensing is performable" when a base station receives a sensing request from the terminal (a request of the terminal for the base station to perform sensing).

Note that, although "INFORMATION ON WHETHER SENSING REQUEST FROM TERMINAL IS PERFORMABLE OR NOT PERFORMABLE 1312" is named here, "INFORMATION ON WHETHER SENSING REQUEST FROM TERMINAL IS PERFORMABLE OR NOT PERFORMABLE 1312" may also be "information on whether a sensing request from an apparatus other than a terminal, such as a repeater and another apparatus, is performable or not performable". Further, details of the "sensing request" will be described later.

"INFORMATION ON WHETHER SENSING REQUEST FROM TERMINAL IS ACCEPTABLE OR NOT ACCEPTABLE 1313":
This information is used to notify, for example, a terminal or the like of information on "whether a base station accepts sensing from the terminal" when the base station receives a sensing request from the terminal (a request of the terminal for the base station to perform sensing).

Accordingly, there are modes in which, even when there is a sensing request from a terminal, a base station "accepts" and "does not accept" the sensing request.

Note that, although "INFORMATION ON WHETHER SENSING REQUEST FROM TERMINAL IS ACCEPTABLE OR NOT ACCEPTABLE 1313" is named here, "INFORMATION ON WHETHER SENSING REQUEST FROM TERMINAL IS ACCEPTABLE OR NOT ACCEPTABLE 1313" may be "information on whether a sensing request from an apparatus other than a terminal, such as a repeater and another base station, is acceptable or not acceptable". Further, details of the "sensing request" will be described later.

By configuring the above, a terminal, a repeater, another base station, and the like can know sensing of a base station and a state with respect to a sensing request so that it is possible to obtain the effect that suitable "sensing-related control and communication with a base station" can be performed.

Note that, the apparatus that transmits information on sensing capability 1301 in FIG. 13 has been described as a base station above, but is merely an example, and information on sensing capability 1301 may be transmitted by a communication apparatus such as a repeater, a terminal, and an access point.

Further, although the description "[...] SENSING REQUEST FROM TERMINAL" is used in "INFORMATION ON WHETHER SENSING REQUEST FROM TERMINAL IS PERFORMABLE OR NOT PERFORMABLE 1312" and "INFORMATION ON WHETHER SENSING REQUEST FROM TERMINAL IS ACCEPTABLE OR NOT ACCEPTABLE 1313" which are transmitted by the apparatus that transmits information on sensing capability 1301 in FIG. 13, a sensing request may be not from a terminal, but may be from, for example, a communication apparatus such as a base station, a repeater, and an access point. Accordingly, implementation is also possible with 1312 as "INFORMATION ON WHETHER SENSING REQUEST FROM COMMUNICATION APPARATUS IS PERFORMABLE OR NOT PERFORMABLE" and 1313 as "INFORMATION ON WHETHER SENSING REQUEST FROM COMMUNICATION APPARATUS IS ACCEPTABLE OR NOT ACCEPTABLE".

Next, operations of first apparatus 1201 and base station #2 of 1202_2 in FIG. 12 will be described as an example.

Note that, first apparatus 1201 may be a terminal capable of communicating with a base station. Alternatively, first apparatus 1201 may be a base station. In the following description, first apparatus 1201 will be described as a terminal, but it is also performable in the same manner even when first apparatus 1201 is a base station. However, in a case where a particular operation occurs when first apparatus 1201 is a base station, a supplementary description will be provided. Further, first apparatus 1201 in FIG. 12 may be a repeater, and base station #1 of 1202_1, base station #2 of 1202_2, and base station #3 of 1202_3 may be repeaters.

The present embodiment deals with triangulation. Examples of the specific triangulation method have been described in Embodiment 1. The first method and the second method are triangulation based on the fact that information on a distance is obtained by performing sensing.

The third method and the fourth method are, on the other hand, triangulation based on the fact that information on a direction (of arrival) (having said that, a distance may also be obtained) is obtained by performing sensing.

Hereinafter, with respect to FIG. 12, distance-based triangulation whose examples are the first method and the second method, and direction-based triangulation whose examples are the third method and the fourth method will be described separately.

### Case of Distance-based Triangulation:

An example when the distance-based triangulation whose examples are the first method and the second method described in Embodiment 1 is used will be described.

First apparatus 1201 obtains information on sensing capability 1301 in FIG. 13, which is transmitted by base station #1 of 1202_1, base station #2 of 1202_2, and base station #3 of 1202_3, and acquires each status of response to sensing of base station #1 of 1202_1, base station #2 of 1202_2, and base station #3 of 1202_3. Hereinafter, it is assumed as an example that base station #1 of 1202_1, base station #2 of 1202_2, and base station #3 of 1202_3 can all perform sensing, and that in a case where there is a sensing request from the terminal, base station #1 of 1202_1, base station #2 of 1202_2, and base station #3 of 1202_3 can all perform a sensing operation for the request for performing sensing.

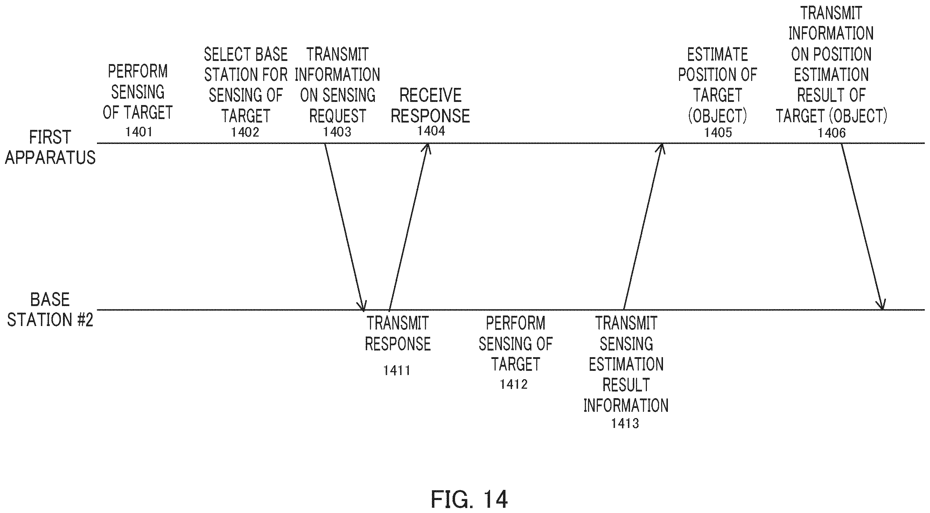

FIG. 14 illustrates a procedure example for sensing in the system example in FIG. 12. In FIG. 14, it is assumed that first apparatus 1201 has obtained at least information on a "distance between first apparatus 1201 and base station #2 of 1202_2" before "ESTIMATE POSITION OF TARGET (OBJECT) 1405" is performed.

Further, in FIG. 14, it is assumed that first apparatus 1201 has obtained information on a "distance between first apparatus 1201 and base station #1 of 1202_1", information on a "distance between first apparatus 1201 and base station #2 of 1202_2", and information on a "distance between first apparatus 1201 and base station #3 of 1202_3" before "SELECT BASE STATION FOR SENSING OF TARGET (SENSING TARGET) 1402" is performed.

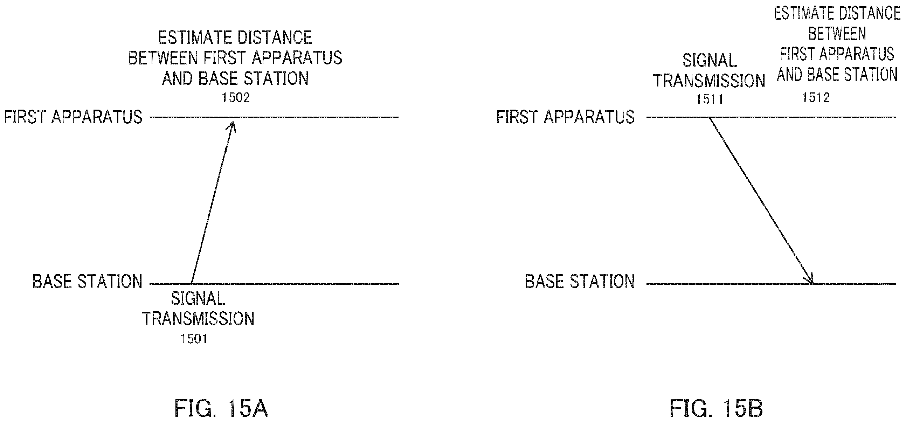

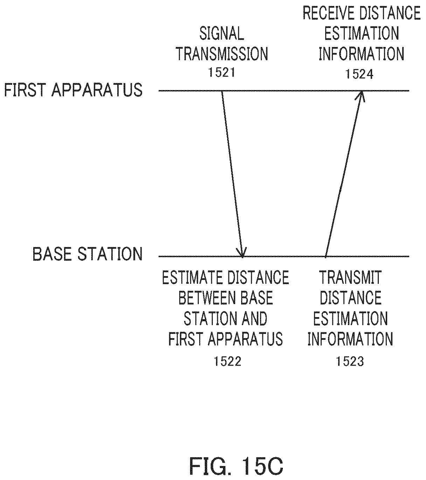

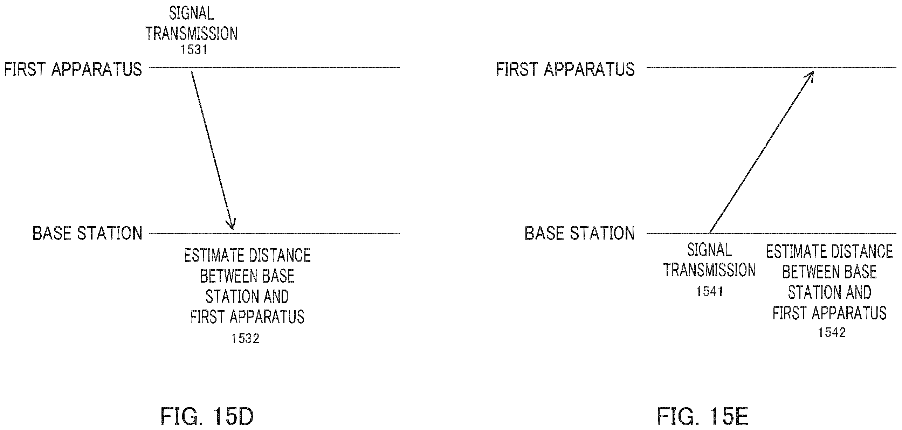

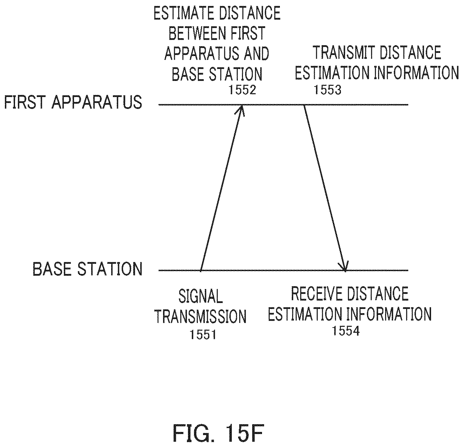

Before describing FIG. 14, a method of obtaining information on a "distance between first apparatus 1201 and the base station" will be described with reference to FIGS. 15A, 15B, 15C, 15D, 15E, and 15F. Note that, in this case, the base station is base station #1 of 1202_1, base station #2 of 1202_2, or base station #3 of 1202_3.

In FIG. 15A, base station 1501 first transmits a signal (1501). Then, first apparatus 1201 receives this signal to thereby estimate the "distance between first apparatus 1201 and the base station" (1502). Note that, since the detailed method of distance estimation has been described in Embodiment 1, a description thereof will be omitted.

As another method, in FIG. 15B, first apparatus 1201 first transmits a signal to the base station (1511). Then, first apparatus 1201 receives this signal and estimates the "distance between first apparatus 1201 and the base station" (1512). Note that, since the detailed method of distance estimation has been described in Embodiment 1, a description thereof will be omitted.

As another method, in FIG. 15C, first apparatus 1201 first transmits a signal to the base station (1521). Then, the base station receives this signal and estimates the "distance between first apparatus 1201 and the base station" (1522). The base station transmits a modulated signal including information on the "distance between first apparatus 1201 and the base station" to first apparatus 1201 (1523). First apparatus 1201 receives the modulated signal including the information on the "distance between first apparatus 1201 and the base station" and obtains the information on the "distance between first apparatus 1201 and the base station" (1524).

As another method, when first apparatus 1201 is a base station or a fixedly installed terminal, first apparatus 1201 and the base station may have acquired the "distance between first apparatus 1201 and the base station" in advance.

First apparatus 1201 and the base station may acquire positions by a position estimation system such as GPS (Global Positioning System, Global Positioning Satellite), for example. Then, the base station may transmit information on its own position to first apparatus 1201, and first apparatus 1201 may determine the "distance between first apparatus 1201 and the base station" from information on its own position and the information on the position of the base station. Then, first apparatus 1201 may transmit the information on its own position to the base station and the base station may determine the "distance between first apparatus 1201 and the base station" from the information on its own position and the information on the position of first apparatus 1201.

As another method, in FIG. 15D, first apparatus 1201 first transmits a signal to the base station (1531). The base station receives this signal and estimates the "distance between first apparatus 1201 and the base station" (1532). Note that, since the detailed method of distance estimation has been described in Embodiment 1, a description thereof will be omitted.

As another method, in FIG. 15E, the base station first transmits a signal to first apparatus 1201 (1541). The base station receives this signal and estimates the "distance between first apparatus 1201 and the base station" (1542). Note that, since the detailed method of distance estimation has been described in Embodiment 1, a description thereof will be omitted.

As another method, in FIG. 15F, the base station first transmits a signal to first apparatus 1201 (1551). First apparatus 1201 receives this signal and estimates the "distance between first apparatus 1201 and the base station" (1552). First apparatus 1201 transmits a modulated signal including information on the "distance between first apparatus 1201 and the base station" to the base station (1553). The base station receives the modulated signal including the information on the "distance between first apparatus 1201 and the base station" and obtains the information on the "distance between first apparatus 1201 and the base station" (1554).

Examples of the method of obtaining information on a "distance between first apparatus 1201 and the base station" have been described above with reference to FIGS. 15A to 15F.

An example when the distance-based triangulation whose examples are the first method and the second method described in Embodiment 1 is used will be described.

In FIG. 14, first apparatus 1201 first performs sensing of target (object) 1203 in FIG. 12 to obtain an estimated value of a "distance between first apparatus 1201 and target 1203" (1401).

First apparatus 1201 selects a base station, which is requested to perform estimation of a distance to target 1203, based on the estimated value of the "distance between first apparatus 1201 and target 1203", the information on the "distance between first apparatus 1201 and base station #1 of 1202_1", the information on the "distance between first apparatus 1201 and base station #2 of 1202_2", and the information on the "distance between first apparatus 1201 and base station #3 of 1202_3" (1402).

Note that, it is assumed in the example of FIG. 14 that first apparatus 1201 has selected base station #2 of 1202_2 in FIG. 12 as the base station which is requested to perform the estimation of the distance to target 1203. However, when the base station which is requested to perform the estimation of the distance to target 1203 is determined (in advance), "SELECT BASE STATION FOR SENSING OF TARGET (SENSING TARGET) 1402" may not be performed.

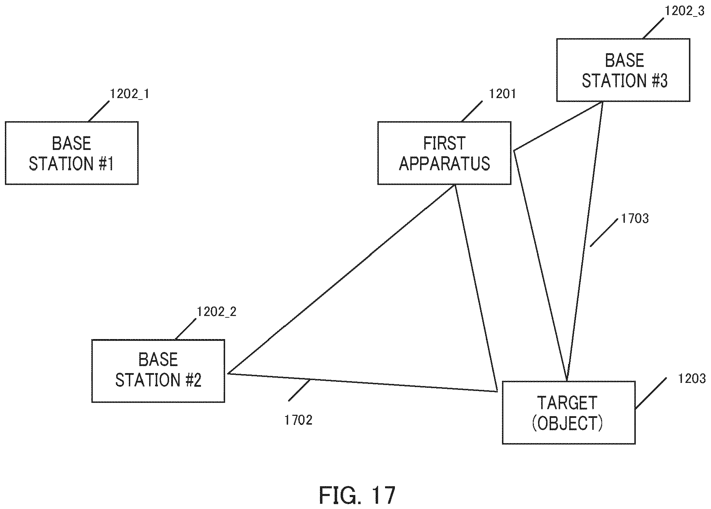

Further, first apparatus 1201 may also broadcast information for requesting sensing. First apparatus 1201 may select a base station, which senses a target, from base stations that have returned a response to the request. For example, as described in FIG. 17, first apparatus 1201 may select a base station, which senses a target, such that first apparatus 1201, the base station, and the target form an obtuse triangle. Note that, an example of the channel of the broadcast is as described herein.

First apparatus 1201 transmits information on a request for "performing estimation of a distance to target 1203" to base station #2 of 1202_2 (1403).

Base station #2 of 1202_2 receives the information on the request for "performing the estimation of the distance to target 1203", and responds "whether base station #2 of 1202_2 accepts the request" (1411). Note that, in the example here, a description will be given on the assumption that base station #2 of 1202_2 "accepts the request".

First apparatus 1201 receives information on the response to the request (1404).

Base station #2 of 1202_2 transmits a signal for performing sensing and obtains an estimated value of a "distance between base station #2 of 1202_2 and target 1203" (1412).

Base station #2 of 1202_2 transmits information on the "distance between base station #2 of 1202_2 and target 1203" to first apparatus 1201 (1413).

First apparatus 1201 obtains the information on the "distance between base station #2 of 1202_2 and target 1203", performs triangulation by using the "distance between first apparatus 1201 and base station #2 of 1202_2", the "distance between first apparatus 1201 and target 1203", and the "distance between base station #2 of 1202_2 and target 1203", and estimates the position of target 1203, for example (1405).

First apparatus 1201 transmits information on the "position of target 1203" to base station #2 of 1202_2 (1406).

Note that, in a case where first apparatus 1201 and base station #2 of 1202_2 do not need to share the information on the "position of target 1203", first apparatus 1201 may not transmit the information on the "position of target 1203" to base station #2 of 1202_2.

By performing as described above, it is possible to realize the distance-based triangulation described in Embodiment 1. Thus, it is possible to obtain the effect of being capable of specifying the position of a target.

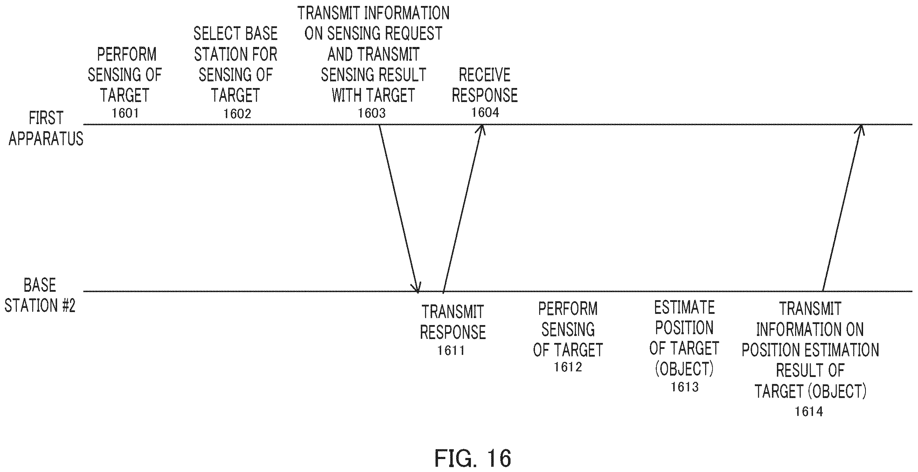

Next, another example when the distance-based triangulation whose examples are the first method and the second method is used will be described with reference to FIG. 16.

FIG. 16 illustrates another procedure example for sensing. It is assumed that first apparatus 1201 has obtained information on sensing capability 1301 in FIG. 13, which is transmitted by base station #1 of 1202_1, base station #2 of 1202_2, and base station #3 of 1202_3, and has acquired each status of response to sensing of base station #1 of 1202_1, base station #2 of 1202_2, and base station #3 of 1202_3.

Hereinafter, it is assumed as an example that base station #1 of 1202_1, base station #2 of 1202_2, and base station #3 of 1202_3 can all perform sensing, and that in a case where there is a sensing request from the terminal, base station #1 of 1202_1, base station #2 of 1202_2, and base station #3 of 1202_3 can all perform a sensing operation for the request for performing sensing.

In FIG. 16, it is assumed that base station #2 of 1202_2 has obtained at least information on a "distance between first apparatus 1201 and base station #2 of 1202_2" before "ESTIMATE POSITION OF TARGET (OBJECT) 1613" is performed. Further, first apparatus 1201 may have obtained at least the information on the "distance between first apparatus 1201 and base station #2 of 1202_2" before "ESTIMATE POSITION OF TARGET (OBJECT) 1613" is performed.

Further, in FIG. 16, it is assumed that base station #2 of 1202_2 has obtained information on a "distance between first apparatus 1201 and base station #1 of 1202_1", information on a "distance between first apparatus 1201 and base station #2 of 1202_2", and information on a "distance between first apparatus 1201 and base station #3 of 1202_3" before "SELECT BASE STATION FOR SENSING OF TARGET (SENSING TARGET) 1602" is performed. Further, in FIG. 16, first apparatus 1201 may have obtained at least the information on the "distance between first apparatus 1201 and base station #2 of 1202_2" before "ESTIMATE POSITION OF TARGET (OBJECT) 1613" is performed.

Note that, since the method of obtaining information on the "distance between first apparatus 1201 and the base station" has already been described with reference to FIGS. 15A, 15B, 15C, 15D, 15E, and 15F, a description thereof will be omitted.

As another method, when first apparatus 1201 is a base station or a fixedly installed terminal, first apparatus 1201 and the base station may have acquired the "distance between first apparatus 1201 and the base station" in advance.

Further, first apparatus 1201 and the base station may acquire positions by a position estimation system such as GPS, for example. Then, the base station may transmit information on its own position to first apparatus 1201, and first apparatus 1201 may determine the "distance between first apparatus 1201 and the base station" from information on its own position and the information on the position of the base station. Then, first apparatus 1201 may transmit the information on its own position to the base station and the base station may determine the "distance between first apparatus 1201 and the base station" from the information on its own position and the information on the position of first apparatus 1201.

An example when the distance-based triangulation whose examples are the first method and the second method described in Embodiment 1 is used will be described.

In FIG. 16, first apparatus 1201 first performs sensing of target (object) 1203 in FIG. 12 to obtain an estimated value of a "distance between first apparatus 1201 and target 1203" (1601).

First apparatus 1201 selects a base station, which is requested to perform estimation of a distance to target 1203, based on the estimated value of the "distance between first apparatus 1201 and target 1203", the information on the "distance between first apparatus 1201 and base station #1 of 1202_1", the information on the "distance between first apparatus 1201 and base station #2 of 1202_2", and the information on the "distance between first apparatus 1201 and base station #3 of 1202_3" (1602).

Note that, it is assumed in the example of FIG. 16 that first apparatus 1201 has selected base station #2 of 1202_2 in FIG. 12 as the base station which is requested to perform the estimation of the distance to target 1203. However, when the base station which is requested to perform the estimation of the distance to target 1203 is determined (in advance), "SELECT BASE STATION FOR SENSING OF TARGET (SENSING TARGET) 1602" may not be performed.

First apparatus 1201 transmits information on a request for "estimation of a distance to target 1203" to base station #2 of 1202_2 (1603). Further, first apparatus 1201 transmits information on the "distance between first apparatus 1201 and target 1203" to base station #2 of 1202_2 (1603).

Base station #2 of 1202_2 receives the information on the request for "estimation of the distance to target 1203", and responds "whether base station #2 of 1202_2 accepts the request" (1611). Note that, in the example here, a description will be given on the assumption that base station #2 of 1202_2 "accepts the request".

First apparatus 1201 receives information on the response to the request (1604).

Base station #2 of 1202_2 transmits a signal for performing sensing and obtains an estimated value of a "distance between base station #2 of 1202_2 and target 1203" (1612).

Base station #2 of 1202_2 obtains the information on the "distance between base station #2 of 1202_2 and target 1203", performs triangulation by using the "distance between first apparatus 1201 and base station #2 of 1202_2", the "distance between first apparatus 1201 and target 1203", and the "distance between base station #2 of 1202_2 and target 1203", and estimates the position of target 1203, for example (1613).

Note that, base station #2 of 1202_2 obtains the information on the "distance between first apparatus 1201 and base station #2 of 1202_2" at one stage.

Base station #2 of 1202_2 transmits information on an estimation result of the "position of target 1203" to first apparatus 1201 (1614).

Note that, in a case where base station #2 of 1202_2 and first apparatus 1201 do not need to share the information on the estimation result of the "position of target 1203", base station #2 of 1202_2 may not transmit the information on the estimation result of the "position of target 1203" to first apparatus 1201.

By performing as described above, it is possible to realize the distance-based triangulation described in Embodiment 1. Thus, it is possible to obtain the effect of being capable of specifying the position of a target.

### Case of Direction-based Triangulation:

An example when the direction-based triangulation whose examples are the third method and the fourth method described in Embodiment 1 is used will be described.

It is assumed that first apparatus 1201 has obtained information on sensing capability 1301 in FIG. 13, which is transmitted by base station #1 of 1202_1, base station #2 of 1202_2, and base station #3 of 1202_3, and has acquired each status of response to sensing of base station #1 of 1202_1, base station #2 of 1202_2, and base station #3 of 1202_3.

Hereinafter, it is assumed as an example that base station #1 of 1202_1, base station #2 of 1202_2, and base station #3 of 1202_3 can all perform sensing, and that in a case where there is a sensing request from the terminal, base station #1 of 1202_1, base station #2 of 1202_2, and base station #3 of 1202_3 can all perform a sensing operation for the request for performing sensing.

In FIG. 14, it is assumed that first apparatus 1201 has obtained at least information on a "distance between first apparatus 1201 and base station #2 of 1202_2" before "ESTIMATE POSITION OF TARGET (OBJECT) 1405" is performed.

Further, in FIG. 14, it is assumed that first apparatus 1201 has obtained information on a "distance between first apparatus 1201 and base station #1 of 1202_1", information on a "distance between first apparatus 1201 and base station #2 of 1202_2", and information on a "distance between first apparatus 1201 and base station #3 of 1202_3" before "SELECT BASE STATION FOR SENSING OF TARGET (SENSING TARGET) 1402" is performed.

Note that, since the method of obtaining information on the "distance between first apparatus 1201 and the base station" has already been described with reference to FIGS. 15A, 15B, 15C, 15D, 15E, and 15F, a description thereof will be omitted.

As another method, when first apparatus 1201 is a base station or a fixedly installed terminal, first apparatus 1201 and the base station may have acquired the "distance between first apparatus 1201 and the base station" in advance.

Further, first apparatus 1201 and the base station may acquire positions by a position estimation system such as GPS, for example. Then, the base station may transmit information on its own position to first apparatus 1201, and first apparatus 1201 may determine the "distance between first apparatus 1201 and the base station" from information on its own position and the information on the position of the base station. Then, first apparatus 1201 may transmit the information on its own position to the base station and the base station may determine the "distance between first apparatus 1201 and the base station" from the information on its own position and the information on the position of first apparatus 1201.

An example when the direction-based triangulation whose examples are the third method and the fourth method described in Embodiment 1 is used will be described.

In FIG. 14, first apparatus 1201 first performs sensing of target (object) 1203 in FIG. 12 to obtain an estimated value of a "direction (of arrival) of first apparatus 1201 and target 1203" (1401).

First apparatus 1201 selects a base station, which is requested to perform estimation of a direction (of arrival) with target 1203, based on the estimated value of the "direction (of arrival) of first apparatus 1201 and target 1203", the information on the "distance between first apparatus 1201 and base station #1 of 1202_1", the information on the "distance between first apparatus 1201 and base station #2 of 1202_2", and the information on the "distance between first apparatus 1201 and base station #3 of 1202_3" (1402).

Note that, it is assumed in the example of FIG. 14 that first apparatus 1201 has selected base station #2 of 1202_2 in FIG. 12 as the base station which is requested to perform the estimation of the direction (of arrival) with target 1203. However, when the base station which is requested to perform the estimation of the direction (of arrival) with target 1203 is determined (in advance), "SELECT BASE STATION FOR SENSING OF TARGET (SENSING TARGET) 1402" may not be performed.

First apparatus 1201 transmits information on a request for "estimation of a direction (of arrival) with target 1203" to base station #2 of 1202_2 (1403).

Base station #2 of 1202_2 receives the information on the request for "estimation of the direction (of arrival) with target 1203", and responds "whether base station #2 of 1202_2 accepts the request" (1411). Note that, in the example here, a description will be given on the assumption that base station #2 of 1202_2 "accepts the request".

First apparatus 1201 receives information on the response to the request (1404).

Base station #2 of 1202_2 transmits a signal for performing sensing and obtains an estimated value of a "direction (of arrival) of base station #2 of 1202_2 and target 1203" (1412).

Base station #2 of 1202_2 transmits information on the "direction (of arrival) of base station #2 of 1202_2 and target 1203" to first apparatus 1201 (1413).

First apparatus 1201 obtains the information on the "direction (of arrival) of base station #2 of 1202_2 and target 1203", performs triangulation by using the "distance between first apparatus 1201 and base station #2 of 1202_2", the "direction (of arrival) of first apparatus 1201 and target 1203", and the "direction (of arrival) of base station #2 of 1202_2 and target 1203", and estimates the position of target 1203, for example (1405).

First apparatus 1201 transmits information on the "position of target 1203" to base station #2 of 1202_2 (1406).

Note that, in a case where first apparatus 1201 and base station #2 of 1202_2 do not need to share the information on the "position of target 1203", first apparatus 1201 may not transmit the information on the "position of target 1203" to base station #2 of 1202_2.

By performing as described above, it is possible to realize the direction(-of-arrival)-based triangulation described in Embodiment 1. Thus, it is possible to obtain the effect of being capable of specifying the position of a target.

Next, another example when the direction-based triangulation whose examples are the third method and the fourth method is used will be described with reference to FIG. 16.

It is assumed that first apparatus 1201 has obtained information on sensing capability 1301 in FIG. 13, which is transmitted by base station #1 of 1202_1, base station #2 of 1202_2, and base station #3 of 1202_3, and has acquired each status of response to sensing of base station #1 of 1202_1, base station #2 of 1202_2, and base station #3 of 1202_3.

Hereinafter, it is assumed as an example that base station #1 of 1202_1, base station #2 of 1202_2, and base station #3 of 1202_3 can all perform sensing, and that in a case where there is a sensing request from the terminal, base station #1 of 1202_1, base station #2 of 1202_2, and base station #3 of 1202_3 can all perform a sensing operation for the request for performing sensing.

In FIG. 16, it is assumed that base station #2 of 1202_2 has obtained at least information on a "distance between first apparatus 1201 and base station #2 of 1202_2" before "ESTIMATE POSITION OF TARGET (OBJECT) 1613" is performed. Further, first apparatus 1201 may have obtained at least the information on the "distance between first apparatus 1201 and base station #2 of 1202_2" before "ESTIMATE POSITION OF TARGET (OBJECT) 1613" is performed.

Further, in FIG. 16, it is assumed that base station #2 of 1202_2 has obtained information on a "distance between first apparatus 1201 and base station #1 of 1202_1", information on a "distance between first apparatus 1201 and base station #2 of 1202_2", and information on a "distance between first apparatus 1201 and base station #3 of 1202_3" before "SELECT BASE STATION FOR SENSING OF TARGET 1602" is performed. Further, in FIG. 16, first apparatus 1201 may have obtained at least the information on the "distance between first apparatus 1201 and base station #2 of 1202_2" before "ESTIMATE POSITION OF TARGET (OBJECT) 1613" is performed.

Note that, since the method of obtaining information on the "distance between first apparatus 1201 and the base station" has already been described with reference to FIGS. 15A, 15B, 15C, 15D, 15E, and 15F, a description thereof will be omitted.

As another method, when first apparatus 1201 is a base station or a fixedly installed terminal, first apparatus 1201 and the base station may have acquired the "distance between first apparatus 1201 and the base station" in advance.

Further, first apparatus 1201 and the base station may acquire positions by a position estimation system such as GPS, for example. Then, the base station may transmit information on its own position to first apparatus 1201, and first apparatus 1201 may determine the "distance between first apparatus 1201 and the base station" from information on its own position and the information on the position of the base station. Then, first apparatus 1201 may transmit the information on its own position to the base station and the base station may determine the "distance between first apparatus 1201 and the base station" from the information on its own position and the information on the position of first apparatus 1201.

An example when the direction-based triangulation whose examples are the third method and the fourth method described in Embodiment 1 is used will be described.

In FIG. 16, first apparatus 1201 first performs sensing of target (object) 1203 in FIG. 12 to obtain an estimated value of a "direction (of arrival) of first apparatus 1201 and target 1203" (1601).

First apparatus 1201 selects a base station, which is requested to perform estimation of a direction (of arrival) with target 1203, based on the estimated value of the "direction (of arrival) of first apparatus 1201 and target 1203", the information on the "distance between first apparatus 1201 and base station #1 of 1202_1", the information on the "distance between first apparatus 1201 and base station #2 of 1202_2", and the information on the "distance between first apparatus 1201 and base station #3 of 1202_3" (1602).

Note that, it is assumed in the example of FIG. 16 that first apparatus 1201 has selected base station #2 of 1202_2 in FIG. 12 as the base station which is requested to perform the estimation of the direction (of arrival) with target 1203. However, when the base station which is requested to perform the estimation of the direction (of arrival) with target 1203 is determined (in advance), "SELECT BASE STATION FOR SENSING OF TARGET (SENSING TARGET) 1602" may not be performed.

First apparatus 1201 transmits information on a request for "estimation of a direction (of arrival) with target 1203" to base station #2 of 1202_2 (1603). Further, first apparatus 1201 transmits information on the "direction (of arrival) of first apparatus 1201 and target 1203" to base station #2 of 1202_2 (1603).

Base station #2 of 1202_2 receives the information on the request for "estimation of the direction (of arrival) with target 1203", and responds "whether base station #2 of 1202_2 accepts the request" (1611). Note that, in the example here, a description will be given on the assumption that base station #2 of 1202_2 "accepts the request".

First apparatus 1201 receives information on the response to the request (1604).

Base station #2 of 1202_2 transmits a signal for performing sensing and obtains an estimated value of a "direction (of arrival) of base station #2 of 1202_2 and target 1203" (1612).

Base station #2 of 1202_2 obtains the information on the "direction (of arrival) of base station #2 of 1202_2 and target 1203", performs triangulation by using the "distance between first apparatus 1201 and base station #2 of 1202_2", the "direction (of arrival) of first apparatus 1201 and target 1203", and the "direction (of arrival) of base station #2 of 1202_2 and target 1203", and estimates the position of target 1203, for example (1613).

Note that, base station #2 of 1202_2 obtains the information on the "distance between first apparatus 1201 and base station #2 of 1202_2" at one stage.

Base station #2 of 1202_2 transmits information on an estimation result of the "position of target 1203" to first apparatus 1201 (1614).

Note that, in a case where base station #2 of 1202_2 and first apparatus 1201 do not need to share the information on the estimation result of the "position of target 1203", base station #2 of 1202_2 may not transmit the information on the estimation result of the "position of target 1203" to first apparatus 1201.

By performing as described above, it is possible to realize the direction(-of-arrival)-based triangulation described in Embodiment 1. Thus, it is possible to obtain the effect of being capable of specifying the position of a target.

An example of base station selection will be described. In the above description, in FIG. 14, first apparatus 1201 performs "PERFORM SENSING OF TARGET (SENSE TARGET) (1401)" before "SELECT BASE STATION OF SENSING OF TARGET (1402)" is performed. In the same manner, in FIG. 16, first apparatus 1201 performs "PERFORM SENSING OF TARGET (SENSE TARGET) (1601)" before "SELECT BASE STATION FOR SENSING OF TARGET (SENSING TARGET) (1602)" is performed.

FIG. 17 is a diagram provided for describing an example of base station selection. In FIG. 17, parts which operate in the same manner as in FIG. 12 are denoted with the same numbers, and descriptions thereof will be omitted.

In FIG. 17, in a case where "first apparatus 1201" and "base station #2 of 1202_2" are apparatuses that sense target (object) 1203 (sense the target), the triangle formed by triangulation is "second triangle 1702".

In a case where "first apparatus 1201" and "base station #3 of 1202_3" are apparatuses that sense target (object) 1203, on the other hand, the triangle formed by triangulation is "third triangle 1703".

At this time, second triangle 1702 is an obtuse triangle, and third triangle 1703 is an acute triangle. At this time, when an estimation error occurs in sensing in the acute triangle state, an estimation error in position estimation or the like may become large. Given this point, second triangle 1702 may be more suitable for sensing.

Thus, in FIG. 14, first apparatus 1201 can select the state of the triangle by means of base station selection by performing "PERFORM SENSING OF TARGET (SENSING TARGET) (1401)" before "SELECT BASE STATION OF SENSING OF TARGET (THAT SENSES TARGET) (1402)" is performed, so that estimation errors due to sensing may be reduced.

In the same manner, in FIG. 16, first apparatus 1201 can select the state of the triangle by means of base station selection by performing "PERFORM SENSING OF TARGET (1601)" before "SELECT BASE STATION FOR SENSING OF TARGET (THAT SENSES TARGET) (1602)" is performed, so that estimation errors due to sensing may be reduced.

By performing as described above, it is possible to perform highly-accurate triangulation so that it is possible to obtain the effect that each apparatus can grasp the position of a target or the like.

Note that, in a case where first apparatus 1201 and the base station "grasp positions (or position information) on the map in advance" or in a case where first apparatus 1201 and the base station "can grasp positions (or position information) on the map by, for example, a position estimation system such as GPS", each apparatus can grasp the position (or position information) of a target on the map.

Further, in a case where first apparatus 1201 "transmits information on a sensing request" to the base station in FIG. 14 or 16, the communication may be radio communication or may be wired communication.

Further, signals transmitted by, for example, base stations, terminals, and repeaters for sensing a target (object) in the above description may be referred to as reference signals, reference symbols, pilot symbols, pilot signals, or preamble, although the designations are not limited to the above examples.

Next, an exemplary embodiment that differs from those in FIGS. 12, 14 and 16 will be described. An exemplary embodiment in a case where a target transmits a radio wave will be described.

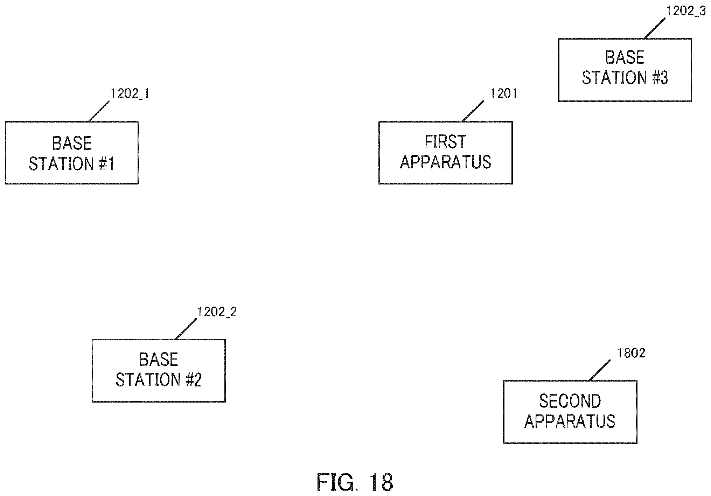

FIG. 18 illustrates an example of the "sensing system" or "sensing and communication system" exemplified here. In FIG. 18, parts which operate in the same manner as in FIG. 12 are denoted with the same numbers and have already been described. Accordingly, descriptions thereof will be omitted.

In FIG. 18, second apparatus 1802 is a target object whose position is estimated by sensing.

In this exemplary embodiment, a method of performing "the triangulation described in Embodiment 1 with first apparatus 1201 and base station #1 of 1202_1", "the triangulation described in Embodiment 1 with first apparatus 1201 and base station #2 of 1202_2", and the "triangulation described in Embodiment 1 with first apparatus 1201 and base station #3 of 1202_3" will be described as an example.

It is assumed that first apparatus 1201 is an apparatus having a function of performing sensing described in Embodiment 1. Further, it is assumed that first apparatus 1201 has a communication function and communicates with, for example, base station #1 of 1202_1, bases station #2 of 1202_2, and base station #3 of 1202_3.

It is assumed that second apparatus 1802 in FIG. 18 is an apparatus capable of transmitting a radio wave.

Here, it is assumed that first apparatus 1201 performs sensing for performing triangulation. At this time, first apparatus 1201 performs sensing with one of base station #1 of 1202_1, base station #2 of 1202_2, base station #3 of 1202_3 to realize triangulation. However, it is supposed that there is/are a base station(s) that does/do not correspond to sensing due to factors such as the size of the base station(s) and the time of the installation.

Accordingly, it is assumed that base stations such as base station #1 of 1202_1, base station #2 of 1202_2, and base station #3 of 1202_3 transmit control information including information on sensing capability 1301 as illustrated in FIG. 13.

Note that, it is assumed that the control information including information on sensing capability 1301 is transmitted by a base station using a PBCH, a PDSCH or a PDCCH, for example. The channel through which the above control information is transmitted is not limited to the examples described above.

As illustrated in FIG. 13, it is assumed that information on sensing capability 1301 includes at least one of "INFORMATION ON WHETHER SENSING IS POSSIBLE OR IMPOSSIBLE 1311", "INFORMATION ON WHETHER SENSING REQUEST FROM TERMINAL IS PERFORMABLE OR NOT PERFORMABLE 1312", and/or "INFORMATION ON WHETHER SENSING REQUEST FROM TERMINAL IS ACCEPTABLE OR NOT ACCEPTABLE 1313".

It is assumed that specific examples of "INFORMATION ON WHETHER SENSING IS POSSIBLE OR IMPOSSIBLE 1311", "INFORMATION ON WHETHER SENSING REQUEST FROM TERMINAL IS PERFORMABLE OR NOT PERFORMABLE 1312", and "INFORMATION ON WHETHER SENSING REQUEST FROM TERMINAL IS ACCEPTABLE OR NOT ACCEPTABLE 1313" are as follows.

"INFORMATION ON WHETHER SENSING IS POSSIBLE OR IMPOSSIBLE 1311":
This information is used to notify, for example, a terminal, a repeater, other base station(s) or the like of "whether a base station is capable of performing sensing".

Thus, in a case where at least information that "sensing is performable" is included as "INFORMATION ON WHETHER SENSING IS POSSIBLE OR IMPOSSIBLE 1311", it is assumed that a base station that transmits information 1311 has a sensing function. Further, it is assumed that this base station has a communication function. Note that, since the specific configuration has already been described in Embodiment 1, a description thereof will be omitted.

"INFORMATION ON WHETHER SENSING REQUEST FROM TERMINAL IS PERFORMABLE OR NOT PERFORMABLE 1312":
This information is used to notify, for example, a terminal or the like of information on "whether sensing is performable" when a base station receives a sensing request from the terminal.

Note that, although "INFORMATION ON WHETHER SENSING REQUEST FROM TERMINAL IS PERFORMABLE OR NOT PERFORMABLE 1312" is named here, "INFORMATION ON WHETHER SENSING REQUEST FROM TERMINAL IS PERFORMABLE OR NOT PERFORMABLE 1312" may also be "information on whether a sensing request from an apparatus other than a terminal, such as a repeater and another apparatus, is performable or not performable". Further, details of the "sensing request" will be described later.

"INFORMATION ON WHETHER SENSING REQUEST FROM TERMINAL IS ACCEPTABLE OR NOT ACCEPTABLE 1313":
This information is used to notify, for example, a terminal or the like of information on "whether a base station accepts sensing from the terminal" when there is a sensing request for the base station from the terminal.

Accordingly, there are modes in which, even when there is a sensing request from a terminal, a base station "accepts" and "does not accept" the sensing request.

Note that, although "INFORMATION ON WHETHER SENSING REQUEST FROM TERMINAL IS ACCEPTABLE OR NOT ACCEPTABLE 1313" is named here, "INFORMATION ON WHETHER SENSING REQUEST FROM TERMINAL IS ACCEPTABLE OR NOT ACCEPTABLE 1313" may be "information on whether a sensing request from an apparatus other than a terminal, such as a repeater and another base station, is acceptable or not acceptable". Further, details of the "sensing request" will be described later.

By configuring the above, a terminal, a repeater, another base station, and the like can know sensing of a base station and a state with respect to a sensing request so that it is possible to obtain the effect that suitable "sensing-related control and communication with a base station" can be performed.

Next, operations of first apparatus 1201, second apparatus 1802, and base station #2 of 1202_2 in FIG. 18 will be described as an example.

Note that, first apparatus 1201 may be a terminal capable of communicating with a base station. Alternatively, first apparatus 1201 may be a base station. In the following description, first apparatus 1201 will be described as a terminal, but it is also performable in the same manner even when first apparatus 1201 is a base station. However, in a case where a particular operation occurs when first apparatus 1201 is a base station, a supplementary description will be provided. Further, first apparatus 1201 in FIG. 12 may be a repeater, and base station #1 of 1202_1, base station #2 of 1202_2, and base station #3 of 1202_3 may be repeaters.

The present embodiment deals with triangulation. Examples of the specific triangulation method have been described in Embodiment 1. The first method and the second method are triangulation based on the fact that information on a distance is obtained by performing sensing.

The third method and the fourth method are, on the other hand, triangulation based on the fact that information on a direction (of arrival) (having said that, a distance may also be obtained) is obtained by performing sensing.

Hereinafter, with respect to FIG. 12, distance-based triangulation whose examples are the first method and the second method, and direction-based triangulation whose examples are the third method and the fourth method will be described separately.

### Case of Distance-based Triangulation:

An example when the distance-based triangulation whose examples are the first method and the second method described in Embodiment 1 is used will be described.

First apparatus 1201 obtains information on sensing capability 1301 in FIG. 13, which is transmitted by base station #1 of 1202_1, base station #2 of 1202_2, and base station #3 of 1202_3, and acquires each status of response to sensing of base station #1 of 1202_1, base station #2 of 1202_2, and base station #3 of 1202_3. Hereinafter, it is assumed as an example that base station #1 of 1202_1, base station #2 of 1202_2, and base station #3 of 1202_3 can all perform sensing, and that in a case where there is a sensing request from the terminal, base station #1 of 1202_1, base station #2 of 1202_2, and base station #3 of 1202_3 can all perform a sensing operation for the request for performing sensing.

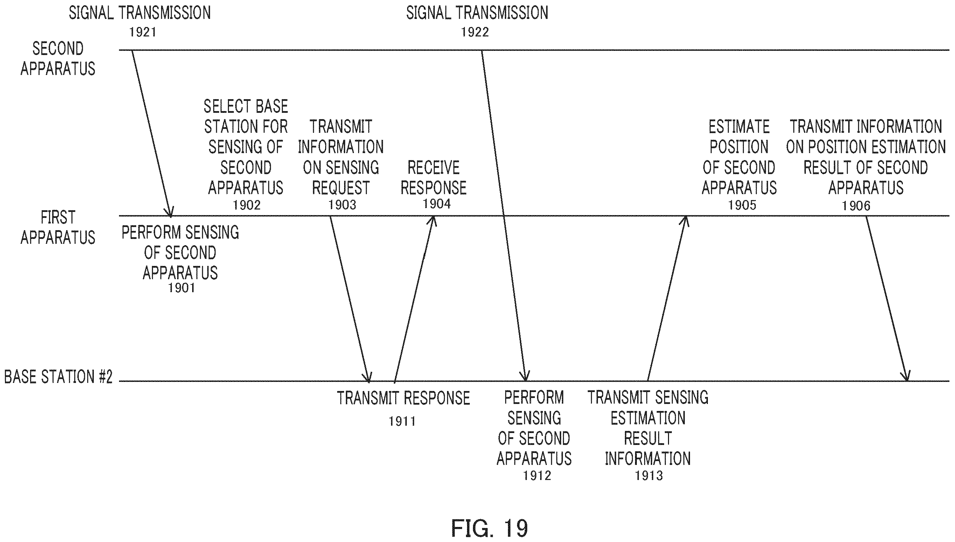

FIG. 19 illustrates a procedure example for sensing in the system example in FIG. 18. In FIG. 19, it is assumed that first apparatus 1201 has obtained at least information on a "distance between first apparatus 1201 and base station #2 of 1202_2" before "ESTIMATE POSITION OF SECOND APPARATUS 1905" is performed.

Further, in FIG. 19, it is assumed that first apparatus 1201 has obtained information on a "distance between first apparatus 1201 and base station #1 of 1202_1", the information on the "distance between first apparatus 1201 and base station #2 of 1202_2", and information on a "distance between first apparatus 1201 and base station #3 of 1202_3" before "SELECT BASE STATION FOR SENSING OF SECOND APPARATUS (THAT SENSES SECOND APPARATUS) 1902" is performed.

Note that, since the method of obtaining information on the "distance between first apparatus 1201 and the base station" has already been described with reference to FIGS. 15A, 15B, 15C, 15D, 15E, and 15F, a description thereof will be omitted.

As another method, when first apparatus 1201 is a base station or a fixedly installed terminal, first apparatus 1201 and the base station may have acquired the "distance between first apparatus 1201 and the base station" in advance.

Further, first apparatus 1201 and the base station may acquire positions by a position estimation system such as GPS, for example. Then, the base station may transmit information on its own position to first apparatus 1201, and first apparatus 1201 may determine the "distance between first apparatus 1201 and the base station" from information on its own position and the information on the position of the base station. Then, first apparatus 1201 may transmit the information on its own position to the base station and the base station may determine the "distance between first apparatus 1201 and the base station" from the information on its own position and the information on the position of first apparatus 1201.

An example when the distance-based triangulation whose examples are the first method and the second method described in Embodiment 1 is used will be described.

In FIG. 19, second apparatus 1802 transmits a signal (for sensing) (1921).

First apparatus 1201 receives the signal transmitted by second apparatus 1802, performs processing for sensing, and obtains an estimated value of a "distance between first apparatus 1201 and second apparatus 1802" (1901). Note that, since the processing for sensing has already been described in the other embodiment, a description thereof will be omitted.

First apparatus 1201 selects a base station, which is requested to perform estimation of a distance to second apparatus 1802, based on the estimated value of the "distance between first apparatus 1201 and second apparatus 1802", the information on the "distance between first apparatus 1201 and base station #1 of 1202_1", the information on the "distance between first apparatus 1201 and base station #2 of 1202_2", and the information on the "distance between first apparatus 1201 and base station #3 of 1202_3" (1902).

Note that, it is assumed in the example of FIG. 19 that first apparatus 1201 has selected base station #2 of 1202_2 in FIG. 18 as the base station which is requested to perform the estimation of the distance to second apparatus 1802. However, when the base station which is requested to perform the estimation of the distance to second apparatus 1802 is determined (in advance), "SELECT BASE STATION FOR SENSING OF SECOND APPARATUS 1802 (SENSING SECOND APPARATUS) 1402" may not be performed.

First apparatus 1201 transmits information on a request for "estimation of a distance to second apparatus 1802" to base station #2 of 1202_2 (1903).

Base station #2 of 1202_2 receives the information on the request for "estimation of the distance to second apparatus 1802", and responds "whether base station #2 of 1202_2 accepts the request" (1911). Note that, in the example here, a description will be given on the assumption that base station #2 of 1202_2 "accepts the request".

First apparatus 1201 receives information on the response to the request (1904).

Second apparatus 1802 transmits a signal (for sensing) (1922).

Base station #2 of 1202_2 receives the signal transmitted by second apparatus 1802, performs processing for sensing, and obtains an estimated value of a "distance between base station #2 of 1202_2 and second apparatus 1802" (1912).

Base station #2 of 1202_2 transmits information on the "distance between base station #2 of 1202_2 and second apparatus 1802" to first apparatus 1201 (1913).

First apparatus 1201 obtains the information on the "distance between base station #2 of 1202_2 and second apparatus 1802", performs triangulation by using the "distance between first apparatus 1201 and base station #2 of 1202_2", the "distance between first apparatus 1201 and second apparatus 1802", and the "distance between base station #2 of 1202_2 and second apparatus 1802", and estimates the position of second apparatus 1802, for example (1905).

First apparatus 1201 transmits information on the "position of second apparatus 1802" to base station #2 of 1202_2 (1906).

Note that, in a case where first apparatus 1201 and base station #2 of 1202_2 do not need to share the information on the "position of second apparatus 1802", first apparatus 1201 may not transmit the information on the "position of second apparatus 1802" to base station #2 of 1202_2.

By performing as described above, it is possible to realize the distance-based triangulation described in Embodiment 1. Thus, it is possible to obtain the effect of being capable of specifying the position of second apparatus 1802.

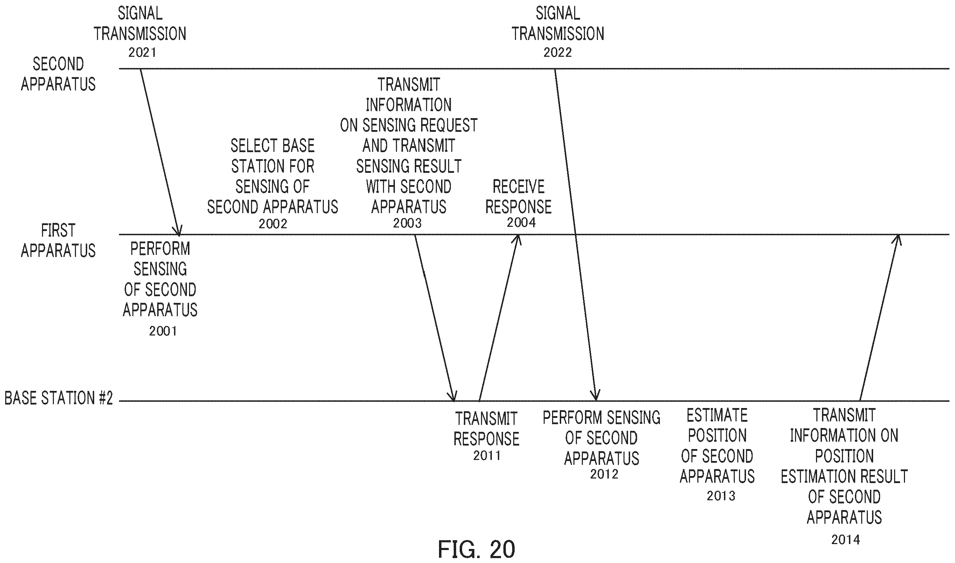

Next, another example when the distance-based triangulation whose examples are the first method and the second method is used will be described with reference to FIG. 20.

FIG. 20 illustrates another procedure example for sensing in the system example in FIG. 18. It is assumed that first apparatus 1201 has obtained information on sensing capability 1301 in FIG. 13, which is transmitted by base station #1 of 1202_1, base station #2 of 1202_2, and base station #3 of 1202_3, and has acquired each status of response to sensing of base station #1 of 1202_1, base station #2 of 1202_2, and base station #3 of 1202_3.

Hereinafter, it is assumed as an example that base station #1 of 1202_1, base station #2 of 1202_2, and base station #3 of 1202_3 can all perform sensing, and that in a case where there is a sensing request from the terminal, base station #1 of 1202_1, base station #2 of 1202_2, and base station #3 of 1202_3 can all perform a sensing operation for the request for performing sensing.

In FIG. 20, it is assumed that base station #2 of 1202_2 has obtained at least information on a "distance between first apparatus 1201 and base station #2 of 1202_2" before "ESTIMATE POSITION OF SECOND APPARATUS 2013" is performed. Further, first apparatus 1201 may have obtained at least the information on the "distance between first apparatus 1201 and base station #2 of 1202_2" before "ESTIMATE POSITION OF SECOND APPARATUS 2013" is performed.

Further, in FIG. 20, it is assumed that base station #2 of 1202_2 has obtained information on a "distance between first apparatus 1201 and base station #1 of 1202_1", information on a "distance between first apparatus 1201 and base station #2 of 1202_2", and information on a "distance between first apparatus 1201 and base station #3 of 1202_3" before "SELECT BASE STATION FOR SENSING OF SECOND APPARATUS (THAT SENSES SECOND APPARATUS) 2002" is performed. Further, in FIG. 20, first apparatus 1201 may have obtained at least the information on the "distance between first apparatus 1201 and base station #2 of 1202_2" before "ESTIMATE POSITION OF SECOND APPARATUS 2013" is performed.

Note that, since the method of obtaining information on the "distance between first apparatus 1201 and the base station" has already been described with reference to FIGS. 15A, 15B, 15C, 15D, 15E, and 15F, a description thereof will be omitted.

As another method, when first apparatus 1201 is a base station or a fixedly installed terminal, first apparatus 1201 and the base station may have acquired the "distance between first apparatus 1201 and the base station" in advance.

Further, first apparatus 1201 and the base station may acquire positions by a position estimation system such as GPS, for example. Then, the base station may transmit information on its own position to first apparatus 1201, and first apparatus 1201 may determine the "distance between first apparatus 1201 and the base station" from information on its own position and the information on the position of the base station. Then, first apparatus 1201 may transmit the information on its own position to the base station and the base station may determine the "distance between first apparatus 1201 and the base station" from the information on its own position and the information on the position of first apparatus 1201.

An example when the distance-based triangulation whose examples are the first method and the second method described in Embodiment 1 is used will be described.

In FIG. 20, second apparatus 1802 transmits a signal (for sensing) (2021).

First apparatus 1201 receives the signal transmitted by second apparatus 1802, performs processing for sensing, and obtains an estimated value of a "distance between first apparatus 1201 and second apparatus 1802" (2001). Note that, since the processing for sensing has already been described in the other embodiment, a description thereof will be omitted.

First apparatus 1201 selects a base station, which is requested to perform estimation of a distance to second apparatus 1802, based on the estimated value of the "distance between first apparatus 1201 and second apparatus 1802", the information on the "distance between first apparatus 1201 and base station #1 of 1202_1", the information on the "distance between first apparatus 1201 and base station #2 of 1202_2", and the information on the "distance between first apparatus 1201 and base station #3 of 1202_3" (2002).

Note that, it is assumed in the example of FIG. 20 that first apparatus 1201 has selected base station #2 of 1202_2 in FIG. 12 as the base station which is requested to perform the estimation of the distance to second apparatus 1802. However, when the base station which is requested to perform the estimation of the distance to second apparatus 1802 is determined (in advance), "SELECT BASE STATION FOR SENSING OF SECOND APPARATUS 1802 (SENSING SECOND APPARATUS) 2002" may not be performed.

First apparatus 1201 transmits information on a request for "estimation of a distance to second apparatus 1802" to base station #2 of 1202_2 (2003). Further, first apparatus 1201 transmits information on the "distance between first apparatus 1201 and second apparatus 1802" to base station #2 of 1202_2 (2003).

Base station #2 of 1202_2 receives the information on the request for "estimation of the distance to second apparatus 1802", and responds "whether base station #2 of 1202_2 accepts the request" (2011). Note that, in the example here, a description will be given on the assumption that base station #2 of 1202_2 "accepts the request".

First apparatus 1201 receives information on the response to the request (2004).

Second apparatus 1802 transmits a signal (for sensing) (2022).

Base station #2 of 1202_2 receives the signal transmitted by second apparatus 1802, performs processing for sensing, and obtains an estimated value of a "distance between base station #2 of 1202_2 and second apparatus 1802" (2012).

Base station #2 of 1202_2 obtains information on the "distance between base station #2 of 1202_2 and second apparatus 1802", performs triangulation by using the "distance between first apparatus 1201 and base station #2 of 1202_2", the "distance between first apparatus 1201 and second apparatus 1802", and the "distance between base station #2 of 1202_2 and second apparatus 1802", and estimates the position of second apparatus 1802, for example (2013).

Note that, base station #2 of 1202_2 obtains the information on the "distance between first apparatus 1201 and base station #2 of 1202_2" at one stage.

Base station #2 of 1202_2 transmits information on an estimation result of the "position of second apparatus 1802" to first apparatus 1201 (2014).

Note that, in a case where base station #2 of 1202_2 and first apparatus 1201 do not need to share the information on the estimation result of the "position of second apparatus 1802", base station #2 of 1202_2 may not transmit the information on the estimation result of the "position of second apparatus 1802" to first apparatus 1201.

By performing as described above, it is possible to realize the distance-based triangulation described in Embodiment 1. Thus, it is possible to obtain the effect of being capable of specifying the position of second apparatus 1802.

### Case of Direction-based Triangulation:

An example when the direction-based triangulation whose examples are the third method and the fourth method described in Embodiment 1 is used will be described.

It is assumed that first apparatus 1201 has obtained information on sensing capability 1301 in FIG. 13, which is transmitted by base station #1 of 1202_1, base station #2 of 1202_2, and base station #3 of 1202_3, and has acquired each status of response to sensing of base station #1 of 1202_1, base station #2 of 1202_2, and base station #3 of 1202_3.

Hereinafter, it is assumed as an example that base station #1 of 1202_1, base station #2 of 1202_2, and base station #3 of 1202_3 can all perform sensing, and that in a case where there is a sensing request from the terminal, base station #1 of 1202_1, base station #2 of 1202_2, and base station #3 of 1202_3 can all perform a sensing operation for the request for performing sensing.

In FIG. 19, it is assumed that first apparatus 1201 has obtained at least information on a "distance between first apparatus 1201 and base station #2 of 1202_2" before "ESTIMATE POSITION OF SECOND APPARATUS 1905" is performed.

Further, in FIG. 19, it is assumed that first apparatus 1201 has obtained information on a "distance between first apparatus 1201 and base station #1 of 1202_1", the information on the "distance between first apparatus 1201 and base station #2 of 1202_2", and information on a "distance between first apparatus 1201 and base station #3 of 1202_3" before "SELECT BASE STATION FOR SENSING OF SECOND APPARATUS (THAT SENSES SECOND APPARATUS) 1902" is performed.

Note that, since the method of obtaining information on the "distance between first apparatus 1201 and the base station" has already been described with reference to FIGS. 15A, 15B, 15C, 15D, 15E, and 15F, a description thereof will be omitted.

As another method, when first apparatus 1201 is a base station or a fixedly installed terminal, first apparatus 1201 and the base station may have acquired the "distance between first apparatus 1201 and the base station" in advance.

Further, first apparatus 1201 and the base station may acquire positions by a position estimation system such as GPS, for example. Then, the base station may transmit information on its own position to first apparatus 1201, and first apparatus 1201 may determine the "distance between first apparatus 1201 and the base station" from information on its own position and the information on the position of the base station. Then, first apparatus 1201 may transmit the information on its own position to the base station and the base station may determine the "distance between first apparatus 1201 and the base station" from the information on its own position and the information on the position of first apparatus 1201.

An example when the direction-based triangulation whose examples are the third method and the fourth method described in Embodiment 1 is used will be described.

In FIG. 19, second apparatus 1802 transmits a signal (for sensing) (1921).

First apparatus 1201 receives the signal transmitted by second apparatus 1802, performs processing for sensing, and obtains an estimated value of a "direction (of arrival) of first apparatus 1201 and second apparatus 1802" (1901). Note that, since the processing for sensing has already been described in the other embodiment, a description thereof will be omitted.

First apparatus 1201 selects a base station, which is requested to perform estimation of a direction (of arrival) with second apparatus 1802, based on the estimated value of the "direction (of arrival) of first apparatus 1201 and second apparatus 1802", the information on the "distance between first apparatus 1201 and base station #1 of 1202_1", the information on the "distance between first apparatus 1201 and base station #2 of 1202_2", and the information on the "distance between first apparatus 1201 and base station #3 of 1202_3" (1902).

Note that, it is assumed in the example of FIG. 19 that first apparatus 1201 has selected base station #2 of 1202_2 in FIG. 18 as the base station which is requested to perform the estimation of the direction (of arrival) with second apparatus 1802. However, when the base station which is requested to perform the estimation of the direction (of arrival) with second apparatus 1802 is determined (in advance), "SELECT BASE STATION FOR SENSING OF SECOND APPARATUS 1802 (SENSING SECOND APPARATUS) 1402" may not be performed.

First apparatus 1201 transmits information on a request for "estimation of the direction (of arrival) with second apparatus 1802" to base station #2 of 1202_2 (1903).

Base station #2 of 1202_2 receives the information on the request for "estimation of the direction (of arrival) with second apparatus 1802", and responds "whether base station #2 of 1202_2 accepts the request" (1911). Note that, in the example here, a description will be given on the assumption that base station #2 of 1202_2 "accepts the request".

First apparatus 1201 receives information on the response to the request (1904).

Second apparatus 1802 transmits a signal (for sensing) (1922).

Base station #2 of 1202_2 receives the signal transmitted by second apparatus 1802, performs processing for sensing, and obtains an estimated value of a "direction (of arrival) of base station #2 of 1202_2 and second apparatus 1802" (1912).

Base station #2 of 1202_2 transmits information on the "direction (of arrival) of base station #2 of 1202_2 and second apparatus 1802" to first apparatus 1201 (1913).

First apparatus 1201 obtains the information on the "direction (of arrival) of base station #2 of 1202_2 and second apparatus 1802", performs triangulation by using the "distance between first apparatus 1201 and base station #2 of 1202_2", the "direction (of arrival) of first apparatus 1201 and second apparatus 1802", and the "direction (of arrival) of base station #2 of 1202_2 and second apparatus 1802", and estimates the position of second apparatus 1802, for example (1905).

First apparatus 1201 transmits information on the "position of second apparatus 1802" to base station #2 of 1202_2 (1906).

Note that, in a case where first apparatus 1201 and base station #2 of 1202_2 do not need to share the information on the "position of second apparatus 1802", first apparatus 1201 may not transmit the information on the "position of second apparatus 1802" to base station #2 of 1202_2.

By performing as described above, it is possible to realize the direction(-of-arrival)-based triangulation described in Embodiment 1. Thus, it is possible to obtain the effect of being capable of specifying the position of second apparatus 1802.

Next, another example when the direction-based triangulation whose examples are the third method and the fourth method is used will be described with reference to FIG. 20.

It is assumed that first apparatus 1201 has obtained information on sensing capability 1301 in FIG. 13, which is transmitted by base station #1 of 1202_1, base station #2 of 1202_2, and base station #3 of 1202_3, and has acquired each status of response to sensing of base station #1 of 1202_1, base station #2 of 1202_2, and base station #3 of 1202_3.

Hereinafter, it is assumed as an example that base station #1 of 1202_1, base station #2 of 1202_2, and base station #3 of 1202_3 can all perform sensing, and that in a case where there is a sensing request from the terminal, base station #1 of 1202_1, base station #2 of 1202_2, and base station #3 of 1202_3 can all perform a sensing operation for the request for performing sensing.

In FIG. 20, it is assumed that base station #2 of 1202_2 has obtained at least information on a "distance between first apparatus 1201 and base station #2 of 1202_2" before "ESTIMATE POSITION OF SECOND APPARATUS 2013" is performed. Further, first apparatus 1201 may have obtained at least the information on the "distance between first apparatus 1201 and base station #2 of 1202_2" before "ESTIMATE POSITION OF SECOND APPARATUS 2013" is performed.

Further, in FIG. 20, it is assumed that base station #2 of 1202_2 has obtained information on a "distance between first apparatus 1201 and base station #1 of 1202_1", information on a "distance between first apparatus 1201 and base station #2 of 1202_2", and information on a "distance between first apparatus 1201 and base station #3 of 1202_3" before "SELECT BASE STATION FOR SENSING OF SECOND APPARATUS (THAT SENSES SECOND APPARATUS) 2002" is performed. Further, in FIG. 20, first apparatus 1201 may have obtained at least the information on the "distance between first apparatus 1201 and base station #2 of 1202_2" before "ESTIMATE POSITION OF SECOND APPARATUS 2013" is performed.

Note that, since the method of obtaining information on the "distance between first apparatus 1201 and the base station" has already been described with reference to FIGS. 15A, 15B, 15C, 15D, 15E, and 15F, a description thereof will be omitted.

As another method, when first apparatus 1201 is a base station or a fixedly installed terminal, first apparatus 1201 and the base station may have acquired the "distance between first apparatus 1201 and the base station" in advance.

Further, first apparatus 1201 and the base station know positions by a position estimation system such as GPS, for example. Then, the base station may transmit information on its own position to first apparatus 1201, and first apparatus 1201 may determine the "distance between first apparatus 1201 and the base station" from information on its own position and the information on the position of the base station. Then, first apparatus 1201 may transmit the information on its own position to the base station and the base station may determine the "distance between first apparatus 1201 and the base station" from the information on its own position and the information on the position of first apparatus 1201.

An example when the direction-based triangulation whose examples are the third method and the fourth method described in Embodiment 1 is used will be described.

In FIG. 20, second apparatus 1802 transmits a signal (for sensing) (2021).

First apparatus 1201 receives the signal transmitted by second apparatus 1802, performs processing for sensing, and obtains an estimated value of a "direction (of arrival) of first apparatus 1201 and second apparatus 1802" (2001). Note that, since the processing for sensing has already been described in the other embodiment, a description thereof will be omitted.

First apparatus 1201 selects a base station, which is requested to perform estimation of a direction (of arrival) with second apparatus 1802, based on the estimated value of the "direction (of arrival) of first apparatus 1201 and second apparatus 1802", the information on the "distance between first apparatus 1201 and base station #1 of 1202_1", the information on the "distance between first apparatus 1201 and base station #2 of 1202_2", and the information on the "distance between first apparatus 1201 and base station #3 of 1202_3" (2002).

Note that, it is assumed in the example of FIG. 20 that first apparatus 1201 has selected base station #2 of 1202_2 in FIG. 12 as the base station which is requested to perform the estimation of the direction (of arrival) with second apparatus 1802. However, when the base station which is requested to perform the estimation of the direction (of arrival) with second apparatus 1802 is determined (in advance), "SELECT BASE STATION FOR SENSING OF SECOND APPARATUS 1802 (SENSING SECOND APPARATUS) 2002" may not be performed.

First apparatus 1201 transmits information on a request for "estimation of the direction (of arrival) with second apparatus 1802" to base station #2 of 1202_2 (2003). Further, first apparatus 1201 transmits information on the "direction (of arrival) of first apparatus 1201 and second apparatus 1802" to base station #2 of 1202_2 (2003).

Base station #2 of 1202_2 receives the information on the request for "estimation of the direction (of arrival) with second apparatus 1802", and responds "whether base station #2 of 1202_2 accepts the request" (2011). Note that, in the example here, a description will be given on the assumption that base station #2 of 1202_2 "accepts the request".

First apparatus 1201 receives information on the response to the request (2004).

Second apparatus 1802 transmits a signal (for sensing) (2022).

Base station #2 of 1202_2 receives the signal transmitted by second apparatus 1802, performs processing for sensing, and obtains an estimated value of a "direction (of arrival) of base station #2 of 1202_2 and second apparatus 1802" (2012).

Base station #2 of 1202_2 obtains the information on the "direction (of arrival) of base station #2 of 1202_2 and second apparatus 1802", performs triangulation by using the "distance between first apparatus 1201 and base station #2 of 1202_2", the "direction (of arrival) of first apparatus 1201 and second apparatus 1802", and the "direction (of arrival) of base station #2 of 1202_2 and second apparatus 1802", and estimates the position of second apparatus 1802, for example (2013).

Note that, base station #2 of 1202_2 obtains the information on the "distance between first apparatus 1201 and base station #2 of 1202_2" at one stage.

Base station #2 of 1202_2 transmits information on an estimation result of the "position of second apparatus 1802" to first apparatus 1201 (2014).

Note that, in a case where base station #2 of 1202_2 and first apparatus 1201 do not need to share the information on the estimation result of the "position of second apparatus 1802", base station #2 of 1202_2 may not transmit the information on the estimation result of the "position of second apparatus 1802" to first apparatus 1201.

By performing as described above, it is possible to realize the direction(-of-arrival)-based triangulation described in Embodiment 1. Thus, it is possible to obtain the effect of being capable of specifying the position of second apparatus 1802.

An example of base station selection will be described. In the above description, in FIG. 19, first apparatus 1201 performs "PERFORM SENSING OF SECOND APPARATUS 1802 (SENSES SECOND APPARATUS) (1901)" before "SELECT BASE STATION OF SENSING OF SECOND APPARATUS 1802 (1902)" is performed. In the same manner, in FIG. 20, first apparatus 1201 performs "REFORM SENSING OF SECOND APPARATUS 1802 (SENSES SECOND APPARATUS) (2001)" before "SELECT BASE STATION FOR SENSING OF SECOND APPARATUS 1802 (SENSING SECOND APPARATUS) (2002)" is performed.

In this way, estimation errors due to sensing may be reduced. Since the reason for the above has already been described, a description thereof will be omitted.

By performing as described above, it is possible to perform highly-accurate triangulation so that it is possible to obtain the effect that each apparatus can grasp the position of a target or the like.

Note that, in a case where first apparatus 1201 and the base station "grasp positions (or position information) on the map in advance" or in a case where first apparatus 1201 and the base station "can grasp positions (or position information) on the map by, for example, a position estimation system such as GPS", each apparatus can grasp the position (or position information) of a target on the map.

Further, in a case where first apparatus 1201 "transmits information on a request of second apparatus 1802" to the base station in FIG. 19 or 20, the communication may be radio communication or may be wired communication.

Note that, the signal transmitted by the second apparatus for sensing in the above description may also be referred to as a reference signal, a reference symbol, a pilot symbol, a pilot signal, or a preamble, although the designation is not limited to the above examples.

Examples of the characteristic points of the examples described above can be described as follows.

A first apparatus transmits a radio wave and receives the radio wave to measure a first distance or the like, a second apparatus transmits a radio wave and receives the radio wave to measure a second distance or the like, and the position of a target is measured by using the first distance or the like and the second distance or the like. For this reason, there are two transmission apparatuses and two reception apparatuses, and further the first apparatus and the second apparatus share information on the acquired first distance or the like and the acquired second distance or the like.

The second apparatus includes a reception apparatus for obtaining first distance information or the like obtained by the first apparatus.

The first apparatus includes a reception apparatus for obtaining second distance information or the like obtained by the second apparatus.

The first apparatus and the second apparatus estimate the position of the target by using the first distance information and the second distance information.

Note that, one or more apparatuses that differ from the second apparatus may estimate the distance to the target.

Further, the one or more apparatuses may also estimate the distance to the target, generate a plurality of pieces of distance information, and transmit these pieces of information to the second apparatus. The second apparatus may estimate the position of the target by generating one piece of first distance information from these pieces of information and using the first distance information and the second distance information.

Operation examples of sensing of each apparatus in FIGS. 12 and 18 have been described above. Hereinafter, configuration examples of apparatuses of first apparatus 1201, base station #1 of 1201_1, base station #2 of 1202_2, and base station #3 of 1202_3 in FIGS. 12 and 18 will be described.

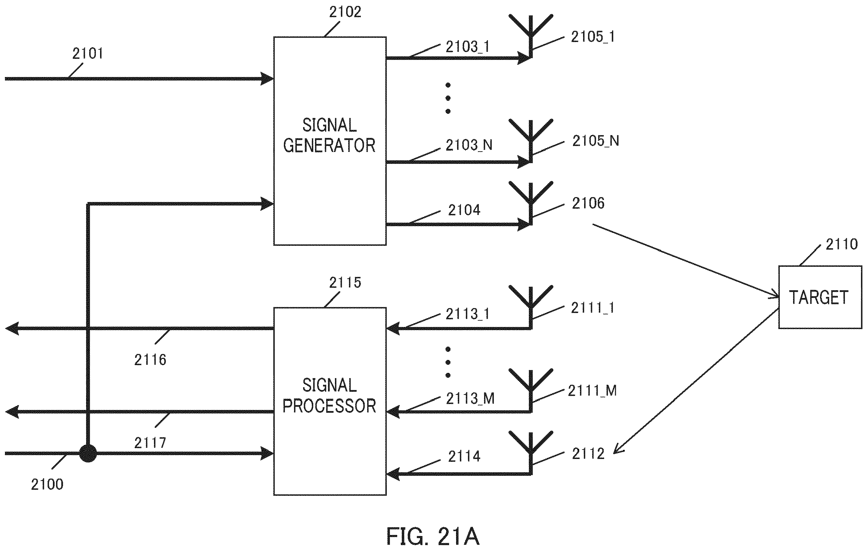

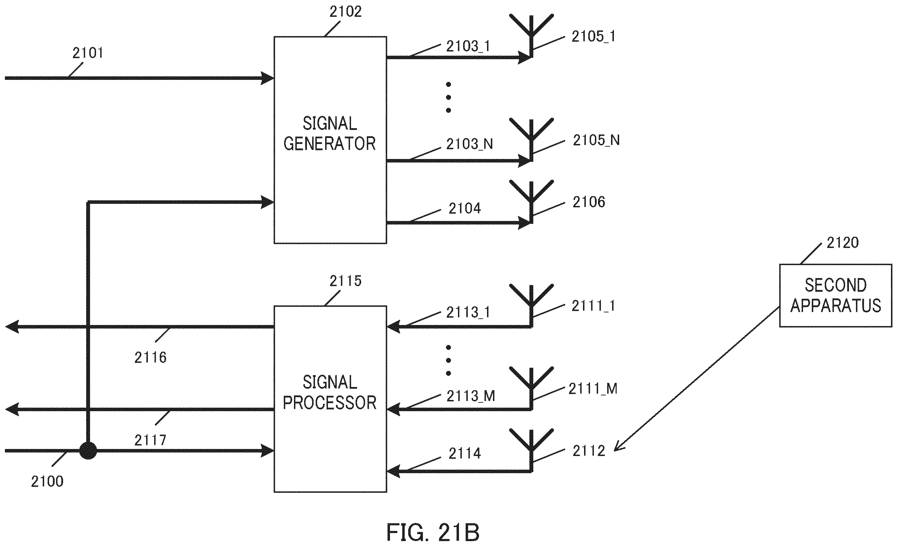

FIGS. 21A and 21B illustrate configuration examples of first apparatus 1201, base station #1 of 1201_1, base station #2 of 1202_2, and base station #3 of 1202_3.

Signal generator 2102 inputs control signal 2100, and generates and outputs a signal based on information of control signal 2100. Specific examples thereof (a first example and a second example) will be described.

### First Example:

For example, in a case where control signal 2100 indicates that "a modulated signal for communication is transmitted", signal generator 2102 performs processing, which includes error correction coding, modulation (mapping), and processing based on a transmission method, on data 2101, and transmits a modulated signal as a radio wave by using at least one antenna port of antenna port 2105_1 to antenna port 2105_N. Note that, it is assumed that N is an integer larger than or equal to 1.

In a case where control signal 2100 indicates that "a modulated signal for communication and a signal for sensing are transmitted", signal generator 2102 performs processing, which includes error correction coding, modulation (mapping), and processing based on a transmission method, on data 2101 and transmits a modulated signal as a radio wave by using at least one antenna port of antenna port 2105_1 to antenna port 2105_N, and generates a signal for sensing and transmits the signal as a radio wave from antenna port 2106.

In a case where control signal 2100 indicates that "a signal for sensing is transmitted", signal generator 2102 generates a signal for sensing and transmits the signal as a radio wave from antenna port 2106.

In a case where a signal for sensing is transmitted from antenna port 2106, the signal for sensing reflects off, for example, target 2110 and the reflected wave reaches antenna port 2112.

Note that, in the case of FIG. 18, a signal for sensing transmitted by second apparatus 1802 reaches antenna port 2112. For example, as in FIG. 21B, a signal for sensing transmitted by second apparatus 2120 (corresponding to second apparatus 1802) reaches antenna port 2112.

For example, in a case where control signal 2100 indicates that "demodulation for communication is performed", a modulated signal is received by using at least one antenna port of antenna port of antenna port 2111_1 to antenna port 211_M, and signal processor 2115 inputs this modulated signal, performs processing including demodulation, and outputs reception data 2116. Note that, it is assumed that M is an integer larger than or equal to 1.

In a case where control signal 2100 indicates that "demodulation for communication is performed and processing for sensing is performed", a modulated signal is received by using at least one antenna port of antenna port 2111_1 to antenna port 2111_M, and signal processor 2115 inputs this modulated signal, performs processing including demodulation, and outputs reception data 2116, and inputs a signal received by antenna port 2112, performs processing for sensing, and, for example, outputs distance information or the like 2117 of a target.

In a case where control signal 2100 indicates that "processing for sensing is performed", signal processor 2115 inputs a signal received by antenna port 2112, performs processing for sensing, and, for example, outputs distance information or the like 2117 of a target.

In the examples described above, antenna ports 2105_1 to 2105_N are transmission antenna ports for communication, and antenna port 2106 is a transmission antenna port for sensing. Further, antenna ports 2111_1 to 2111_M are reception antenna ports for communication, and antenna port 2112 is a reception antenna port for sensing.

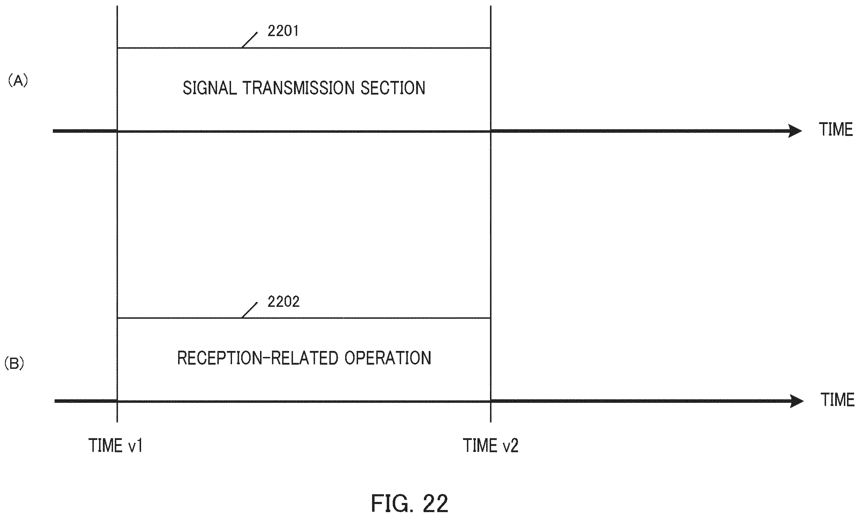

FIG. 22 illustrates an exemplary state when apparatuses of first apparatus 1201, base station #1 of 1201_1, base station #2 of 1202_2, and base station #3 of 1202_3 perform an operation for sensing.

As in (A) in FIG. 22, it is assumed that the section in which the apparatuses of first apparatus 1201, base station #1 of 1201_1, base station #2 of 1202_2, and base station #3 of 1202_3, which have the configuration in FIG. 21A, transmit a signal for sensing is signal transmission section 2201 present between time v1 and time v2.

The apparatuses of first apparatus 1201, base station #1 of 1201_1, base station #2 of 1202_2, and base station #3 of 1202_3, which have the configuration in FIG. 21A, receive a signal in signal transmission section 2201 present between time v1 and time v2 and perform signal processing to thereby perform sensing of a target.

Accordingly, the apparatuses of first apparatus 1201, base station #1 of 1201_1, base station #2 of 1202_2, and base station #3 of 1202_3, which have the configuration in FIG. 21, perform a sensing-related reception operation in the section of reception-related operation 2202 present between time v1 and time v2 as in (B) in FIG. 22.

That is, when sensing is performed, there may be a time section in which the apparatuses of first apparatus 1201, base station #1 of 1201_1, base station #2 of 1202_2, and base station #3 of 1202_3 perform both processing of an operation in a signal transmission section and processing of a signal reception-related operation. Thus, such an apparatus configuration that includes an antenna port for communication and an antenna port for sensing separately may be capable of improving the communication performance and sensing performance.

Note that, the antenna port may be a logical antenna (antenna group) formed of one or a plurality of physical antennas. That is, the antenna port does not necessarily refer to one physical antenna, but may refer to an array antenna or the like formed of a plurality of antennas.

For example, it is not specified how many physical antennas the antenna port is formed of, and a terminal station may be specified as the smallest unit that can transmit a reference signal.

Further, the antenna port may be specified as a precoding vector, as a unit that multiplies weighting of a precoding matrix, or as the smallest unit. Note that, the above-described content related to the antenna port becomes the content related to the present specification in its entirety.

Further, at least one or more antennas may be shared by antenna ports. For example, there may be an antenna for transmission to be used in a plurality of antenna ports for transmission. Then, for example, there may be an antenna for reception to be used in a plurality of antenna ports for reception. Further, for example, there may be an antenna to be used in a plurality of antenna ports. Note that, the above-described content related to the antenna port becomes the content related to the present specification in its entirety.

### Second Example:

A first mode and a second mode are defined as follows.

First mode (for example, a mode corresponding to the standard of the first release):
It is assumed that the first mode is a mode corresponding to the first communication scheme.

Second mode (for example, a mode corresponding to the standard of the second release):
It is assumed that the second mode is a mode corresponding to the second communication scheme and corresponding to sensing.

Hereinafter, three cases will be described.

### Case 1:

In FIGS. 21A and 21B, for example, in a case where control signal 2100 indicates that "a modulated signal of the first mode is transmitted", signal generator 2102 performs processing, which includes error correction coding, modulation (mapping), and processing based on a transmission method, on data 2101, and transmits a modulated signal of the first mode as a radio wave by using at least one antenna port of antenna port 2105_1 to antenna port 2105_N. Note that, it is assumed that N is an integer larger than or equal to 1.

In a case where control signal 2100 indicates "'a modulated signal and/or a signal for sensing' of the second mode are/is transmitted", signal generator 2102 performs processing, which includes error correction coding, modulation (mapping), and processing based on a transmission method, on data 2101, and transmits a modulated signal of the second mode as a radio wave by using antenna port 2106, and/or signal generator 2102 generates a signal for sensing, and transmits the signal as a radio wave from antenna port 2106.

In a case where control signal 2100 indicates "a modulated signal of the first mode is transmitted and `a modulated signal and/or a signal for sensing' of the second mode are/is transmitted", the control signal generator 2102 performs the following two operations:
(1) Signal generator 2102 performs processing, which includes error correction coding, modulation (mapping), and processing based on a transmission method, on data 2101, and transmits a modulated signal of the first mode as a radio wave by using at least one antenna port of antenna port 2105_1 to antenna port 2105_N. Note that, it is assumed that N is an integer larger than or equal to 1.
(2) Signal generator 2102 performs processing, which includes error correction coding, modulation (mapping), and processing based on a transmission method, on data 2101, and transmits a modulated signal of the second mode as a radio wave by using antenna port 2106, and/or signal generator 2102 generates a signal for sensing, and transmits the signal as a radio wave from antenna port 2106.

Further, in FIGS. 21A and 21B, for example, in a case where control signal 2100 indicates that "demodulation of the first mode is performed", at least one antenna port of antenna port 2111_1 to antenna port 2111_M is used to receive a modulated signal, and signal processor 2115 inputs this modulated signal, performs processing including demodulation, and outputs reception data 2116 of the first mode. Note that, it is assumed that M is an integer larger than or equal to 1.

In a case where control signal 2100 indicates that "processing of the second mode is performed", signal processor 2115 inputs a signal received by antenna port 2112, performs processing for sensing, and, for example, outputs distance information or the like 2117 of a target, and/or, signal processor 2115 receives a modulated signal by using antenna port 2112, inputs this modulated signal, performs processing including demodulation, and outputs reception data 2116 of the second mode.

In a case where control signal 2100 indicates that "demodulation of the first mode is performed and processing of the second mode is performed", the following two operations are performed.

(3) At least one antenna port of antenna port 2111_1 to antenna port 2111_M is used to receive a modulated signal, and signal processor 2115 inputs this modulated signal, performs processing including demodulation, and outputs reception data 2116 of the first mode.

(4) Signal processor 2115 inputs a signal received by antenna port 2112, performs processing for sensing, and, for example, outputs distance information or the like 2117 of a target, and/or, signal processor 2115 receives a modulated signal by using antenna port 2112, inputs this modulated signal, performs processing including demodulation, and outputs reception data 2116 of the second mode.

In the examples described above, antenna ports 2105_1 to 2105_N are transmission antenna ports of the first mode, and antenna port 2106 is a transmission antenna port of the second mode. Further, antenna ports 2111_1 to 2111_M are reception antenna ports of the first mode, and antenna port 2112 is a reception antenna port of the second mode.

### Case 2:

In FIGS. 21A and 21B, for example, in a case where control signal 2100 indicates that at least "a modulated signal of the first mode is transmitted", signal generator 2102 performs processing, which includes error correction coding, modulation (mapping), and processing based on a transmission method, on data 2101, and transmits a modulated signal of the first mode as a radio wave by using at least one antenna port of antenna port 2105_1 to antenna port 2105_(N-1). Note that, it is assumed that N is an integer larger than or equal to 2.

In a case where control signal 2100 indicates that "at least `a modulated signal for communication' of the second mode is transmitted", signal generator 2102 performs processing, which includes error correction coding, modulation (mapping), and processing based on a transmission method, on data 2101, and transmits a modulated signal of the second mode as a radio wave by using antenna port 2105_N.

In a case where control signal 2100 indicates that "at least `a signal for sensing' of the second mode is transmitted", signal generator 2102 generates a signal for sensing and transmits the signal as a radio wave from antenna port 2106.

Further, in FIGS. 21A and 21B, for example, in a case where control signal 2100 indicates that at least "demodulation of the first mode is performed", at least one antenna port of antenna port 2111_1 to antenna port 2111_(M-1) is used to receive a modulated signal, and signal processor 2115 inputs this modulated signal, performs processing including demodulation, and outputs reception data 2116 of the first mode. Note that, it is assumed that M is an integer larger than or equal to 2.

In a case where control signal 2100 indicates that at least "demodulation of the second mode is performed", a modulated signal is received by using antenna port 2111_M, and signal processor 2115 inputs this modulated signal, performs processing including demodulation, and outputs reception data 2116 of the second mode.

In a case where control signal 2100 indicates that at least "processing for sensing of the second mode is performed", signal processor 2115 inputs a signal received by antenna port 2112, performs processing for sensing, and, for example, outputs distance information or the like 2117 of a target.

In the examples described above, antenna ports 2105_1 to 2105_(N-1) are transmission antenna ports of the first mode, antenna port 2105_N is a transmission antenna port for communication of the second mode, and antenna port 2106 is a transmission antenna port for sensing of the second mode.

Further, antenna ports 2111_1 to 2111_(M-1) are reception antenna ports of the first mode, antenna port 2111_M is a reception antenna port for communication of the second mode, and antenna port 2112 is a reception antenna port for sensing of the second mode.

### Case 3:

In FIGS. 21A and 21B, for example, in a case where control signal 2100 indicates that at least "a modulated signal of the first mode is transmitted", signal generator 2102 performs processing, which includes error correction coding, modulation (mapping), and processing based on a transmission method, on data 2101, and transmits a modulated signal of the first mode as a radio wave by using at least one antenna port of antenna port 2105_1 to antenna port 2105_N. Note that, it is assumed that N is an integer larger than or equal to 1.

In a case where control signal 2100 indicates that "at least `a modulated signal for communication' of the second mode is transmitted", signal generator 2102 performs processing, which includes error correction coding, modulation (mapping), and processing based on a transmission method, on data 2101, and transmits a modulated signal of the second mode as a radio wave by using at least one antenna port of antenna port 2105_1 to antenna port 2105_N.

In a case where control signal 2100 indicates that "at least `a signal for sensing' of the second mode is transmitted", signal generator 2102 generates a signal for sensing and transmits the signal as a radio wave from antenna port 2106.

Further, in FIGS. 21A and 21B, for example, in a case where control signal 2100 indicates that at least "demodulation of the first mode is performed", at least one antenna port of antenna port 2111_1 to antenna port 2111_M is used to receive a modulated signal, and signal processor 2115 inputs this modulated signal, performs processing including demodulation, and outputs reception data 2116 of the first mode. Note that, it is assumed that M is an integer larger than or equal to 1.

In a case where control signal 2100 indicates that at least "demodulation of the second mode is performed", at least one antenna port of antenna port 2111_1 to antenna port 2111_M is used to receive a modulated signal, and signal processor 2115 inputs this modulated signal, performs processing including demodulation, and outputs reception data 2116 of the second mode.

In a case where control signal 2100 indicates that at least "processing for sensing of the second mode is performed", signal processor 2115 inputs a signal received by antenna port 2112, performs processing for sensing, and, for example, outputs distance information or the like 2117 of a target.

In the examples described above, antenna ports 2105_1 to 2105_N are transmission antenna ports of the first mode and transmission antenna ports for communication of the second mode, and antenna port 2106 is a transmission antenna port for sensing of the second mode.

Further, antenna ports 2111_1 to 2111_M are reception antenna ports of the first mode and reception antenna ports for communication of the second mode, and antenna port 2112 is a reception antenna port for sensing of the second mode.

As described above, it is possible to obtain the effect that both high-quality communication and highly-accurate sensing can be achieved by selectively using an antenna port used at the time of communication and an antenna port used at the time of sensing.

As described above, FIGS. 21A and 21B have been indicated as the configurations of the apparatuses of first apparatus 1201, base station #1 of 1201_1, base station #2 of 1202_2, and base station #3 of 1202_3, and the use method of antenna ports has been described. As a matter of course, the configurations of the apparatuses of first apparatus 1201, base station #1 of 1201_1, base station #2 of 1202_2, and base station #3 of 1202_3, and the use method of antenna ports are applicable to embodiments other than the present embodiment.

Further, when there are two apparatuses (named apparatuses #A and #B) in the present embodiment and apparatus #Aor #B transmits a radio wave and estimates a "distance between apparatuses #A and #B", apparatus #A or #B may estimate a direction of arrival and utilize an estimated value of the above direction of arrival to perform position estimation of a target with higher accuracy.

In the same manner, when apparatus #A transmits a radio wave and estimates a "distance between apparatus #A and a target", apparatus #A may estimate a direction of arrival and utilize an estimated value of the above direction of arrival to perform position estimation of the target with higher accuracy.

Further, when apparatus #A or #B transmits a radio wave and estimates a direction of arrival, apparatus #A or #B may estimate the "distance between apparatuses #A and #B" and utilize an estimated value of the above "distance between apparatuses #A and #B" to perform position estimation of a target with higher accuracy.

When apparatus #A transmits a radio wave and apparatus A estimates the direction of arrival of the radio wave obtained by the radio wave, for example, reflecting off a target, apparatus #A may estimate the "distance between apparatus #A and the target" and utilize the above "distance between apparatus #A and the target" to perform position estimation of the target with higher accuracy.

Note that, although FIGS. 14, 15A, 15B, 15C, 15D, 15E, 15F, and 16 have been indicated as examples of the operation flows of the first apparatus and the base station, they are merely examples, and the order of operations may be different from the orders indicated in the drawings. Further, although FIGS. 19 and 20 have been indicated as examples of the operation flows of the first apparatus, the second apparatus, and the base station, they are merely examples, and the order of operations may be different from the orders indicated in the drawings.

### (Embodiment 3)

In the present embodiment, an exemplary embodiment that differs from Embodiment 2 will be described.

FIG. 12 illustrates an example of the "sensing system" or "sensing and communication system" in the present embodiment.

In FIG. 12, base station #1 of 1202_1, base station #2 of 1202_2, and base station #3 of 1202_3 communicate with a terminal.

First apparatus 1201 is, for example, a terminal, and communicates with base station #1 of 1202_1 and/or base station #2 of 1202_2 and/or base station #3 of 1202_3.

Target (object) 1203 is a target object whose position is estimated by sensing.

In the present embodiment, a method of performing "the triangulation described in Embodiment 1 with first apparatus 1201 and base station #1 of 1202_1", "the triangulation described in Embodiment 1 with first apparatus 1201 and base station #2 of 1202_2", and the "triangulation described in Embodiment 1 with first apparatus 1201 and base station #3 of 1202_3" will be described as an example.

It is assumed that first apparatus 1201 is an apparatus having a function of performing sensing described in Embodiment 1. Further, it is assumed that first apparatus 1201 has a communication function and communicates with, for example, base station #1 of 1202_1, bases station #2 of 1202_2, and base station #3 of 1202_3.

Here, it is assumed that first apparatus 1201 performs sensing for performing triangulation. At this time, first apparatus 1201 performs sensing with one of base station #1 of 1202_1, base station #2 of 1202_2, base station #3 of 1202_3 to realize triangulation. However, it is supposed that there is/are a base station(s) that does/do not correspond to sensing due to factors such as the size of the base station(s) and the time of the installation.

Accordingly, it is assumed that base stations such as base station #1 of 1202_1, base station #2 of 1202_2, and base station #3 of 1202_3 transmit control information including information on sensing capability 1301 as illustrated in FIG. 13.

Note that, it is assumed that the control information including information on sensing capability 1301 is transmitted by a base station using a PBCH, a PDSCH or a PDCCH, for example. Note that, the channel through which the above control information is transmitted is not limited to the examples described above.

As illustrated in FIG. 13, it is assumed that information on sensing capability 1301 includes at least one of "INFORMATION ON WHETHER SENSING IS POSSIBLE OR IMPOSSIBLE 1311", "INFORMATION ON WHETHER SENSING REQUEST FROM TERMINAL IS PERFORMABLE OR NOT PERFORMABLE 1312", and/or "INFORMATION ON WHETHER SENSING REQUEST FROM TERMINAL IS ACCEPTABLE OR NOT ACCEPTABLE 1313".

It is assumed that specific examples of "INFORMATION ON WHETHER SENSING IS POSSIBLE OR IMPOSSIBLE 1311", "INFORMATION ON WHETHER SENSING REQUEST FROM TERMINAL IS PERFORMABLE OR NOT PERFORMABLE 1312", and "INFORMATION ON WHETHER SENSING REQUEST FROM TERMINAL IS ACCEPTABLE OR NOT ACCEPTABLE 1313" are as follows.

"INFORMATION ON WHETHER SENSING IS POSSIBLE OR IMPOSSIBLE 1311":

This information is used to notify, for example, a terminal, a repeater, other base station(s) or the like of "whether a base station is capable of performing sensing".

Thus, in a case where at least information that "sensing is performable" is included as "INFORMATION ON WHETHER SENSING IS POSSIBLE OR IMPOSSIBLE 1311", it is assumed that a base station has a sensing function. Further, it is assumed that this base station has a communication function. Note that, since the specific configuration has already been described in Embodiment 1, a description thereof will be omitted.

"INFORMATION ON WHETHER SENSING REQUEST FROM TERMINAL IS PERFORMABLE OR NOT PERFORMABLE 1312":
This information is used to notify, for example, a terminal or the like of information on "whether sensing is performable" when a base station receives a sensing request from the terminal (a request of the terminal for the base station to perform sensing).

Note that, although "INFORMATION ON WHETHER SENSING REQUEST FROM TERMINAL IS PERFORMABLE OR NOT PERFORMABLE 1312" is named here, "INFORMATION ON WHETHER SENSING REQUEST FROM TERMINAL IS PERFORMABLE OR NOT PERFORMABLE 1312" may also be "information on whether a sensing request from an apparatus other than a terminal, such as a repeater and another apparatus, is performable or not performable". Further, details of the "sensing request" will be described later.

"INFORMATION ON WHETHER SENSING REQUEST FROM TERMINAL IS ACCEPTABLE OR NOT ACCEPTABLE 1313":
This information is used to notify, for example, a terminal or the like of information on "whether a base station accepts sensing from the terminal" when the base station receives a sensing request from the terminal (a request of the terminal for the base station to perform sensing).

Accordingly, there are modes in which, even when there is a sensing request from a terminal, a base station "accepts" and "does not accept" the sensing request.

Note that, although "INFORMATION ON WHETHER SENSING REQUEST FROM TERMINAL IS ACCEPTABLE OR NOT ACCEPTABLE 1313" is named here, "INFORMATION ON WHETHER SENSING REQUEST FROM TERMINAL IS ACCEPTABLE OR NOT ACCEPTABLE 1313" may be "information on whether a sensing request from an apparatus other than a terminal, such as a repeater and another base station, is acceptable or not acceptable". Further, details of the "sensing request" will be described later.

By configuring the above, a terminal, a repeater, another base station, and the like can know sensing of a base station and a state with respect to a sensing request so that it is possible to obtain the effect that suitable "sensing-related control and communication with a base station" can be performed.

Note that, the apparatus that transmits information on sensing capability 1301 in FIG. 13 has been described as a base station above, but is merely an example, and information on sensing capability 1301 may be transmitted by a communication apparatus such as a repeater, a terminal, and an access point.

Further, although the description "[...] SENSING REQUEST FROM TERMINAL" is used in "INFORMATION ON WHETHER SENSING REQUEST FROM TERMINAL IS PERFORMABLE OR NOT PERFORMABLE 1312" and "INFORMATION ON WHETHER SENSING REQUEST FROM TERMINAL IS ACCEPTABLE OR NOT ACCEPTABLE 1313" which are transmitted by the apparatus that transmits information on sensing capability 1301 in FIG. 13, a sensing request may be not from a terminal, but may be from, for example, a communication apparatus such as a base station, a repeater, and an access point. Accordingly, implementation is also possible with 1312 as "INFORMATION ON WHETHER SENSING REQUEST FROM COMMUNICATION APPARATUS IS PERFORMABLE OR NOT PERFORMABLE" and 1313 as "INFORMATION ON WHETHER SENSING REQUEST FROM COMMUNICATION APPARATUS IS ACCEPTABLE OR NOT ACCEPTABLE".

Next, operations of first apparatus 1201 and base station #2 of 1202_2 in FIG. 12 will be described as an example.

First apparatus 1201 may be a terminal capable of communicating with a base station. Alternatively, first apparatus 1201 may be a base station. In the following description, first apparatus 1201 will be described as a terminal, but it is also performable in the same manner even when first apparatus 1201 is a base station. However, in a case where a particular operation occurs when first apparatus 1201 is a base station, a supplementary description will be provided. Further, first apparatus 1201 in FIG. 12 may be a repeater, and base station #1 of 1202_1, base station #2 of 1202_2, and base station #3 of 1202_3 may be repeaters.

The present embodiment deals with triangulation. Examples of the specific triangulation method have been described in Embodiment 1. The first method and the second method are triangulation based on the fact that information on a distance is obtained by performing sensing.

The third method and the fourth method are, on the other hand, triangulation based on the fact that information on a direction (of arrival) (having said that, a distance may also be obtained) is obtained by performing sensing.

Hereinafter, with respect to FIG. 12, direction-based triangulation whose examples are the third method and the fourth method will be described. Note that, the present embodiment is a variation of the third method and the fourth method.

### Case of Direction-based Triangulation:

An example when the direction-based triangulation whose examples are the third method and the fourth method described in Embodiment 1 is used will be described.

It is assumed that first apparatus 1201 has obtained information on sensing capability 1301 in FIG. 13, which is transmitted by base station #1 of 1202_1, base station #2 of 1202_2, and base station #3 of 1202_3, and has acquired each status of response to sensing of base station #1 of 1202_1, base station #2 of 1202_2, and base station #3 of 1202_3.

Hereinafter, it is assumed as an example that base station #1 of 1202_1, base station #2 of 1202_2, and base station #3 of 1202_3 can all perform sensing, and that in a case where there is a sensing request from the terminal, base station #1 of 1202_1, base station #2 of 1202_2, and base station #3 of 1202_3 can all perform a sensing operation for the request for performing sensing.

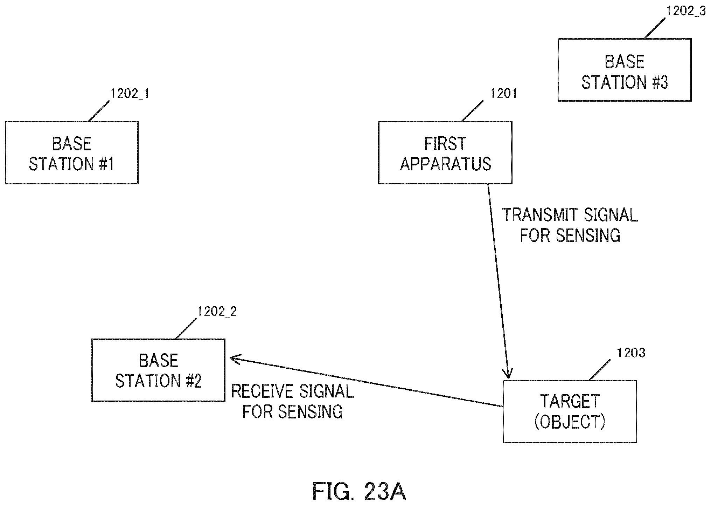

In the present example, it is assumed as in FIG. 23A that first apparatus 1201 transmits a signal for sensing, this signal comes into contact with target 1203, and base station #2 of 1202_2 receives the signal for sensing, thereby performing position estimation, for example.

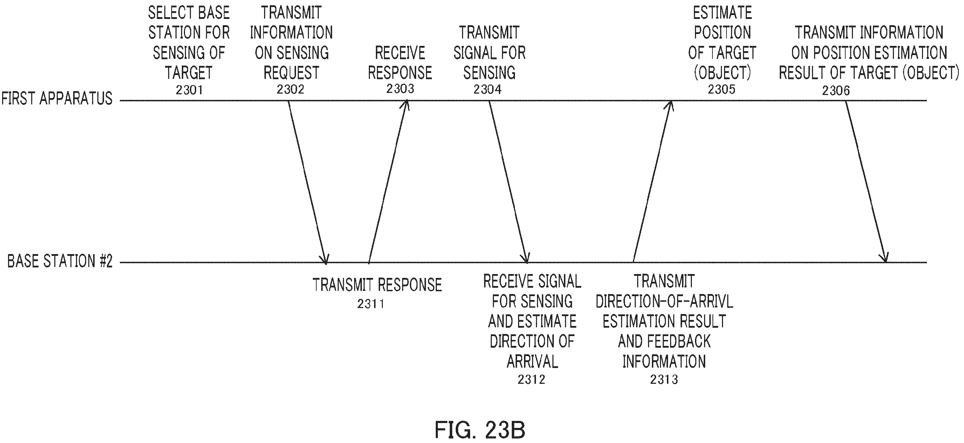

In FIG. 23B, it is assumed that first apparatus 1201 has obtained at least information on a "distance between first apparatus 1201 and base station #2 of 1202_2" before "ESTIMATE POSITION OF TARGET (OBJECT) 2305" is performed.

Note that, since the method of obtaining information on the "distance between first apparatus 1201 and the base station" has already been described with reference to FIGS. 15A, 15B, 15C, 15D, 15E, and 15F, a description thereof will be omitted.

As another method, when first apparatus 1201 is a base station or a fixedly installed terminal, first apparatus 1201 and the base station may have acquired the "distance between first apparatus 1201 and the base station" in advance.

Further, first apparatus 1201 and the base station may acquire positions by a position estimation system such as GPS, for example. Then, the base station may transmit information on its own position to first apparatus 1201, and first apparatus 1201 may determine the "distance between first apparatus 1201 and the base station" from information on its own position and the information on the position of the base station. Then, first apparatus 1201 may transmit the information on its own position to the base station and the base station may determine the "distance between first apparatus 1201 and the base station" from the information on its own position and the information on the position of first apparatus 1201.

An example when the direction-based triangulation whose examples are the third method and the fourth method described in Embodiment 1 is used will be described.

First apparatus 1201 in FIGS. 12 and 23A transmits information on a request for "estimation of a direction (of arrival) with target 1203" to base station #2 of 1202_2 (2301).

Base station #2 of 1202_2 receives the information on the request for "estimation of the direction (of arrival) with target 1203", and responds "whether base station #2 of 1202_2 accepts the request" (2311). Note that, in the example here, a description will be given on the assumption that base station #2 of 1202_2 "accepts the request".

First apparatus 1201 receives information on the response to the request (2303).

First apparatus 1201 transmits a signal for sensing (2304). Note that, details of the transmission method of the signal for sensing to be transmitted by first apparatus 1201 will be described later.

Base station #2 of 1202_2 receives the signal for sensing transmitted by first apparatus 1201 and, for example, performs estimation of a (reception) direction of arrival (2312).

Base station #2 of 1202_2 transmits a (reception) direction-of-arrival estimation result and feedback information to first apparatus 1201 (2313). Note that, a specific operation example will be described later.

First apparatus 1201 performs, for example, triangulation by using the "(reception) direction-of-arrival estimation result and feedback information" transmitted by base station #2 of 1202_2, the information on the "distance between first apparatus 1201 and base station #2 of 1202_2", and the like, and obtains an estimation result of the "position of target (object) 1203" in FIGS. 12 and 23A (2305). Note that, a specific operation example will be described later.

First apparatus 1201 transmits information on the estimation result of the "position of target (object) 1203" to base station #2 of 1202_2 (2306).

Note that, in a case where first apparatus 1201 and base station #2 of 1202_2 do not need to share the information on the estimation result of the "position of target 1203", first apparatus 1201 may not transmit the information on the estimation result of the "position of target 1203" to base station #2 of 1202_2.

By performing as described above, it is possible to realize the direction(-of-arrival)-based triangulation described in Embodiment 1. Thus, it is possible to obtain the effect of being capable of specifying the position of a target.

Next, operation examples of 2304, 2312, 2313, and 2305 in FIG. 23B will be described.

In FIG. 23A, base station #2 of 1202_2 can estimate the angle formed by the "line segment formed by base station #2 of 1202_2 and first apparatus 1201" and the "line segment formed by base station #2 of 1202_2 and target 1203" in FIG. 23B by receiving a signal for sensing transmitted by first apparatus 1201 to perform direction(-of-arrival) estimation.

As an example, triangulation can be realized when the angle formed by the "line segment formed by first apparatus 1201 and base station #2 of 1202_2" and the "line segment formed by first apparatus 1201 and target 1203" can be estimated. Hereinafter, a method of estimating the angle formed by the "line segment formed by first apparatus 1201 and base station #2 of 1202_2" and the "line segment formed by first apparatus 1201 and target 1203" will be described.

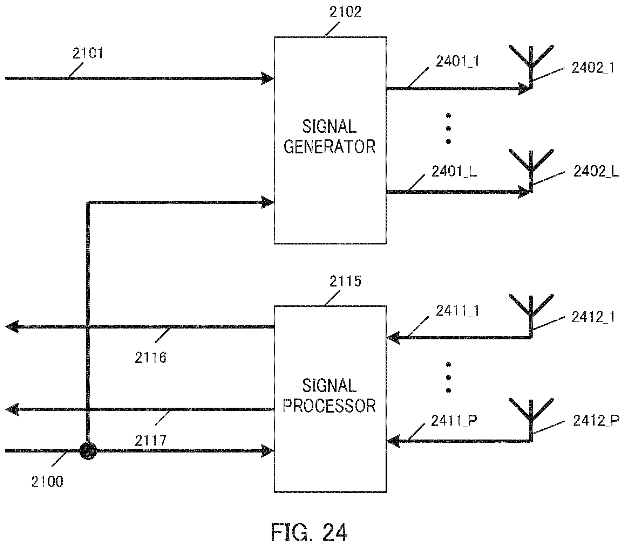

FIG. 24 illustrates an example of a configuration of first apparatus 1201 (and base station #2 of 1202_2) in FIGS. 12 and 23A. In FIG. 24, parts which operate in the same manner as in FIG. 21 are denoted with the same numbers, and descriptions thereof will be omitted. Note that, a description will be given with an example in which first apparatus 1201 has the configuration in FIG. 24.

As illustrated in FIG. 24, it is assumed that first apparatus 1201 includes transmission antennas 2402_1 to 2402_L. Note that, it is assumed that L is an integer larger than or equal to 1.

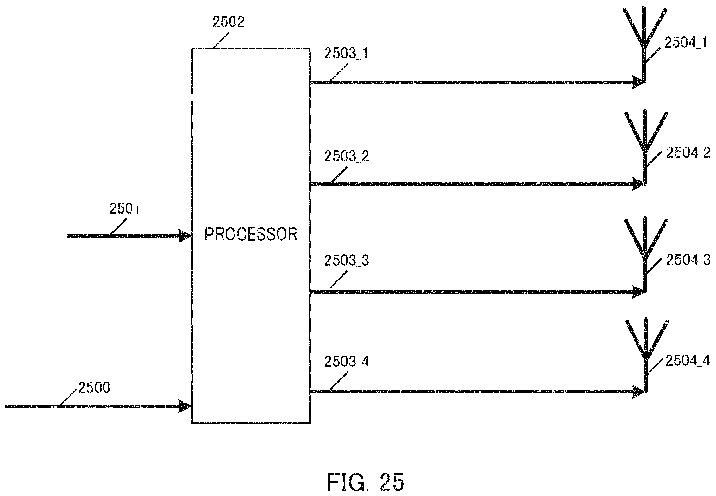

FIG. 25 illustrates a configuration example related to transmission antenna 2402_i (where i is an integer larger than or equal to 1 and smaller than or equal to L).

As illustrated in FIG. 25, it is assumed that transmission antenna 2402_i is formed of four antennas as in, for example, antennas 2504_1, 2504_2, 2504_3, and 2405_4. Although an example in which transmission antenna 2402_i is formed of four antennas has been indicated here, the number of antennas is not limited to this example as long as transmission antenna 2402_i is formed of two or more antennas.

Processor 2502 inputs signal 2501 (corresponding to signal 2401_i in FIG. 24) and control signal 2500 (corresponding to control signal 2100 in FIG. 24). In a case where control signal 2500 indicates that "a signal for sensing is transmitted", processor 2502 performs transmission directivity control processing on signal 2501 and outputs signal 2503_i after the transmission directivity control processing. Note that, i is an integer larger than or equal to 1 and smaller than or equal to 4. Further, signal 2503_i after the transmission directivity control processing is outputted as a radio wave from antenna 2504_i.

A specific configuration example of a signal for sensing to be transmitted by first apparatus 1201 will be described.

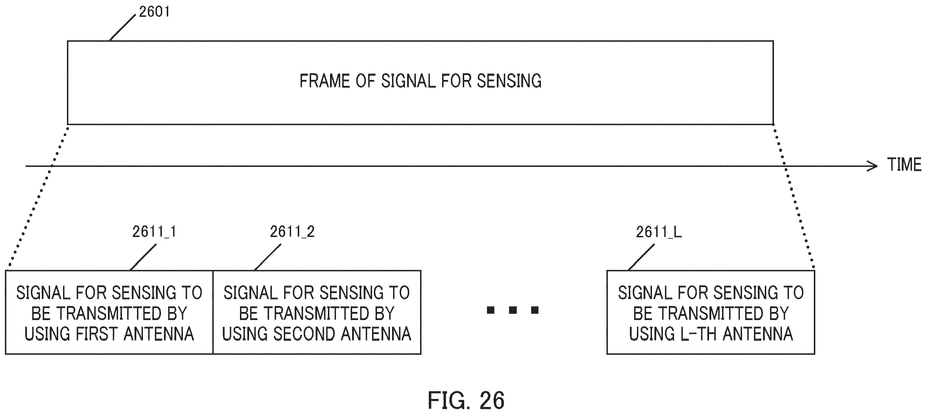

FIG. 26 illustrates an example of frame of signal for sensing 2601 to be transmitted by first apparatus 1201.

It is assumed that frame of signal for sensing 2601 is formed of, for example, "SIGNAL FOR SENSING TO BE TRANSMITTED BY USING FIRST ANTENNA 2611_1", "SIGNAL FOR SENSING TO BE TRANSMITTED BY USING SECOND ANTENNA 2611_2", ..., "SIGNAL FOR SENSING TO BE TRANSMITTED BY USING L-TH ANTENNA 2611_L".

"SIGNAL FOR SENSING TO BE TRANSMITTED BY USING FIRST ANTENNA 2611_1" is a signal to be transmitted from transmission antenna 2402_1 of first apparatus 1201.

"SIGNAL FOR SENSING TO BE TRANSMITTED BY USING L-TH ANTENNA 2611_L" is a signal to transmitted from transmission antenna 2402_L of first apparatus 1201.

That is, "SIGNAL FOR SENSING TO BE TRANSMITTED BY USING i-TH ANTENNA 2611_i" is a signal to be transmitted from transmission antenna 2402_i of first apparatus 1201. Note that, i is an integer larger than or equal to 1 and smaller than or equal to L.

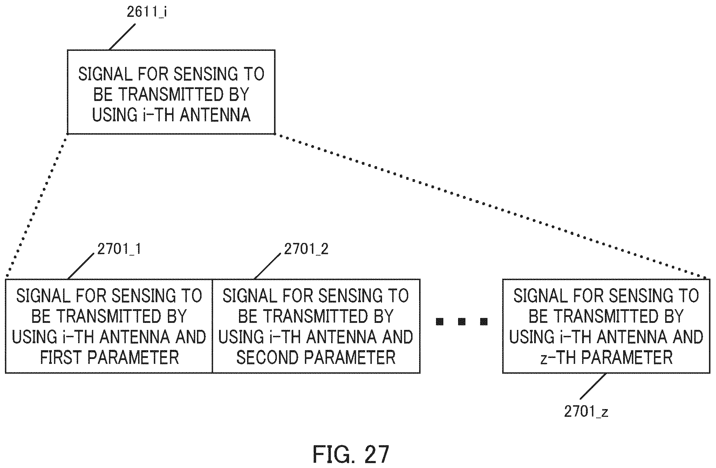

FIG. 27 illustrates an example of a configuration of "SIGNAL FOR SENSING TO BE TRANSMITTED BY USING i-TH ANTENNA 2611_i" in FIG. 26.

As illustrated in FIG. 27, it is assumed that SIGNAL FOR SENSING TO BE TRANSMITTED BY USING i-TH ANTENNA 2611_i is formed of "SIGNAL FOR SENSING TO BE TRANSMITTED BY USING i-TH ANTENNA AND FIRST PARAMETER 2701_1", "SIGNAL FOR SENSING TO BE TRANSMITTED BY USING i-TH ANTENNA AND SECOND PARAMETER 2701_2", ..., "SIGNAL FOR SENSING TO BE TRANSMITTED BY USING i-TH ANTENNA AND z-TH PARAMETER 2701_z". Note that, it is assumed that z is "an integer larger than or equal to 1" or "an integer larger than or equal to 2".

In transmission antenna 2402_i in FIG. 24 of first apparatus 1201, processor 2502 in FIG. 25 performs transmission directivity control by using the first parameter and generates "SIGNAL FOR SENSING TO BE TRANSMITTED BY USING i-TH ANTENNA AND FIRST PARAMETER 2701_1". "SIGNAL FOR SENSING TO BE TRANSMITTED BY USING i-TH ANTENNA AND FIRST PARAMETER 2701_1" is transmitted by using antennas 2504_1 to 2504_4 in FIG. 25. Note that, it is assumed that "SIGNAL FOR SENSING TO BE TRANSMITTED BY USING i-TH ANTENNA AND FIRST PARAMETER 2701_1" is formed of four signals of signals 2503_1, 2503_2, 2503_3, and 2503_4.

In transmission antenna 2402_i in FIG. 24 of first apparatus 1201, processor 2502 in FIG. 25 performs transmission directivity control by using the second parameter and generates "SIGNAL FOR SENSING TO BE TRANSMITTED BY USING i-TH ANTENNA AND SECOND PARAMETER 2701_2". "SIGNAL FOR SENSING TO BE TRANSMITTED BY USING i-TH ANTENNA AND SECOND PARAMETER 2701_2" is transmitted by using antennas 2504_1 to 2504_4 in FIG. 25. Note that, it is assumed that "SIGNAL FOR SENSING TO BE TRANSMITTED BY USING i-TH ANTENNA AND SECOND PARAMETER 2701_2" is formed of four signals of signals 2503_1, 2503_2, 2503_3, and 2503_4.

In transmission antenna 2402_i in FIG. 24 of first apparatus 1201, processor 2502 in FIG. 25 performs transmission directivity control by using the z-th parameter and generates "SIGNAL FOR SENSING TO BE TRANSMITTED BY USING i-TH ANTENNA AND z-TH PARAMETER 2701_z". "SIGNAL FOR SENSING TO BE TRANSMITTED BY USING i-TH ANTENNA AND z-TH PARAMETER 2701_z" is transmitted by using antennas 2504_1 to 2504_4 in FIG. 25. Note that, it is assumed that "SIGNAL FOR SENSING TO BE TRANSMITTED BY USING i-TH ANTENNA AND z-TH PARAMETER 2701_z" is formed of four signals of signals 2503_1, 2503_2, 2503_3, and 2503_4.

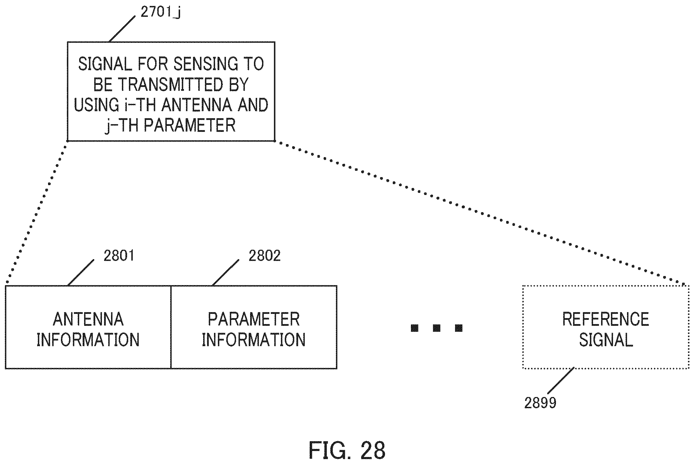

FIG. 28 illustrates a configuration example of "SIGNAL FOR SENSING TO BE TRANSMITTED BY USING i-TH ANTENNA AND j-TH PARAMETER 2701_{_}j" in FIG. 27. Note that, j is an integer larger than or equal to 1 and smaller than or equal to z.

As illustrated in FIG. 28, it is assumed that "SIGNAL FOR SENSING TO BE TRANSMITTED BY USING i-TH ANTENNA AND j-TH PARAMETER 2701_{_}j" includes, for example, "ANTENNA INFORMATION 2801" and "PARAMETER INFORMATION 2802". Note that, it is assumed that "SIGNAL FOR SENSING TO BE TRANSMITTED BY USING i-TH ANTENNA AND j-TH PARAMETER 2701_{_}j" includes, albeit not illustrated in FIG. 28, a signal for performing sensing.

It is assumed that "ANTENNA INFORMATION 2801" includes information that allows the use of "the i-th antenna" to be identified (for example, information on antenna ID (identification) or the like). Accordingly, base station #2 of 1202_2 that has been able to receive "SIGNAL FOR SENSING TO BE TRANSMITTED BY USING i-TH ANTENNA AND j-TH PARAMETER 2701_{_}j" can obtain information on an antenna used when first apparatus 1201 transmits a signal for sensing.

Further, it is assumed that "PARAMETER INFORMATION 2802" includes information that allows a parameter used for transmission directivity control to be identified (for example, information on parameter ID (identification) or the like). Accordingly, base station #2 of 1202_2 that has been able to receive "SIGNAL FOR SENSING TO BE TRANSMITTED BY USING i-TH ANTENNA AND j-TH PARAMETER 2701_{_}j" can obtain information on a parameter for antenna transmission directivity control used when first apparatus 1201 transmits a signal for sensing.

Note that, first apparatus 1201 and base station #2 of 1202_2 may transmit reference signal 2899 (for sensing) in FIG. 28 together with the information described above. Note that, reference signal 2899 is transmitted by using the i-th antenna and the j-th parameter.

In 2304 and 2312 in FIG. 23B, base station #2 of 1202_2 can receive, of frame for sensing 2601 transmitted by first apparatus 1201, one signal of "SIGNAL FOR SENSING TO BE TRANSMITTED BY USING i-TH ANTENNA AND j-TH PARAMETER 2701_j".

Then base station #2 of 1202_2 sets, as feedback information, "ANTENNA INFORMATION 2801" and "PARAMETER INFORMATION 2802" of "SIGNAL FOR SENSING TO BE TRANSMITTED BY USING i-TH ANTENNA AND j-TH PARAMETER 2701_j" which base station #2 of 1202_2 has been able to receive, and transmits this feedback information to first apparatus 1201.

Base station #2 of 1202_2 obtains this feedback information, and can know the transmission directivity, that is, the direction, of the signal, which base station #2 of 1202_2 has been able to receive, that is, can estimate the angle formed by the "line segment formed by first apparatus 1201 and base station #2 of 1202_2" and the "line segment formed by first apparatus 1201 and target (object) 1203" in FIG. 23A.

Accordingly, base station #2 of 1202_2 has obtained "the angle formed by the `line segment formed by base station #2 of 1202_2 and first apparatus 1201' and the `line segment formed by base station #2 of 1202_2 and target 1203'", "the angle formed by the `line segment formed by first apparatus 1201 and base station #2 of 1202_2' and the `line segment formed by first apparatus 1201 and target (object) 1203'", and the "distance between first apparatus 1201 and base station #2 of 1202_2" in FIG. 23A, and therefore can estimate the position of target (object) 1203.

Note that, although "ANTENNA INFORMATION 2801" and "PARAMETER INFORMATION 2802" have been described separately in FIG. 28, information may be generated without making a distinction therebetween.

For example, an ID is given with ID 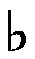 1 in the case of "the first antenna and the first parameter", ID 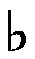 2 in the case of "the first antenna and the second parameter", ID 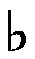 3 in the case of "the second antenna and the first parameter", ID 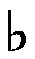 4 in the case of "the second antenna and the second parameter", ....

Then, for example, first apparatus 1201 transmits a "signal for sensing to be transmitted by using the first antenna and the first parameter" such that the "signal for sensing to be transmitted by using the first antenna and the first parameter" includes information on ID 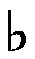 1.

First apparatus 1201 transmits a "signal for sensing to be transmitted by using the first antenna and the second parameter" such that the "signal for sensing to be transmitted by using the first antenna and the second parameter" includes information on ID 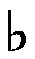 2.

First apparatus 1201 transmits a "signal for sensing to be transmitted by using the second antenna and the first parameter" such that the "signal for sensing to be transmitted by using the second antenna and the first parameter" includes information on ID 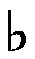 3.

First apparatus 1201 transmits a "signal for sensing to be transmitted by using the second antenna and the second parameter" such that the "signal for sensing to be transmitted by using the second antenna and the second parameter" includes information on ID 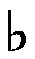 4.

Then, base station #2 of 1202_2 sets, as feedback information, ID information (for example, ID 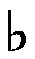 1, ID 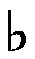 2, ...) of "SIGNAL FOR SENSING TO BE TRANSMITTED BY USING i-TH ANTENNA AND j-TH PARAMETER 2701_j" which base station #2 of 1202_2 has been able to receive, and transmits this feedback information to first apparatus 1201.

First apparatus 1201 obtains this feedback information, and can know the transmission directivity, that is, the direction, of the signal, which base station #2 of 1202_2 has been able to receive, that is, can estimate the angle formed by the "line segment formed by first apparatus 1201 and base station #2 of 1202_2" and the "line segment formed by first apparatus 1201 and target (object) 1203".

Accordingly, base station #2 of 1202_2 has obtained "the angle formed by the `line segment formed by base station #2 of 1202_2 and first apparatus 1201' and the `line segment formed by base station #2 of 1202_2 and target 1203'", "the angle formed by the `line segment formed by first apparatus 1201 and base station #2 of 1202_2' and the `line segment formed by first apparatus 1201 and target (object) 1203'", and the "distance between first apparatus 1201 and base station #2 of 1202_2" in FIG. 23A, and therefore can estimate the position of target (object) 1203.

Another example of operations in 2304, 2312, 2313, and 2305 in FIG. 23B will be described.

Base station #2 of 1202_2 can estimate the angle formed by the "line segment formed by base station #2 of 1202_2 and first apparatus 1201" and the "line segment formed by base station #2 of 1202_2 and target 1203" in FIG. 23A by receiving a signal for sensing transmitted by first apparatus 1201 to perform direction(-of-arrival) estimation.

Further, triangulation can be performed by estimating the sum of the "line segment formed by first apparatus 1201 and target (object) 1203" and the "line segment formed by target (object) 1203 and base station #2 of 1202_2" in FIG. 23A.

Accordingly, first apparatus 1201 transmits a signal for sensing as in 2304 of FIG. 23B, base station #2 of 1202_2 receives this signal for sensing (2312) and estimates the sum of the "line segment formed by first apparatus 1201 and target (object) 1203" and the "line segment formed by target (object) 1203 and base station #2 of 1202_2", and base station #2 of 1202_2 transmits information on this estimation value to first apparatus 1201. Further, base station #2 of 1202_2 transmits a reception direction-of-arrival estimation result to first apparatus 1201. Note that, since the transmission method of the signal for sensing to be transmitted by first apparatus 1201 has been described with reference to FIGS. 24, 25, 26, 27, and 28, a description thereof will be omitted.

Then, first apparatus 1201 can estimate the position of target (object) 1203 based on the "distance between first apparatus 1201 and base station #2 of 1202_2", "the sum of the `line segment formed by first apparatus 1201 and target (object) 1203' and the `line segment formed by target (object) 1203 and base station #2 of 1202_2'", and "the angle formed by the `line segment formed by base station #2 of 1202_2 and first apparatus 1201' and the `line segment formed by base station #2 of 1202_2 and target 1203'".

By performing as described above, it is possible to realize triangulation. Thus, it is possible to obtain the effect of being capable of specifying the position of a target.

Note that, when there are two apparatuses (named apparatuses #A and #B) in the present embodiment and apparatus #Aor #B transmits a radio wave and estimates a "distance between apparatuses #A and #B", apparatus #A or #B may estimate a direction of arrival and utilize an estimated value of the above direction of arrival to perform position estimation of a target with higher accuracy.

In the same manner, when apparatus #A transmits a radio wave and estimates a "distance between apparatus #A and a target", apparatus #A may estimate a direction of arrival and utilize an estimated value of the above direction of arrival to perform position estimation of the target with higher accuracy.

Further, when apparatus #A or #B transmits a radio wave and estimates a direction of arrival, apparatus #A or #B may estimate the "distance between apparatuses #A and #B" and utilize an estimated value of the above "distance between apparatuses #A and #B" to perform position estimation of a target with higher accuracy.

When apparatus #A transmits a radio wave and apparatus A estimates the direction of arrival of the radio wave obtained by the radio wave, for example, reflecting off a target, apparatus #A may estimate the "distance between apparatus #A and the target" and utilize the above "distance between apparatus #A and the target" to perform position estimation of the target with higher accuracy.

Note that, although FIGS. 15A, 15B, 15C, 15D, 15E, 15F, and 23B have been indicated as examples of the operation flows of the first apparatus and the base station, they are merely examples, and the order of operations may be different from the orders indicated in the drawings.

Further, in the same manner as in Embodiment 2, first apparatus 1201 may change the base station which is requested to perform sensing in order to increase the accuracy of position estimation of a target in the operation flow of FIG. 23B.

For example, in a case where base station #2 of 1202_2 performs "TRANSMIT DIRECTION-OF-ARRIVAL ESTIMATION RESULT AND FEEDBACK INFORMATION 2313", first apparatus 1201 receives the result and the feedback information, and determines, as described in Embodiment 2, that position estimation of a target may not be obtained with high accuracy, first apparatus 1201 may change the base station which is requested to perform sensing.

Further, in a case where first apparatus 1201 estimates the position of a target (2305) and determines that the position estimation of the target has not been obtained with high accuracy, first apparatus 1201 may request another base station to perform sensing.

### (Embodiment 4)

In the present embodiment, an exemplary embodiment that differs from Embodiment 2 will be described.

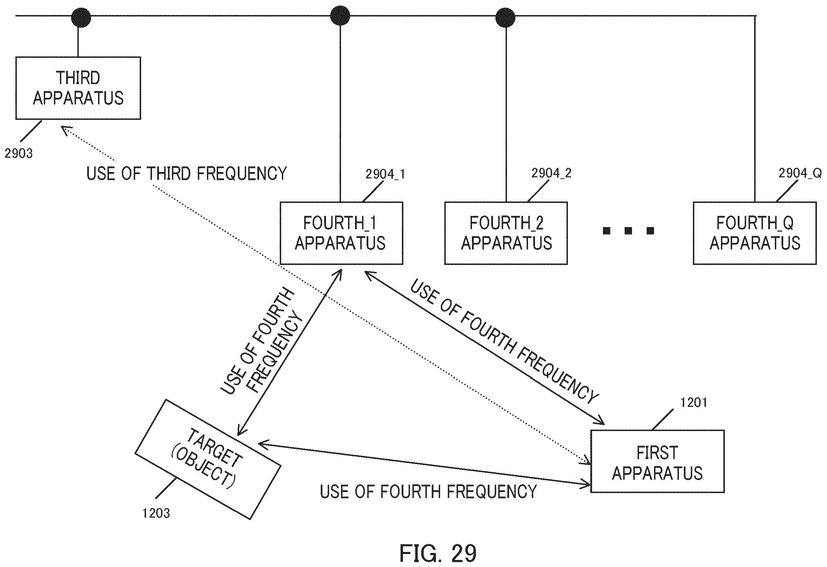

FIG. 29 illustrates an example of the "sensing system" or "sensing and communication system" in the present embodiment. In FIG. 29, parts which operate in the same manner as in FIG. 12 are denoted with the same numbers.

In FIG. 29, third apparatus 2903 communicates with first apparatus 1201 by using a third frequency (band).

Fourth_1 apparatus of 2904_1, fourth_2 apparatus of 2904_2, ..., fourth_Q apparatus of 2904_Q perform communication by using a fourth frequency (band). Note that, it is assumed that Q is an integer larger than or equal to 1.

Note that, there is a method in which the third frequency (band) is frequency range (FR) 1 and/or FR2 and the fourth frequency (band) is a frequency of 52.6 GHz or higher, for example. It is assumed, however, that FR1 is a "frequency from 450 MHz to smaller than or equal to 6 GHz" and FR2 is a "frequency from 24.25 GHz to 52.6 GHz". Further, as another example, the fourth frequency (band) may be a frequency higher than the third frequency (band). As yet another example, the third frequency (band) may be FR1 and the fourth frequency (band) may be FR2.

Further, it is assumed that third apparatus 2903 communicates with fourth_1 apparatus of 2904_1, fourth_2 apparatus of 2904_2, ..., fourth_Q apparatus of 2904_Q. The communication this time may be radio communication or wired communication.

Communication may be possible between two apparatuses of "fourth_1 apparatus of 2904_1, fourth _2 apparatus of 2904_2, ..., fourth_Q apparatus of 2904_Q". Note that, the communication this time may be radio communication or wired communication.

Target (object) 1203 is a target object whose position is estimated by sensing.

In the present embodiment, a method of performing "the triangulation described in Embodiment 1 with first apparatus 1201 and fourth_1 apparatus of 2904_1", "the triangulation described in Embodiment 1 with first apparatus 1201 and fourth_2 apparatus of 2904_2", ..., the "triangulation described in Embodiment 1 with first apparatus 1201 and fourth _Q apparatus of 2904_Q" will be described as an example.

Here, it is assumed that first apparatus 1201 performs sensing for performing triangulation. At this time, first apparatus 1201 performs sensing with one of "fourth_1 apparatus of 2904_1, fourth _2 apparatus of 2904_2, ..., fourth _Q apparatus of 2904_Q" to realize triangulation. However, it is supposed that there is fourth i apparatus of 2904_i that does not correspond to sensing due to factors such as the size of fourth i apparatus of 2904_i and the time of the installation. Note that, it is assumed that i is an integer larger than or equal to 1 and smaller than or equal to Q.

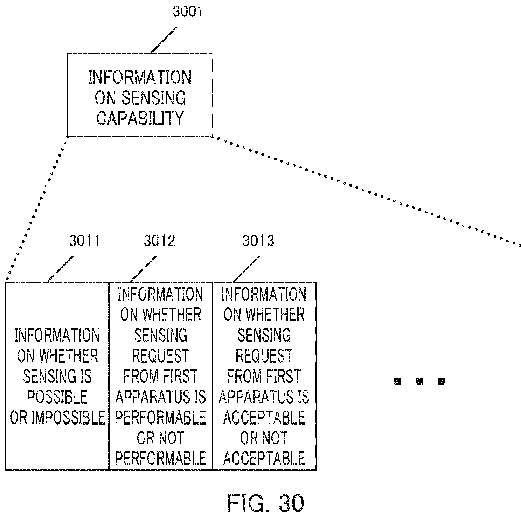

Accordingly, it is assumed that "fourth_1 apparatus of 2904_1, fourth _2 apparatus of 2904_2, ..., fourth_Q apparatus of 2904_Q" transmit control information including information on sensing capability 3001 as illustrated in FIG. 30. For example, it is assumed that "fourth_1 apparatus of 2904_1, fourth_2 apparatus of 2904_2, ..., fourth_Q apparatus of 2904_Q" transmit the control information including information on sensing capability 3001 by using, for example, a PBCH, a PDSCH or a PDCCH.

The channel through which the above control information is transmitted is not limited to the examples described above. Further, "fourth_1 apparatus of 2904_1, fourth_2 apparatus of 2904_2, ..., fourth _Q apparatus of 2904_Q" may transmit information on sensing capability 3001 to first apparatus 1201 or third apparatus 2903.

FIG. 30 is a diagram provided for describing an example of information on sensing capability. As illustrated in FIG. 30, it is assumed that information on sensing capability 3001 includes at least one of "INFORMATION ON WHETHER SENSING IS POSSIBLE OR IMPOSSIBLE 3011", "INFORMATION ON WHETHER SENSING REQUEST FROM FIRST APPARATUS 1201 IS PERFORMABLE OR NOT PERFORMABLE 3012", and/or "INFORMATION ON WHETHER SENSING REQUEST FROM FIRST APPARATUS 1201 IS ACCEPTABLE OR NOT ACCEPTABLE 3013".

It is assumed that specific examples of "INFORMATION ON WHETHER SENSING IS POSSIBLE OR IMPOSSIBLE 3011", "INFORMATION ON WHETHER SENSING REQUEST FROM FIRST APPARATUS 1201 IS PERFORMABLE OR NOT PERFORMABLE 3012", and "INFORMATION ON WHETHER SENSING REQUEST FROM FIRST APPARATUS 1201 IS ACCEPTABLE OR NOT ACCEPTABLE 3013" are as follows.

"INFORMATION ON WHETHER SENSING IS POSSIBLE OR IMPOSSIBLE 3011":
This information is used to notify, for example, first apparatus 1201, a repeater, another fourth _x apparatus, third apparatus 2903, or the like of "whether fourth_i apparatus of 2904_i is capable of performing sensing".

Thus, in a case where at least information that "sensing is performable" is included as "INFORMATION ON WHETHER SENSING IS POSSIBLE OR IMPOSSIBLE 3011", it is assumed that fourth i apparatus of 2904_i has a sensing function. Further, it is assumed that this fourth i apparatus of 2904_i has a communication function. Note that, since the specific configuration has already been described in Embodiment 1, a description thereof will be omitted.

"INFORMATION ON WHETHER SENSING REQUEST FROM FIRST APPARATUS 1201 IS PERFORMABLE OR NOT PERFORMABLE 3012":
This information is used to notify, for example, first apparatus 1201, third apparatus 2903, or the like of information on "whether sensing is performable" when fourth i apparatus of 2904_i receives a sensing request from first apparatus 1201 (a request of the terminal for first apparatus 1201 to perform sensing).

Note that, although "INFORMATION ON WHETHER SENSING REQUEST FROM FIRST APPARATUS 1201 IS PERFORMABLE OR NOT PERFORMABLE 3012" is named here, "INFORMATION ON WHETHER SENSING REQUEST FROM FIRST APPARATUS 1201 IS PERFORMABLE OR NOT PERFORMABLE 3012" may also be "information on whether a sensing request from an apparatus other than first apparatus 1201, such as a repeater, third apparatus 2903, and another base station, is performable or not performable". Further, details of the "sensing request" will be described later.

"INFORMATION ON WHETHER SENSING REQUEST FROM FIRST APPARATUS 1201 IS ACCEPTABLE OR NOT ACCEPTABLE 3013":
This information is used to notify, for example, first apparatus 1201 or the like of information on "whether fourth i apparatus of 2904_i accepts sensing from first apparatus 1201" when fourth i apparatus of 2904_i receives a sensing request from first apparatus 1201 (a request of the terminal for first apparatus 1201 to perform sensing).

Accordingly, there are modes in which, even when there is a sensing request from first apparatus 1201, fourth_i apparatus of 2904_i "accepts" and "does not accept" the sensing request.

Note that, although "INFORMATION ON WHETHER SENSING REQUEST FROM FIRST APPARATUS 1201 IS ACCEPTABLE OR NOT ACCEPTABLE 3013" is named here, "INFORMATION ON WHETHER SENSING REQUEST FROM FIRST APPARATUS 1201 IS ACCEPTABLE OR NOT ACCEPTABLE 3013" may be "information on whether a sensing request from an apparatus other than first apparatus 1201, such as a repeater, third apparatus 2903, and another base station, is acceptable or not acceptable". Further, details of the "sensing request" will be described later.

By configuring the above, first apparatus 1201, a repeater, third apparatus 2903, another base station, and the like can know sensing of a base station and a state with respect to a sensing request so that it is possible to obtain the effect that suitable "sensing-related control and communication with fourth i apparatus of 2904_i" can be performed.

Note that, the apparatus that transmits information on sensing capability 3001 in FIG. 30 has been described as fourth i apparatus of 2904_i above, but is merely an example, and information on sensing capability 3001 may be transmitted by a communication apparatus such as a repeater, a terminal, an access point, and third apparatus 2903.

Further, although the description "[...] SENSING REQUEST FROM FIRST APPARATUS 1201" is used in "INFORMATION ON WHETHER SENSING REQUEST FROM FIRST APPARATUS 1201 IS PERFORMABLE OR NOT PERFORMABLE 3012" and "INFORMATION ON WHETHER SENSING REQUEST FROM FIRST APPARATUS 1201 IS ACCEPTABLE OR NOT ACCEPTABLE 3013" which are transmitted by the apparatus that transmits information on sensing capability 3001 in FIG. 30, a sensing request may be not from first apparatus 1201, but may be from, for example, a communication apparatus such as a base station, a repeater, an access point, and third apparatus 2903. Accordingly, implementation is also possible with 3012 as "INFORMATION ON WHETHER SENSING REQUEST FROM COMMUNICATION APPARATUS IS PERFORMABLE OR NOT PERFORMABLE" and 3013 as "INFORMATION ON WHETHER SENSING REQUEST FROM COMMUNICATION APPARATUS IS ACCEPTABLE OR NOT ACCEPTABLE".

Next, sensing by first apparatus 1201 and fourth_1 apparatus of 2904_1 in FIG. 29 will be described.

First apparatus 1201 may be a terminal capable of communicating with third apparatus 2903 and fourth_i apparatus of 2904_i. Alternatively, first apparatus 1201 may be a base station (or an access point, a repeater, or the like). In addition, first apparatus 1201 may also be fourth x apparatus of 2904_x (where x is a natural number, for example). Further, third apparatus 2903 may be a base station or may be a terminal, a repeater, an access point, or the like. Fourth i apparatus of 2904_i may be a base station or may be a terminal, a repeater, an access point, or the like.

In the following description, first apparatus 1201 will be described as a terminal, but it is also performable in the same manner even when first apparatus 1201 is a base station, an access point or a repeater. However, in a case where a particular operation occurs when first apparatus 1201 is a base station, a supplementary description will be provided.

The present embodiment deals with triangulation. Examples of the specific triangulation method have been described in Embodiment 1. The first method and the second method are triangulation based on the fact that information on a distance is obtained by performing sensing.

The third method and the fourth method are, on the other hand, triangulation based on the fact that information on a direction (of arrival) (having said that, a distance may also be obtained) is obtained by performing sensing.

Hereinafter, with respect to FIG. 29, distance-based triangulation whose examples are the first method and the second method, and direction-based triangulation whose examples are the third method and the fourth method will be described separately.

### Case of Distance-based Triangulation:

An example when the distance-based triangulation whose examples are the first method and the second method described in Embodiment 1 is used will be described.

First apparatus 1201 obtains information on sensing capability 3001 in FIG. 30, which is transmitted by "fourth_1 apparatus of 2904_1, fourth _2 apparatus of 2904_2, ..., fourth_Q apparatus of 2904_Q", and acquires each status of response to sensing of "fourth_1 apparatus of 2904_1, fourth _2 apparatus of 2904_2, ..., fourth _Q apparatus of 2904_Q".

As another method, "fourth_1 apparatus of 2904_1, fourth _2 apparatus of 2904_2, ..., fourth Q apparatus of 2904_Q" may transmit information on sensing capability 3001 in FIG. 30 to third apparatus 2903, and third apparatus 2903 may transmit control information including information on sensing capability of each apparatus of "fourth_1 apparatus of 2904_1, fourth _2 apparatus of 2904_2, ..., fourth _Q apparatus of 2904_Q" by using the third frequency. Thus, first apparatus 1201 knows each status of response to sensing of "fourth_1 apparatus of 2904_1, fourth _2 apparatus of 2904_2, ..., fourth _Q apparatus of 2904_Q".

Hereinafter, it is assumed as an example that "fourth_1 apparatus of 2904_1, fourth_2 apparatus of 2904_2, ..., fourth _Q apparatus of 2904_Q" can all perform sensing, and that in a case where there is a sensing request from, for example, a terminal such as first apparatus 1201, "fourth_1 apparatus of 2904_1, fourth _2 apparatus of 2904_2, ..., fourth _Q apparatus of 2904_Q" can all perform a sensing operation for the request for performing sensing.

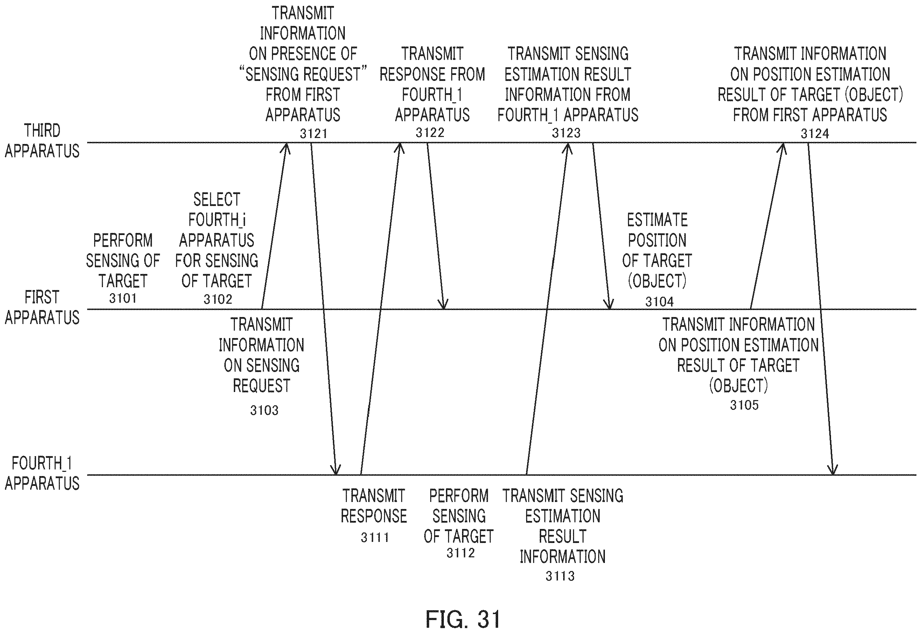

FIG. 31 illustrates a procedure example for sensing in the system example in FIG. 29. In FIG. 31, it is assumed that first apparatus 1201 has obtained at least information on a "distance between first apparatus 1201 and fourth_1 apparatus of 2904_1" before "ESTIMATE POSITION OF TARGET (OBJECT) 3104" is performed.

Further, in FIG. 31, it is assumed that first apparatus 1201 has obtained information on a "distance between first apparatus 1201 and fourth_i apparatus of 2904_i" (where i is an integer larger than or equal to 1 and smaller than or equal to Q) before "SELECT FOURTH i APPARATUS OF 2904_i FOR SENSING OF TARGET (SENSING TARGET) 3102" is performed.

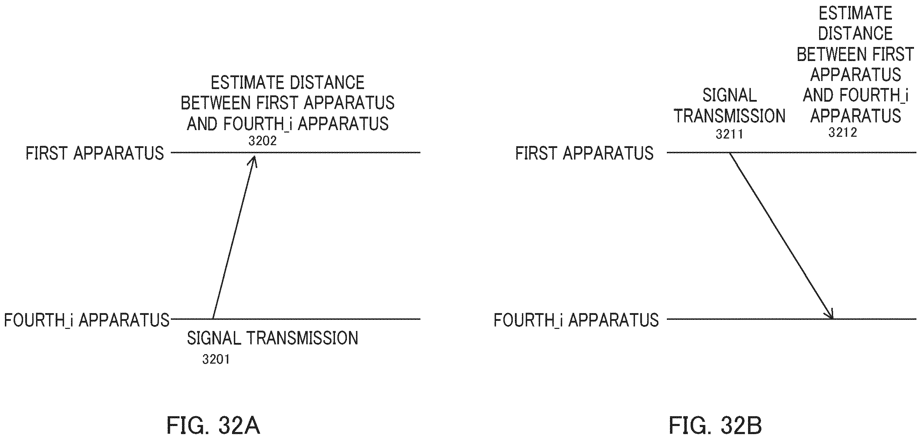

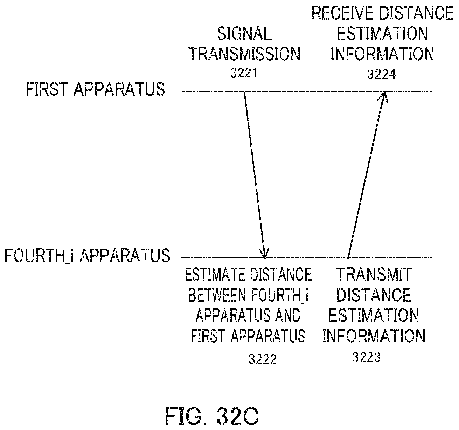

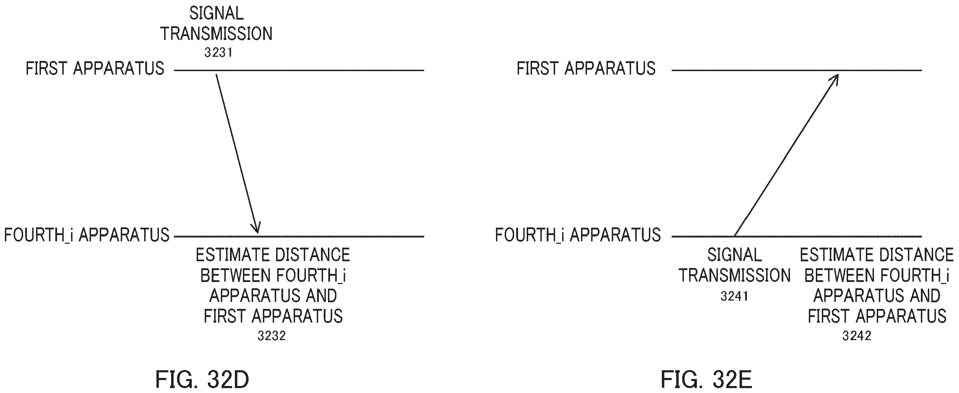

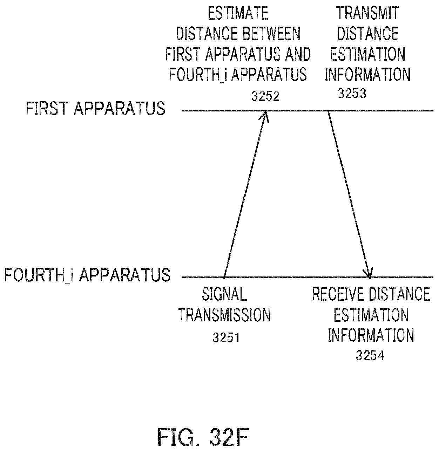

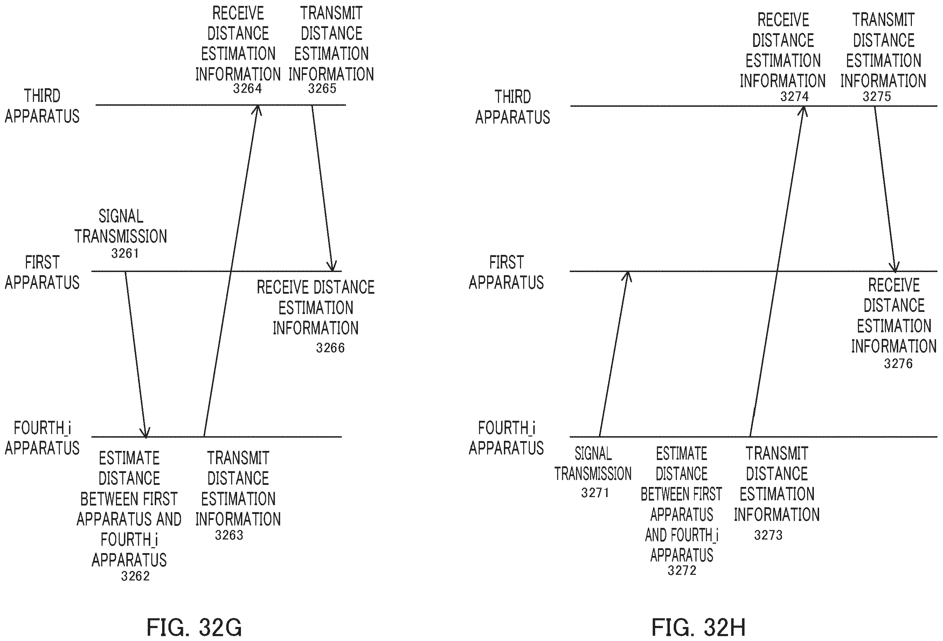

Before describing FIG. 31, a method of obtaining the information on the "distance between first apparatus 1201 and fourth_1 apparatus of 2904_1" will be described with reference to FIGS. 32A, 32B, 32C, 32D, 32E, 32F, 32G, and 32H.

In FIG. 32A, fourth i apparatus of 2904_i first transmits a signal (3201). Then, first apparatus 1201 receives this signal to thereby estimate the "distance between first apparatus 1201 and fourth_1 apparatus of 2904_1" (3202). Note that, since the detailed method of distance estimation has been described in Embodiment 1, a description thereof will be omitted.

As another method, in FIG. 32B, first apparatus 1201 first transmits a signal to fourth i apparatus of 2904_i (3211). Then, first apparatus 1201 receives this signal and estimates the "distance between first apparatus 1201 and fourth_1 apparatus of 2904_1" (3212). Note that, since the detailed method of distance estimation has been described in Embodiment 1, a description thereof will be omitted.

As another method, in FIG. 32C, first apparatus 1201 first transmits a signal to fourth i apparatus of 2904_i (3221). Then, fourth i apparatus of 2904_i receives this signal and estimates the "distance between first apparatus 1201 and fourth_i apparatus of 2904_i" (3222). Fourth i apparatus of 2904_i transmits a modulated signal including information on the "distance between first apparatus 1201 and fourth_i apparatus of 2904_i" to first apparatus 1201 (3223). First apparatus 1201 receives the modulated signal including the information on the "distance between first apparatus 1201 and fourth_i apparatus of 2904_i" and obtains the information on the "distance between first apparatus 1201 and fourth_i apparatus of 2904_i" (3224).

As another method, when first apparatus 1201 is a base station or a fixedly installed terminal, first apparatus 1201 and fourth_i apparatus of 2904_i may have acquired the "distance between first apparatus 1201 and fourth i apparatus of 2904_i" in advance.

First apparatus 1201 and fourth_i apparatus of 2904_i may acquire positions by a position estimation system such as GPS, for example. Then, fourth i apparatus of 2904_i may transmit information on its own position to first apparatus 1201, and first apparatus 1201 may determine the "distance between first apparatus 1201 and fourth_i apparatus of 2904_i" from information on its own position and the information on the position of fourth_i apparatus of 2904_i. Then, first apparatus 1201 may transmit the information on its own position to fourth_i apparatus of 2904_i and fourth i apparatus of 2904_i may determine the "distance between first apparatus 1201 and fourth_i apparatus of 2904_i" from the information on its own position and the information on the position of first apparatus 1201.

As another method, in FIG. 32D, first apparatus 1201 first transmits a signal to fourth i apparatus of 2904_i (3231). Then, fourth i apparatus of 2904_i receives this signal and estimates the "distance between first apparatus 1201 and fourth_i apparatus of 2904_i" (3232). Note that, since the detailed method of distance estimation has been described in Embodiment 1, a description thereof will be omitted.

As another method, in FIG. 32E, fourth i apparatus of 2904_i first transmits a signal to first apparatus 1201 (3241). Then, fourth i apparatus of 2904_i receives this signal and estimates the "distance between first apparatus 1201 and fourth_i apparatus of 2904_i" (3242). Note that, since the detailed method of distance estimation has been described in Embodiment 1, a description thereof will be omitted.

As another method, in FIG. 32F, fourth i apparatus of2904_i first transmits a signal to first apparatus 1201 (3251). Then, first apparatus 1201 receives this signal and estimates the "distance between first apparatus 1201 and fourth_i apparatus of 2904_i" (3252). First apparatus 1201 transmits a modulated signal including information on the "distance between first apparatus 1201 and fourth_i apparatus of2904_i" to fourth i apparatus of 2904_i (3253). Fourth_i apparatus of 2904_i receives the modulated signal including the information on the "distance between first apparatus 1201 and fourth_i apparatus of 2904_i" and obtains the information on the "distance between first apparatus 1201 and fourth_i apparatus of 2904_i" (3254).

As another method, in FIG. 32G, first apparatus 1201 first transmits a signal to fourth i apparatus of 2904_i (3261). Then, fourth i apparatus of 2904_i receives this signal and estimates the "distance between first apparatus 1201 and fourth_i apparatus of 2904_i" (3262). Fourth i apparatus of 2904_i transmits a modulated signal including information on the "distance between first apparatus 1201 and fourth_i apparatus of 2904_i" to third apparatus 2903 (3263). Third apparatus 2903 obtains the information on the "distance between first apparatus 1201 and fourth_i apparatus of 2904_i" (3264). Third apparatus 2903 transmits a modulated signal to first apparatus 1201 including the information on the "distance between first apparatus 1201 and fourth_i apparatus of 2904_i" (3265), and first apparatus 1201 obtains the information on the "distance between first apparatus 1201 and fourth i apparatus of 2904_i" (3266).

As another method, in FIG. 32H, fourth i apparatus of 2904_i first transmits a signal to first apparatus 1201 (3271). Then, fourth i apparatus of 2904_i receives this signal and estimates the "distance between first apparatus 1201 and fourth_i apparatus of 2904_i" (3272). Note that, since the detailed method of distance estimation has been described in Embodiment 1, a description thereof will be omitted. Fourth i apparatus of 2904_i transmits a modulated signal including information on the "distance between first apparatus 1201 and fourth i apparatus of 2904_i" to third apparatus 2903 (3273). Third apparatus 2903 obtains the information on the "distance between first apparatus 1201 and fourth i apparatus of 2904_i" (3274). Third apparatus 2903 transmits a modulated signal including the information on the "distance between first apparatus 1201 and fourth_i apparatus of 2904_i" to first apparatus 1201 (3275), and first apparatus 1201 obtains the information on the "distance between first apparatus 1201 and fourth_i apparatus of 2904_i" (3276).

Examples of the method of obtaining information on a "distance between first apparatus 1201 and fourth_1 apparatus of 2904_1" have been described above with referenceto FIGS. 32Ato 32H.

An example when the distance-based triangulation whose examples are the first method and the second method described in Embodiment 1 is used will be described.

In FIG. 31, first apparatus 1201 first performs sensing of target (object) 1203 in FIG. 29 to obtain an estimated value of a "distance between first apparatus 1201 and target 1203" (3101).

First apparatus 1201 selects fourth_i apparatus of 2904_i, which is requested to perform estimation of a distance to target 1203, based on the estimated value of the "distance between first apparatus 1201 and target 1203" and the information on the "distance between first apparatus 1201 and fourth i apparatus of 2904_i" (3102).

Note that, it is assumed in the example of FIG. 31 that first apparatus 1201 has selected fourth_1 apparatus of 2904_1 in FIG. 29 as fourth i apparatus of 2904_i which is requested to perform the estimation of the distance to target 1203. However, when fourth_i apparatus of 2904_i which is requested to perform the estimation of the distance to target 1203 is determined (in advance), "SELECT FOURTH_i APPARATUS OF 2904_i FOR SENSING OF TARGET (SENSING TARGET) 3102" may not be performed.

First apparatus 1201 transmits information on a request for "estimation of the distance to target 1203" to third apparatus 2903 (3103).

Third apparatus 2903 receives the information on the request for "estimation of the distance to target 1203" and transmits the information on the request for "estimation of the distance to target 1203" to fourth_1 apparatus of 2904_1 (3121).

Fourth_1 apparatus of 2904_1 receives the information on the request for "estimation of the distance to target 1203", and responds "whether fourth_1 apparatus of 2904_1 accepts the request" (3111). Note that, in the example here, a description will be given on the assumption that fourth_1 apparatus of 2904_1 "accepts the request".

Third apparatus 2903 receives information on the response to the request. Then, third apparatus 2903 transmits the information on the response to the request to first apparatus 1201 (3122).

Fourth_1 apparatus of 2904_1 transmits a signal for performing sensing and obtains an estimated value of a "distance between fourth_1 apparatus of 2904_1 and target 1203" (3112).

Fourth_1 apparatus of 2904_1 transmits information on the "distance between fourth_1 apparatus of 2904_1 and target 1203" to third apparatus 2903 (3113).

Third apparatus 2903 receives the information on the "distance between fourth_1 apparatus of 2904_1 and target 1203" and transmits the information on the "distance between fourth _1 apparatus of 2904_1 and target 1203" to first apparatus 1201 (3123).

First apparatus 1201 obtains the information on the "distance between fourth_1 apparatus of 2904_1 and target 1203", performs triangulation by using the "distance between first apparatus 1201 and fourth_i apparatus of 2904_i", the "distance between first apparatus 1201 and target 1203", and the "distance between fourth_1 apparatus of 2904_1 and target 1203", and estimates the position of target 1203, for example (3104).

First apparatus 1201 transmits information on the "position of target 1203" to third apparatus 2903 (3105).

Third apparatus 2903 receives the information on the "position of target 1203" and transmits the information on the "position of target 1203" to fourth_1 apparatus of 2904_1 (3124).

Note that, in a case where first apparatus 1201 and fourth_1 apparatus of 2904_1 do not need to share the information on the "position of target 1203", first apparatus 1201 may not transmit the information on the "position of target 1203" to third apparatus 2903.

By performing as described above, it is possible to realize the distance-based triangulation described in Embodiment 1. Thus, it is possible to obtain the effect of being capable of specifying the position of a target.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

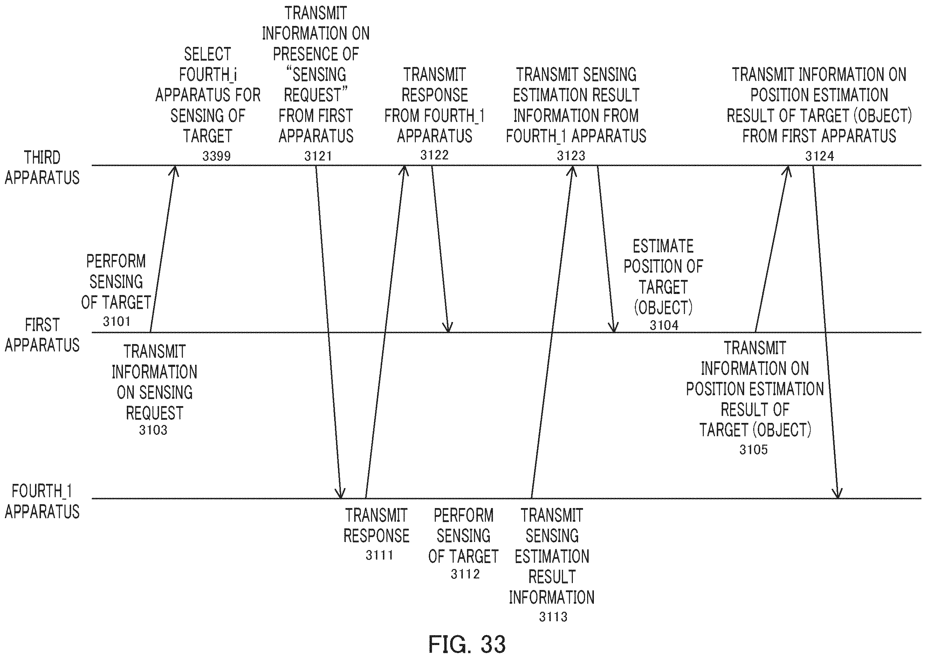

Next, a procedure example for sensing different from that in FIG. 31 will be described with reference to FIG. 33. FIG. 33 illustrates another procedure example for sensing. In FIG. 33, parts which operate in the same manner as in FIG. 31 are denoted with the same numbers. In FIG. 33, a difference from FIG. 31 will be described. In FIG. 33, the difference from FIG. 31 is as follows.

The difference is that "in FIG. 31, first apparatus 1201 selects fourth i apparatus of 2904_i for sensing of target 1203 (sensing the target) (3102)", whereas "in FIG. 33, third apparatus 2903 selects fourth_i apparatus of 2904_i for sensing of target 1203 (sensing the target) for first apparatus 1201 (3399)".

As in FIG. 33, first apparatus 1201 transmits information on a request for "estimation of a distance to target 1203" to third apparatus 2903 (3103). Note that, at this time, first apparatus 1201 may transmit information on the "distance to target 1203" to third apparatus 2903.

Then, third apparatus 2903 selects, for first apparatus 1201, fourth i apparatus of 2904_i, which performs "estimation of the distance to target 1203", based on the information on the "distance to target 1203", the status of response to sensing of fourth i apparatus of 2904_i (information on sensing capability 3001 in FIG. 30), and the like (3399).

Note that, it is assumed here that the apparatus which performs sensing is fourth_1 apparatus of 2904_1. However, when fourth_i apparatus of 2904_i which is requested to perform the estimation of the distance to target 1203 is determined (in advance), "SELECT FOURTH_i APPARATUS OF 2904_i FOR SENSING OF TARGET (SENSING TARGET) 3399" may not be performed.

Since the operations after that in 3399 in FIG. 33 have already been described with reference to FIG. 31, a description thereof will be omitted.

By performing as described above, it is possible to realize the distance-based triangulation described in Embodiment 1. Thus, it is possible to obtain the effect of being capable of specifying the position of a target.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

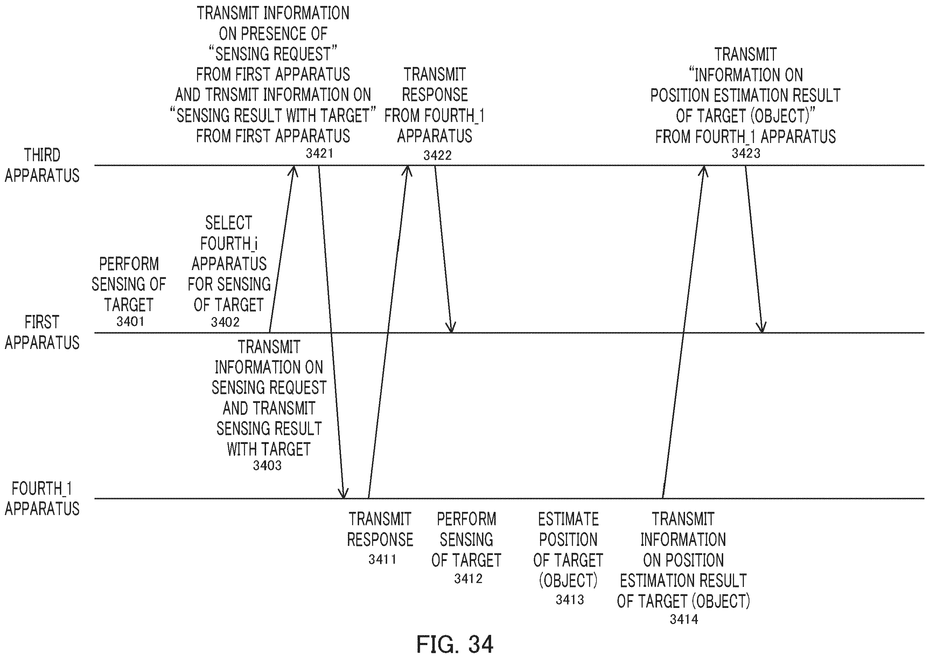

Next, another example when the distance-based triangulation whose examples are the first method and the second method is used will be described with reference to FIG. 34.

FIG. 34 illustrates another procedure example for sensing. It is assumed that first apparatus 1201 has obtained information on sensing capability 3001 in FIG. 30, which is transmitted by "fourth_1 apparatus of 2904_1, fourth _2 apparatus of 2904_2, ..., fourth_Q apparatus of 2904_Q", and has acquired each status of response to sensing of "fourth_1 apparatus of 2904_1, fourth _2 apparatus of 2904_2, ..., fourth _Q apparatus of 2904_Q".

As another method, "fourth_1 apparatus of 2904_1, fourth _2 apparatus of 2904_2, ..., fourth Q apparatus of 2904_Q" may transmit information on sensing capability 3001 in FIG. 30 to third apparatus 2903, and third apparatus 2903 may transmit control information including information on sensing capability of each apparatus of "fourth_1 apparatus of 2904_1, fourth _2 apparatus of 2904_2, ..., fourth _Q apparatus of 2904_Q" by using the third frequency. Thus, first apparatus 1201 can acquire each status of response to sensing of "fourth_1 apparatus of 2904_1, fourth _2 apparatus of 2904_2, ..., fourth _Q apparatus of 2904_Q".

Hereinafter, it is assumed as an example that "fourth_1 apparatus of 2904_1, fourth_2 apparatus of 2904_2, ..., fourth _Q apparatus of 2904_Q" can all perform sensing, and that in a case where there is a sensing request from, for example, a terminal such as first apparatus 1201, "fourth_1 apparatus of 2904_1, fourth _2 apparatus of 2904_2, ..., fourth _Q apparatus of 2904_Q" can all perform a sensing operation for the request for performing sensing.

Further, in FIG. 34, it is assumed that first apparatus 1201 has obtained at least information on a "distance between first apparatus 1201 and fourth_1 apparatus of 2904_1" before "ESTIMATE POSITION OF TARGET (OBJECT) 3413" is performed. Then, in FIG. 34, it is assumed that first apparatus 1201 has obtained information on a "distance between first apparatus 1201 and fourth_i apparatus of 2904_i" (where i is an integer larger than or equal to 1 and smaller than or equal to Q) before "SELECT FOURTH i APPARATUS OF 2904_i FOR SENSING OF TARGET (SENSING TARGET) 3402" is performed.

Note that, since the method of obtaining the information on the "distance between first apparatus 1201 and fourth_1 apparatus of 2904_1" this time has already been described with reference to FIGS. 32A, 32B, 32C, 32D, 32E, 32F, 32G, and 32H, a description thereof will be omitted.

As another method, when first apparatus 1201 is a base station or a fixedly installed terminal, first apparatus 1201 and fourth_i apparatus of 2904_i may have acquired the "distance between first apparatus 1201 and fourth i apparatus of 2904_i" in advance.

Further, first apparatus 1201 and fourth_i apparatus of 2904_i may acquire positions by a position estimation system such as GPS, for example. Then, fourth_i apparatus of 2904_i may transmit information on its own position to first apparatus 1201, and first apparatus 1201 may determine the "distance between first apparatus 1201 and fourth i apparatus of 2904_i" from information on its own position and the information on the position of fourth i apparatus of 2904_i. Then, first apparatus 1201 may transmit the information on its own position to fourth_i apparatus of 2904_i and fourth i apparatus of 2904_i may determine the "distance between first apparatus 1201 and fourth i apparatus of 2904_i" from the information on its own position and the information on the position of first apparatus 1201.

An example when the distance-based triangulation whose examples are the first method and the second method described in Embodiment 1 is used will be described.

In FIG. 34, first apparatus 1201 first performs sensing of target (object) 1203 in FIG. 29 to obtain an estimated value of a "distance between first apparatus 1201 and target 1203" (3401).

First apparatus 1201 selects fourth_i apparatus of 2904_i, which is requested to perform estimation of a distance to target 1203, based on the estimated value of the "distance between first apparatus 1201 and target 1203" and the information on the "distance between first apparatus 1201 and fourth_i apparatus of 2904_i" (3402).

Note that, it is assumed in the example of FIG. 34 that first apparatus 1201 has selected fourth_1 apparatus of 2904_1 in FIG. 29 as fourth i apparatus of 2904_i which is requested to perform the estimation of the distance to target 1203. However, when fourth_i apparatus of 2904_i which is requested to perform the estimation of the distance to target 1203 is determined (in advance), "SELECT FOURTH_i APPARATUS OF 2904_i FOR SENSING OF TARGET (SENSING TARGET) 3402" may not be performed.

First apparatus 1201 transmits information on a request for "estimation of the distance to target 1203" to third apparatus 2903. Further, first apparatus 1201 transmits information on the estimated value of the "distance between first apparatus 1201 and target 1203" to third apparatus 2903 (3403).

Third apparatus 2903 receives the information on the request for "estimation of the distance to target 1203" and the information on the estimated value of the "distance between first apparatus 1201 and target 1203", and transmits the information on the request for "estimation of the distance to target 1203" and the information on the estimated value of the "distance between first apparatus 1201 and target 1203" to fourth_1 apparatus of 2904_1 (3421).

Fourth_1 apparatus of 2904_1 receives the information on the request for "estimation of the distance to target 1203", and responds "whether fourth_1 apparatus of 2904_1 accepts the request" (3411). Note that, in the example here, a description will be given on the assumption that fourth_1 apparatus of 2904_1 "accepts the request".

Third apparatus 2903 receives information on the response to the request. Then, third apparatus 2903 transmits the information on the response to the request to first apparatus 1201 (3422).

Fourth_1 apparatus of 2904_1 transmits a signal for performing sensing and obtains an estimated value of a "distance between fourth_1 apparatus of 2904_1 and target 1203" (3412).

Fourth_1 apparatus of 2904_1 performs triangulation by using the "distance between first apparatus 1201 and fourth_i apparatus of 2904_i", the "distance between first apparatus 1201 and target 1203", and the "distance between fourth_1 apparatus of 2904_1 and target 1203", and estimates the position of target 1203, for example (3413).

Fourth _1 apparatus of 2904_1 transmits information on the "position of target 1203" to third apparatus 2903 (3414).

Third apparatus 2903 receives the information on the "position of target 1203", and transmits the information on the "position of target 1203" to first apparatus 1201 (3423).

Note that, in a case where fourth_1 apparatus of 2904_1 and first apparatus 1201 do not need to share the information on the "position of target 1203", fourth_1 apparatus of 2904_1 may not transmit the information on the "position of target 1203" to third apparatus 2903.

By performing as described above, it is possible to realize the distance-based triangulation described in Embodiment 1. Thus, it is possible to obtain the effect of being capable of specifying the position of a target.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

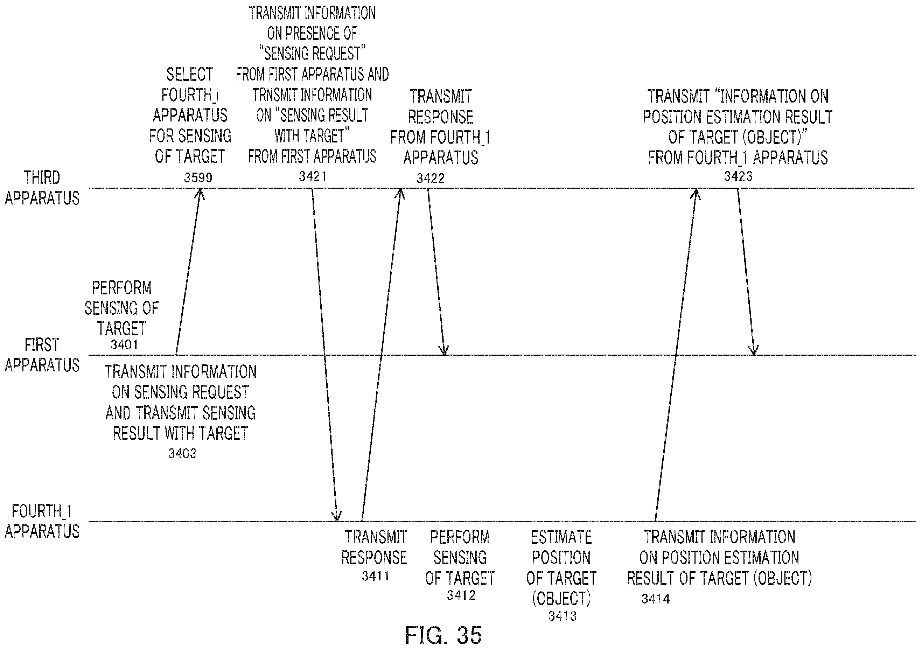

Next, an exemplary embodiment that differs from that in FIG. 34 will be described with reference to FIG. 35. FIG. 35 illustrates another procedure example for sensing. In

FIG. 35, parts which operate in the same manner as in FIG. 34 are denoted with the same numbers. In FIG. 35, a difference from FIG. 34 will be described. In FIG. 35, the difference from FIG. 34 is as follows.

The difference is that "in FIG. 34, first apparatus 1201 selects fourth i apparatus of 2904_i for sensing of target 1203 (sensing the target) (3402)", whereas "in FIG. 35, third apparatus 2903 selects fourth_i apparatus of 2904_i for sensing of target 1203 (sensing the target) for first apparatus 1201 (3599)".

As in FIG. 35, first apparatus 1201 transmits information on a request for "estimation of a distance to target 1203" to third apparatus 2903 (3403). Note that, at this time, first apparatus 1201 may transmit information on the "distance to target 1203" to third apparatus 2903.

Then, third apparatus 2903 selects, for first apparatus 1201, fourth i apparatus of 2904_i, which performs "estimation of the distance to target 1203", based on the information on the "distance to target 1203", the status of response to sensing of fourth i apparatus of 2904_i (information on sensing capability 3001 in FIG. 30), and the like (3599).

Note that, it is assumed here that the apparatus which performs sensing is fourth_1 apparatus of 2904_1. However, when fourth_i apparatus of 2904_i which is requested to perform the estimation of the distance to target 1203 is determined (in advance), "SELECT FOURTH_i APPARATUS OF 2904_i FOR SENSING OF TARGET (SENSING TARGET) 3599" may not be performed.

Since the operations after that in 3599 in FIG. 35 have already been described with reference to FIG. 34, a description thereof will be omitted.

By performing as described above, it is possible to realize the distance-based triangulation described in Embodiment 1. Thus, it is possible to obtain the effect of being capable of specifying the position of a target.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

### Case of Direction-based Triangulation:

An example when the direction-based triangulation whose examples are the third method and the fourth method described in Embodiment 1 is used will be described.

It is assumed that first apparatus 1201 has obtained information on sensing capability 3001 in FIG. 30, which is transmitted by "fourth_1 apparatus of 2904_1, fourth _2 apparatus of 2904_2, ..., fourth_Q apparatus of 2904_Q", and has acquired each status of response to sensing of "fourth_1 apparatus of 2904_1, fourth _2 apparatus of 2904_2, ..., fourth _Q apparatus of 2904_Q".

As another method, "fourth_1 apparatus of 2904_1, fourth _2 apparatus of 2904_2, ..., fourth Q apparatus of 2904_Q" may transmit information on sensing capability 3001 in FIG. 30 to third apparatus 2903, and third apparatus 2903 may transmit control information including information on sensing capability of each apparatus of "fourth_1 apparatus of 2904_1, fourth _2 apparatus of 2904_2, ..., fourth _Q apparatus of 2904_Q" by using the third frequency. Thus, first apparatus 1201 can acquire each status of response to sensing of "fourth_1 apparatus of 2904_1, fourth _2 apparatus of 2904_2, ..., fourth _Q apparatus of 2904_Q".

Hereinafter, it is assumed as an example that "fourth_1 apparatus of 2904_1, fourth_2 apparatus of 2904_2, ..., fourth _Q apparatus of 2904_Q" can all perform sensing, and that in a case where there is a sensing request from, for example, a terminal such as first apparatus 1201, "fourth_1 apparatus of 2904_1, fourth _2 apparatus of 2904_2, ..., fourth _Q apparatus of 2904_Q" can all perform a sensing operation for the request for performing sensing.

Further, in FIG. 31, it is assumed that first apparatus 1201 has obtained at least information on a "distance between first apparatus 1201 and fourth_1 apparatus of 2904_1" before "ESTIMATE POSITION OF TARGET (OBJECT) 3104" is performed. Then, in FIG. 31, it is assumed that first apparatus 1201 has obtained information on a "distance between first apparatus 1201 and fourth_i apparatus of 2904_i" (where i is an integer larger than or equal to 1 and smaller than or equal to Q) before "SELECT FOURTH i APPARATUS OF 2904_i FOR SENSING OF TARGET (SENSING TARGET) 1402" is performed.

Note that, since the method of obtaining the information on the "distance between first apparatus 1201 and fourth_1 apparatus of 2904_1" has already been described with reference to FIGS. 32A, 32B, 32C, 32D, 32E, 32F, 32G, and 32H, a description thereof will be omitted.

As another method, when first apparatus 1201 is a base station or a fixedly installed terminal, first apparatus 1201 and fourth_i apparatus of 2904_i may have acquired the "distance between first apparatus 1201 and fourth i apparatus of 2904_i" in advance.

Further, first apparatus 1201 and fourth_i apparatus of 2904_i may acquire positions by a position estimation system such as GPS, for example. Then, fourth_i apparatus of 2904_i may transmit information on its own position to first apparatus 1201, and first apparatus 1201 may determine the "distance between first apparatus 1201 and fourth i apparatus of 2904_i" from information on its own position and the information on the position of fourth i apparatus of 2904_i. Then, first apparatus 1201 may transmit the information on its own position to fourth_i apparatus of 2904_i and fourth i apparatus of 2904_i may determine the "distance between first apparatus 1201 and fourth i apparatus of 2904_i" from the information on its own position and the information on the position of first apparatus 1201.

An example when the direction-based triangulation whose examples are the third method and the fourth method described in Embodiment 1 is used will be described.

In FIG. 31, first apparatus 1201 first performs sensing of target (object) 1203 in FIG. 29 to obtain an estimated value of a "direction (of arrival) of first apparatus 1201 and target 1203" (3101).

First apparatus 1201 selects fourth_i apparatus of 2904_i, which is requested to perform estimation of a direction (of arrival) with target 1203, based on the estimated value of the "direction (of arrival) of first apparatus 1201 and target 1203" and the information on the "distance between first apparatus 1201 and fourth_i apparatus of 2904_i" (3102).

Note that, it is assumed in the example of FIG. 31 that first apparatus 1201 has selected fourth_1 apparatus of 2904_1 in FIG. 29 as fourth i apparatus of 2904_i which is requested to perform the estimation of the direction (of arrival) with target 1203. However, when fourth i apparatus of 2904_i which is requested to perform the estimation of the direction (of arrival) with target 1203 is determined (in advance), "SELECT FOURTH_i APPARATUS OF 2904_i FOR SENSING OF TARGET (THAT SENSES TARGET) 3102" may not be performed.

Then, first apparatus 1201 transmits information on a request for "estimation of a direction (of arrival) with target 1203" to third apparatus 2903 (3103).

Third apparatus 2903 receives the information on the request for "estimation of the direction (of arrival) with target 1203" and transmits the information on the request for "estimation of the direction (of arrival) with target 1203" to fourth_1 apparatus of 2904_1 (3121).

Fourth_1 apparatus of 2904_1 receives the information on the request for "estimation of the direction (of arrival) with target 1203", and responds "whether fourth_1 apparatus of 2904_1 accepts the request" (3111). Note that, in the example here, a description will be given on the assumption that fourth_1 apparatus of 2904_1 "accepts the request".

Third apparatus 2903 receives information on the response to the request. Then, third apparatus 2903 transmits the information on the response to the request to first apparatus 1201 (3122).

Fourth_1 apparatus of 2904_1 transmits a signal for performing sensing and obtains an estimated value of a "direction (of arrival) of fourth_1 apparatus of 2904_1 and target 1203" (3112).

Fourth_1 apparatus of 2904_1 transmits information on the "direction (of arrival) of fourth_1 apparatus of 2904_1 and target 1203" to third apparatus 2903 (3113).

Third apparatus 2903 receives the information on the "direction (of arrival) of fourth_1 apparatus of 2904_1 and target 1203" and transmits the information on the "direction (of arrival) of fourth_1 apparatus of 2904_1 and target 1203" to first apparatus 1201 (3123).

First apparatus 1201 obtains the information on the "direction (of arrival) of fourth_1 apparatus of 2904_1 and target 1203", performs triangulation by using the "distance between first apparatus 1201 and fourth i apparatus of 2904_i", the "direction (of arrival) of first apparatus 1201 and target 1203", and the "direction (of arrival) of fourth_1 apparatus of 2904_1 and target 1203", and estimates the position of target 1203, for example (3104).

First apparatus 1201 transmits information on the "position of target 1203" to third apparatus 2903 (3105).

Third apparatus 2903 receives the information on the "position of target 1203" and transmits the information on the "position of target 1203" to fourth_1 apparatus of 2904_1 (3124).

Note that, in a case where first apparatus 1201 and fourth i apparatus of 2904_i do not need to share the information on the "position of target 1203", first apparatus 1201 may not transmit the information on the "position of target 1203" to third apparatus 2903.

By performing as described above, it is possible to realize the distance-based triangulation described in Embodiment 1. Thus, it is possible to obtain the effect of being capable of specifying the position of a target.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

Next, an exemplary embodiment that differs from that in FIG. 31 will be described with reference to FIG. 33. In FIG. 33, parts which operate in the same manner as in FIG. 31 are denoted with the same numbers. In FIG. 33, a difference from FIG. 31 will be described. In FIG. 33, the difference from FIG. 31 is as follows.

The difference is that "in FIG. 31, first apparatus 1201 selects fourth i apparatus of 2904_i for sensing of target 1203 (sensing the target) (3102)", whereas "in FIG. 33, third apparatus 2903 selects fourth_i apparatus of 2904_i for sensing of target 1203 (sensing the target) for first apparatus 1201 (3399)".

As in FIG. 33, first apparatus 1201 transmits information on a request for "estimation of a direction (of arrival) with target 1203" to third apparatus 2903 (3103). Note that, at this time, first apparatus 1201 may transmit information on the "direction (of arrival) with target 1203" to third apparatus 2903.

Then, third apparatus 2903 selects, for first apparatus 1201, fourth i apparatus of 2904_i, which performs "estimation of the direction (of arrival) with target 1203", based on the information on the "estimation of the direction (of arrival) with target 1203", the status of response to sensing of fourth i apparatus of 2904_i (information on sensing capability 3001 in FIG. 30), and the like (3399). Note that, it is assumed here that the apparatus which performs sensing is fourth_1 apparatus of 2904_1.

Since the operations after that in 3399 in FIG. 33 have already been described with reference to FIG. 31, a description thereof will be omitted.

By performing as described above, it is possible to realize the distance-based triangulation described in Embodiment 1. Thus, it is possible to obtain the effect of being capable of specifying the position of a target.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

Next, another example when the direction-based triangulation whose examples are the third method and the fourth method is used will be described with reference to FIG. 34.

It is assumed that first apparatus 1201 has obtained information on sensing capability 3001 in FIG. 30, which is transmitted by "fourth_1 apparatus of 2904_1, fourth _2 apparatus of 2904_2, ..., fourth_Q apparatus of 2904_Q", and has acquired each status of response to sensing of "fourth_1 apparatus of 2904_1, fourth _2 apparatus of 2904_2, ..., fourth _Q apparatus of 2904_Q".

As another method, "fourth_1 apparatus of 2904_1, fourth _2 apparatus of 2904_2, ..., fourth Q apparatus of 2904_Q" may transmit information on sensing capability 3001 in FIG. 30 to third apparatus 2903, and third apparatus 2903 may transmit control information including information on sensing capability of each apparatus of "fourth_1 apparatus of 2904_1, fourth _2 apparatus of 2904_2, ..., fourth _Q apparatus of 2904_Q" by using the third frequency. Thus, first apparatus 1201 can acquire each status of response to sensing of "fourth_1 apparatus of 2904_1, fourth _2 apparatus of 2904_2, ..., fourth _Q apparatus of 2904_Q".

Hereinafter, it is assumed as an example that "fourth_1 apparatus of 2904_1, fourth_2 apparatus of 2904_2, ..., fourth _Q apparatus of 2904_Q" can all perform sensing, and that in a case where there is a sensing request from, for example, a terminal such as first apparatus 1201, "fourth_1 apparatus of 2904_1, fourth _2 apparatus of 2904_2, ..., fourth _Q apparatus of 2904_Q" can all perform a sensing operation for the request for performing sensing.

Further, in FIG. 34, it is assumed that first apparatus 1201 has obtained at least information on a "distance between first apparatus 1201 and fourth_1 apparatus of 2904_1" before "ESTIMATE POSITION OF TARGET (OBJECT) 3413" is performed.

Then, in FIG. 34, it is assumed that first apparatus 1201 has obtained information on a "distance between first apparatus 1201 and fourth_i apparatus of 2904_i" (where i is an integer larger than or equal to 1 and smaller than or equal to Q) before "SELECT FOURTH i APPARATUS OF 2904_i FOR SENSING OF TARGET (SENSING TARGET) 3402" is performed.

Note that, since the method of obtaining the information on the "distance between first apparatus 1201 and fourth_1 apparatus of 2904_1" has already been described with reference to FIGS. 32A, 32B, 32C, 32D, 32E, 32F, 32G, and 32H, a description thereof will be omitted.

As another method, when first apparatus 1201 is a base station or a fixedly installed terminal, first apparatus 1201 and fourth_i apparatus of 2904_i may have acquired the "distance between first apparatus 1201 and fourth i apparatus of 2904_i" in advance.

Further, first apparatus 1201 and fourth_i apparatus of 2904_i may acquire positions by a position estimation system such as GPS, for example. Then, fourth_i apparatus of 2904_i may transmit information on its own position to first apparatus 1201, and first apparatus 1201 may determine the "distance between first apparatus 1201 and fourth i apparatus of 2904_i" from information on its own position and the information on the position of fourth i apparatus of 2904_i. Then, first apparatus 1201 may transmit the information on its own position to fourth_i apparatus of 2904_i and fourth i apparatus of 2904_i may determine the "distance between first apparatus 1201 and fourth i apparatus of 2904_i" from the information on its own position and the information on the position of first apparatus 1201.

An example when the direction-based triangulation whose examples are the third method and the fourth method described in Embodiment 1 is used will be described.

In FIG. 34, first apparatus 1201 first performs sensing of target (object) 1203 in FIG. 29 to obtain an estimated value of a "direction (of arrival) of first apparatus 1201 and target 1203" (3401).

First apparatus 1201 selects fourth_i apparatus of 2904_i, which is requested to perform estimation of a direction (of arrival) with target 1203, based on the estimated value of the "direction (of arrival) of first apparatus 1201 and target 1203" and the information on the "distance between first apparatus 1201 and fourth_i apparatus of 2904_i" (3402).

Note that, it is assumed in the example of FIG. 34 that first apparatus 1201 has selected fourth_1 apparatus of 2904_1 in FIG. 29 as fourth i apparatus of 2904_i which is requested to perform the estimation of the direction (of arrival) with target 1203. However, when fourth i apparatus of 2904_i which is requested to perform the estimation of the direction (of arrival) with target 1203 is determined (in advance), "SELECT FOURTH_i APPARATUS OF 2904_i FOR SENSING OF TARGET (THAT SENSES TARGET) 3402" may not be performed.

First apparatus 1201 transmits information on a request for "estimation of a direction (of arrival) with target 1203" to third apparatus 2903. Further, first apparatus 1201 transmits information on the estimated value of the "direction (of arrival) of first apparatus 1201 and target 1203" to third apparatus 2903 (3403).

Third apparatus 2903 receives the information on the request for "estimation of the direction (of arrival) with target 1203" and the information on the estimated value of the "direction (of arrival) of first apparatus 1201 and target 1203", and transmits the information on the request for "estimation of the direction (of arrival) with target 1203" and the information on the estimated value of the "direction (of arrival) of first apparatus 1201 and target 1203" to fourth_1 apparatus of 2904_1 (3421).

Fourth_1 apparatus of 2904_1 receives the information on the request for "estimation of the direction (of arrival) with target 1203", and responds "whether fourth_1 apparatus of 2904_1 accepts the request" (3411). Note that, in the example here, a description will be given on the assumption that fourth_1 apparatus of 2904_1 "accepts the request".

Third apparatus 2903 receives information on the response to the request. Then, third apparatus 2903 transmits the information on the response to the request to first apparatus 1201 (3422).

Fourth_1 apparatus of 2904_1 transmits a signal for performing sensing, and obtains an estimated value of a "direction (of arrival) of fourth_1 apparatus of 2904_1 and target 1203" (3412).

Fourth_1 apparatus of 2904_1 performs triangulation by using the "distance between first apparatus 1201 and fourth i apparatus of 2904_i", the "direction (of arrival) of first apparatus 1201 and target 1203", and the "direction (of arrival) of fourth_1 apparatus of 2904_1 and target 1203", and estimates the position of target 1203, for example (3413).

Fourth _1 apparatus of 2904_1 transmits information on the "position of target 1203" to third apparatus 2903 (3414).

Third apparatus 2903 receives the information on the "position of target 1203", and transmits the information on the "position of target 1203" to first apparatus 1201 (3423).

Note that, in a case where fourth_1 apparatus of 2904_1 and first apparatus 1201 do not need to share the information on the "position of target 1203", fourth_1 apparatus of 2904_1 may not transmit the information on the "position of target 1203" to third apparatus 2903.

By performing as described above, it is possible to realize the direction(-of-arrival)-based triangulation described in Embodiment 1. Thus, it is possible to obtain the effect of being capable of specifying the position of a target.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

Next, an exemplary embodiment that differs from that in FIG. 34 will be described with reference to FIG. 35. Note that, in FIG. 35, parts which operate in the same manner as in FIG. 34 are denoted with the same numbers. In FIG. 35, a difference from FIG. 34 will be described. In FIG. 35, the difference from FIG. 34 is as follows.

The difference is that "in FIG. 34, first apparatus 1201 selects fourth_i apparatus of 2904_i for sensing of target 1203 (that senses the target) (3402)", whereas "in FIG. 35, third apparatus 2903 selects fourth_i apparatus of 2904_i for sensing of target 1203 (that senses the target) for first apparatus 1201 (3599)".

As in FIG. 35, first apparatus 1201 transmits information on a request for "estimation of a direction (of arrival) with target 1203" to third apparatus 2903 (3403). Note that, at this time, first apparatus 1201 may transmit information on the "direction (of arrival) with target 1203" to third apparatus 2903.

Then, third apparatus 2903 selects, for first apparatus 1201, fourth i apparatus of 2904_i, which performs "estimation of the direction (of arrival) with target 1203", based on the information on the "estimation of the direction (of arrival) with target 1203", the status of response to sensing of fourth i apparatus of 2904_i (information on sensing capability 3001 in FIG. 30), and the like (3599).

Note that, it is assumed here that the apparatus which performs sensing is fourth_1 apparatus of 2904_1. However, when fourth_i apparatus of 2904_i which is requested to perform the estimation of the direction (of arrival) with target 1203 is determined (in advance), "SELECT FOURTH i APPARATUS OF 2904_i FOR SENSING OF TARGET (THAT SENSES TARGET) 3599" may not be performed.

Since the operations after that in 3599 in FIG. 35 have already been described with reference to FIG. 34, a description thereof will be omitted.

By performing as described above, it is possible to realize the direction(-of-arrival)-based triangulation described in Embodiment 1. Thus, it is possible to obtain the effect of being capable of specifying the position of a target.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

An example of base station selection will be described. In the above description, in FIG. 31, first apparatus 1201 performs "PERFORM SENSING OF TARGET (SENSE TARGET) (3101)" before "SELECT FOURTH i APPARATUS OF 2904_i OF SENSING OF TARGET (THAT SENSES TARGET) (3102)" is performed.

In the same manner, in FIG. 33, first apparatus 1201 performs "PERFORM SENSING OF TARGET (SENSE TARGET) (3101)" before third apparatus 2903 performs "SELECT FOURTH_i APPARATUS OF 2904_i FOR SENSEING OF TARGET (SENSING TARGET) (3399)".

Further, in FIG. 34, first apparatus 1201 performs "PERFORM SENSING OF TARGET (SENSE TARGET) (3401)" before "SELECT FOURTH i APPARATUS OF 2904_i OF SENSING OF TARGET (THAT SENSES TARGET) (3402)" is performed.

Then, in FIG. 35, first apparatus 1201 performs "PERFORM SENSING OF TARGET (SENSE TARGET) (3401)" before third apparatus 2903 perform "SELECT FOURTH i APPARATUS OF 2904_i FOR SENSING OF TARGET (THAT SENSES TARGET) (3599)".

At this time, in FIG. 29, fourth_i apparatus of 2904_i can be selected based on the shape of the triangle formed by "first apparatus 1201, target 1203, and fourth_i apparatus of 2904_i". Since this point has been described in detail in Embodiment 2, a description thereof will be omitted.

In this way, estimation errors due to sensing may be reduced.

By performing as described above, it is possible to perform highly-accurate triangulation so that it is possible to obtain the effect that each apparatus can grasp the position of a target or the like. Note that, in a case where first apparatus 1201 and the base station "grasp positions (or position information) on the map in advance" or in a case where first apparatus 1201 and the base station "can grasp positions (or position information) on the map by, for example, a position estimation system such as GPS", each apparatus can grasp the position (or position information) of a target on the map.

Note that, signals transmitted by, for example, base stations, terminals, and repeaters for sensing a target (object) in the above description may be referred to as reference signals, reference symbols, pilot symbols, pilot signals, or preamble, although the designations are not limited to the above examples.

Further, each operation has been described above with reference to FIGS. 29 to 35 or the like. In addition, FIG. 29 has been dealt with as an example of the "sensing system" or "sensing and communication system". In FIG. 29, a description has been made with an example in which first apparatus 1201 and fourth_i apparatus of 2904_i perform sensing by using the fourth frequency, but one of first apparatus 1201 and fourth i apparatus of 2904_i may perform sensing by using any other frequency.

Next, an exemplary embodiment that differs from that described above will be described. An exemplary embodiment in a case where a target transmits a radio wave will be described.

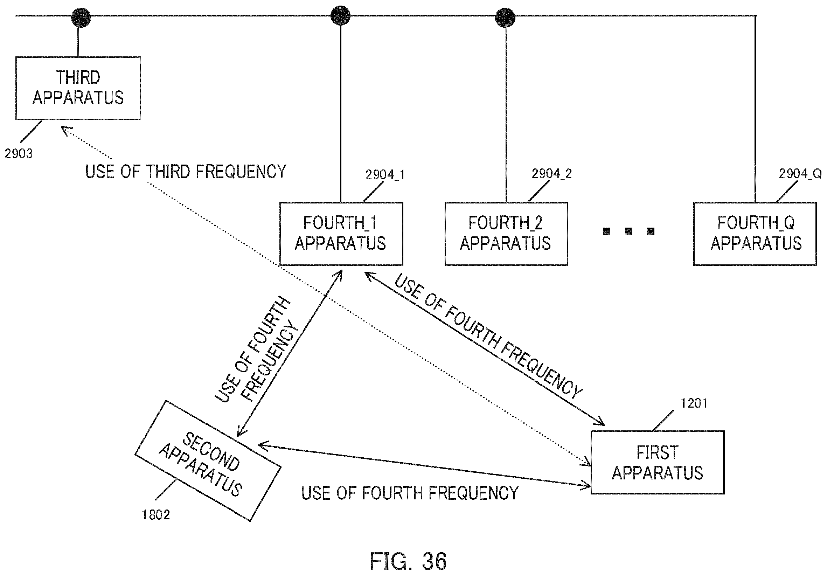

FIG. 36 illustrates an example of the "sensing system" or "sensing and communication system" exemplified here. In FIG. 36, parts which operate in the same manner as in FIGS. 12, 18, and/or 29 are denoted with the same numbers.

In FIG. 36, second apparatus 1802 is a target object whose position is estimated by sensing.

In this exemplary embodiment, a method of performing "the triangulation described in Embodiment 1 with first apparatus 1201 and fourth i apparatus of 2904_i" will be described as an example.

It is assumed that first apparatus 1201 is an apparatus having a function of performing sensing described in Embodiment 1. Note that, it is assumed that first apparatus 1201 performs sensing by using the fourth frequency (band).

It is assumed that first apparatus 1201 has a communication function and communicates with, for example, third apparatus 2903 by using the third frequency (band).

Note that, first apparatus 1201 may communicate with fourth i apparatus of 2904_i by using the fourth frequency (band).

It is assumed that second apparatus 1802 is an apparatus capable of transmitting a radio wave of the fourth frequency (band).

It is assumed that fourth i apparatus of 2904_i is an apparatus having a function of performing sensing described in Embodiment 1. Note that, it is assumed that fourth_i apparatus of 2904_i performs sensing by using the fourth frequency (band).

Further, fourth i apparatus of 2904_i may have a communication function and may be capable of performing communication by using the fourth frequency (band).

It is assumed that third apparatus 2903 communicates with fourth_1 apparatus of 2904_1, fourth _2 apparatus of 2904_2, ..., fourth_Q apparatus of 2904_Q. The communication this time may be radio communication or wired communication.

Communication may be possible between two apparatuses of "fourth_1 apparatus of 2904_1, fourth _2 apparatus of 2904_2, ..., fourth_Q apparatus of 2904_Q". Note that, the communication this time may be radio communication or wired communication.

Here, it is assumed that first apparatus 1201 performs sensing for performing triangulation. At this time, first apparatus 1201 performs sensing with fourth i apparatus of 2904_i to realize triangulation. However, it is supposed that there is fourth _x apparatus of 2904_x that does correspond to sensing due to factors such as the size of fourth i apparatus of 2904_i and the time of the installation.

Accordingly, it is assumed that fourth_i apparatus of 2904_i transmits control information including information on sensing capability 3001 as illustrated in FIG. 30. For example, it is assumed that a base station transmits the control information including information on sensing capability 3001 by using a PBCH, a PDSCH or a PDCCH. Note that, the channel through which the above control information is transmitted is not limited to the examples described above.

As illustrated in FIG. 30, it is assumed that information on sensing capability 3001 includes at least one of "INFORMATION ON WHETHER SENSING IS POSSIBLE OR IMPOSSIBLE 3011", "INFORMATION ON WHETHER SENSING REQUEST FROM FIRST APPARATUS 1201 IS PERFORMABLE OR NOT PERFORMABLE 3012", and/or "INFORMATION ON WHETHER SENSING REQUEST FROM FIRST APPARATUS 1201 IS ACCEPTABLE OR NOT ACCEPTABLE 3013".

It is assumed that specific examples of "INFORMATION ON WHETHER SENSING IS POSSIBLE OR IMPOSSIBLE 3011", "INFORMATION ON WHETHER SENSING REQUEST FROM FIRST APPARATUS 1201 IS PERFORMABLE OR NOT PERFORMABLE 3012", and "INFORMATION ON WHETHER SENSING REQUEST FROM FIRST APPARATUS 1201 IS ACCEPTABLE OR NOT ACCEPTABLE 3013" are as follows.

"INFORMATION ON WHETHER SENSING IS POSSIBLE OR IMPOSSIBLE 3011":
This information is used to notify, for example, first apparatus 1201, a repeater, another fourth _x apparatus, third apparatus 2903, or the like of "whether fourth_i apparatus of 2904_i is capable of performing sensing".

Thus, in a case where at least information that "sensing is performable" is included as "INFORMATION ON WHETHER SENSING IS POSSIBLE OR IMPOSSIBLE 3011", it is assumed that fourth i apparatus of2904_i has a sensing function. Further, it is assumed that this fourth i apparatus of 2904_i has a communication function. Note that, since the specific configuration has already been described in Embodiment 1, a description thereof will be omitted.

"INFORMATION ON WHETHER SENSING REQUEST FROM FIRST APPARATUS 1201 IS PERFORMABLE OR NOT PERFORMABLE 3012":
This information is used to notify, for example, first apparatus 1201, third apparatus 2903, or the like of information on "whether sensing is performable" when fourth i apparatus of 2904_i receives a sensing request from first apparatus 1201.

Note that, although "INFORMATION ON WHETHER SENSING REQUEST FROM FIRST APPARATUS 1201 IS PERFORMABLE OR NOT PERFORMABLE 3012" is named here, "INFORMATION ON WHETHER SENSING REQUEST FROM FIRST APPARATUS 1201 IS PERFORMABLE OR NOT PERFORMABLE 3012" may also be "information on whether a sensing request from an apparatus other than first apparatus 1201, such as a repeater, third apparatus 2903, and another base station, is performable or not performable". Further, details of the "sensing request" will be described later.

"INFORMATION ON WHETHER SENSING REQUEST FROM FIRST APPARATUS 1201 IS ACCEPTABLE OR NOT ACCEPTABLE 3013":
This information is used to notify, for example, first apparatus 1201 or the like of information on "whether fourth i apparatus of 2904_i accepts sensing from first apparatus 1201" when fourth i apparatus of 2904_i receives a sensing request from first apparatus 1201.

Accordingly, there are modes in which, even when there is a sensing request from first apparatus 1201, fourth i apparatus of 2904_i "accepts" and "does not accept" the sensing request.

Note that, although "INFORMATION ON WHETHER SENSING REQUEST FROM FIRST APPARATUS 1201 IS ACCEPTABLE OR NOT ACCEPTABLE 3013" is named here, "INFORMATION ON WHETHER SENSING REQUEST FROM FIRST APPARATUS 1201 IS ACCEPTABLE OR NOT ACCEPTABLE 3013" may be "information on whether a sensing request from an apparatus other than first apparatus 1201, such as a repeater, third apparatus 2903, and another base station, is acceptable or not acceptable". Further, details of the "sensing request" will be described later.

By configuring the above, first apparatus 1201, a repeater, third apparatus 2903, another base station, and the like can know sensing of a base station and a state with respect to a sensing request so that it is possible to obtain the effect that suitable "sensing-related control and communication with fourth_i apparatus of 2904_i" can be performed.

Note that, the apparatus that transmits information on sensing capability 3001 in FIG. 30 has been described as fourth i apparatus of 2904_i above, but is merely an example, and information on sensing capability 3001 may be transmitted by a communication apparatus such as a repeater, a terminal, an access point, and third apparatus 2903.

Further, although the description "[...] SENSING REQUEST FROM FIRST APPARATUS 1201" is used in "INFORMATION ON WHETHER SENSING REQUEST FROM FIRST APPARATUS 1201 IS PERFORMABLE OR NOT PERFORMABLE 3012" and "INFORMATION ON WHETHER SENSING REQUEST FROM FIRST APPARATUS 1201 IS ACCEPTABLE OR NOT ACCEPTABLE 3013" which are transmitted by the apparatus that transmits information on sensing capability 3001 in FIG. 30, a sensing request may be not from first apparatus 1201, but may be from, for example, a communication apparatus such as a base station, a repeater, an access point, and third apparatus 2903. Accordingly, implementation is also possible with 3012 as "INFORMATION ON WHETHER SENSING REQUEST FROM COMMUNICATION APPARATUS IS PERFORMABLE OR NOT PERFORMABLE" and 3013 as "INFORMATION ON WHETHER SENSING REQUEST FROM COMMUNICATION APPARATUS IS ACCEPTABLE OR NOT ACCEPTABLE".

Next, sensing by first apparatus 1201, second apparatus 1802, and fourth_1 apparatus of 2904_1 in FIG. 36 will be described.

First apparatus 1201 may be a terminal capable of communicating with third apparatus 2903 and fourth_i apparatus of 2904_i. Alternatively, first apparatus 1201 may be a base station (or an access point, a repeater, or the like). In addition, first apparatus 1201 may also be fourth x apparatus of 2904_x (where x is a natural number, for example). Further, third apparatus 2903 may be a base station or may be a terminal, a repeater, an access point, or the like. Fourth i apparatus of 2904_i may be a base station or may be a terminal, a repeater, an access point, or the like.

In the following description, first apparatus 1201 will be described as a terminal, but it is also performable in the same manner even when first apparatus 1201 is a base station, an access point or a repeater. However, in a case where a particular operation occurs when first apparatus 1201 is a base station, a supplementary description will be provided.

The present embodiment deals with triangulation. Examples of the specific triangulation method have been described in Embodiment 1. The first method and the second method are triangulation based on the fact that information on a distance is obtained by performing sensing.

The third method and the fourth method are, on the other hand, triangulation based on the fact that information on a direction (of arrival) (having said that, a distance may also be obtained) is obtained by performing sensing.

Hereinafter, with respect to FIG. 12, distance-based triangulation whose examples are the first method and the second method, and direction-based triangulation whose examples are the third method and the fourth method will be described separately.

### Case of Distance-based Triangulation:

An example when the distance-based triangulation whose examples are the first method and the second method described in Embodiment 1 is used will be described.

First apparatus 1201 obtains information on sensing capability 3001 in FIG. 30, which is transmitted by "fourth_1 apparatus of 2904_1, fourth _2 apparatus of 2904_2, ..., fourth_Q apparatus of 2904_Q", and knows each status of response to sensing of "fourth_1 apparatus of 2904_1, fourth _2 apparatus of 2904_2, ..., fourth _Q apparatus of 2904_Q".

As another method, "fourth_1 apparatus of 2904_1, fourth _2 apparatus of 2904_2, ..., fourth Q apparatus of 2904_Q" may transmit information on sensing capability 3001 in FIG. 30 to third apparatus 2903, and third apparatus 2903 may transmit control information including information on sensing capability of each apparatus of "fourth_1 apparatus of 2904_1, fourth _2 apparatus of 2904_2, ..., fourth _Q apparatus of 2904_Q" by using the third frequency. Thus, first apparatus 1201 knows each status of response to sensing of "fourth_1 apparatus of 2904_1, fourth _2 apparatus of 2904_2, ..., fourth _Q apparatus of 2904_Q".

Hereinafter, it is assumed as an example that "fourth_1 apparatus of 2904_1, fourth_2 apparatus of 2904_2, ..., fourth _Q apparatus of 2904_Q" can all perform sensing, and that in a case where there is a sensing request from, for example, a terminal such as first apparatus 1201, "fourth_1 apparatus of 2904_1, fourth _2 apparatus of 2904_2, ..., fourth _Q apparatus of 2904_Q" can all perform a sensing operation for the request for performing sensing.

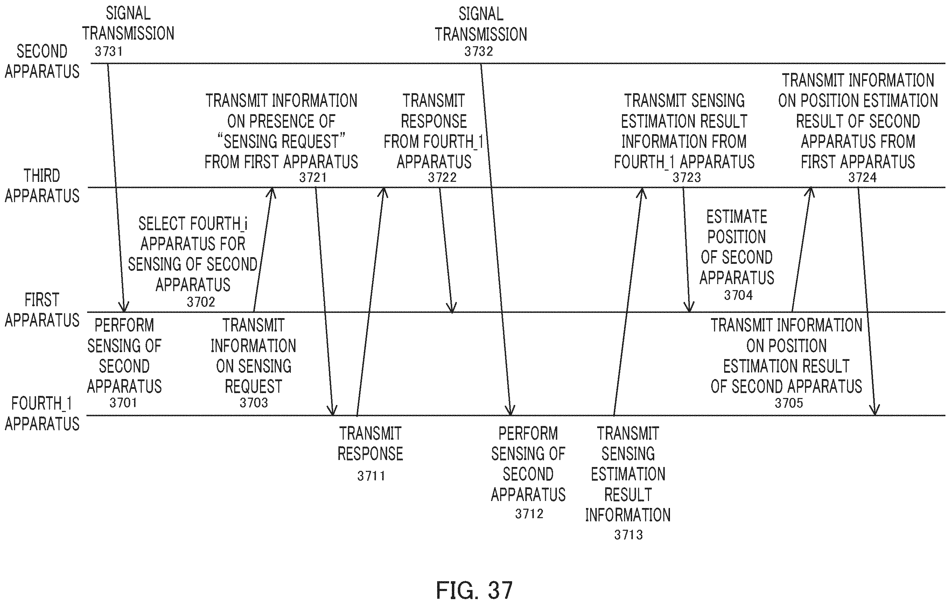

FIG. 37 illustrates a procedure example for sensing in the system example in FIG. 36. In FIG. 37, it is assumed that first apparatus 1201 has obtained at least information on a "distance between first apparatus 1201 and fourth_1 apparatus of 2904_1" before "ESTIMATE POSITION OF SECOND APPARATUS 3704" is performed. In FIG. 37, it is assumed that first apparatus 1201 has obtained information on a "distance between first apparatus 1201 and fourth i apparatus of 2904_i" (where i is an integer larger than or equal to 1 and smaller than or equal to Q) before "SELECT FOURTH_i APPARATUS OF 2904_i FOR SENSING OF SECOND APPARATUS (THAT SENSES SECOND APPARATUS) 3702"is performed.

Note that, since the method of obtaining the information on the "distance between first apparatus 1201 and fourth_1 apparatus of 2904_1" has already been described with reference to FIGS. 32A, 32B, 32C, 32D, 32E, 32F, 32G, and 32H, a description thereof will be omitted.

As another method, when first apparatus 1201 is a base station or a fixedly installed terminal, first apparatus 1201 and fourth_i apparatus of 2904_i may have acquired the "distance between first apparatus 1201 and fourth i apparatus of 2904_i" in advance.

First apparatus 1201 and fourth_i apparatus of 2904_i may acquire positions by a position estimation system such as GPS, for example. Then, fourth i apparatus of 2904_i may transmit information on its own position to first apparatus 1201, and first apparatus 1201 may determine the "distance between first apparatus 1201 and fourth_i apparatus of 2904_i" from information on its own position and the information on the position of fourth_i apparatus of 2904_i. Then, first apparatus 1201 may transmit the information on its own position to fourth_i apparatus of 2904_i and fourth i apparatus of 2904_i may determine the "distance between first apparatus 1201 and fourth_i apparatus of 2904_i" from the information on its own position and the information on the position of first apparatus 1201.

An example when the distance-based triangulation whose examples are the first method and the second method described in Embodiment 1 is used will be described.

In FIG. 37, second apparatus 1802 transmits a signal (for sensing) (3731).

First apparatus 1201 receives the signal transmitted by second apparatus 1802, performs processing for sensing, and obtains an estimated value of a "distance between first apparatus 1201 and second apparatus 1802" (3701). Note that, since the processing for sensing has already been described in the other embodiment, a description thereof will be omitted.

First apparatus 1201 selects fourth_i apparatus of 2904_i, which is requested to perform estimation of a distance to target 1203, based on the estimated value of the "distance between first apparatus 1201 and second apparatus 1802" and the information on the "distance between first apparatus 1201 and fourth_i apparatus of 2904_i" (3702).

Note that, it is assumed in the example of FIG. 37 that first apparatus 1201 has selected fourth_1 apparatus of 2904_1 in FIG. 36 as fourth i apparatus of 2904_i which is requested to perform the estimation of the distance to second apparatus 1802. However, when fourth i apparatus of 2904_i which is requested to perform the estimation of the distance to second apparatus 1802 is determined (in advance), "SELECT FOURTH_i APPARATUS OF 2904_i FOR SENSING OF SECOND APPARATUS 1802 (THAT SENSES SECOND APPARATUS) 3702" may not be performed.

First apparatus 1201 transmits information on a request for "estimation of a distance to second apparatus 1802" to third apparatus 2903 (3703).

Third apparatus 2903 receives the information on the request for "estimation of the distance to second apparatus 1802", and transmits the information on the request for "estimation of the distance to second apparatus 1802" to fourth_1 apparatus of 2904_1 (3721).

Fourth_1 apparatus of 2904_1 receives the information on the request for "estimation of the distance to second apparatus 1802", and responds "whether fourth_1 apparatus of 2904_1 accepts the request" (3711). Note that, in the example here, a description will be given on the assumption that fourth_1 apparatus of 2904_1 "accepts the request".

Third apparatus 2903 receives information on the response to the request. Then, third apparatus 2903 transmits the information on the response to the request to first apparatus 1201 (3722).

Second apparatus 1802 transmits a signal (for sensing) (3732).

Fourth_1 apparatus of 2904_1 receives the signal transmitted by second apparatus 1802, performs processing for sensing, and obtains an estimated value of a "distance between fourth_1 apparatus of 2904_1 and second apparatus 1802" (3712). Note that, since the processing for sensing has already been described in the other embodiment, a description thereof will be omitted.

Fourth_1 apparatus of 2904_1 transmits information on the "distance between fourth_1 apparatus of 2904_1 and second apparatus 1802" to third apparatus 2903 (3713).

Third apparatus 2903 receives the information on the "distance between fourth_1 apparatus of 2904_1 and second apparatus 1802", and transmits the information on the "distance between fourth_1 apparatus of 2904_1 and second apparatus 1802" to first apparatus 1201 (3723).

First apparatus 1201 obtains the information on the "distance between fourth_1 apparatus of 2904_1 and second apparatus 1802", performs triangulation by using the "distance between first apparatus 1201 and fourth_i apparatus of 2904_i", the "distance between first apparatus 1201 and second apparatus 1802", and the "distance between fourth_1 apparatus of 2904_1 and second apparatus 1802", and estimates the position of second apparatus 1802, for example (3704).

First apparatus 1201 transmits information on the "position of second apparatus 1802" to third apparatus 2903 (3705).

Third apparatus 2903 receives the information on the "position of second apparatus 1802", and transmits the information on the "position of second apparatus 1802" to fourth_1 apparatus of 2904_1 (3724).

Note that, in a case where first apparatus 1201 and fourth_1 apparatus of 2904_1 do not need to share the information on the "position of second apparatus 1802", first apparatus 1201 may not transmit the information on the "position of second apparatus 1802" to third apparatus 2903.

By performing as described above, it is possible to realize the distance-based triangulation described in Embodiment 1. Thus, it is possible to obtain the effect of being capable of specifying the position of second apparatus 1802.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

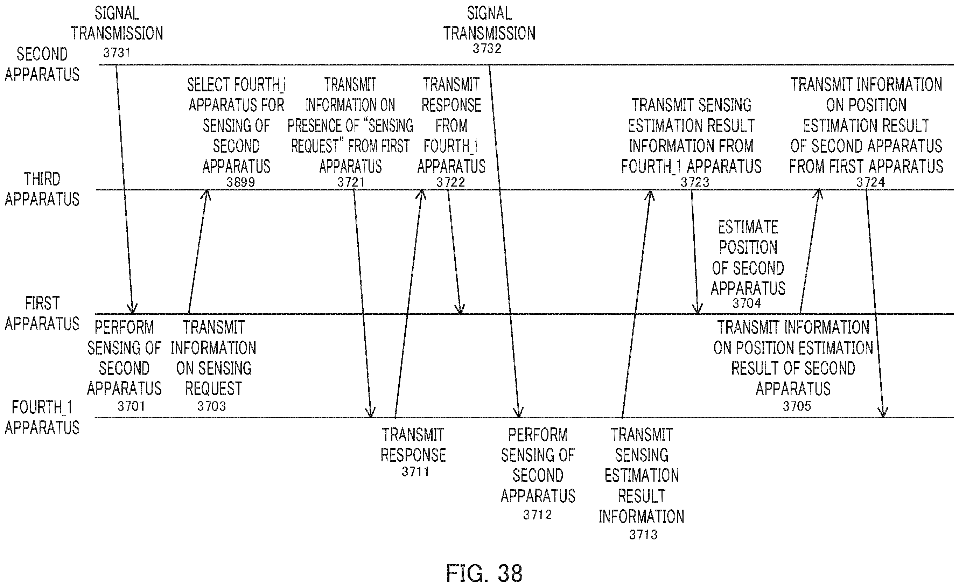

Next, a procedure example for sensing different from that in FIG. 37 will be described with reference to FIG. 38.

FIG. 38 illustrates another procedure example for sensing. In FIG. 38, parts which operate in the same manner as in FIG. 37 are denoted with the same numbers. In FIG. 38, a difference from FIG. 37 will be described. In FIG. 38, the difference from FIG. 37 is as follows.

The difference is that "in FIG. 37, first apparatus 1201 selects fourth_i apparatus of 2904_i for sensing of second apparatus 1802 (that senses the second apparatus) (3102)", whereas "in FIG. 38, third apparatus 2903 selects fourth_i apparatus of 2904_i for sensing of second apparatus 1802 (that senses the second apparatus) for first apparatus 1201 (3399)".

As in FIG. 38, first apparatus 1201 transmits information on a request for "estimation of a distance to second apparatus 1802" to third apparatus 2903 (3703). Note that, at this time, first apparatus 1201 may transmit information on the "distance to second apparatus 1802" to third apparatus 2903.

Then, third apparatus 2903 selects, for first apparatus 1201, fourth i apparatus of 2904_i, which performs "estimation of the distance to second apparatus 1802", based on the information on the "distance to second apparatus 1802", the status of response to sensing of fourth i apparatus of 2904_i (information on sensing capability 3001 in FIG. 30), and the like (3899).

Note that, it is assumed here that the apparatus which performs sensing is fourth_1 apparatus of 2904_1. However, when fourth_i apparatus of 2904_i which is requested to perform the estimation of the distance to second apparatus 1802 is determined (in advance), "SELECT FOURTH_i APPARATUS OF 2904_i FOR SENSING OF SECOND APPARATUS 1802 (THAT SENSES SECOND APPARATUS) 3899" may not be performed.

Since the operations after that in 3899 in FIG. 38 have already been described with reference to FIG. 37, a description thereof will be omitted.

By performing as described above, it is possible to realize the distance-based triangulation described in Embodiment 1. Thus, it is possible to obtain the effect of being capable of specifying the position of second apparatus 1802.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

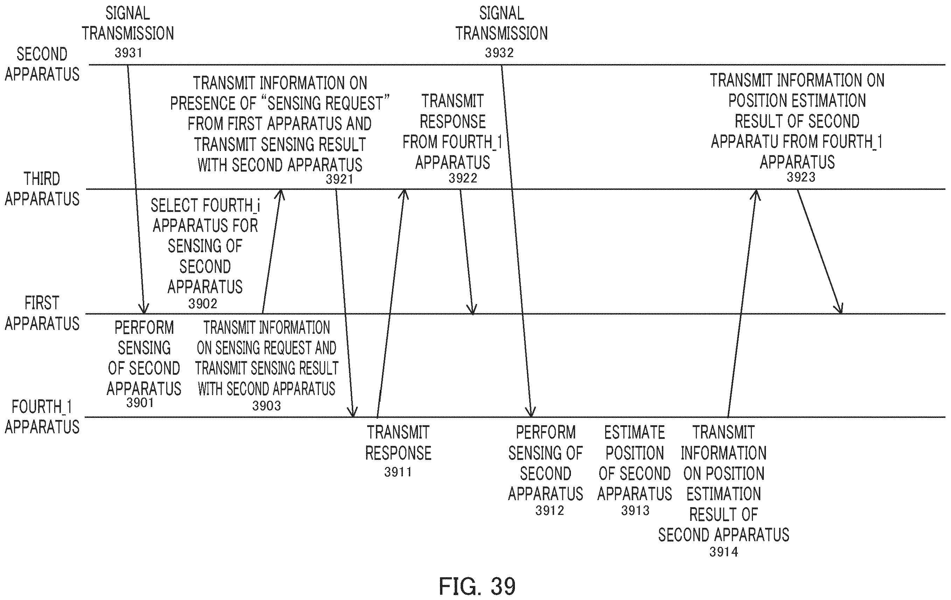

Next, another example when the distance-based triangulation whose examples are the first method and the second method is used will be described with reference to FIG. 39.

FIG. 39 illustrates another procedure example for sensing. It is assumed that first apparatus 1201 has obtained information on sensing capability 3001 in FIG. 30, which is transmitted by "fourth_1 apparatus of 2904_1, fourth _2 apparatus of 2904_2, ..., fourth_Q apparatus of 2904_Q", and has acquired each status of response to sensing of "fourth_1 apparatus of 2904_1, fourth _2 apparatus of 2904_2, ..., fourth _Q apparatus of 2904_Q".

As another method, "fourth_1 apparatus of 2904_1, fourth _2 apparatus of 2904_2, ..., fourth Q apparatus of 2904_Q" may transmit information on sensing capability 3001 in FIG. 30 to third apparatus 2903, and third apparatus 2903 may transmit control information including information on sensing capability of each apparatus of "fourth_1 apparatus of 2904_1, fourth _2 apparatus of 2904_2, ..., fourth_Q apparatus of 2904_Q" by using the third frequency. Thus, first apparatus 1201 can acquire each status of response to sensing of "fourth_1 apparatus of 2904_1, fourth _2 apparatus of 2904_2, ..., fourth_Q apparatus of 2904_Q".

Hereinafter, it is assumed as an example that "fourth_1 apparatus of 2904_1, fourth_2 apparatus of 2904_2, ..., fourth _Q apparatus of 2904_Q" can all perform sensing, and that in a case where there is a sensing request from, for example, a terminal such as first apparatus 1201, "fourth_1 apparatus of 2904_1, fourth _2 apparatus of 2904_2, ..., fourth _Q apparatus of 2904_Q" can all perform a sensing operation for the request for sensing.

Further, in FIG. 39, it is assumed that first apparatus 1201 has obtained at least information on a "distance between first apparatus 1201 and fourth_1 apparatus of 2904_1" before "ESTIMATE POSITION OF SECOND APPARATUS 1802 3913" is performed.

Then, in FIG. 39, it is assumed that first apparatus 1201 has obtained information on a "distance between first apparatus 1201 and fourth_i apparatus of 2904_i" (where i is an integer larger than or equal to 1 and smaller than or equal to Q) before "SELECT FOURTH i APPARATUS OF 2904_i FOR SENSING OF SECOND APPARATUS 1802 (THAT SENSES SECOND APPARATUS) 3902" is performed.

Note that, since the method of obtaining the information on the "distance between first apparatus 1201 and fourth_1 apparatus of 2904_1" has already been described with reference to FIGS. 32A, 32B, 32C, 32D, 32E, 32F, 32G, and 32H, a description thereof will be omitted.

As another method, when first apparatus 1201 is a base station or a fixedly installed terminal, first apparatus 1201 and fourth_i apparatus of 2904_i may have acquired the "distance between first apparatus 1201 and fourth i apparatus of 2904_i" in advance.

Further, first apparatus 1201 and fourth_i apparatus of 2904_i may acquire positions by a position estimation system such as GPS, for example. Then, fourth_i apparatus of 2904_i may transmit information on its own position to first apparatus 1201, and first apparatus 1201 may determine the "distance between first apparatus 1201 and fourth i apparatus of 2904_i" from information on its own position and the information on the position of fourth i apparatus of 2904_i. Then, first apparatus 1201 may transmit the information on its own position to fourth_i apparatus of 2904_i and fourth i apparatus of 2904_i may determine the "distance between first apparatus 1201 and fourth i apparatus of 2904_i" from the information on its own position and the information on the position of first apparatus 1201.

An example when the distance-based triangulation whose examples are the first method and the second method described in Embodiment 1 is used will be described.

In FIG. 39, second apparatus 1802 transmits a signal (for sensing) (3931).

First apparatus 1201 receives the signal transmitted by second apparatus 1802, performs processing for sensing, and obtains an estimated value of a "distance between first apparatus 1201 and second apparatus 1802" (3901). Note that, since the processing for sensing has already been described in the other embodiment, a description thereof will be omitted.

First apparatus 1201 selects fourth_i apparatus of 2904_i, which is requested to perform estimation of a distance to second apparatus 1802, based on the estimated value of the "distance between first apparatus 1201 and second apparatus 1802" and the information on the "distance between first apparatus 1201 and fourth i apparatus of 2904_i" (3902).

Note that, it is assumed in the example of FIG. 39 that first apparatus 1201 has selected fourth_1 apparatus of 2904_1 in FIG. 36 as fourth i apparatus of 2904_i which is requested to perform the estimation of the distance to second apparatus 1802. However, when fourth i apparatus of 2904_i which is requested to perform the estimation of the distance to second apparatus 1802 is determined (in advance), "SELECT FOURTH_i APPARATUS OF 2904_i FOR SENSING OF SECOND APPARATUS 1802 (THAT SENSES SECOND APPARATUS) 3902" may not be performed.

First apparatus 1201 transmits information on a request for "estimation of a distance to second apparatus 1802" to third apparatus 2903 (3903).

First apparatus 1201 transmits information on the "distance between first apparatus 1201 and second apparatus 1802" to third apparatus 2903 (3903).

Third apparatus 2903 receives the information on the request for "estimation of the distance to second apparatus 1802" and the information on the "distance between first apparatus 1201 and second apparatus 1802", and transmits these pieces of information to fourth_1 apparatus of 2904_1 (3921).

Fourth_1 apparatus of 2904_1 receives the information on the request for "estimation of the distance to second apparatus 1802", and responds "whether fourth_1 apparatus of 2904_1 accepts the request" (3911). Note that, in the example here, a description will be given on the assumption that fourth_1 apparatus of 2904_1 "accepts the request".

Third apparatus 2903 receives information on the response to the request. Then, third apparatus 2903 transmits the information on the response to the request to first apparatus 1201 (3922).

Second apparatus 1802 transmits a signal (for sensing) (3932).

Fourth_1 apparatus of 2904_1 receives the signal transmitted by second apparatus 1802, performs processing for sensing, and obtains an estimated value of a "distance between fourth_1 apparatus of 2904_1 and second apparatus 1802" (3912). Note that, since the processing for sensing has already been described in the other embodiment, a description thereof will be omitted.

Fourth_1 apparatus of 2904_1 performs triangulation by using the "distance between first apparatus 1201 and fourth_i apparatus of 2904_i", the "distance between first apparatus 1201 and second apparatus 1802", and the "distance between fourth_1 apparatus of 2904_1 and second apparatus 1802", and estimates the position of second apparatus 1802, for example (3913).

Fourth_1 apparatus of 2904_1 transmits information on the "position of second apparatus 1802" to third apparatus 2903 (3914).

Third apparatus 2903 receives the information on the "position of second apparatus 1802", and transmits the information on the "position of second apparatus 1802" to first apparatus 1201 (3923).

Note that, in a case where fourth_1 apparatus of 2904_1 and first apparatus 1201 do not need to share the information on the "position of second apparatus 1802", fourth_1 apparatus of 2904_1 may not transmit the information on the "position of second apparatus 1802" to third apparatus 2903.

By performing as described above, it is possible to realize the distance-based triangulation described in Embodiment 1. Thus, it is possible to obtain the effect of being capable of specifying the position of second apparatus 1802.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

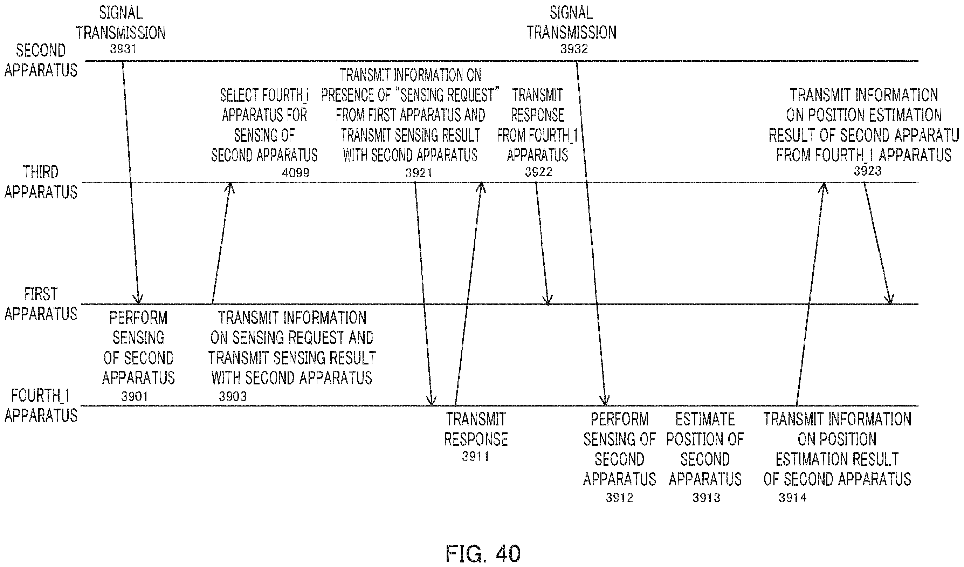

Next, an exemplary embodiment that differs from that in FIG. 39 will be described with reference to FIG. 40. FIG. 40 illustrates another procedure example for sensing. In FIG. 40, parts which operate in the same manner as in FIG. 39 are denoted with the same numbers. In FIG. 40, a difference from FIG. 39 will be described. In FIG. 40, the difference from FIG. 39 is as follows.

The difference is that "in FIG. 39, first apparatus 1201 "selects fourth i apparatus of 2904_i for sensing of second apparatus 1802 (that senses the second apparatus) (3902)", whereas "in FIG. 40, third apparatus 2903 selects fourth_i apparatus of 2904_i for sensing of second apparatus 1802 (that senses the second apparatus) for first apparatus 1201 (4099)".

As in FIG. 40, first apparatus 1201 transmits information on a request for "estimation of a distance to second apparatus 1802" to third apparatus 2903 (3903). Note that, at this time, first apparatus 1201 may transmit information on the "distance to second apparatus 1802" to third apparatus 2903.

Then, third apparatus 2903 selects, for first apparatus 1201, fourth i apparatus of 2904_i, which performs "estimation of the distance to second apparatus 1802", based on the information on the "distance to second apparatus 1802", the status of response to sensing of fourth i apparatus of 2904_i (information on sensing capability 3001 in FIG. 30), and the like (4099).

Note that, it is assumed here that the apparatus which performs sensing is fourth_1 apparatus of 2904_1. However, when fourth_i apparatus of 2904_i which is requested to perform the estimation of the distance to second apparatus 1802 is determined (in advance), "SELECT FOURTH_i APPARATUS OF 2904_i FOR SENSING OF SECOND APPARATUS 1802 (THAT SENSES SECOND APPARATUS) 4099" may not be performed.

Since the operations after that in 4099 in FIG. 40 have already been described with reference to FIG. 39, a description thereof will be omitted.

By performing as described above, it is possible to realize the distance-based triangulation described in Embodiment 1. Thus, it is possible to obtain the effect of being capable of specifying the position of second apparatus 1802.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

### Case of Direction-based Triangulation:

An example when the direction-based triangulation whose examples are the third method and the fourth method described in Embodiment 1 is used will be described.

It is assumed that first apparatus 1201 has obtained information on sensing capability 3001 in FIG. 30, which is transmitted by "fourth_1 apparatus of 2904_1, fourth _2 apparatus of 2904_2, ..., fourth_Q apparatus of 2904_Q", and has acquired each status of response to sensing of "fourth_1 apparatus of 2904_1, fourth _2 apparatus of 2904_2, ..., fourth _Q apparatus of 2904_Q".

As another method, "fourth_1 apparatus of 2904_1, fourth _2 apparatus of 2904_2, ..., fourth Q apparatus of 2904_Q" may transmit information on sensing capability 3001 in FIG. 30 to third apparatus 2903, and third apparatus 2903 may transmit control information including information on sensing capability of each apparatus of "fourth_1 apparatus of 2904_1, fourth _2 apparatus of 2904_2, ..., fourth_Q apparatus of 2904_Q" by using the third frequency. Thus, first apparatus 1201 can acquire each status of response to sensing of "fourth_1 apparatus of 2904_1, fourth _2 apparatus of 2904_2, ..., fourth _Q apparatus of 2904_Q".

Hereinafter, it is assumed as an example that "fourth_1 apparatus of 2904_1, fourth_2 apparatus of 2904_2, ..., fourth _Q apparatus of 2904_Q" can all perform sensing, and that in a case where there is a sensing request from, for example, a terminal such as first apparatus 1201, "fourth_1 apparatus of 2904_1, fourth _2 apparatus of 2904_2, ..., fourth _Q apparatus of 2904_Q" can all perform a sensing operation for the request for sensing.

Further, in FIG. 37, it is assumed that first apparatus 1201 has obtained at least information on a "distance between first apparatus 1201 and fourth_1 apparatus of 2904_1" before "ESTIMATE POSITION OF SECOND APPARATUS 3704" is performed. Then, in FIG. 37, it is assumed that first apparatus 1201 has obtained information on a "distance between first apparatus 1201 and fourth_i apparatus of 2904_i" (where i is an integer larger than or equal to 1 and smaller than or equal to Q) before "SELECT FOURTH i APPARATUS OF 2904_i FOR SENSING OF SECOND APPARATUS 1802 (THAT SENSES SECOND APPARATUS) 3702" is performed.

Note that, since the method of obtaining the information on the "distance between first apparatus 1201 and fourth_1 apparatus of 2904_1" has already been described with reference to FIGS. 32A, 32B, 32C, 32D, 32E, 32F, 32G, and 32H, a description thereof will be omitted.

As another method, when first apparatus 1201 is a base station or a fixedly installed terminal, first apparatus 1201 and fourth_i apparatus of 2904_i may have acquired the "distance between first apparatus 1201 and fourth i apparatus of 2904_i" in advance.

Further, first apparatus 1201 and fourth_i apparatus of 2904_i may acquire positions by a position estimation system such as GPS, for example. Then, fourth_i apparatus of 2904_i may transmit information on its own position to first apparatus 1201, and first apparatus 1201 may determine the "distance between first apparatus 1201 and fourth i apparatus of 2904_i" from information on its own position and the information on the position of fourth i apparatus of 2904_i. Then, first apparatus 1201 may transmit the information on its own position to fourth_i apparatus of 2904_i and fourth i apparatus of 2904_i may determine the "distance between first apparatus 1201 and fourth i apparatus of 2904_i" from the information on its own position and the information on the position of first apparatus 1201.

An example when the direction-based triangulation whose examples are the third method and the fourth method described in Embodiment 1 is used will be described.

In FIG. 37, second apparatus 1802 transmits a signal (for sensing) (3731).

First apparatus 1201 receives the signal transmitted by second apparatus 1802, performs processing for sensing, and obtains an estimated value of a "direction (of arrival) of first apparatus 1201 and second apparatus 1802" (3701). Note that, since the processing for sensing has already been described in the other embodiment, a description thereof will be omitted.

First apparatus 1201 selects fourth_i apparatus of 2904_i, which is requested to perform estimation of a distance to target 1203, based on the estimated value of the "direction (of arrival) of first apparatus 1201 and second apparatus 1802" and the information on the "distance between first apparatus 1201 and fourth_i apparatus of 2904_i" (3702).

Note that, it is assumed in the example of FIG. 37 that first apparatus 1201 has selected fourth_1 apparatus of 2904_1 in FIG. 36 as fourth i apparatus of 2904_i which is requested to perform estimation of a "direction (of arrival) with second apparatus 1802". However, when fourth i apparatus of 2904_i which is requested to perform the estimation of the "direction (of arrival) with second apparatus 1802" is determined (in advance), "SELECT FOURTH_i APPARATUS OF 2904_i FOR SENSING OF SECOND APPARATUS 1802 (THAT SENSES SECOND APPARATUS) 3702" may not be performed.

Then, first apparatus 1201 transmits information on a request for "estimation of the direction (of arrival) with second apparatus 1802" to third apparatus 2903 (3703).

Third apparatus 2903 receives the information on the request for "estimation of the direction (of arrival) with second apparatus 1802", and transmits the information on the request for "estimation of the direction (of arrival) with second apparatus 1802" to fourth_1 apparatus of 2904_1 (3721).

Fourth_1 apparatus of 2904_1 receives the information on the request for "estimation of the direction (of arrival) with second apparatus 1802", and responds "whether fourth_1 apparatus of 2904_1 accepts the request" (3711). Note that, in the example here, a description will be given on the assumption that fourth_1 apparatus of 2904_1 "accepts the request".

Third apparatus 2903 receives information on the response to the request. Then, third apparatus 2903 transmits the information on the response to the request to first apparatus 1201 (3722).

Second apparatus 1802 transmits a signal (for sensing) (3732).

Fourth_1 apparatus of 2904_1 receives the signal transmitted by second apparatus 1802, performs processing for sensing, and obtains an estimated value of a "direction (of arrival) of fourth_1 apparatus of 2904_1 and second apparatus 1802" (3712). Note that, since the processing for sensing has already been described in the other embodiment, a description thereof will be omitted.

Fourth_1 apparatus of 2904_1 transmits information on the "direction (of arrival) of fourth_1 apparatus of 2904_1 and second apparatus 1802" to third apparatus 2903 (3713).

Third apparatus 2903 receives the information on the "direction (of arrival) of fourth_1 apparatus of 2904_1 and second apparatus 1802", and transmits the information on the "direction (of arrival) of fourth_1 apparatus of 2904_1 and second apparatus 1802" to first apparatus 1201 (3723).

First apparatus 1201 obtains the information on the "direction (of arrival) of fourth_1 apparatus of 2904_1 and second apparatus 1802", performs triangulation by using the "distance between first apparatus 1201 and fourth_i apparatus of 2904_i", the "direction (of arrival) of first apparatus 1201 and second apparatus 1802", and the "direction (of arrival) of fourth_1 apparatus of 2904_1 and second apparatus 1802", and estimates the position of second apparatus 1802, for example (3704).

First apparatus 1201 transmits information on the "position of second apparatus 1802" to third apparatus 2903 (3705).

Third apparatus 2903 receives the information on the "position of second apparatus 1802", and transmits the information on the "position of second apparatus 1802" to fourth_1 apparatus of 2904_1 (3724).

Note that, in a case where first apparatus 1201 and fourth_1 apparatus of 2904_1 do not need to share the information on the "position of second apparatus 1802", first apparatus 1201 may not transmit the information on the "position of second apparatus 1802" to third apparatus 2903.

By performing as described above, it is possible to realize the direction(-of-arrival)-based triangulation described in Embodiment 1. Thus, it is possible to obtain the effect of being capable of specifying the position of second apparatus 1802.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

Next, an exemplary embodiment that differs from that in FIG. 37 will be described with reference to FIG. 38. Note that, in FIG. 38, parts which operate in the same manner as in FIG. 37 are denoted with the same numbers. In FIG. 38, a difference from FIG. 37 will be described. In FIG. 38, the difference from FIG. 37 is as follows.

The difference is that "in FIG. 37, first apparatus 1201 selects fourth i apparatus of 2904_i for sensing of second apparatus 1802 (that senses the second apparatus) (3102)", whereas "in FIG. 38, third apparatus 2903 selects fourth_i apparatus of 2904_i for sensing of second apparatus 1802 (that senses the second apparatus) for first apparatus 1201 (3399)".

As in FIG. 38, first apparatus 1201 transmits information on a request for "estimation of a direction (of arrival) with second apparatus 1802" to third apparatus 2903 (3703). Note that, at this time, first apparatus 1201 may transmit information on the "direction (of arrival) with second apparatus 1802" to third apparatus 2903.

Then, third apparatus 2903 selects, for first apparatus 1201, fourth i apparatus of 2904_i, which performs "estimation of the "direction (of arrival) with second apparatus 1802", based on the information on the "direction (of arrival) with second apparatus 1802", the status of response to sensing of fourth i apparatus of 2904_i (information on sensing capability 3001 in FIG. 30), and the like (3899).

Note that, it is assumed here that the apparatus which performs sensing is fourth_1 apparatus of 2904_1. However, when fourth_i apparatus of 2904_i which is requested to perform the estimation of the "direction (of arrival) with second apparatus 1802" is determined (in advance), "SELECT FOURTH_i APPARATUS OF 2904_i FOR SENSING OF SECOND APPARATUS 1802 (THAT SENSES SECOND APPARATUS) 3899" may not be performed.

Since the operations after that in 3899 in FIG. 38 have already been described with reference to FIG. 37, a description thereof will be omitted.

By performing as described above, it is possible to realize the direction-based triangulation described in Embodiment 1. Thus, it is possible to obtain the effect of being capable of specifying the position of second apparatus 1802.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

Next, another example when the direction-based triangulation whose examples are the third method and the fourth method is used will be described with reference to FIG. 39.

It is assumed that first apparatus 1201 has obtained information on sensing capability 3001 in FIG. 30, which is transmitted by "fourth_1 apparatus of 2904_1, fourth _2 apparatus of 2904_2, ..., fourth_Q apparatus of 2904_Q", and has acquired each status of response to sensing of "fourth_1 apparatus of 2904_1, fourth _2 apparatus of 2904_2, ..., fourth_Q apparatus of 2904_Q".

As another method, "fourth_1 apparatus of 2904_1, fourth _2 apparatus of 2904_2, ..., fourth Q apparatus of 2904_Q" may transmit information on sensing capability 3001 in FIG. 30 to third apparatus 2903, and third apparatus 2903 may transmit control information including information on sensing capability of each apparatus of "fourth_1 apparatus of 2904_1, fourth _2 apparatus of 2904_2, ..., fourth _Q apparatus of 2904_Q" by using the third frequency. Thus, first apparatus 1201 knows each status of response to sensing of "fourth_1 apparatus of 2904_1, fourth _2 apparatus of 2904_2, ..., fourth _Q apparatus of 2904_Q".

Hereinafter, it is assumed as an example that "fourth_1 apparatus of 2904_1, fourth_2 apparatus of 2904_2, ..., fourth _Q apparatus of 2904_Q" can all perform sensing, and that in a case where there is a sensing request from, for example, a terminal such as first apparatus 1201, "fourth_1 apparatus of 2904_1, fourth _2 apparatus of 2904_2, ..., fourth _Q apparatus of 2904_Q" can all perform a sensing operation for the request for sensing.

Further, in FIG. 39, it is assumed that first apparatus 1201 has obtained at least information on a "distance between first apparatus 1201 and fourth_1 apparatus of 2904_1" before "ESTIMATE POSITION OF SECOND APPARATUS 1802 3913" is performed.

Then, in FIG. 39, it is assumed that first apparatus 1201 has obtained information on a "distance between first apparatus 1201 and fourth_i apparatus of 2904_i" (where i is an integer larger than or equal to 1 and smaller than or equal to Q) before "SELECT FOURTH i APPARATUS OF 2904_i FOR SENSING OF SECOND APPARATUS 1802 (THAT SENSES SECOND APPARATUS) 3902" is performed.

Note that, since the method of obtaining the information on the "distance between first apparatus 1201 and fourth_1 apparatus of 2904_1" has already been described with reference to FIGS. 32A, 32B, 32C, 32D, 32E, 32F, 32G, and 32H, a description thereof will be omitted.

As another method, when first apparatus 1201 is a base station or a fixedly installed terminal, first apparatus 1201 and fourth_i apparatus of 2904_i may have acquired the "distance between first apparatus 1201 and fourth i apparatus of 2904_i" in advance.

Further, first apparatus 1201 and fourth_i apparatus of 2904_i may acquire positions by a position estimation system such as GPS, for example. Then, fourth_i apparatus of 2904_i may transmit information on its own position to first apparatus 1201, and first apparatus 1201 may determine the "distance between first apparatus 1201 and fourth i apparatus of 2904_i" from information on its own position and the information on the position of fourth i apparatus of 2904_i. Then, first apparatus 1201 may transmit the information on its own position to fourth_i apparatus of 2904_i and fourth i apparatus of 2904_i may determine the "distance between first apparatus 1201 and fourth i apparatus of 2904_i" from the information on its own position and the information on the position of first apparatus 1201.

An example when the direction-based triangulation whose examples are the third method and the fourth method described in Embodiment 1 is used will be described.

In FIG. 39, second apparatus 1802 transmits a signal (for sensing) (3931).

First apparatus 1201 receives the signal transmitted by second apparatus 1802, performs processing for sensing, and obtains an estimated value of a "direction (of arrival) of first apparatus 1201 and second apparatus 1802" (3901). Note that, since the processing for sensing has already been described in the other embodiment, a description thereof will be omitted.

First apparatus 1201 selects fourth_i apparatus of 2904_i, which is requested to perform estimation of a distance to second apparatus 1802, based on the estimated value of the "direction (of arrival) of first apparatus 1201 and second apparatus 1802" and the information on the "distance between first apparatus 1201 and fourth_i apparatus of 2904_i" (3902).

Note that, it is assumed in the example of FIG. 39 that first apparatus 1201 has selected fourth_1 apparatus of 2904_1 in FIG. 36 as fourth i apparatus of 2904_i which is requested to perform estimation of a "direction (of arrival) with second apparatus 1802". However, when fourth i apparatus of 2904_i which is requested to perform the estimation of the "direction (of arrival) with second apparatus 1802" is determined (in advance), "SELECT FOURTH_i APPARATUS OF 2904_i FOR SENSING OF SECOND APPARATUS 1802 (THAT SENSES SECOND APPARATUS) 3902" may not be performed.

First apparatus 1201 transmits information on a request for "estimation of a direction (of arrival) with second apparatus 1802" to third apparatus 2903 (3903).

First apparatus 1201 transmits information on the "direction (of arrival) of first apparatus 1201 and second apparatus 1802" to third apparatus 2903 (3903).

Third apparatus 2903 receives the information on the request for "estimation of the direction (of arrival) with second apparatus 1802" and the information on the "direction (of arrival) of first apparatus 1201 and second apparatus 1802", and transmits these pieces of information to fourth_1 apparatus of 2904_1 (3921).

Fourth_1 apparatus of 2904_1 receives the information on the request for "estimation of the direction (of arrival) with second apparatus 1802", and responds "whether fourth_1 apparatus of 2904_1 accepts the request" (3911). Note that, in the example here, a description will be given on the assumption that fourth_1 apparatus of 2904_1 "accepts the request".

Third apparatus 2903 receives information on the response to the request. Then, third apparatus 2903 transmits the information on the response to the request to first apparatus 1201 (3922).

Second apparatus 1802 transmits a signal (for sensing) (3932).

Fourth_1 apparatus of 2904_1 receives the signal transmitted by second apparatus 1802, performs processing for sensing, and obtains an estimated value of a "direction (of arrival) of fourth_1 apparatus of 2904_1 and second apparatus 1802" (3912). Note that, since the processing for sensing has already been described in the other embodiment, a description thereof will be omitted.

Fourth _1 apparatus of 2904_1 performs triangulation by using the "distance between first apparatus 1201 and fourth i apparatus of 2904_i", the "direction (of arrival) of first apparatus 1201 and second apparatus 1802", and the "direction (of arrival) of fourth_1 apparatus of 2904_1 and second apparatus 1802", and estimates the position of second apparatus 1802, for example (3913).

Fourth_1 apparatus of 2904_1 transmits information on the "position of second apparatus 1802" to third apparatus 2903 (3914).

Third apparatus 2903 receives the information on the "position of second apparatus 1802", and transmits the information on the "position of second apparatus 1802" to first apparatus 1201 (3923).

Note that, in a case where fourth_1 apparatus of 2904_1 and first apparatus 1201 do not need to share the information on the "position of second apparatus 1802", fourth_1 apparatus of 2904_1 may not transmit the information on the "position of second apparatus 1802" to third apparatus 2903.

By performing as described above, it is possible to realize the direction-based triangulation described in Embodiment 1. Thus, it is possible to obtain the effect of being capable of specifying the position of second apparatus 1802.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

Next, an exemplary embodiment that differs from that in FIG. 39 will be described with reference to FIG. 40. Note that, in FIG. 40, parts which operate in the same manner as in FIG. 39 are denoted with the same numbers. In FIG. 40, a difference from FIG. 39 will be described. In FIG. 40, the difference from FIG. 39 is as follows.

The difference is that "in FIG. 39, first apparatus 1201 "selects fourth_i apparatus of 2904_i for sensing of second apparatus 1802 (that senses the second apparatus) (3902)", whereas "in FIG. 40, third apparatus 2903 selects fourth_i apparatus of 2904_i for sensing of second apparatus 1802 (that senses the second apparatus) for first apparatus 1201 (4099)".

As in FIG. 40, first apparatus 1201 transmits information on a request for "estimation of a direction (of arrival) with second apparatus 1802" to third apparatus 2903 (3903). Note that, at this time, first apparatus 1201 may transmit information on the "direction (of arrival) with second apparatus 1802" to third apparatus 2903.

Then, third apparatus 2903 selects, for first apparatus 1201, fourth i apparatus of 2904_i, which performs "estimation of the "direction (of arrival) with second apparatus 1802", based on the information on the "direction (of arrival) with second apparatus 1802", the status of response to sensing of fourth i apparatus of 2904_i (information on sensing capability 3001 in FIG. 30), and the like (4099).

Note that, it is assumed here that the apparatus which performs sensing is fourth_1 apparatus of 2904_1. However, when fourth_i apparatus of 2904_i which is requested to perform the estimation of the "direction (of arrival) with second apparatus 1802" is determined (in advance), "SELECT FOURTH_i APPARATUS OF 2904_i FOR SENSING OF SECOND APPARATUS 1802 (THAT SENSES SECOND APPARATUS) 4099" may not be performed.

Since the operations after that in 4099 in FIG. 40 have already been described with reference to FIG. 39, a description thereof will be omitted.

By performing as described above, it is possible to realize the direction-based triangulation described in Embodiment 1. Thus, it is possible to obtain the effect of being capable of specifying the position of second apparatus 1802.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

An example of base station selection will be described. In the above description, in FIG. 37, first apparatus 1201 performs "PERFORM SENSING OF SECOND APPARATUS 1802 (3701)" before "SELECT FOURTH i APPARATUS OF 2904_i FOR SENSING OF SECOND APPARATUS 1802 (THAT SENSES SECOND APPARATUS) (3702)" is performed.

In the same manner, in FIG. 38, first apparatus 1201 performs "PERFORM SENSING OF SECOND APPARATUS 1802 (SENSE SECOND APPARATUS) (3701)" before third apparatus 2903 performs "SELECT FOURTH i APPARATUS OF 2904_i FOR SENSING OF SECOND APPARATUS 1802 (THAT SENSES SECOND APPARATUS) (3899)".

Further, in FIG. 39, first apparatus 1201 performs "PERFORM SENSING OF SECOND APPARATUS 1802 (SENSE SECOND APPARATUS) (3901)" before "SELECT FOURTH_i APPARATUS OF 2904_i FOR SENSING OF SECOND APPARATUS 1802 (THAT SENSES SECOND APPARATUS) (3902)" is performed.

Then, in FIG. 40, first apparatus 1201 performs "PERFORM SENSING OF SECOND APPARATUS 1802 (SENSE SECOND APPARATUS) (3901)" before third apparatus 2903 performs "SELECT FOURTH i APPARATUS OF 2904_i FOR SENSING OF SECOND APPARATUS 1802 (THAT SENSES SECOND APPARATUS) (4099)".

At this time, in FIG. 36, fourth_i apparatus of 2904_i can be selected based on the shape of the triangle formed by "first apparatus 1201, second apparatus 1802, and fourth_i apparatus of 2904_i". Since this point has been described in detail in Embodiment 2, a description thereof will be omitted.

In this way, estimation errors due to sensing may be reduced.

By performing as described above, it is possible to perform highly-accurate triangulation so that it is possible to obtain the effect that each apparatus can grasp the position of second apparatus 1802 or the like. Note that, in a case where first apparatus 1201 and the base station "grasp positions (or position information) on the map in advance" or in a case where first apparatus 1201 and the base station "can grasp positions (or position information) on the map by, for example, a position estimation system such as GPS", each apparatus can grasp the position (or position information) of a target on the map.

Note that, signals transmitted by, for example, base stations, terminals, and repeaters for sensing second apparatus 1802 in the above description may be referred to as reference signals, reference symbols, pilot symbols, pilot signals, or preamble, although the designations are not limited to the above examples.

Further, each operation has been described above with reference to FIGS. 36 to 40 or the like. In addition, FIG. 36 has been dealt with as an example of the "sensing system" or "sensing and communication system". In FIG. 36, a description has been made with an example in which first apparatus 1201 and fourth_i apparatus of 2904_i perform sensing by using the fourth frequency, but one of first apparatus 1201 and fourth i apparatus of 2904_i may perform sensing by using any other frequency.

Examples of the characteristic points of the examples described above can be described as follows.

A first apparatus transmits a radio wave and receives the radio wave to measure a first distance or the like, a second apparatus transmits a radio wave and receives the radio wave to measure a second distance or the like, and the position of a target is measured by using the first distance or the like and the second distance or the like. For this reason, there are two transmission apparatuses and two reception apparatuses, and further the first apparatus and the second apparatus share information on the acquired first distance or the like and the acquired second distance or the like via a third apparatus.

The second apparatus includes a reception apparatus for obtaining first distance information or the like obtained by the first apparatus.

The first apparatus includes a reception apparatus for obtaining second distance information or the like obtained by the second apparatus.

The first apparatus and the second apparatus estimate the position of the target by using the first distance information and the second distance information.

Note that, one or more apparatus that differ from the second apparatus may estimate the distance to the target.

Further, the one or more apparatuses may also estimate the distance to the target, generate a plurality of pieces of distance information, and transmit these pieces of information to the second apparatus, and the second apparatus may estimate the position of the target by generating one piece of first distance information from these pieces of information and using the first distance information and the second distance information.

Frame configuration examples of each apparatus when sensing is performed in the "sensing system" or "sensing and communication system" in FIG. 29 will be described.

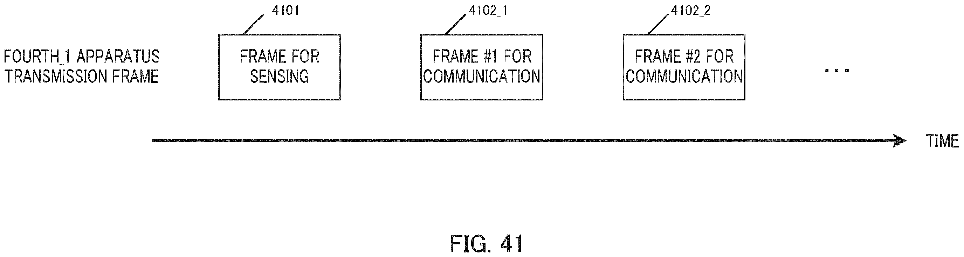

FIG. 41 illustrates exemplary transmission frames of fourth_1 apparatus of 2904_1 in FIG. 29. It is assumed that the horizontal axis indicates time.

As described above, fourth _1 apparatus of 2904_1 transmits frame for sensing 4101 for sensing target 1203.

Fourth_1 apparatus of 2904_1 may transmit a frame for communication in addition to frame for sensing 4101 (fourth_1 apparatus of 2904_1 may not transmit a frame for communication). Frame #1 for communication of 4102_1, frame #2 for communication of 4102_2, ... in FIG. 41 are frames for communication that are transmitted by fourth_1 apparatus of 2904_1. At this time, the destination of "frame #1 for communication of 4102_1, frame #2 for communication of 4102_2, ..." may be first apparatus 1201 or another communication apparatus.

Note that, when the region for fourth_1 apparatus of 2904_1 to transmit a signal is named a resource block, a frame for sensing may be allocated to the resource block or a frame for communication may be allocated to the resource block.

Further, the method of allocating a frame for sensing and a frame for communication in the time axis is not limited to the example in FIG. 41. Accordingly, a frame for communication may be transmitted temporally ahead of a frame for sensing. Further, in a case where a symbol and a frame can be mapped in the frequency-axis direction, a frame for sensing and a frame for communication may be transmitted on the same time.

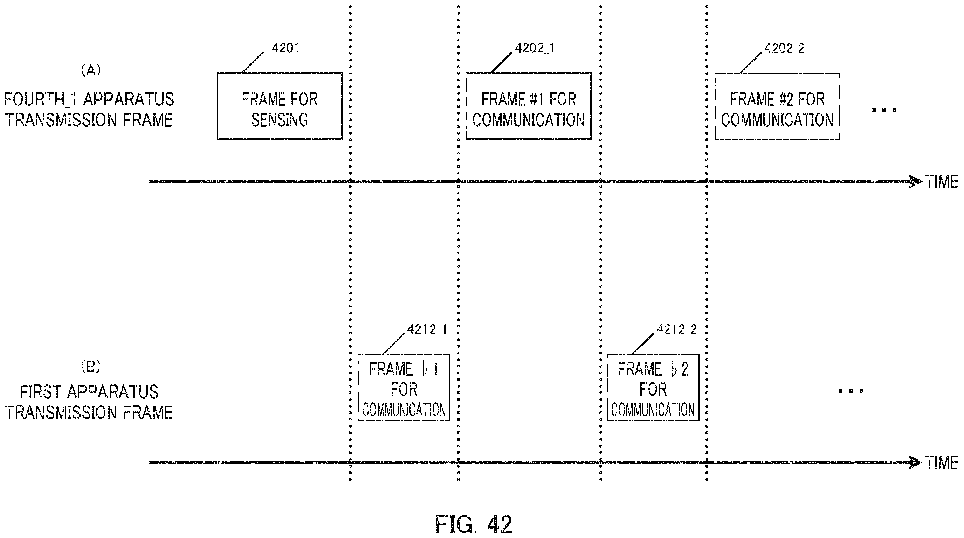

(A) in FIG. 42 illustrates exemplary transmission frames of fourth_1 apparatus of 2904_1 in FIG. 29. (B) in FIG. 42 illustrates exemplary transmission frames of first apparatus 1201 in FIG. 29. Note that, it is assumed that the horizontal axis in (A) and (B) in FIG. 42 indicates time. Further, both (A) and (B) in FIG. 42 indicate the transmission statuses in the fourth frequency (band).

As illustrated in (A) in FIG. 42, fourth_1 apparatus of 2904_1 transmits frame 4201 for sensing, frame #1 for communication of 4202_1, frame #2 for communication of 4202_2,

That is, fourth_1 apparatus of 2904_1 may transmit a frame for communication in addition to frame 4201 for sensing (fourth_1 apparatus of 2904_1 may not transmit a frame for communication). Frame #1 for communication of 4202_1, frame #2 for communication of 4202_2, ... in (A) in FIG. 42 are frames for communication that are transmitted by fourth_1 apparatus of 2904_1. At this time, the destination of "frame #1 for communication of 4202_1, frame #2 for communication of 4202_2, ..." may be first apparatus 1201 or another communication apparatus.

Note that, when the region for fourth_1 apparatus of 2904_1 to transmit a signal is named a resource block, a frame for sensing may be allocated to the resource block or a frame for communication may be allocated to the resource block.

Further, the method of allocating a frame for sensing and a frame for communication in the time axis is not limited to the example in (A) in FIG. 42. Accordingly, a frame for communication may be transmitted temporally ahead of a frame for sensing. Further, in a case where a symbol and a frame can be mapped in the frequency-axis direction, a frame for sensing and a frame for communication may be transmitted on the same time.

Further, (A) and (B) in FIG. 42 are exemplary frames to which, for example, time division multiplexing (TDM) or time division duplex (TDD) is performed so as to reduce interference in each frame.

As in (B) in FIG. 42, frames are mapped such that TDM or TDD is performed, and first apparatus 1201 transmits frame 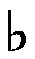 1 for communication of 4212_1, frame 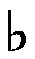 2 for communication of 4212_2, .... At this time, frame 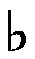 1 for communication of 4212_1, frame 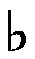 2 for communication of 4212_2, ... may be frames for fourth_1 apparatus of 2904_1 or may be frames for fourth_i apparatus of 2904_i.

Note that, when the region for first apparatus 1201 to transmit a signal is named a resource block, a frame for sensing may be allocated to the resource block or a frame for communication may be allocated to the resource block (although no frame for sensing is described in (B) in FIG. 42).

Further, the method of allocating a frame for sensing and a frame for communication in the time axis is not limited to the example in (B) in FIG. 42. Accordingly, first apparatus 1201 may transmit a frame for sensing. Further, in a case where a symbol and a frame can be mapped in the frequency-axis direction, a frame for sensing and a frame for communication may be transmitted on the same time.

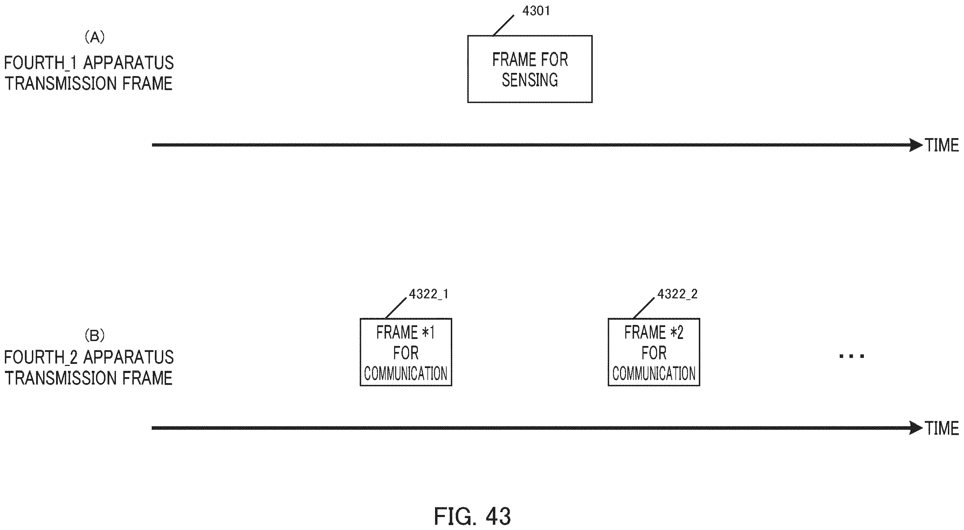

(A) in FIG. 43 illustrates an exemplary transmission frame of fourth_1 apparatus of 2904_1 in FIG. 29. (B) in FIG. 43 illustrates exemplary transmission frames of fourth_2 apparatus of 2904_2 in FIG. 29. Note that, it is assumed that the horizontal axis in (A) and (B) in FIG. 43 indicates time. Further, both (A) and (B) in FIG. 43 indicate the transmission statuses in the fourth frequency (band).

As illustrated in (A) in FIG. 43, fourth _1 apparatus of 2904_1 transmits frame for sensing 4301.

Then, as illustrated in (B) in FIG. 43, fourth_2 apparatus of 2904_2 transmits frame 1^{∗} for communication of 4322_1, frame 2* for communication of 4322_2, ....

At this time, frame 1* for communication of 4322_1, frame 2* for communication of 4322_2, ... may be frames for first apparatus 1201 or may be frames for another communication apparatus.

When frame 1^{∗} for communication of 4322_1, frame 2* for communication of 4322_2, ... are frames for first apparatus 1201, first apparatus 1201 performs communication by utilizing the fourth frequency (band) even during a sensing-related operation.

Note that, when each of the region for fourth_1 apparatus of 2904_1 to transmit a signal and the region for fourth_2 apparatus of 2904_2 to transmit a signal is named a resource block, a frame for sensing may be allocated to the resource block or a frame for communication may be allocated to the resource block.

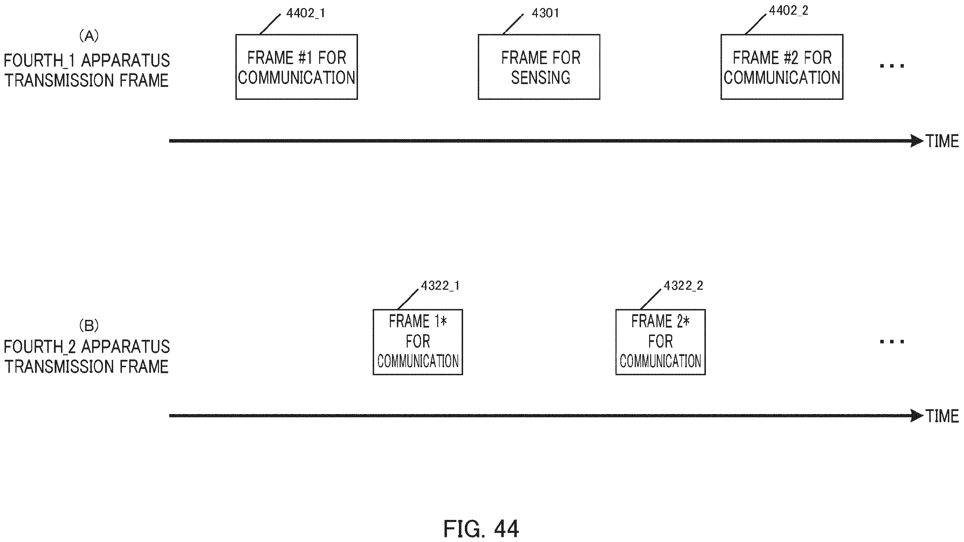

(A) in FIG. 44 illustrates exemplary transmission frames of fourth_1 apparatus of 2904_1 in FIG. 29. (B) in FIG. 44 illustrates exemplary transmission frames of fourth_2 apparatus of 2904_2 in FIG. 29. Note that, it is assumed that the horizontal axis in (A) and (B) in FIG. 44 indicates time. Further, both (A) and (B) in FIG. 44 indicate the transmission statuses in the fourth frequency (band).

As illustrated in (A) in FIG. 44, fourth_1 apparatus of 2904_1 transmits frame for sensing 4301, frame #1 for communication of 4402_1, frame #2 for communication of 4402_2, ....

At this time, frame #1 for communication of 4402_1, frame #2 for communication of 4402_2, ... may be frames for first apparatus 1201 or may be frames for another communication apparatus.

Then, as illustrated in (B) in FIG. 44, fourth_2 apparatus of 2904_2 transmits frame 1^{∗} for communication of 4322_1, frame 2* for communication of 4322_2, ....

At this time, frame 1* for communication of 4322_1, frame 2* for communication of 4322_2, ... may be frames for first apparatus 1201 or may be frames for another communication apparatus.

When "frame #1 for communication of 4402_1, frame #2 for communication of 4402_2, ... are frames for first apparatus 1201" and "frame 1^{∗} for communication of 4322_1, frame 2* for communication of 4322_2, ... are frames for first apparatus 1201", first apparatus 1201 performs communication by utilizing the fourth frequency (band) even during a sensing-related operation, and further first apparatus 1201 communicates with two fourth_i apparatuses.

Note that, when each of the region for fourth_1 apparatus of 2904_1 to transmit a signal and the region for fourth_2 apparatus of 2904_2 to transmit a signal is named a resource block, a frame for sensing may be allocated to the resource block or a frame for communication may be allocated to the resource block.

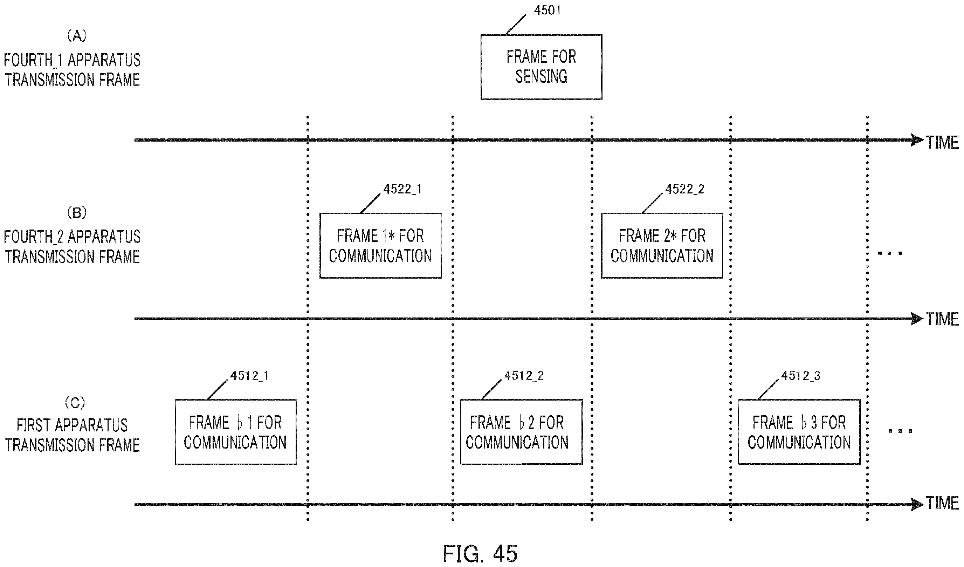

(A) in FIG. 45 illustrates an exemplary transmission frame of fourth_1 apparatus of 2904_1 in FIG. 29. (B) in FIG. 45 illustrates exemplary transmission frames of fourth_2 apparatus of 2904_2 in FIG. 29. (C) in FIG. 45 illustrates exemplary transmission frames of first apparatus 1201 in FIG. 29. Note that, it is assumed that the horizontal axis in (A), (B), and (C) in FIG. 45 indicates time. Further, all of (A), (B), and (C) in FIG. 45 indicate the transmission statuses in the fourth frequency (band).

As illustrated in (A) in FIG. 45, fourth_1 apparatus of 2904_1 transmits frame for sensing 4501.

Further, (A), (B), and (C) in FIG. 45 are exemplary frames to which, for example, TDM or TDD is performed so as to reduce interference in each frame.

As illustrated in (B) in FIG. 45, frames are mapped such that TDM or TDD is performed, and fourth_2 apparatus of 2904_2 transmits frame 1* for communication of 4522_1, frame 2* for communication of 4522_2, ....

At this time, frame 1* for communication of 4522_1, frame 2* for communication of 4522_2, ... may be frames for first apparatus 1201 or may be frames for another communication apparatus.

Then, as illustrated in (C) in FIG. 45, frames are mapped such that TDM or TDD is performed, and first apparatus 1201 transmits frame 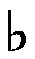 1 for communication of 4512_1, frame 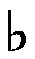 2 for communication of 4512_2, frame 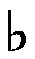 3 for communication of 4512_3 for communication, ....

Frame 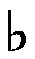 1 for communication of 4512_1, frame 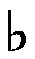 2 for communication of 4512_2, frame 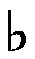 3 for communication of 4512_3 for communication, ... may be frames for fourth_1 apparatus of 2904_1 or may be frames for fourth_i apparatus of 2904_i.

Note that, when each of the region for fourth_1 apparatus of 2904_1 to transmit a signal and the region for fourth_2 apparatus of 2904_2 to transmit a signal is named a resource block, a frame for sensing may be allocated to the resource block or a frame for communication may be allocated to the resource block (although no frame for sensing is described in (A) in FIG. 45).

Further, when the region for first apparatus 1201 to transmit a signal is named a resource block, a frame for sensing may be allocated to the resource block or a frame for communication may be allocated to the resource block.

When "frame 1* for communication of 4322_1, frame 2* for communication of 4322_2, ... are frames for first apparatus 1201", first apparatus 1201 performs communication by utilizing the fourth frequency (band) even during a sensing-related operation. Further, fourth_1 apparatus of 2904_1 performs a sensing-related operation.

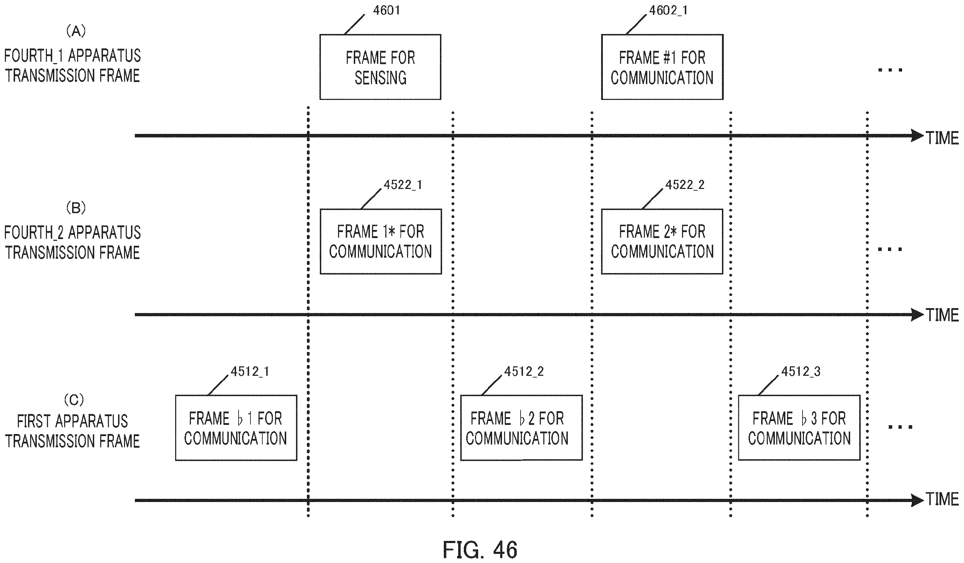

(A) in FIG. 46 illustrates exemplary transmission frames of fourth_1 apparatus of 2904_1 in FIG. 29. (B) in FIG. 46 illustrates exemplary transmission frames of fourth_2 apparatus of 2904_2 in FIG. 29. (C) in FIG. 46 illustrates exemplary transmission frames of first apparatus 1201 in FIG. 29. Note that, it is assumed that the horizontal axis in (A), (B), and (C) in FIG. 46 indicates time. Further, all of (A), (B), and (C) in FIG. 46 indicate the transmission statuses in the fourth frequency (band).

As illustrated in (A) in FIG. 46, fourth _1 apparatus of 2904_1 transmits frame for sensing 4601, frame #1 for communication of 4602_1, ....

Further, (A), (B), and (C) in FIG. 46 are exemplary frames to which, for example, TDM or TDD is performed so as to reduce interference in each frame.

As illustrated in (B) in FIG. 46, frames are mapped such that TDM or TDD is performed, and fourth_2 apparatus of 2904_2 transmits frame 1* for communication of 4522_1, frame 2* for communication of 4522_2, ....

At this time, frame 1* for communication of 4522_1, frame 2* for communication of 4522_2, ... may be frames for first apparatus 1201 or may be frames for another communication apparatus.

Then, as illustrated in (C) in FIG. 46, frames are mapped such that TDM or TDD is performed, and first apparatus 1201 transmits frame 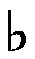 1 for communication of 4512_1, frame 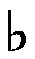 2 for communication of 4512_2, frame 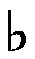 3 for communication of 4512_3 for communication, ....

Frame 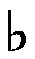 1 for communication of 4512_1, frame 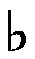 2 for communication of 4512_2, frame 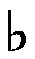 3 for communication of 4512_3 for communication, ... may be frames for fourth_1 apparatus of 2904_1 or may be frames for fourth_i apparatus of 2904_i.

Note that, when each of the region for fourth_1 apparatus of 2904_1 to transmit a signal and the region for fourth_2 apparatus of 2904_2 to transmit a signal is named a resource block, a frame for sensing may be allocated to the resource block or a frame for communication may be allocated to the resource block.

Further, when the region for first apparatus 1201 to transmit a signal is named a resource block, a frame for sensing may be allocated to the resource block or a frame for communication may be allocated to the resource block.

When "frame #1 for communication of 4602_1, ... are frames for first apparatus 1201" and "frame 1* for communication of 4522_1, frame 2* for communication of 4522_2, ... are frames for first apparatus 1201", first apparatus 1201 performs communication by utilizing the fourth frequency (band) even during a sensing-related operation, and further first apparatus 1201 communicates with two fourth i apparatuses. In addition, fourth_1 apparatus of 2904_1 performs a sensing-related operation.

As described above, first apparatus 1201 performs sensing and communication by using the fourth frequency (band), and fourth i apparatus of 2904_i also performs sensing and communication by using the fourth frequency (band) so that it is possible to obtain the effect of improving the frequency utilization efficiency of the fourth frequency (band).

Note that, although FIG. 41, (A) and (B) in FIG. 42, (A) and (B) in FIG. 43, (A) and (B) in FIG. 44, (A), (B), and (C) in FIG. 45, and (A), (B), and (C) in FIG. 46 have been indicated as examples of transmission statuses, the transmission method is not limited to these examples.

Further, although the apparatus that transmits a frame for communication is fourth_2 apparatus of 2904_2 in (A) and (B) in FIG. 43, fourth i apparatus of 2904_i other than the above apparatus described above may transmit a frame for communication.

Although the apparatuses that transmit a frame for communication are fourth_1 apparatus of 2904_1 and fourth_2 apparatus of 2904_2 in (A) and (B) in FIG. 44, fourth i apparatus of 2904_i other than the above apparatuses may also transmit a frame for communication.

Although the apparatus that transmits a frame for communication is fourth_2 apparatus of 2904_2 in (A), (B), and (C) in FIG. 45, fourth i apparatus of 2904_i other than the above apparatus may also transmit a frame for communication.

Although the apparatuses that transmit a frame for communication are fourth_1 apparatus of 2904_1 and fourth_2 apparatus of 2904_2 in (A), (B), and (C) in FIG. 46, fourth i apparatus of 2904_i other than the above apparatuses may also transmit a frame for communication.

Next, frame configuration examples of each apparatus when sensing is performed in the "sensing system" or "sensing and communication system" in FIG. 36 will be described.

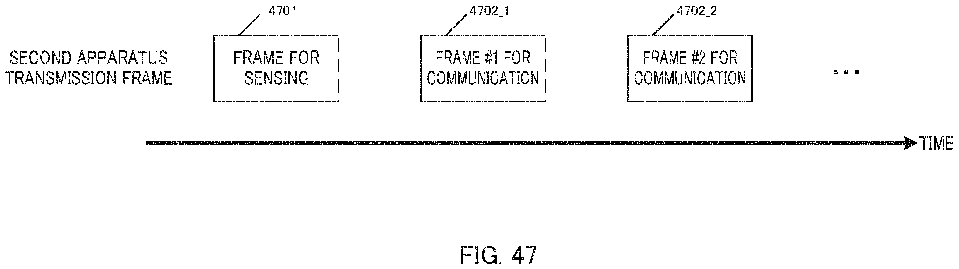

FIG. 47 illustrates exemplary transmission frames of second apparatus 1802 in FIG. 36. It is assumed that the horizontal axis indicates time.

As described above, second apparatus 1802 transmits frame for sensing 4701 for first apparatus 1201 or fourth_1 apparatus of 2904_1 to perform sensing.

Further, second apparatus 1802 may transmit a frame for communication in addition to frame for sensing 4701 (second apparatus 1802 may not transmit a frame for communication).

Frame #1 for communication of 4702_1, frame #2 for communication of 4702_2, ... in FIG. 47 are frames for communication that are transmitted by second apparatus 1802. At this time, the destination of "frame #1 for communication of 4702_1, frame #2 for communication of 4702_2, ..." may be first apparatus 1201, fourth apparatus of 2904_i, or another communication apparatus.

Note that, when the region for second apparatus 1802 to transmit a signal is named a resource block, a frame for sensing may be allocated to the resource block or a frame for communication may be allocated to the resource block.

Further, the method of allocating a frame for sensing and a frame for communication in the time axis is not limited to the example in FIG. 47. Accordingly, a frame for communication may be transmitted temporally ahead of a frame for sensing. Further, in a case where a symbol and a frame can be mapped in the frequency-axis direction, a frame for sensing and a frame for communication may be transmitted on the same time.

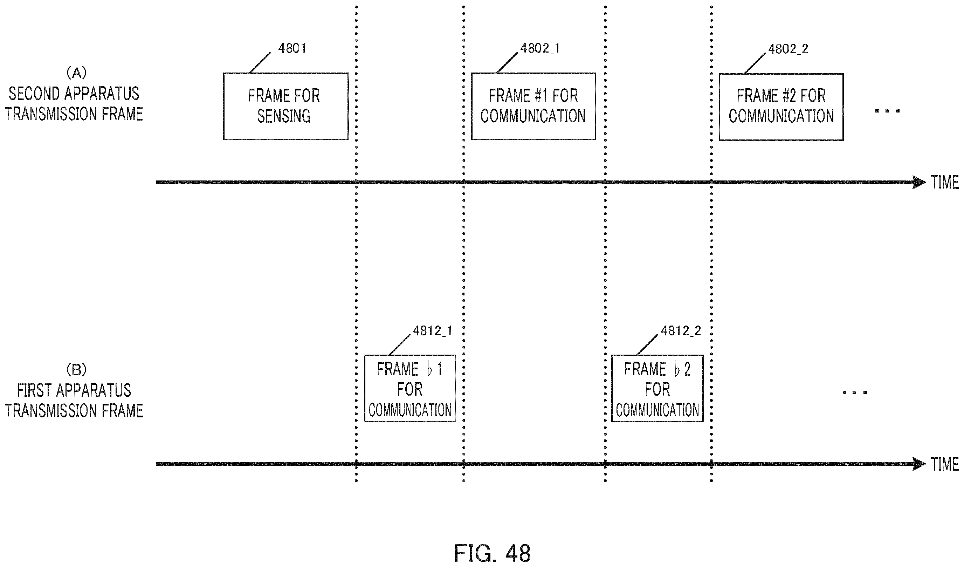

(A) in FIG. 48 illustrates exemplary transmission frames of second apparatus 1802 in FIG. 36. (B) in FIG. 48 illustrates exemplary transmission frames of first apparatus 1201 in FIG. 36. Note that, it is assumed that the horizontal axis in (A) and (B) in FIG. 48 indicates time. Further, both (A) and (B) in FIG. 48 indicate the transmission statuses in the fourth frequency (band).

As illustrated in (A) in FIG. 48, second apparatus 1802 transmits frame for sensing 4801, frame #1 for communication of 4802_1, frame #2 for communication of 4802_2, .... At this time, frame for sensing 4801 is, for example, a frame for first apparatus 1201 or fourth_1 apparatus of 2904_1 to perform sensing.

That is, second apparatus 1802 may transmit a frame for communication in addition to frame for sensing 4801 (second apparatus 1802 may not transmit a frame for communication). Frame #1 for communication 4802_1, frame #2 for communication in 4802_2, ... in (A) in FIG. 48 are frames for communication that are transmitted by second apparatus 1802. At this time, the destination of "frame #1 for communication 4802_1, frame #2 for communication in 4802_2, ..." may be first apparatus 1201, fourth apparatus of 2904_i, or another communication apparatus.

Note that, when the region for second apparatus 1802 to transmit a signal is named a resource block, a frame for sensing may be allocated to the resource block or a frame for communication may be allocated to the resource block.

Further, the method of allocating a frame for sensing and a frame for communication in the time axis is not limited to the example in (A) in FIG. 48. Accordingly, a frame for communication may be transmitted temporally ahead of a frame for sensing. Further, in a case where a symbol and a frame can be mapped in the frequency-axis direction, a frame for sensing and a frame for communication may be transmitted on the same time.

Further, (A) and (B) in FIG. 48 are exemplary frames to which, for example, TDM or TDD is performed so as to reduce interference in each frame.

As in (B) in FIG. 48, frames are mapped such that TDM or TDD is performed, and first apparatus 1201 transmits frame 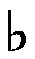 1 for communication of 4812_1, frame 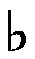 2 for communication of 4812_2, .... At this time, frame 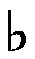 1 for communication of 4812_1, frame 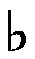 2 for communication of 4812_2, ... may be frames for fourth_1 apparatus of 2904_1, may be frames for fourth_i apparatus of 2904_i, or may be frames for second apparatus 1802.

Note that, when the region for first apparatus 1201 to transmit a signal is named a resource block, a frame for sensing may be allocated to the resource block or a frame for communication may be allocated to the resource block.

Further, the method of allocating a frame for sensing and a frame for communication in the time axis is not limited to the example in (B) in FIG. 48. Accordingly, first apparatus 1201 may transmit a frame for sensing. Further, in a case where a symbol and a frame can be mapped in the frequency-axis direction, a frame for sensing and a frame for communication may be transmitted on the same time.

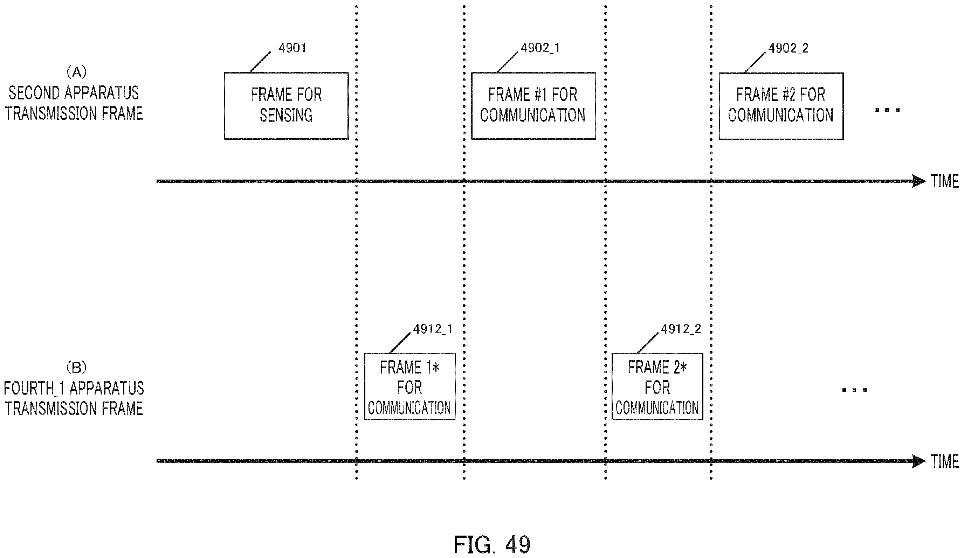

(A) in FIG. 49 illustrates exemplary transmission frames of second apparatus 1802 in FIG. 36. (B) in FIG. 49 illustrates exemplary transmission frames of fourth_1 apparatus of 2904_1 in FIG. 36. Note that, it is assumed that the horizontal axis in (A) and (B) in FIG. 49 indicates time. Further, both (A) and (B) in FIG. 49 indicate the transmission statuses in the fourth frequency (band).

As illustrated in (A) in FIG. 49, second apparatus 1802 transmits frame for sensing 4901, frame #1 for communication of 4902_1, frame #2 for communication of 4902_2, .... At this time, frame for sensing 4901 is, for example, a frame for first apparatus 1201 or fourth_1 apparatus of 2904_1 to perform sensing.

That is, second apparatus 1802 may transmit a frame for communication in addition to frame for sensing 4901 (second apparatus 1802 may not transmit a frame for communication). Frame #1 for communication 4902_1, frame #2 for communication in 4902_2, ... in (A) in FIG. 49 are frames for communication that are transmitted by second apparatus 1802. At this time, the destination of "frame #1 for communication 4902_1, frame #2 for communication in 4902_2, ..." may be first apparatus 1201, fourth apparatus of 2904_i, or another communication apparatus.

Note that, when the region for second apparatus 1802 to transmit a signal is named a resource block, a frame for sensing may be allocated to the resource block or a frame for communication may be allocated to the resource block.

Further, the method of allocating a frame for sensing and a frame for communication in the time axis is not limited to the example in (A) in FIG. 49. Accordingly, a frame for communication may be transmitted temporally ahead of a frame for sensing. Further, in a case where a symbol and a frame can be mapped in the frequency-axis direction, a frame for sensing and a frame for communication may be transmitted on the same time.

Further, (A) and (B) in FIG. 49 are exemplary frames to which, for example, TDM or TDD is performed so as to reduce interference in each frame.

As in (B) in FIG. 49, frames are mapped such that TDM or TDD is performed, and fourth_1 apparatus of 2904_1 transmits frame 1* for communication of 4912_1, frame 2* for communication of 4912_2, .... At this time, frame 1* for communication of 4912_1, frame 2* for communication of 4912_2, ... may be frames for first apparatus 1201, may be frames for fourth_i apparatus of 2904_i, or may be frames for second apparatus 1802.

Note that, when the region for fourth_1 apparatus of 2904_1 to transmit a signal is named a resource block, a frame for sensing may be allocated to the resource block or a frame for communication may be allocated to the resource block.

Further, the method of allocating a frame for sensing and a frame for communication in the time axis is not limited to the example in (B) in FIG. 49. Accordingly, fourth_1 apparatus of 2904_1 may transmit a frame for sensing. Further, in a case where a symbol and a frame can be mapped in the frequency-axis direction, a frame for sensing and a frame for communication may be transmitted on the same time.

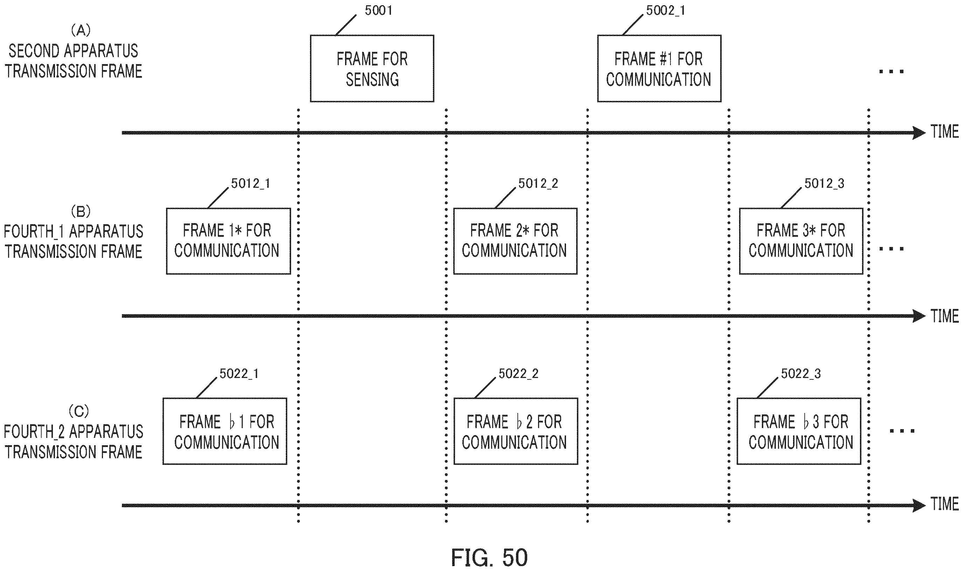

(A) in FIG. 50 illustrates exemplary transmission frames of second apparatus 1802 in FIG. 36. (B) in FIG. 50 illustrates exemplary transmission frames of fourth _1 apparatus of 2904_1 in FIG. 36. (C) in FIG. 50 illustrates exemplary transmission frames of fourth_2 apparatus of 2904_2 in FIG. 36. Note that, it is assumed that the horizontal axis in (A), (B), and (C) in FIG. 50 indicates time. Further, all of (A), (B), and (C) in FIG. 50 indicate the transmission statuses in the fourth frequency (band).

As illustrated in (A) in FIG. 50, second apparatus 1802 transmits frame for sensing 5001, frame #1 for communication of 5002_1, ....

Further, (A), (B), and (C) in FIG. 50 are exemplary frames to which, for example, TDM or TDD is performed so as to reduce interference in each frame.

As illustrated in (B) in FIG. 50, frames are mapped such that TDM or TDD is performed, and fourth_1 apparatus of 2904_1 transmits frame 1* for communication of 5012_1, frame 2* for communication of 5012_2, ....

At this time, frame 1* for communication of 5012_1, frame 2* for communication of 5012_2, ... may be frames for first apparatus 1201, may be frames for second apparatus 1802, may be frames for fourth apparatus of 2904_i, or may be frames for another communication apparatus.

Then, as illustrated in (C) of FIG. 50, frames are mapped such that TDM or TDD is performed, and fourth _2 apparatus of 2904_2 transmits frame 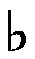 1 for communication of 5022_1, frame 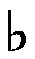 2 for communication of 5022_2, frame 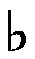 3 for communication of 5022_3, ....

Frame 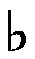 1 for communication of 5022_1, frame 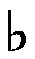 2 for communication of 5022_2, frame 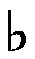 3 for communication of 5022_3, ... may be frames for first apparatus 1201, may be frames for second apparatus 1802, may be frames for fourth i apparatus of 2904_i, or may be frames for another communication apparatus.

Note that, when each of the region for fourth_1 apparatus of 2904_1 to transmit a signal and the region for fourth_2 apparatus of 2904_2 to transmit a signal is named a resource block, a frame for sensing may be allocated to the resource block or a frame for communication may be allocated to the resource block.

Further, when the region for second apparatus 1802 to transmit a signal is named a resource block, a frame for sensing may be allocated to the resource block or a frame for communication may be allocated to the resource block.

When "frame 1* for communication of 5012_1, frame 2* for communication of 5012_2, ... are frames for first apparatus 1201" and "frame 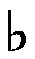 1 for communication of 5022_1, frame 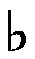 2 for communication of 5022_2, frame b3 for communication of 5022_3, ... are frames for first apparatus 1201", first apparatus 1201 performs communication by utilizing the fourth frequency (band) even during a sensing-related operation, and further first apparatus 1201 communicates with two fourth_i apparatuses.

When "frame 1* for communication of 5012_1, frame 2* for communication of 5012_2, ... are frames for second apparatus 1802" and "frame b1 for communication of 5022_1, frame b2 for communication of 5022_2, frame b3 for communication of 5022_3, ... are frames for second apparatus 1802", second apparatus 1802 performs communication by utilizing the fourth frequency (band) even during a sensing-related operation, and further second apparatus 1802 communicates with two fourth_i apparatuses.

As described above, first apparatus 1201 and second apparatus 1802 perform sensing and communication by using the fourth frequency (band), and fourth_i apparatus of 2904_i also performs sensing and communication by using the fourth frequency (band) so that it is possible to obtain the effect of improving the frequency utilization efficiency of the fourth frequency (band).

Note that, although FIG. 47, (A) and (B) in FIG. 48, (A) and (B) in FIG. 49, and (A), (B), and (C) in FIG. 50 have been indicated as examples of transmission statuses, the transmission method is not limited to these examples.

Further, although the apparatus that transmits a frame for communication is fourth_1 apparatus of 2904_1 in (A) and (B) in FIG. 49, fourth_i apparatus of 2904_i other than the above apparatus may also transmit a frame for communication.

Further, although the apparatuses that transmit a frame for communication are fourth_1 apparatus of 2904_1 and fourth_2 apparatus of 2904_2 in (A), (B), and (C) in FIG. 50, fourth i apparatus of 2904_i other than the above apparatuses may also transmit a frame for communication.

Operation examples of sensing of each apparatus in FIGS. 29 and 36 have been described above. Hereinafter, configuration examples of first apparatus 1201, fourth_1 apparatus of 2904_1, fourth _2 apparatus of 2904_2, ..., fourth_Q apparatus of 2904_Q in FIGS. 29 and 36 will be described.

FIGS. 21A and 21B illustrate configuration examples of "first apparatus 1201, fourth_1 apparatus of 2904_1, fourth _2 apparatus of 2904_2, ..., fourth _Q apparatus of 2904_Q".

Signal generator 2102 inputs control signal 2100, and generates and outputs a signal based on information of control signal 2100. Specific examples thereof (fourth-2 example and fourth-2 example) will be described.

### Fourth-1 Example:

### (Transmission)

For example, in a case where control signal 2100 indicates that "a modulated signal for communication is transmitted", signal generator 2102 performs processing, which includes error correction coding, modulation (mapping), and processing based on a transmission method, on data 2101, and transmits a modulated signal as a radio wave by using at least one antenna port of antenna port 2105_1 to antenna port 2105_N. Note that, it is assumed that N is an integer larger than or equal to 1.

In a case where control signal 2100 indicates that "a modulated signal for communication and a signal for sensing are transmitted", signal generator 2102 performs processing, which includes error correction coding, modulation (mapping), and processing based on a transmission method, on data 2101, and transmits a modulated signal as a radio wave by using at least one antenna port of antenna port 2105_1 to antenna port 2105_N. Signal generator 2102 also generates a signal for sensing and transmits the signal as a radio wave from antenna port 2106.

In a case where control signal 2100 indicates that "a signal for sensing is transmitted", signal generator 2102 generates a signal for sensing and transmits the signal as a radio wave from antenna port 2106.

Note that, in a case where the apparatuses in FIGS. 21A and 21B transmit a modulated signal for communication, the "antenna port used when a modulated signal of the third frequency (band) is transmitted" and the "antenna port used when a modulated signal of the fourth frequency (band) is transmitted" may be the same or different.

Further, in a case where a signal for sensing is transmitted from antenna port 2106, the signal for sensing reflects off, for example, target 2110 and the reflected wave reaches antenna port 2112.

Note that, in the case of FIG. 36, a signal for sensing transmitted by second apparatus 1802 reaches antenna port 2112.

### (Reception)

For example, in a case where control signal 2100 indicates that "demodulation for communication is performed", a modulated signal is received by using at least one antenna port of antenna port of antenna port 2111_1 to antenna port 211_M, and signal processor 2115 inputs this modulated signal, performs processing including demodulation, and outputs reception data 2116. Note that, it is assumed that M is an integer larger than or equal to 1.

In a case where control signal 2100 indicates that "demodulation for communication is performed and processing for sensing is performed", a modulated signal is received by using at least one antenna port of antenna port 2111_1 to antenna port 2111_M, and signal processor 2115 inputs this modulated signal, performs processing including demodulation, and outputs reception data 2116. Signal processor 2115 also inputs a signal received by antenna port 2112, performs processing for sensing, and, for example, outputs distance information or the like 2117 of a target.

In a case where control signal 2100 indicates that "processing for sensing is performed", signal processor 2115 inputs a signal received by antenna port 2112, performs processing for sensing, and, for example, outputs distance information or the like 2117 of a target.

Note that, in a case where the apparatuses in FIGS. 21A and 21B receive a modulated signal for communication, the "antenna port used when a modulated signal of the third frequency (band) is received" and the "antenna port used when a modulated signal of the fourth frequency (band) is received" may be the same or different.

In the examples described above, antenna ports 2105_1 to 2105_N are transmission antenna ports for communication, and antenna port 2106 is a transmission antenna port for sensing. Further, antenna ports 2111_1 to 2111_M are reception antenna ports for communication, and antenna port 2112 is a reception antenna port for sensing.

Note that, for example, (A) and (B) in FIG. 22 illustrate an example of a state when the apparatuses of "first apparatus 1201, base station #1 of 1201_1, base station #2 of 1202_2, and base station #3 of 1202_3" which have the configuration in FIG. 21A or 21B perform an operation for sensing. For example, as in (A) of FIG. 22, it is assumed that the section in which the apparatuses of "first apparatus 1201, base station #1 of 1201_1, base station #2 of 1202_2, and base station #3 of 1202_3" which have the configuration in FIG. 21 transmit a signal for sensing is signal transmission section 2201 present between time v1 and time v2.

The apparatuses of "first apparatus 1201, base station #1 of 1201_1, base station #2 of 1202_2, and base station #3 of 1202_3" which have the configuration in FIG. 21A or 21B receive a signal in "signal transmission section 2201 present between time v1 and time v2" and perform signal processing to thereby perform sensing of a target. Accordingly, the apparatuses of "first apparatus 1201, base station #1 of 1201_1, base station #2 of 1202_2, and base station #3 of 1202_3" which have the configuration in FIG. 21 perform a sensing-related reception operation in the section of "reception-related operation 2202 present between time v1 and time v2" as in (B) in FIG. 22.

That is, when sensing is performed, there may be a time section in which the apparatuses of "first apparatus 1201, base station #1 of 1201_1, base station #2 of 1202_2, and base station #3 of 1202_3" perform both processing of an operation in a signal transmission section and processing of a signal reception-related operation. Accordingly, such an apparatus configuration that includes an antenna port for communication and an antenna port for sensing separately may be capable of improving the communication performance and sensing performance.

Note that, the antenna port may be a logical antenna (antenna group) formed of one or a plurality of physical antennas. That is, the antenna port does not necessarily refer to one physical antenna, but may refer to an array antenna or the like formed of a plurality of antennas.

For example, it is not specified how many physical antennas the antenna port is formed of, and a terminal station may be specified as the smallest unit that can transmit a reference signal. Further, the antenna port may be specified as a precoding vector, as a unit that multiplies weighting of a precoding matrix, or as the smallest unit. Note that, the above-described content related to the antenna port becomes the content related to the present specification in its entirety.

Further, at least one or more antennas may be shared by antenna ports. For example, there may be an antenna for transmission to be used in a plurality of antenna ports for transmission. Then, for example, there may be an antenna for reception to be used in a plurality of antenna ports for reception. Further, for example, there may be an antenna to be used in a plurality of antenna ports. Note that, the above-described content related to the antenna port becomes the content related to the present specification in its entirety.

### Fourth-2 Example:

A first mode and a second mode are defined as follows.

First mode (for example, a mode corresponding to the standard of the first release):
It is assumed that the first mode is a mode corresponding to the first communication scheme.

Second mode (for example, a mode corresponding to the standard of the second release):
It is assumed that the second mode is a mode corresponding to the second communication scheme and corresponding to sensing.

Here, it is assumed that the first mode includes at least a scheme of the third frequency (band), and that the second mode includes at least a scheme of the fourth frequency (band).

Hereinafter, three cases will be described.

### Case 1:

### (Transmission)

In FIGS. 21A and 21B, for example, in a case where control signal 2100 indicates that "a modulated signal of the first mode is transmitted", signal generator 2102 performs processing, which includes error correction coding, modulation (mapping), and processing based on a transmission method, on data 2101, and transmits a modulated signal of the first mode as a radio wave by using at least one antenna port of antenna port 2105_1 to antenna port 2105_N. Note that, it is assumed that N is an integer larger than or equal to 1.

In a case where control signal 2100 indicates "'a modulated signal and/or a signal for sensing' of the second mode are/is transmitted", signal generator 2102 performs processing, which includes error correction coding, modulation (mapping), and processing based on a transmission method, on data 2101, and transmits a modulated signal of the second mode as a radio wave by using antenna port 2106, and/or signal generator 2102 generates a signal for sensing, and transmits the signal as a radio wave from antenna port 2106.

In a case where control signal 2100 indicates "a modulated signal of the first mode is transmitted and `a modulated signal and/or a signal for sensing' of the second mode are/is transmitted", the following two operations are performed:
(1) Signal generator 2102 performs processing, which includes error correction coding, modulation (mapping), and processing based on a transmission method, on data 2101, and transmits a modulated signal of the first mode as a radio wave by using at least one antenna port of antenna port 2105_1 to antenna port 2105_N. Note that, it is assumed that N is an integer larger than or equal to 1.
(2) Signal generator 2102 performs processing, which includes error correction coding, modulation (mapping), and processing based on a transmission method, on data 2101, and transmits a modulated signal of the second mode as a radio wave by using antenna port 2106, and/or signal generator 2102 generates a signal for sensing, and transmits the signal as a radio wave from antenna port 2106.

Note that, when the mode is the second mode, the antenna port through which a signal for sensing is transmitted and the antenna port through which a signal for communication is transmitted may be the same or different.

### (Reception)

In FIGS. 21A and 21B, for example, in a case where control signal 2100 indicates that "demodulation of the first mode is performed", at least one antenna port of antenna port 2111_1 to antenna port 2111_M is used to receive a modulated signal, and signal processor 2115 inputs this modulated signal, performs processing including demodulation, and outputs reception data 2116 of the first mode. Note that, it is assumed that M is an integer larger than or equal to 1.

In a case where control signal 2100 indicates that "processing of the second mode is performed", signal processor 2115 inputs a signal received by antenna port 2112, performs processing for sensing, and, for example, outputs distance information or the like 2117 of a target, and/or, signal processor 2115 receives a modulated signal by using antenna port 2112, inputs this modulated signal, performs processing including demodulation, and outputs reception data 2116 of the second mode."

In a case where control signal 2100 indicates that "demodulation of the first mode is performed and processing of the second mode is performed", the following two operations are performed.
(3) At least one antenna port of antenna port 2111_1 to antenna port 2111_M is used to receive a modulated signal, and signal processor 2115 inputs this modulated signal, performs processing including demodulation, and outputs reception data 2116 of the first mode.
(4) Signal processor 2115 inputs a signal received by antenna port 2112, performs processing for sensing, and, for example, outputs distance information or the like 2117 of a target, and/or, signal processor 2115 receives a modulated signal by using antenna port 2112, inputs this modulated signal, performs processing including demodulation, and outputs reception data 2116 of the second mode.

In the examples described above, antenna ports 2105_1 to 2105_N are transmission antenna ports of the first mode, and antenna port 2106 is a transmission antenna port of the second mode. Further, antenna ports 2111_1 to 2111_M are reception antenna ports of the first mode, and antenna port 2112 is a reception antenna port of the second mode.

Note that, when the mode is the second mode, the antenna port through which a signal for sensing is received and the antenna port through which a signal for communication is received may be the same or different.

### Case 2:

### (Transmission)

In FIGS. 21A and 21B, for example, in a case where control signal 2100 indicates that at least "a modulated signal of the first mode is transmitted", signal generator 2102 performs processing, which includes error correction coding, modulation (mapping), and processing based on a transmission method, on data 2101, and transmits a modulated signal of the first mode as a radio wave by using at least one antenna port of antenna port 2105_1 to antenna port 2105_(N-1). Note that, it is assumed that N is an integer larger than or equal to 2.

In a case where control signal 2100 indicates that "at least `a modulated signal for communication' of the second mode is transmitted", signal generator 2102 performs processing, which includes error correction coding, modulation (mapping), and processing based on a transmission method, on data 2101, and transmits a modulated signal of the second mode as a radio wave by using antenna port 2105_N.

In a case where control signal 2100 indicates that "at least `a signal for sensing' of the second mode is transmitted", signal generator 2102 generates a signal for sensing and transmits the signal as a radio wave from antenna port 2106.

### (Reception)

Further, in FIGS. 21A and 21B, for example, in a case where control signal 2100 indicates that at least "demodulation of the first mode is performed", at least one antenna port of antenna port 2111_1 to antenna port 2111_(M-1) is used to receive a modulated signal, and signal processor 2115 inputs this modulated signal, performs processing including demodulation, and outputs reception data 2116 of the first mode. Note that, it is assumed that M is an integer larger than or equal to 2.

In a case where control signal 2100 indicates that at least "demodulation of the second mode is performed", a modulated signal is received by using antenna port 2111_M, and signal processor 2115 inputs this modulated signal, performs processing including demodulation, and outputs reception data 2116 of the second mode.

In a case where control signal 2100 indicates that at least "processing for sensing of the second mode is performed", signal processor 2115 inputs a signal received by antenna port 2112, performs processing for sensing, and, for example, outputs distance information or the like 2117 of a target.

In the examples described above, antenna ports 2105_1 to 2105_(N-1) are transmission antenna ports of the first mode, antenna port 2105_N is a transmission antenna port for communication of the second mode, and antenna port 2106 is a transmission antenna port for sensing of the second mode. Further, antenna ports 2111_1 to 2111_(M-1) are reception antenna ports of the first mode, antenna port 2111_M is a reception antenna port for communication of the second mode, and antenna port 2112 is a reception antenna port for sensing of the second mode.

### Case 3:

### (Transmission)

In FIGS. 21A and 21B, for example, in a case where control signal 2100 indicates that at least "a modulated signal of the first mode is transmitted", signal generator 2102 performs processing, which includes error correction coding, modulation (mapping), and processing based on a transmission method, on data 2101, and transmits a modulated signal of the first mode as a radio wave by using at least one antenna port of antenna port 2105_1 to antenna port 2105_N. Note that, it is assumed that N is an integer larger than or equal to 1.

In a case where control signal 2100 indicates that "at least `a modulated signal for communication' of the second mode is transmitted", signal generator 2102 performs processing, which includes error correction coding, modulation (mapping), and processing based on a transmission method, on data 2101, and transmits a modulated signal of the second mode as a radio wave by using at least one antenna port of antenna port 2105_1 to antenna port 2105_N.

In a case where control signal 2100 indicates that "at least `a signal for sensing' of the second mode is transmitted", signal generator 2102 generates a signal for sensing and transmits the signal as a radio wave from antenna port 2106.

### (Reception)

Further, in FIGS. 21A and 21B, for example, in a case where control signal 2100 indicates that at least "demodulation of the first mode is performed", at least one antenna port of antenna port 2111_1 to antenna port 2111_M is used to receive a modulated signal, and signal processor 2115 inputs this modulated signal, performs processing including demodulation, and outputs reception data 2116 of the first mode. Note that, it is assumed that M is an integer larger than or equal to 1.

In a case where control signal 2100 indicates that at least "demodulation of the second mode is performed", at least one antenna port of antenna port 2111_1 to antenna port 2111_M is used to receive a modulated signal, and signal processor 2115 inputs this modulated signal, performs processing including demodulation, and outputs reception data 2116 of the second mode.

In a case where control signal 2100 indicates that at least "processing for sensing of the second mode is performed", signal processor 2115 inputs a signal received by antenna port 2112, performs processing for sensing, and, for example, outputs distance information or the like 2117 of a target.

In the examples described above, antenna ports 2105_1 to 2105_N are transmission antenna ports of the first mode and transmission antenna ports for communication of the second mode, and antenna port 2106 is a transmission antenna port for sensing of the second mode. Further, antenna ports 2111_1 to 2111_M are reception antenna ports of the first mode and reception antenna ports for communication of the second mode, and antenna port 2112 is a reception antenna port for sensing of the second mode.

As described above, it is possible to obtain the effect that both high-quality communication and highly-accurate sensing can be achieved by selectively using an antenna port used at the time of communication and an antenna port used at the time of sensing.

Note that, as described above, FIGS. 21A and 21B have been indicated as the configurations of first apparatus 1201, fourth_1 apparatus of 2904_1, fourth_2 apparatus of 2904_2, ..., fourth_Q apparatus of 2904_Q, and the use method of antenna ports has been described. As a matter of course, "first apparatus 1201, fourth_1 apparatus of 2904_1, fourth_2 apparatus of 2904_2, ..., fourth _Q apparatus of 2904_Q", and the "use method of antenna ports" are applicable to embodiments other than the present embodiment.

Further, when there are two apparatuses (named apparatuses #A and #B) in the present embodiment and apparatus #Aor #B transmits a radio wave and estimates a "distance between apparatuses #A and #B", apparatus #A or #B may estimate a direction of arrival and utilize an estimated value of the above direction of arrival to estimate the position of a target with more accuracy.

In the same manner, when apparatus #A transmits a radio wave and estimates a "distance between apparatus #A and a target", apparatus #A may estimate a direction of arrival and utilize an estimated value of the above direction of arrival to perform position estimation of the target with higher accuracy.

Further, when apparatus #A or #B transmits a radio wave and estimates a direction of arrival, apparatus #A or #B may estimate the "distance between apparatuses #A and #B" and utilize an estimated value of the above "distance between apparatuses #A and #B" to perform position estimation of a target with higher accuracy.

When apparatus #A transmits a radio wave and apparatus A estimates the direction of arrival of the radio wave obtained by the radio wave, for example, reflecting off a target, apparatus #A may estimate the "distance between apparatus #A and the target" and utilize the above "distance between apparatus #A and the target" to perform position estimation of the target with higher accuracy.

Note that, although FIGS. 31, 32A, 32B, 32C, 32D, 32E, 32F, 32G, 32H, 33, 34, and 35 have been indicated as examples of the operation flows of the first apparatus, the third apparatus, and the fourth _1 apparatus, they are merely examples, and the order of operations may be different from the orders indicated in the drawings. Further, although FIGS. 37, 38, 39, and 40 have been indicated as examples of the operation flows of the first apparatus, the second apparatus, the third apparatus, and the fourth_1 apparatus, they are merely examples, and the order of operations may be different from the orders indicated in the drawings.

Further, FIG. 41, (A) and (B) in FIG. 42, (A) in FIG. 43, (B) in FIG. 44, (A), (B), and (C) in FIG. 45, (A), (B), and (C) in FIG. 46, FIG. 47, (A) and (B) in FIG. 48, (A) and (B) in FIG. 49, and (A), (B), and (C) of FIG. 50 have been indicated as frame configuration examples of each apparatus, but are merely examples, and frames other than those indicated in the drawings, such as a frame for transmitting control information, a signal for performing beamforming (for example, a signal for sector sweeping), and a reference signal may be present.

### (Embodiment 5)

In the present embodiment, an exemplary embodiment that differs from Embodiment 4 will be described.

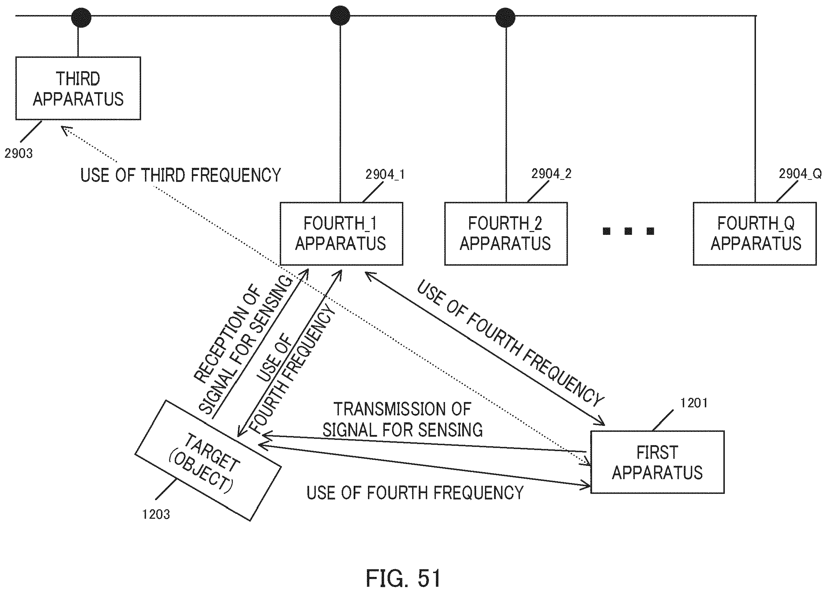

FIG. 51 illustrates an example of the "sensing system" or "sensing and communication system" in the present embodiment.

In FIG. 51, third apparatus 2903 communicates with first apparatus 1201 by using a third frequency (band).

Fourth_1 apparatus of 2904_1, fourth_2 apparatus of 2904_2, ..., fourth_Q apparatus of 2904_Q perform communication by using a fourth frequency (band). Note that, it is assumed that Q is an integer larger than or equal to 1.

Note that, there is a method in which the third frequency (band) is FR1 and/or FR2 and the fourth frequency (band) is a frequency of 52.6 GHz or higher, for example. It is assumed, however, that FR1 is a "frequency from 450 MHz to smaller than or equal to 6 GHz" and FR2 is a "frequency from 24.25 GHz to 52.6 GHz". Further, as another example, the fourth frequency (band) may be a frequency higher than the third frequency (band). As yet another example, the third frequency (band) may be FR1 and the fourth frequency (band) may be FR2.

Further, it is assumed that third apparatus 2903 communicates with fourth_1 apparatus of 2904_1, fourth _2 apparatus of 2904_2, ..., fourth_Q apparatus of 2904_Q. The communication this time may be radio communication or wired communication.

Communication may be possible between two apparatuses of "fourth_1 apparatus of 2904_1, fourth _2 apparatus of 2904_2, ..., fourth_Q apparatus of 2904_Q". Note that, the communication this time may be radio communication or wired communication.

Target (object) 1203 is a target object whose position is estimated by sensing.

In the present embodiment, a method of performing "the triangulation described in Embodiment 1 with first apparatus 1201 and fourth_1 apparatus of 2904_1", "the triangulation described in Embodiment 1 with first apparatus 1201 and fourth_2 apparatus of 22904_2", ..., the "triangulation described in Embodiment 1 with first apparatus 1201 and fourth _Q apparatus of 2904_Q" will be described as an example.

Here, it is assumed that first apparatus 1201 performs sensing for performing triangulation. At this time, first apparatus 1201 performs sensing with one of "fourth_1 apparatus of 2904_1, fourth _2 apparatus of 2904_2, ..., fourth _Q apparatus of 2904_Q" to realize triangulation. However, it is supposed that there is fourth i apparatus of 2904_i that does not correspond to sensing due to factors such as the size of fourth i apparatus of 2904_i and the time of the installation. Note that, it is assumed that i is an integer larger than or equal to 1 and smaller than or equal to Q.

Accordingly, it is assumed that "fourth_1 apparatus of 2904_1, fourth _2 apparatus of 2904_2, ..., fourth_Q apparatus of 2904_Q" transmit control information including information on sensing capability 3001 as illustrated in FIG. 30. For example, it is assumed that "fourth_1 apparatus of 2904_1, fourth_2 apparatus of 2904_2, ..., fourth_Q apparatus of 2904_Q" transmit the control information including information on sensing capability 3001 by using, for example, a PBCH, a PDSCH or a PDCCH.

The channel through which the above control information is transmitted is not limited to the examples described above. Further, "fourth_1 apparatus of 2904_1, fourth _2 apparatus of 2904_2, ..., fourth _Q apparatus of 2904_Q" may transmit information on sensing capability 3001 to first apparatus 1201 or third apparatus 2903.

As illustrated in FIG. 30, it is assumed that information on sensing capability 3001 includes at least one of "INFORMATION ON WHETHER SENSING IS POSSIBLE OR IMPOSSIBLE 3011", "INFORMATION ON WHETHER SENSING REQUEST FROM FIRST APPARATUS 1201 IS PERFORMABLE OR NOT PERFORMABLE 3012", and/or "INFORMATION ON WHETHER SENSING REQUEST FROM FIRST APPARATUS 1201 IS ACCEPTABLE OR NOT ACCEPTABLE 3013".

It is assumed that specific examples of "INFORMATION ON WHETHER SENSING IS POSSIBLE OR IMPOSSIBLE 3011", "INFORMATION ON WHETHER SENSING REQUEST FROM FIRST APPARATUS 1201 IS PERFORMABLE OR NOT PERFORMABLE 3012", and "INFORMATION ON WHETHER SENSING REQUEST FROM FIRST APPARATUS 1201 IS ACCEPTABLE OR NOT ACCEPTABLE 3013" are as follows.

"INFORMATION ON WHETHER SENSING IS POSSIBLE OR IMPOSSIBLE 3011":
This information is used to notify, for example, first apparatus 1201, a repeater, another fourth _x apparatus, third apparatus 2903, or the like of "whether fourth_i apparatus of 2904_i is capable of performing sensing".

Thus, in a case where at least information that "sensing is performable" is included as "INFORMATION ON WHETHER SENSING IS POSSIBLE OR IMPOSSIBLE 3011", it is assumed that fourth i apparatus of2904_i has a sensing function. Further, it is assumed that this fourth i apparatus of 2904_i has a communication function. Note that, since the specific configuration has already been described in Embodiment 1, a description thereof will be omitted.

"INFORMATION ON WHETHER SENSING REQUEST FROM FIRST APPARATUS 1201 IS PERFORMABLE OR NOT PERFORMABLE 3012":
This information is used to notify, for example, first apparatus 1201, third apparatus 2903, or the like of information on "whether sensing is performable" when fourth i apparatus of 2904_i receives a sensing request from first apparatus 1201 (a request of the terminal for first apparatus 1201 to perform sensing).

Note that, although "INFORMATION ON WHETHER SENSING REQUEST FROM FIRST APPARATUS 1201 IS PERFORMABLE OR NOT PERFORMABLE 3012" is named here, "INFORMATION ON WHETHER SENSING REQUEST FROM FIRST APPARATUS 1201 IS PERFORMABLE OR NOT PERFORMABLE 3012" may also be "information on whether a sensing request from an apparatus other than first apparatus 1201, such as a repeater, third apparatus 2903, and another base station, is performable or not performable". Further, details of the "sensing request" will be described later.

"INFORMATION ON WHETHER SENSING REQUEST FROM FIRST APPARATUS 1201 IS ACCEPTABLE OR NOT ACCEPTABLE 3013":
This information is used to notify, for example, first apparatus 1201 or the like of information on "whether fourth i apparatus of 2904_i accepts sensing from first apparatus 1201" when fourth i apparatus of 2904_i receives a sensing request from first apparatus 1201 (a request of the terminal for first apparatus 1201 to perform sensing).

Accordingly, there are modes in which, even when there is a sensing request from first apparatus 1201, fourth_i apparatus of 2904_i "accepts" and "does not accept" the sensing request.

Note that, although "INFORMATION ON WHETHER SENSING REQUEST FROM FIRST APPARATUS 1201 IS ACCEPTABLE OR NOT ACCEPTABLE 3013" is named here, "INFORMATION ON WHETHER SENSING REQUEST FROM FIRST APPARATUS 1201 IS ACCEPTABLE OR NOT ACCEPTABLE 3013" may be "information on whether a sensing request from an apparatus other than first apparatus 1201, such as a repeater, third apparatus 2903, and another base station, is acceptable or not acceptable". Further, details of the "sensing request" will be described later.

By configuring the above, first apparatus 1201, a repeater, third apparatus 2903, another base station, and the like can know sensing of a base station and a state with respect to a sensing request so that it is possible to obtain the effect that suitable "sensing-related control and communication with fourth i apparatus of 2904_i" can be performed.

Note that, the apparatus that transmits information on sensing capability 3001 in FIG. 30 has been described as fourth i apparatus of 2904_i above, but is merely an example, and information on sensing capability 3001 may be transmitted by a communication apparatus such as a repeater, a terminal, an access point, and third apparatus 2903.

Further, although the description "[...] SENSING REQUEST FROM FIRST APPARATUS 1201" is used in "INFORMATION ON WHETHER SENSING REQUEST FROM FIRST APPARATUS 1201 IS PERFORMABLE OR NOT PERFORMABLE 3012" and "INFORMATION ON WHETHER SENSING REQUEST FROM FIRST APPARATUS 1201 IS ACCEPTABLE OR NOT ACCEPTABLE 3013" which are transmitted by the apparatus that transmits information on sensing capability 3001 in FIG. 30, a sensing request may be not from first apparatus 1201, but may be from, for example, a communication apparatus such as a base station, a repeater, an access point, and third apparatus 2903. Accordingly, implementation is also possible with 3012 as "INFORMATION ON WHETHER SENSING REQUEST FROM COMMUNICATION APPARATUS IS PERFORMABLE OR NOT PERFORMABLE" and 3013 as "INFORMATION ON WHETHER SENSING REQUEST FROM COMMUNICATION APPARATUS IS ACCEPTABLE OR NOT ACCEPTABLE".

Next, sensing by first apparatus 1201 and fourth_1 apparatus of 2904_1 in FIG. 51 will be described.

First apparatus 1201 may be a terminal capable of communicating with third apparatus 2903 and fourth_i apparatus of 2904_i. Alternatively, first apparatus 1201 may be a base station (or an access point, a repeater, or the like). In addition, first apparatus 1201 may also be fourth x apparatus of 2904_x (where x is a natural number, for example). Further, third apparatus 2903 may be a base station or may be a terminal, a repeater, an access point, or the like. Fourth i apparatus of 2904_i may be a base station or may be a terminal, a repeater, an access point, or the like.

In the following description, first apparatus 1201 will be described as a terminal, but it is also performable in the same manner even when first apparatus 1201 is a base station, an access point or a repeater. However, in a case where a particular operation occurs when first apparatus 1201 is a base station, a supplementary description will be provided.

The present embodiment deals with triangulation. Examples of the specific triangulation method have been described in Embodiment 1. The first method and the second method are triangulation based on the fact that information on a distance is obtained by performing sensing.

The third method and the fourth method are, on the other hand, triangulation based on the fact that information on a direction (of arrival) (having said that, a distance may also be obtained) is obtained by performing sensing.

Hereinafter, with respect to FIG. 51, direction-based triangulation whose examples are the third method and the fourth method will be described. Note that, the present embodiment is a variation of the third method and the fourth method.

### Case of Direction-based Triangulation:

An example when the direction-based triangulation whose examples are the third method and the fourth method described in Embodiment 1 is used will be described.

First apparatus 1201 obtains information on sensing capability 3001 in FIG. 30, which is transmitted by "fourth_1 apparatus of 2904_1, fourth _2 apparatus of 2904_2, ..., fourth_Q apparatus of 2904_Q", and acquires each status of response to sensing of "fourth_1 apparatus of 2904_1, fourth _2 apparatus of 2904_2, ..., fourth _Q apparatus of 2904_Q".

As another method, "fourth_1 apparatus of 2904_1, fourth _2 apparatus of 2904_2, ..., fourth Q apparatus of 2904_Q" may transmit information on sensing capability 3001 in FIG. 30 to third apparatus 2903, and third apparatus 2903 may transmit control information including information on sensing capability of each apparatus of "fourth_1 apparatus of 2904_1, fourth _2 apparatus of 2904_2, ..., fourth _Q apparatus of 2904_Q" by using the third frequency. Thus, first apparatus 1201 knows each status of response to sensing of "fourth_1 apparatus of 2904_1, fourth _2 apparatus of 2904_2, ..., fourth _Q apparatus of 2904_Q".

Hereinafter, it is assumed as an example that "fourth_1 apparatus of 2904_1, fourth_2 apparatus of 2904_2, ..., fourth _Q apparatus of 2904_Q" can all perform sensing, and that in a case where there is a sensing request from, for example, a terminal such as first apparatus 1201, "fourth_1 apparatus of 2904_1, fourth _2 apparatus of 2904_2, ..., fourth _Q apparatus of 2904_Q" can all perform a sensing operation for the request for performing sensing.

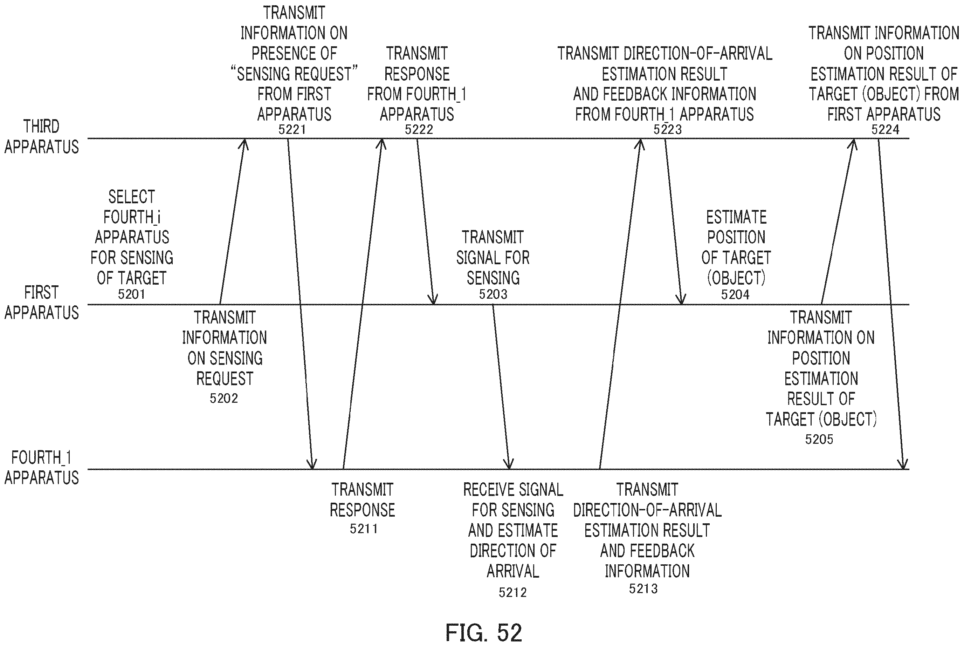

FIG. 52 illustrates a procedure example for sensing in the system example in FIG. 51. It is assumed that first apparatus 1201 transmits a signal for sensing, this signal comes into contact with target 1203, and fourth_1 apparatus of 2904_1 receives the signal for sensing, thereby performing position estimation, for example.

Further, it is assumed that first apparatus 1201 has obtained at least information on a "distance between first apparatus 1201 and fourth_1 apparatus of 2904_1" before "ESTIMATE POSITION OF TARGET (OBJECT) 5204" is performed.

Note that, since the method of obtaining the information on the "distance between first apparatus 1201 and fourth_1 apparatus of 2904_1" has already been described with reference to FIGS. 32A, 32B, 32C, 32D, 32E, 32F, 32G, and 32H, a description thereof will be omitted.

As another method, when first apparatus 1201 is a base station or a fixedly installed terminal, first apparatus 1201 and fourth_i apparatus of 2904_i may have acquired the "distance between first apparatus 1201 and fourth i apparatus of 2904_i" in advance.

Further, first apparatus 1201 and fourth i apparatus of2904_i may acquire positions by a position estimation system such as GPS, for example. Then, fourth i apparatus of 2904_i may transmit information on its own position to first apparatus 1201, and first apparatus 1201 may determine the "distance between first apparatus 1201 and fourth_i apparatus of 2904_i" from information on its own position and the information on the position of fourth i apparatus of 2904_i. Then, first apparatus 1201 may transmit the information on its own position to fourth_i apparatus of 2904_i and fourth i apparatus of 2904_i may determine the "distance between first apparatus 1201 and fourth i apparatus of 2904_i" from the information on its own position and the information on the position of first apparatus 1201.

An example when the direction-based triangulation whose examples are the third method and the fourth method described in Embodiment 1 is used will be described.

As in FIG. 52, the first apparatus in FIG. 51 selects fourth_1 apparatus of 2904_1 as the apparatus that operates for sensing of target 1203 (that senses the target) (5201).

Note that, when fourth i apparatus of 2904_i which is requested to perform the estimation of the direction (of arrival) with target 1203 is determined (in advance), "SELECT FOURTH_i APPARATUS OF 2904_i FOR SENSING OF TARGET (THAT SENSES TARGET) 5201" may not be performed.

First apparatus 1201 transmits information on a request for "estimation of a direction (of arrival) with target 1203" to third apparatus 2903 (5202).

Third apparatus 2903 receives the information on the request for "estimation of the direction (of arrival) with target 1203", and transmits the information on the request for "estimation of the direction (of arrival) with target 1203" to fourth _1 apparatus of 2904_1 (5221).

Fourth_1 apparatus of 2904_1 receives the information on the request for "estimation of the direction (of arrival) with target 1203", and responds "whether fourth_1 apparatus of 2904_1 accepts the request" (5211). Note that, in the example here, a description will be given on the assumption that fourth_1 apparatus of 2904_1 "accepts the request".

Third apparatus 2903 receives information on the response to the request. Then, third apparatus 2903 transmits the information on the response to the request to first apparatus 1201 (5222).

First apparatus 1201 transmits a signal for performing sensing (5203).

Fourth_1 apparatus of 2904_1 receives the signal for performing sensing transmitted by first apparatus 1201, and obtains an estimated value of a "direction (of arrival) of fourth_1 apparatus of 2904_1 and target 1203" (5212).

Fourth_1 apparatus of 2904_1 transmits information on the "direction (of arrival) of fourth_1 apparatus of 2904_1 and target 1203" and feedback information to third apparatus 2903 (5213).

Third apparatus 2903 receives the information on the "direction (of arrival) of fourth_1 apparatus of 2904_1 and target 1203" and the feedback information, and transmits the information on the "direction (of arrival) of fourth_1 apparatus of 2904_1 and target 1203" and the feedback information to first apparatus 1201 (5223).

First apparatus 1201 obtains the information on the "direction (of arrival) of fourth_1 apparatus of 2904_1 and target 1203" and the feedback information, performs triangulation by using the "distance between first apparatus 1201 and fourth_i apparatus of 2904_i", the "direction (of arrival) of first apparatus 1201 and target 1203", and the "direction (of arrival) of fourth_1 apparatus of 2904_1 and target 1203", and estimates the position of target 1203, for example (5204).

Then, first apparatus 1201 transmits information on the "position of target 1203" to third apparatus 2903 (5205). Third apparatus 2903 receives the information on the "position of target 1203" and transmits the information on the "position of target 1203" to fourth _1 apparatus of2904_1 (5224).

Note that, in a case where first apparatus 1201 and fourth_i apparatus of 2904_i do not need to share the information on the "position of target 1203", first apparatus 1201 may not transmit the information on the "position of target 1203" to third apparatus 2903.

By performing as described above, it is possible to realize the distance-based triangulation described in Embodiment 1. Thus, it is possible to obtain the effect of being capable of specifying the position of a target.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

Operation examples of 5203, 5212, 5213, and 5204 in FIG. 52 will be described. In FIG. 51, fourth_1 apparatus of 2904_1 can estimate the angle formed by the "line segment formed by fourth_1 apparatus of 2904_1 and first apparatus 1201" and the "line segment formed by fourth_1 apparatus of 2904_1 and target 1203" in FIG. 52 by receiving a signal for sensing transmitted by first apparatus 1201 to perform direction(-of-arrival) estimation.

As an example, triangulation can be realized when the angle formed by the "line segment formed by first apparatus 1201 and fourth_1 apparatus of 2904_1" and the "line segment formed by first apparatus 1201 and target 1203" can be estimated. Hereinafter, a method of estimating the angle formed by the "line segment formed by first apparatus 1201 and fourth_1 apparatus of 2904_1" and the "line segment formed by first apparatus 1201 and target 1203" will be described.

FIG. 24 illustrates an example of a configuration of first apparatus 1201 (and fourth_1 apparatus of 2904_1 and fourth_i apparatus of 2904_i) in FIG. 51. In FIG. 24, parts which operate in the same manner as in FIG. 21 are denoted with the same numbers, and descriptions thereof will be omitted.

Note that, a description will be given with an example in which first apparatus 1201 has the configuration in FIG. 24. Further, although the configuration in FIG. 24 is related to transmission and reception in the fourth frequency (band) and FIG. 24 does not describe a configuration related to transmission and reception in the third frequency (band), first apparatus 1201 (and fourth_1 apparatus of 2904_1) may include apparatuses related to transmission and reception in the third frequency (band).

As illustrated in FIG. 24, it is assumed that first apparatus 1201 includes transmission antennas 2402_1 to 2402_L. Note that, it is assumed that L is an integer larger than or equal to 1.

FIG. 25 illustrates a configuration example related to transmission antenna 2402_i (where i is an integer larger than or equal to 1 and smaller than or equal to L).

As illustrated in FIG. 25, it is assumed that transmission antenna 2402_i is formed of four antennas as in, for example, antennas 2504_1, 2504_2, 2504_3, and 2405_4. Although an example in which transmission antenna 2402_i is formed of four antennas has been indicated here, the number of antennas is not limited to this example as long as transmission antenna 2402_i is formed of two or more antennas.

Processor 2502 inputs signal 2501 (corresponding to signal 2401_i in FIG. 24) and control signal 2500 (corresponding to control signal 2100 in FIG. 24). In a case where control signal 2500 indicates that "a signal for sensing is transmitted", processor 2502 performs transmission directivity control processing on signal 2501 and outputs signal 2503_i after the transmission directivity control processing. Note that, i is an integer larger than or equal to 1 and smaller than or equal to 4. Further, signal 2503_i after the transmission directivity control processing is outputted as a radio wave from antenna 2504_i.

A specific configuration example of a signal for sensing to be transmitted by first apparatus 1201 will be described.

FIG. 26 illustrates an example of frame of signal for sensing 2601 (in the fourth frequency (band)) to be transmitted by first apparatus 1201.

It is assumed that frame of signal for sensing 2601 is formed of, for example, "SIGNAL FOR SENSING TO BE TRANSMITTED BY USING FIRST ANTENNA 2611_1", "SIGNAL FOR SENSING TO BE TRANSMITTED BY USING SECOND ANTENNA 2611_2", ..., "SIGNAL FOR SENSING TO BE TRANSMITTED BY USING L-TH ANTENNA 2611_L".

"SIGNAL FOR SENSING TO BE TRANSMITTED BY USING FIRST ANTENNA 2611_1" is a signal to be transmitted from transmission antenna 2402_1 of first apparatus 1201.

"SIGNAL FOR SENSING TO BE TRANSMITTED BY USING L-TH ANTENNA 2611_L" is a signal to transmitted from transmission antenna 2402_L of first apparatus 1201.

That is, SIGNAL FOR SENSING TO BE TRANSMITTED BY USING i-TH ANTENNA 2611_i is a signal to be transmitted from transmission antenna 2402_i of first apparatus 1201. Note that, i is an integer larger than or equal to 1 and smaller than or equal to L.

FIG. 27 illustrates an example of a configuration of SIGNAL FOR SENSING TO BE TRANSMITTED BY USING i-TH ANTENNA 2611_i in FIG. 26.

As illustrated in FIG. 27, it is assumed that SIGNAL FOR SENSING TO BE TRANSMITTED BY USING i-TH ANTENNA 2611_i is formed of "SIGNAL FOR

SENSING TO BE TRANSMITTED BY USING i-TH ANTENNA AND FIRST PARAMETER 2701_1", "SIGNAL FOR SENSING TO BE TRANSMITTED BY USING i-TH ANTENNA AND SECOND PARAMETER 2701_2", ..., "SIGNAL FOR SENSING TO BE TRANSMITTED BY USING i-TH ANTENNA AND z-TH PARAMETER 2701_z". Note that, it is assumed that z is "an integer larger than or equal to 1" or "an integer larger than or equal to 2".

In transmission antenna 2402_i in FIG. 24 of first apparatus 1201, processor 2502 in FIG. 25 performs transmission directivity control by using the first parameter and generates "SIGNAL FOR SENSING TO BE TRANSMITTED BY USING i-TH ANTENNA AND FIRST PARAMETER 2701_1", and "SIGNAL FOR SENSING TO BE TRANSMITTED BY USING i-TH ANTENNA AND FIRST PARAMETER 2701_1" is transmitted by using antennas 2504_1 to 2504_4 in FIG. 25. Note that, it is assumed that "SIGNAL FOR SENSING TO BE TRANSMITTED BY USING i-TH ANTENNA AND FIRST PARAMETER 2701_1" is formed of four signals of signals 2503_1, 2503_2, 2503_3, and 2503_4.

In transmission antenna 2402_i in FIG. 24 of first apparatus 1201, processor 2502 in FIG. 25 performs transmission directivity control by using the second parameter and generates "SIGNAL FOR SENSING TO BE TRANSMITTED BY USING i-TH ANTENNA AND SECOND PARAMETER 2701_2", and "SIGNAL FOR SENSING TO BE TRANSMITTED BY USING i-TH ANTENNA AND SECOND PARAMETER 2701_2" is transmitted by using antennas 2504_1 to 2504_4 in FIG. 25. Note that, it is assumed that "SIGNAL FOR SENSING TO BE TRANSMITTED BY USING i-TH ANTENNA AND SECOND PARAMETER 2701_2" is formed of four signals of signals 2503_1, 2503_2, 2503_3, and 2503_4.

In transmission antenna 2402_i in FIG. 24 of first apparatus 1201, processor 2502 in FIG. 25 performs transmission directivity control by using the z-th parameter and generates "SIGNAL FOR SENSING TO BE TRANSMITTED BY USING i-TH ANTENNA AND z-TH PARAMETER 2701_z", and "SIGNAL FOR SENSING TO BE TRANSMITTED BY USING i-TH ANTENNA AND z-TH PARAMETER 2701_z" is transmitted by using antennas 2504_1 to 2504_4 in FIG. 25. Note that, it is assumed that "SIGNAL FOR SENSING TO BE TRANSMITTED BY USING i-TH ANTENNA AND z-TH PARAMETER 2701_z" is formed of four signals of signals 2503_1, 2503_2, 2503_3, and 2503_4.

FIG. 28 illustrates a configuration example of "SIGNAL FOR SENSING TO BE TRANSMITTED BY USING i-TH ANTENNA AND j-TH PARAMETER 2701_j" in FIG. 27. Note that, j is an integer larger than or equal to 1 and smaller than or equal to z.

As illustrated in FIG. 28, it is assumed that "SIGNAL FOR SENSING TO BE TRANSMITTED BY USING i-TH ANTENNA AND j-TH PARAMETER 2701_j" includes, for example, "ANTENNA INFORMATION 2801" and "PARAMETER INFORMATION 2802". Note that, it is assumed that "SIGNAL FOR SENSING TO BE TRANSMITTED BY USING i-TH ANTENNA AND j-TH PARAMETER 2701_j" includes, albeit not illustrated in FIG. 28, a signal for performing sensing.

It is assumed that "ANTENNA INFORMATION 2801" includes information that allows the use of "the i-th antenna" to be identified (for example, information on antenna ID (identification) or the like). Accordingly, fourth_1 apparatus of 2904_1 that has been able to receive "SIGNAL FOR SENSING TO BE TRANSMITTED BY USING i-TH ANTENNA AND j-TH PARAMETER 2701_j" can obtain information on an antenna used when first apparatus 1201 transmits a signal for sensing.

Further, it is assumed that "PARAMETER INFORMATION 2802" includes information that allows a parameter used for transmission directivity control to be identified (for example, information on parameter ID (identification) or the like). Accordingly, fourth_1 apparatus of 2904_1 that has been able to receive "SIGNAL FOR SENSING TO BE TRANSMITTED BY USING i-TH ANTENNA AND j-TH PARAMETER 2701_j" can obtain information on a parameter for antenna transmission directivity control used when first apparatus 1201 transmits a signal for sensing.

Note that, first apparatus 1201 and fourth_1 apparatus of 2904_1 may transmit reference signal 2899 (for sensing) in FIG. 28 together with the information described above. Note that, reference signal 2899 is transmitted by using the i-th antenna and the j-th parameter.

In 5203 and 5212 in FIG. 52, fourth_1 apparatus of 2904_1 can receive, of frame for sensing 2601 transmitted by first apparatus 1201, one signal of "SIGNAL FOR SENSING TO BE TRANSMITTED BY USING i-TH ANTENNA AND j-TH PARAMETER 2701_j". Then fourth_1 apparatus of 2904_1 sets, as feedback information, "ANTENNA INFORMATION 2801" and "PARAMETER INFORMATION 2802" of "SIGNAL FOR SENSING TO BE TRANSMITTED BY USING i-TH ANTENNA AND j-TH PARAMETER 2701_j" which fourth_1 apparatus of 2904_1 has been able to receive, and transmits this feedback information to first apparatus 1201 via third apparatus 2903.

First apparatus 1201 obtains this feedback information, and can know the transmission directivity, that is, the direction, of the signal, which fourth_1 apparatus of 2904_1 has been able to receive, that is, can estimate the angle formed by the "line segment formed by first apparatus 1201 and fourth_1 apparatus of 2904_1" and the "line segment formed by first apparatus 1201 and target (object) 1203" in FIG. 51.

Accordingly, fourth_1 apparatus of 2904_1 has obtained "the angle formed by the `line segment formed by fourth_1 apparatus of 2904_1 and first apparatus 1201' and the `line segment formed by fourth_1 apparatus of 2904_1 and target 1203‴, "the angle formed by the `line segment formed by first apparatus 1201 and fourth_1 apparatus of 2904_1' and the `line segment formed by first apparatus 1201 and target (object) 1203''', and the "distance between first apparatus 1201 and fourth_1 apparatus of 2904_1" in FIG. 51, and therefore can estimate the position of target (object) 1203.

Note that, although "ANTENNA INFORMATION 2801" and "PARAMETER INFORMATION 2802" have been described separately in FIG. 28, information may be generated without making a distinction therebetween.

For example, an ID is given with ID 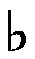 1 in the case of "the first antenna and the first parameter", ID b2 in the case of "the first antenna and the second parameter", ID b3 in the case of "the second antenna and the first parameter", ID b4 in the case of "the second antenna and the second parameter", ....

Then, for example, first apparatus 1201 transmits a "signal for sensing to be transmitted by using the first antenna and the first parameter" such that the "signal for sensing to be transmitted by using the first antenna and the first parameter" includes information on ID 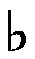 1.

First apparatus 1201 transmits a "signal for sensing to be transmitted by using the first antenna and the second parameter" such that the "signal for sensing to be transmitted by using the first antenna and the second parameter" includes information on ID b2.

First apparatus 1201 transmits a "signal for sensing to be transmitted by using the second antenna and the first parameter" such that the "signal for sensing to be transmitted by using the second antenna and the first parameter" includes information on ID b3.

First apparatus 1201 transmits a "signal for sensing to be transmitted by using the second antenna and the second parameter" such that the "signal for sensing to be transmitted by using the second antenna and the second parameter" includes information on ID b4.

Then, fourth_1 apparatus of 2904_1 sets, as feedback information, ID information (for example, ID 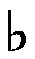 1, ID 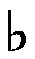 2, ...) of "SIGNAL FOR SENSING TO BE TRANSMITTED BY USING i-TH ANTENNA AND j-TH PARAMETER 2701_j" which fourth_1 apparatus of 2904_1 has been able to receive, and transmits this feedback information to first apparatus 1201 via third apparatus 2903.

First apparatus 1201 obtains this feedback information, and can know the transmission directivity, that is, the direction, of the signal, which fourth_1 apparatus of 2904_1 has been able to receive, that is, can estimate the angle formed by the "line segment formed by first apparatus 1201 and fourth_1 apparatus of 2904_1" and the "line segment formed by first apparatus 1201 and target (object) 1203".

Accordingly, fourth_1 apparatus of 2904_1 has obtained "the angle formed by the `line segment formed by fourth_1 apparatus of 2904_1 and first apparatus 1201' and the `line segment formed by fourth_1 apparatus of 2904_1 and target 1203‴, "the angle formed by the `line segment formed by first apparatus 1201 and fourth_1 apparatus of 2904_1' and the `line segment formed by first apparatus 1201 and target (object) 1203''', and the "distance between first apparatus 1201 and fourth_1 apparatus of 2904_1" in FIG. 51, and therefore can estimate the position of target (object) 1203.

Another example of operations in 5203, 5212, 5213, and 5204 in FIG. 52 will be described.

Fourth_1 apparatus of 2904_1 can estimate the angle formed by the "line segment formed by fourth_1 apparatus of 2904_1 and first apparatus 1201" and the "line segment formed by fourth_1 apparatus of 2904_1 and target 1203" in FIG. 51 by receiving a signal for sensing transmitted by first apparatus 1201 to perform direction(-of-arrival) estimation.

Further, triangulation can be performed by estimating the sum of the "line segment formed by first apparatus 1201 and target (object) 1203" and the "line segment formed by target (object) 1203 and fourth_1 apparatus of 2904_1" in FIG. 51.

Accordingly, as in 5203 of FIG. 52, first apparatus 1201 transmits a signal for sensing, fourth_1 apparatus of 2904_1 receives this signal for sensing (5212) and estimates the sum of the "line segment formed by first apparatus 1201 and target (object) 1203" and the "line segment formed by target (object) 1203 and fourth_1 apparatus of 2904_1", and fourth_1 apparatus of 2904_1 transmits information on this estimation value to first apparatus 1201. Further, fourth_1 apparatus of 2904_1 transmits a reception direction-of-arrival estimation result to first apparatus 1201. Note that, since the transmission method of the signal for sensing to be transmitted by first apparatus 1201 has been described with reference to FIGS. 24, 25, 26, 27, and 28, a description thereof will be omitted.

Then, first apparatus 1201 can estimate the position of target (object) 1203 based on the "distance between first apparatus 1201 and fourth_1 apparatus of 2904_1", "the sum of the `line segment formed by first apparatus 1201 and target (object) 1203' and the `line segment formed by target (object) 1203 and fourth_1 apparatus of 2904_1‴, and "the angle formed by the `line segment formed by fourth_1 apparatus of 2904_1 and first apparatus 1201' and the `line segment formed by fourth_1 apparatus of 2904_1 and target 1203'".

By performing as described above, it is possible to realize triangulation. Thus, it is possible to obtain the effect of being capable of specifying the position of a target.

Note that, when there are two apparatuses (named apparatuses #A and #B) in the present embodiment and apparatus #Aor #B transmits a radio wave and estimates a "distance between apparatuses #A and #B", apparatus #A or #B may estimate a direction of arrival and utilize an estimated value of the above direction of arrival to perform position estimation of a target with higher accuracy.

In the same manner, when apparatus #A transmits a radio wave and estimates a "distance between apparatus #A and a target", apparatus #A may estimate a direction of arrival and utilize an estimated value of the above direction of arrival to perform position estimation of the target with higher accuracy.

Further, when apparatus #A or #B transmits a radio wave and estimates a direction of arrival, apparatus #A or #B may estimate the "distance between apparatuses #A and #B" and utilize an estimated value of the above "distance between apparatuses #A and #B" to perform position estimation of a target with higher accuracy.

When apparatus #A transmits a radio wave and apparatus A estimates the direction of arrival of the radio wave obtained by the radio wave, for example, reflecting off a target, apparatus #A may estimate the "distance between apparatus #A and the target" and utilize the above "distance between apparatus #A and the target" to perform position estimation of the target with higher accuracy.

Note that, although FIGS. 32A, 32B, 32C, 32D, 32E, 32F, 32G, 32H, and 52 have been indicated as examples of the operation flows of the first apparatus, fourth i apparatus of 2904_i, and the third apparatus, they are merely examples, and the order of operations may be different from the orders indicated in the drawings.

Further, in the same manner as in Embodiment 4, first apparatus 1201 may change fourth i apparatus of 2904_i which is requested to perform sensing in order to increase the accuracy of position estimation of a target in the operation flow of FIG. 52.

For example, in a case where fourth i apparatus of 2904_i performs "TRANSMIT DIRECTION-OF-ARRIVAL ESTIMATION RESULT AND FEEDBACK INFORMATION 5213", first apparatus 1201 receives the result and the feedback information, and determines, as described in Embodiment 4, that position estimation of a target may not be obtained with high accuracy, first apparatus 1201 may change fourth_i apparatus of 2904_i which is requested to perform sensing.

Further, in a case where first apparatus 1201 performs position estimation of a target (5204) and determines that the position estimation of the target has not been obtained with high accuracy, first apparatus 1201 may request another fourth_i apparatus of 2904_i to perform sensing.

### (Embodiment 6)

In the present embodiment, a variation of Embodiments 2 and 3 will be described. Note that, in the present embodiment, a description will be made by using the terms of the first apparatus and the base station as described in Embodiments 2 and 3, but it is assumed that the first apparatus is the base station.

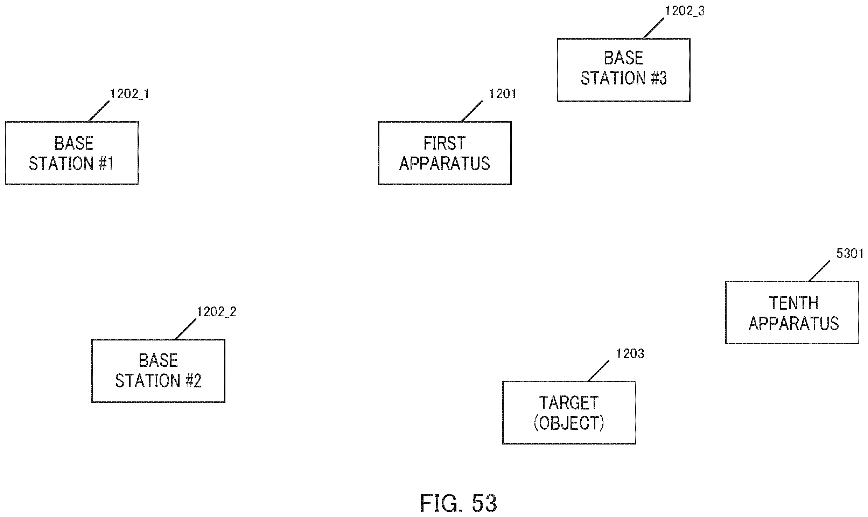

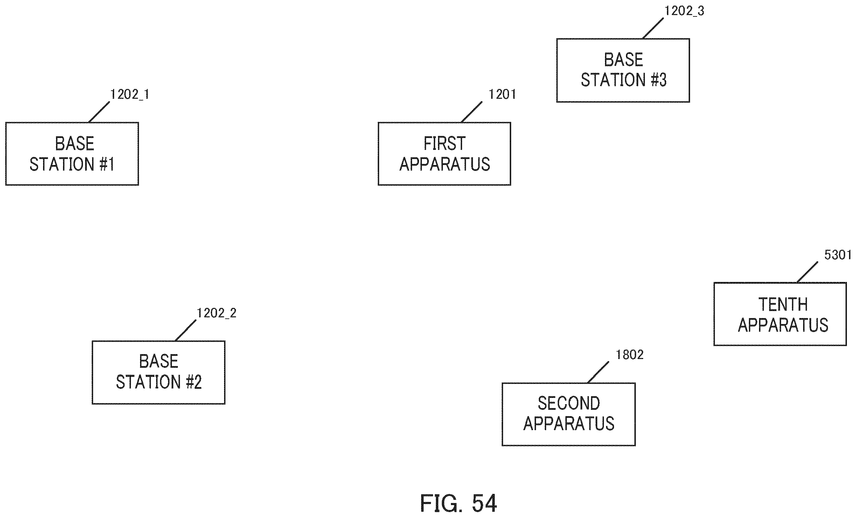

FIGS. 53 and 54 illustrate examples of the "sensing system" or "sensing and communication system" in the present embodiment.

In FIG. 53, first apparatus 1201 and base station #2 of 1202_2 perform sensing of a target as described in Embodiments 2 and 3. Since the sensing-related operation this time has been described in detail in Embodiments 2 and 3, a description thereof will be omitted in the present embodiment.

It is assumed that tenth apparatus 5301 in FIG. 53 is, for example, a terminal, and that first apparatus 1201 and the base stations perform sensing based on an instruction by tenth apparatus 5301. Note that, tenth apparatus 5301 has been described as a terminal, but is not limited thereto.

In FIG. 54, first apparatus 1201 and base station #2 of 1202_2 perform sensing of second apparatus 1802 as described in Embodiments 2 and 3. Since the sensing-related operation this time has been described in detail in Embodiments 2 and 3, a description thereof will be omitted in the present embodiment.

It is assumed that tenth apparatus 5301 in FIG. 54 is, for example, a terminal, and that first apparatus 1201 and the base stations perform sensing based on an instruction by tenth apparatus 5301. Note that, tenth apparatus 5301 has been described as a terminal, but is not limited thereto.

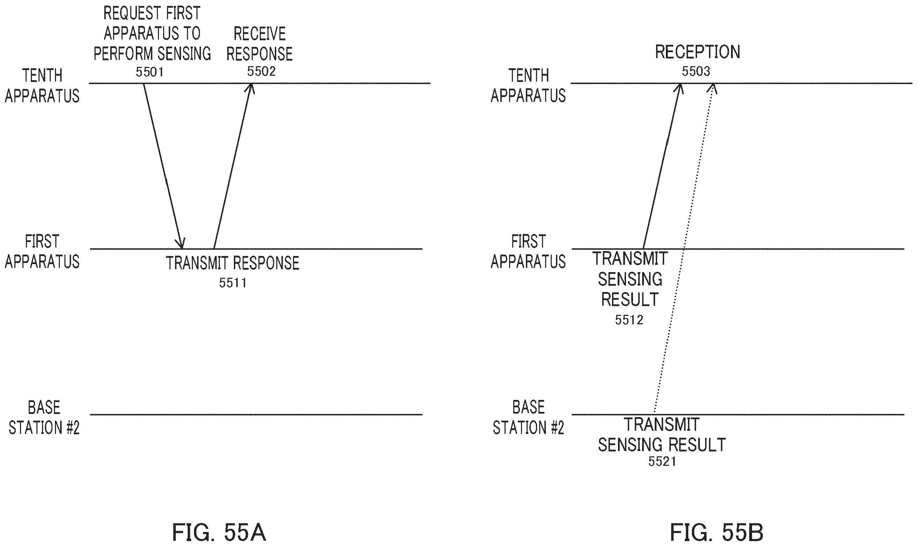

FIGS. 55A and 55B illustrate operation examples when first apparatus 1201 and a base station perform sensing based on an instruction by tenth apparatus 5301 in FIG. 53 or 54.

As in FIG. 55A, tenth apparatus 5301 in FIG. 53 or 54 transmits information on a request for sensing of "target (object) 1203 or second apparatus 1802" (for example, an operation related to detection of the position of target (object) 1203 or second apparatus 1802) to first apparatus 1201 (5501).

First apparatus 1201 receives this information, and transmits a response (5511). Note that, it is assumed here that first apparatus 1201 performs sensing of "target (object 1203) or second apparatus 1802" (for example, an operation related to detection of the position of target (object 1203) or second apparatus 1802).

Then, it is assumed that first apparatus 1201 and base station #2 of 1202_2 perform the sensing described in Embodiments 2 and 3.

Tenth apparatus 5301 receives a response to the request for sensing (5502).

### Case where First Apparatus Demands Sensing Result:

As in FIG. 55B, first apparatus 1201 transmits, for example, information on a sensing result obtained by performing triangulation to tenth apparatus 5301 (5512).

Tenth apparatus 5301 receives this information on the sensing result (5503).

### Case where Base Station #2 Demands Sensing Result:

As in FIG. 55B, base station #2 of 1202_2 transmits, for example, information on a sensing result obtained by performing triangulation to tenth apparatus 5301 (5521).

Tenth apparatus 5301 receives this information on the sensing result (5503).

Note that, FIG. 55B may not be performed if not necessary.

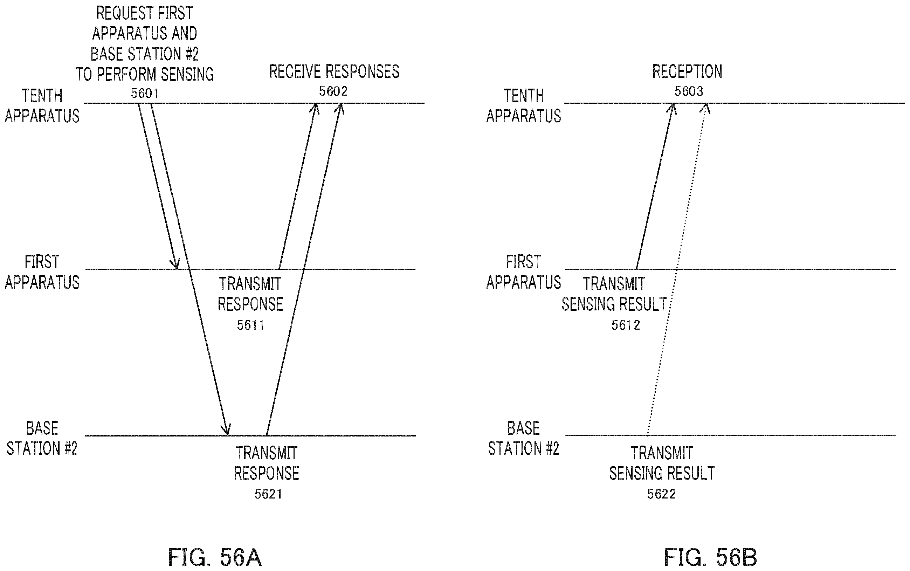

Next, FIGS. 56Aand 56B that differ from FIGS. 55Aand 55B will be described.

FIGS. 56A and 56B illustrate operation examples when first apparatus 1201 and a base station perform sensing based on an instruction by tenth apparatus 5301 in FIG. 53 or 54.

As in FIG. 56A, tenth apparatus 5301 in FIG. 53 or 54 transmits information on a request for sensing of "target (object) 1203 or second apparatus 1802" (for example, detection of the position of target (object) 1203 or second apparatus 1802) to first apparatus 1201 and base station #2 of 1202_2 (5601).

First apparatus 1201 receives the information on the request for sensing of "target (object) 1203 or second apparatus 1802" (for example, detection of the position of target (object) 1203 or second apparatus 1802), and transmits a response (5611).

Note that, it is assumed here that first apparatus 1201 performs sensing of "target (object 1203) or second apparatus 1802" (for example, an operation related to detection of the position of target (object 1203) or second apparatus 1802).

Further, base station #2 of 1202_2 receives the information on the request for sensing of "target (object) 1203 or second apparatus 1802" (for example, detection of the position of target (object) 1203 or second apparatus 1802), and transmits a response (5621).

Note that, it is assumed here that base station #2 of 1202_2 performs sensing of "target (object 1203) or second apparatus 1802" (for example, an operation related to detection of the position of target (object 1203) or second apparatus 1802).

Then, it is assumed that first apparatus 1201 and base station #2 of 1202_2 perform the sensing described in Embodiments 2 and 3.

Tenth apparatus 5301 receives responses to the request for sensing (5602).

### Case where First Apparatus Demands Sensing Result:

As in FIG. 56B, first apparatus 1201 transmits, for example, information on a sensing result obtained by performing triangulation to tenth apparatus 5301 (5612).

Tenth apparatus 5301 receives this information on the sensing result (5603).

### Case where Base Station #2 Demands Sensing Result:

As in FIG. 56B, base station #2 of 1202_2 transmits, for example, information on a sensing result obtained by performing triangulation to tenth apparatus 5301 (5622).

Tenth apparatus 5301 receives this information on the sensing result (5603).

Note that, FIG. 55B may not be performed if not necessary.

By performing as described above, it is possible to realize the distance-based triangulation described in Embodiment 1. Thus, it is possible to obtain the effect of being capable of specifying the position of a target.

Note that, although FIGS. 55A, 55B, 56A, and 56B have been indicated as examples of the operation flows of the tenth apparatus, the first apparatus, and the base station, they are merely examples, and the order of operations may be different from the orders indicated in the drawings.

### (Embodiment 7)

In the present embodiment, a variation of Embodiments 4 and 5 will be described. Note that, in the present embodiment, a description will be made by using the terms of the first apparatus and the base station as described in Embodiments 4 and 4, but it is assumed that the first apparatus is the base station.

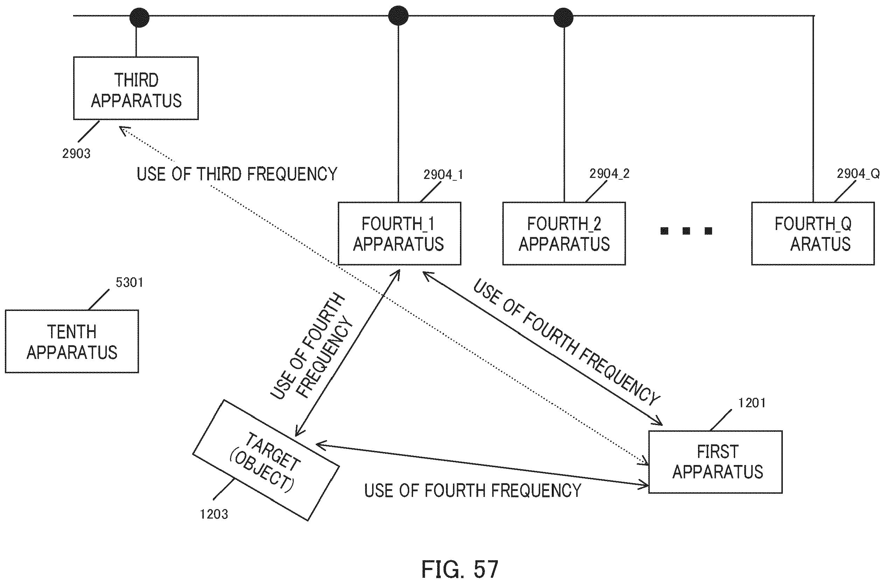

FIGS. 57, 58, and 59 illustrate examples of the "sensing system" or "sensing and communication system" in the present embodiment.

In FIG. 57, first apparatus 1201 and fourth_i apparatus of 2904_i perform sensing of a target as described in Embodiments 4 and 5. Since the sensing-related operation this time has been described in detail in Embodiments 4 and 5, a description thereof will be omitted in the present embodiment.

It is assumed that tenth apparatus 5301 in FIG. 57 is, for example, a terminal, and that first apparatus 1201 and fourth i apparatus of 2904_i perform sensing based on an instruction by tenth apparatus 5301. Note that, tenth apparatus 5301 has been described as a terminal, but is not limited thereto.

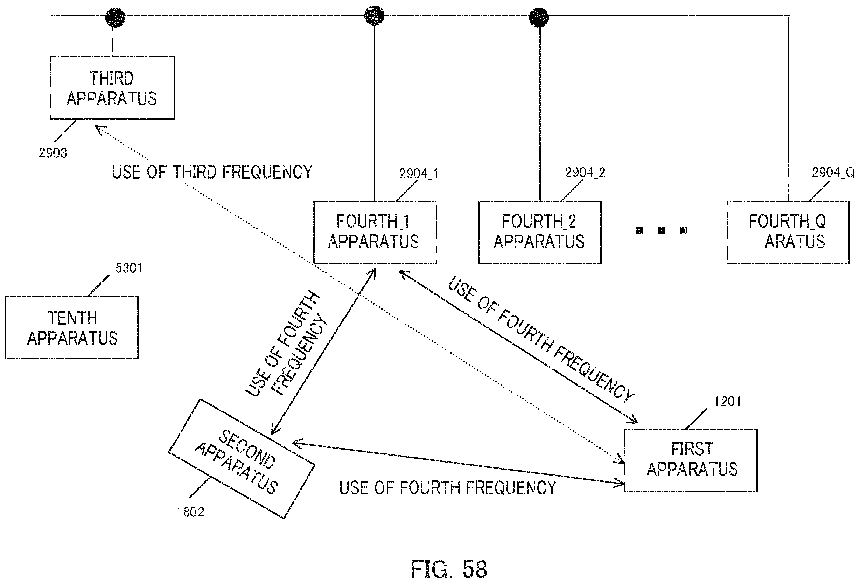

In FIG. 58, first apparatus 1201 and fourth_i apparatus of 2904_i perform sensing of second apparatus 1802 as described in Embodiments 4 and 5. Since the sensing-related operation this time has been described in detail in Embodiments 4 and 5, a description thereof will be omitted in the present embodiment.

It is assumed that tenth apparatus 5301 in FIG. 58 is, for example, a terminal, and that first apparatus 1201 and fourth i apparatus of 2904_i perform sensing based on an instruction by tenth apparatus 5301. Note that, tenth apparatus 5301 has been described as a terminal, but is not limited thereto.

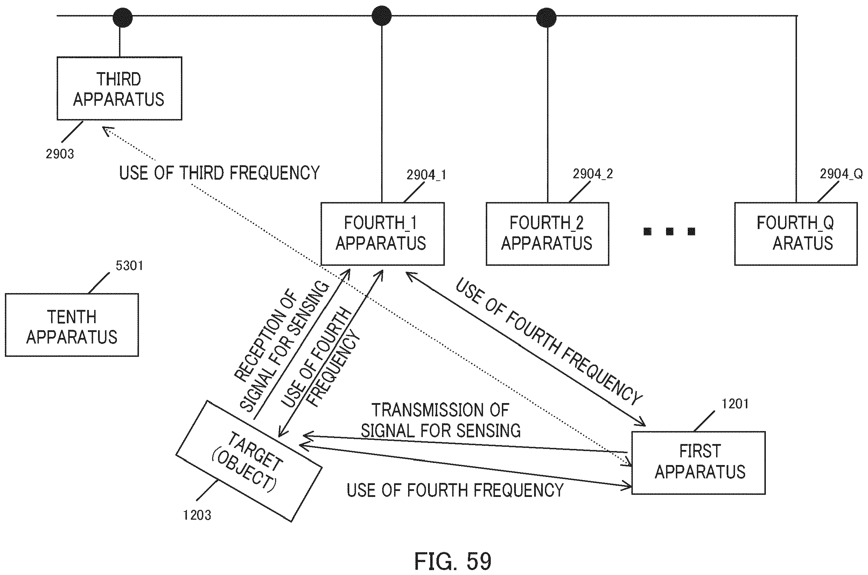

In FIG. 59, first apparatus 1201 and fourth _i apparatus of 2904_i perform sensing of a target as described in Embodiments 4 and 5. Since the sensing-related operation this time has been described in detail in Embodiments 4 and 5, a description thereof will be omitted in the present embodiment.

It is assumed that tenth apparatus 5301 in FIG. 59 is, for example, a terminal, and that first apparatus 1201 and fourth i apparatus of 2904_i perform sensing based on an instruction by tenth apparatus 5301. Note that, tenth apparatus 5301 has been described as a terminal, but is not limited thereto.

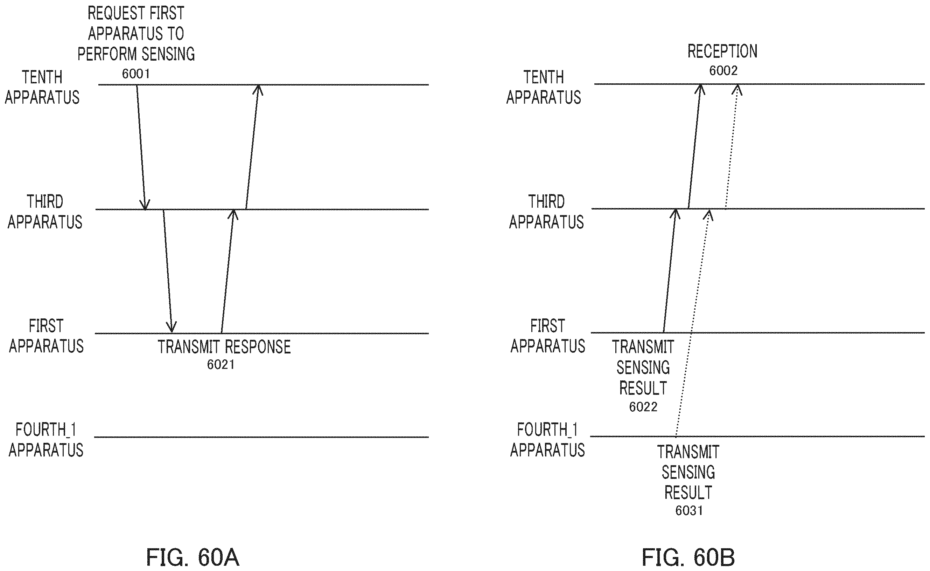

FIGS. 60A and 60B illustrate operation examples when first apparatus 1201 and fourth_i apparatus of 2904_i perform sensing based on an instruction by tenth apparatus 5301 in FIG. 57, 58 or 59.

As in FIG. 60A, for transmitting information on a request for sensing of "target (object) 1203 or second apparatus 1802" (for example, detection of the position of target (object) 1203 or second apparatus 1802) to first apparatus 1201, tenth apparatus 5301 in FIG. 57, 58 or 59 transmits information on a request for sensing of "target (object) 1203 or second apparatus 1802" (for example, an operation related to detection of the position of target (object) 1203 or second apparatus 1802) to third apparatus 2903 for first apparatus 1201 (6001).

Third apparatus 2903 receives this information on the request for sensing of "target (object) 1203 or second apparatus 1802" (for example, an operation related to detection of the position of target (object) 1203 or second apparatus 1802), and transmits the information on the request for sensing of "target (object) 1203 or second apparatus 1802" (for example, an operation related to detection of the position of target (object) 1203 or second apparatus 1802) to first apparatus 1201.

First apparatus 1201 receives this information, and transmits a response (6021).

Note that, it is assumed here that first apparatus 1201 performs sensing of "target (object 1203) or second apparatus 1802" (for example, an operation related to detection of the position of target (object 1203) or second apparatus 1802).

Then, it is assumed that first apparatus 1201 and fourth_1 apparatus of 2904_1 perform the sensing described in Embodiments 4 and 5.

### Case where First Apparatus Demands Sensing Result:

As in FIG. 60B, first apparatus 1201 transmits, for example, information on a sensing result obtained by performing triangulation to third apparatus 2903 (6022).

Third apparatus 2903 receives this "information on the sensing result obtained by performing triangulation", and transmits the "information on the sensing result obtained by performing triangulation" to tenth apparatus 5301.

Tenth apparatus 5301 receives this information on the sensing result (6002).

### Case where Fourth_i Apparatus of 2904_i Demands Sensing Result:

As in FIG. 60B, fourth_1 apparatus of 2904_1 transmits, for example, information on a sensing result obtained by performing triangulation to third apparatus 2903 (6031).

Third apparatus 2903 receives this "information on the sensing result obtained by performing triangulation", and transmits the "information on the sensing result obtained by performing triangulation" to tenth apparatus 5301.

Tenth apparatus 5301 receives this information on the sensing result (6002).

Note that, FIG. 60B may not be performed if not necessary.

Next, an exemplary embodiment that differs from those in FIGS. 60A and 60B will be described.

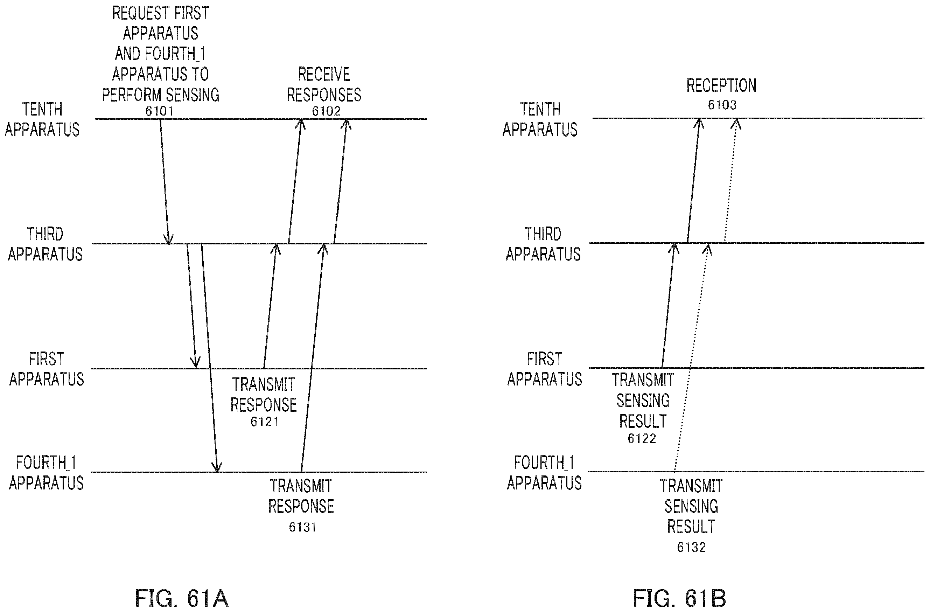

FIGS. 61A and 61B illustrate operation examples when first apparatus 1201 and fourth_i apparatus of 2904_i perform sensing based on an instruction by tenth apparatus 5301 in FIG. 57, 58 or 59.

As in FIG. 61A, for transmitting information on a request for sensing of "target (object) 1203 or second apparatus 1802" (for example, detection of the position of target (object) 1203 or second apparatus 1802) to first apparatus 1201 and fourth_1 apparatus of 2904_1, tenth apparatus 5301 in FIG. 57, 58 or 59 transmits information on a request for sensing of "target (object) 1203 or second apparatus 1802" (for example, an operation related to detection of the position of target (object) 1203 or second apparatus 1802) to third apparatus 2903 for first apparatus 1201 (6101).

Third apparatus 2903 receives this information on the request for sensing of "target (object) 1203 or second apparatus 1802" (for example, an operation related to detection of the position of target (object) 1203 or second apparatus 1802), and transmits the information on the request for sensing of "target (object) 1203 or second apparatus 1802" (for example, an operation related to detection of the position of target (object) 1203 or second apparatus 1802) to first apparatus 1201 and fourth_1 apparatus of 2904_1.

First apparatus 1201 receives this information, and transmits a response to third apparatus 2903 (6121).

Note that, it is assumed here that first apparatus 1201 performs sensing of "target (object 1203) or second apparatus 1802" (for example, an operation related to detection of the position of target (object 1203) or second apparatus 1802).

Fourth_1 apparatus of 2904_1 receives this information, and transmits a response to third apparatus 2903 (6131). Note that, it is assumed here that fourth_1 apparatus of 2904_1 performs sensing of "target (object 1203) or second apparatus 1802" (for example, an operation related to detection of the position of target (object 1203) or second apparatus 1802).

Third apparatus 2903 receives the response transmitted by first apparatus 1201 and the response transmitted by fourth_1 apparatus of 2904_1, and transmits these responses to tenth apparatus 5301. Tenth apparatus 5301 receives these responses (6102).

Then, it is assumed that first apparatus 1201 and fourth_1 apparatus of 2904_1 perform the sensing described in Embodiments 4 and 5.

### Case where First Apparatus Demands Sensing Result:

As in FIG. 61B, first apparatus 1201 transmits, for example, information on a sensing result obtained by performing triangulation to third apparatus 2903 (6122).

Third apparatus 2903 receives this "information on the sensing result obtained by performing triangulation", and transmits the "information on the sensing result obtained by performing triangulation" to tenth apparatus 5301.

Tenth apparatus 5301 receives this information on the sensing result (6103).

### Case where Fourth_1 Apparatus of 2904_1 Demands Sensing Result:

As in FIG. 61B, fourth_1 apparatus of 2904_1 transmits, for example, information on a sensing result obtained by performing triangulation to third apparatus 2903 (6132).

Third apparatus 2903 receives this "information on the sensing result obtained by performing triangulation", and transmits the "information on the sensing result obtained by performing triangulation" to tenth apparatus 5301.

Tenth apparatus 5301 receives this information on the sensing result (6103).

Note that, FIG. 61B may not be performed if not necessary.

By performing as described above, it is possible to realize the distance-based triangulation described in Embodiment 1. Thus, it is possible to obtain the effect of being capable of specifying the position of a target.

Further, it is possible to obtain the effect that first apparatus 1201 can transmit information properly by communicating with fourth_1 apparatus of 2904_1 via third apparatus 2903, and further that highly-accurate sensing can be performed by fourth_1 apparatus of 2904_1 performing sensing. Note that, this effect is due to the relationship between the third frequency and the fourth frequency.

Note that, although FIGS. 60A, 60B, 61A, and 61B have been indicated as examples of the operation flows of the tenth apparatus, the first apparatus, and fourth_1 apparatus of 2904_1, they are merely examples, and the order of operations may be different from the orders indicated in the drawings.

### (Description of Supplements)

Although the embodiments have been described thus far, the embodiments may be combined. Further, the embodiments may also be combined with supplements described below.

The signal for sensing herein may be a signal using a multicarrier scheme such as OFDM or may be a signal using a single-carrier scheme. Further, the signal for sensing may also be a tone signal, an impulse signal, a bandlimited impulse signal, or the like.

Although position estimation of a target has been performed herein, the shape of the target, the materials that forms the target, the movement velocity of the target or the like may also be estimated.

The embodiments are merely exemplary. For example, even when "a modulation scheme, an error correction coding scheme (error correction code, code length, coding rate, and the like to be used), control information, and the like" are exemplified, the present disclosure can be implemented with the same configuration even in a case where other "modulation scheme, error correction coding scheme (error correction code, code length, coding rate, and the like to be used), control information, and the like" are applied.

Regarding the modulation scheme, the embodiments and other contents described herein can be implemented even when a modulation scheme other than the modulation scheme described herein is used. For example, amplitude phase shift keying (APSK) (for example, 16APSK, 64APSK, 128APSK, 256APSK, 1024APSK, 4096APSK, and the like), pulse amplitude modulation (PAM) (for example, 4PAM, 8PAM, 16PAM, 64PAM, 128PAM, 256PAM, 1024PAM, 4096PAM, and the like), phase shift keying (PSK) (for example, BPSK, QPSK, 8PSK, 16PSK, 64PSK, 128PSK, 256PSK, 1024PSK, 4096PSK, and the like), quadrature amplitude modulation (QAM) (for example, 4QAM, 8QAM, 16QAM, 64QAM, 128QAM, 256QAM, 1024QAM, 4096QAM, and the like), or the like may be applied, or uniform mapping or non-uniform mapping may be performed in each modulation scheme.

Further, the method of mapping 2, 4, 8, 16, 64, 128, 256, 1024, and the like of signal points on an I(in-phase)-Q(quadrature) plane (a modulation scheme including 2, 4, 8, 16, 64, 128, 256, 1024, and the like of signal points) is not limited to the signal point mapping method of the modulation scheme described herein.

It can be considered that the device including the first apparatus, the second apparatus, the third apparatus, the fourth i apparatus, and the tenth apparatus herein is a communication and broadcast device such as a broadcast station, a base station, an access point, a terminal, and a mobile phone, or a device such as a television, a radio, a personal computer, an eNB (eNodeB), a gNB (gNodeB), a repeater, a server, a home electric appliance, a smart phone, a tablet, a vehicle, an automobile, a ship, an airplane, a drone, a satellite, an electric bicycle, an electric bike, an electric kickboard, an electric kick scooter, a bicycle, a bike, a motorcycle, a kickboard, and a kick scooter.

Further, although the operations related to the base station have been described herein, the operations of the base station may be the operations of "a communication and broadcast device such as a broadcast station, an access point, a terminal, and a mobile phone, or a device, a communication apparatus or the like such as a television, a radio, a personal computer, an eNB (eNodeB), a gNB (gNodeB), a repeater, a server, a home electric appliance, a smart phone, a tablet, a vehicle, an automobile, a ship, an airplane, a drone, a satellite, an electric bicycle, an electric bike, an electric kickboard, an electric kick scooter, a bicycle, a bike, a motorcycle, a kickboard, and a kick scooter".

Although the operations related to the terminal have been described herein, the operations of the terminal may be the operations of "a communication and broadcast device such as a broadcast station, an access point, a base station, and a mobile phone, or a device, a communication apparatus or the like such as a television, a radio, a personal computer, an eNB (eNodeB), a gNB (gNodeB), a repeater, a server, a home electric appliance, a smart phone, a tablet, a vehicle, an automobile, a ship, an airplane, a drone, a satellite, an electric bicycle, an electric bike, an electric kickboard, an electric kick scooter, a bicycle, a bike, a motorcycle, a kickboard, and a kick scooter".

Further, it is also considered that the transmission apparatus and the reception apparatus in the present disclosure are devices having a sensing function and/or a communication function, and that the devices are configured to be connectable to an apparatus for executing an application of a television, a radio, a personal computer, a mobile phone, or the like, via a certain interface.

Note that, the present disclosure is not limited to the embodiments, and can be implemented by various modifications. For example, although the embodiments describe apparatuses, the present disclosure is not limited thereto, and a communication method of the apparatuses can also be implemented as software.

For example, a program for executing the communication method and the sensing method that are described above may be stored in a ROM in advance to cause a CPU to operate the program.

Further, a program for executing the communication method and the sensing method that are described above may be stored in a computer-readable storage medium, the program stored in the storage medium may be recorded in a RAM of a computer, and the computer may be caused to operate in accordance with the program.

Each configuration of the embodiments described above or the like may be realized as an LSI which is typically an integrated circuit that includes an input terminal and an output terminal. The LSIs may be individually formed as chips, or one chip may be formed so as to include the entire configuration or part of the configuration of each embodiment. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit or a general-purpose processor. An FPGA that can be programmed after the manufacture of the LSI or a reconfigurable processor in which the connections and the settings of circuit cells disposed inside the LSI can be reconfigured may be used. If future integrated circuit technology replaces LSIs as a result of the advancement of semiconductor technology or other derivative technology, the functional blocks could be integrated using the future integrated circuit technology. Biotechnology can also be applied.

Note that, the transmission method supported by the apparatuses described herein may be a multicarrier scheme such as OFDM or may be a single-carrier scheme. Further, the base station, the terminal, and the access point may support both a multicarrier scheme and a single-carrier scheme. At this time, there is a plurality of methods that generates a single-carrier-scheme modulated signal, and implementation is possible regardless of which method is used. Examples of the single-carrier scheme include "discrete Fourier transform (DFT)-spread orthogonal frequency division multiplexing (OFDM)", "trajectory constrained DFT-spread OFDM", "OFDM based single carrier (SC)", "single carrier (SC)-frequency division multiple access (FDMA)", and "guard interval DFT-spread OFDM".

At least one of the field programmable gate array (FPGA) and/or the central processing unit (CPU) may be configured such that all or some of software that needs to realize the communication method and/or the sensing method described herein can be downloaded by radio communication or wired communication. Further, at least one of the FPGA and/or the CPU may also be configured such that all or some of software for updating can be downloaded by radio communication or wired communication. Further, it may also be configured such that the digital signal processing described herein is performed by storing the downloaded software in a storage and operating at least one of the FPGA and/or the CPU based on the stored software.

At this time, radio connection or wired connection between a device including at least one of the FPGA and/or the CPU and a communication modem may be established, and the device and the communication modem may realize the communication method and/or the sensing method each described herein.

For example, the communication and/or sensing apparatuses of the apparatuses described herein may include at least one of the FPGA and/or the CPU, and may include an interface for obtaining software for operating at least one of the FPGA and/or the CPU from an external source. Further, the communication and/or sensing apparatuses may include a storage for storing software obtained from the external source, and realize the signal processing described herein by operating the FPGA and/or the CPU based on the stored software.

When the apparatuses described herein transmit a signal for communication, a data symbol or the like or transmit a signal for sensing, a multiple-input multiple-output (MIMO) transmission scheme for transmitting a plurality of modulated signals from a plurality of antennas may be used or one signal may be transmitted by using one or more antennas.

The communication of the apparatuses described herein is performed by, for example, carrier sense multiple access (CSMA), carrier sense multiple access with collision avoidance (CSMA/CA), time division duplex (TDD), time division multiplexing (TDM), frequency division duplex (FDD), or frequency division multiplexing (FDM). The communication between the gNB and the terminal is performed by, for example, TDD, TDM, FDD or FDM.

In the embodiments described above, the notation "... processor", "-er", "-or", and "-ar" used for each component may be replaced with another notation such as "... circuitry", "... device", "... unit" or "... module".

Although the embodiments have been described thus far with reference to the accompanying drawings, the present disclosure is not limited to the given examples. It is apparent that the person skilled in the art could arrive at various changes or modifications within the scope described in the claims. It should be understood that such changes or modifications also belong to the technical scope of the present disclosure. Further, the components in the embodiments may be arbitrarily combined without departing from the spirit of the present disclosure.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a field programmable gate array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication and/or a function of sensing, which is referred to as a communication apparatus. The communication apparatus may comprise a transceiver and processing/control circuitry. The transceiver may comprise and/or function as a receiver and a transmitter. The transceiver, as the transmitter and receiver, may include a radio frequency (RF) module including amplifiers, RF modulators/demodulators and the like, and one or more antennas. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus and the sensing apparatus are not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described herein. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Data whose examples include control information, data, and feedback information that are transmitted by the apparatuses such as the base station and the terminal herein may be include in, for example, a physical downlink shared channel (PDSCH), a physical uplink shared channel (PUSCH), a "synchronization signals (SS) block", a "physical broadcast channel (PBCH) block", an "SS/PBCH block", a "physical downlink control channel (PDCCH)", a "broadcast channel (BCH)", a "downlink shared channel (DL-SCH)", a "paging channel (PCH)", an "uplink shared channel (UL-SCH)", a "random access channel (RACH)", a "physical random access channel (PRACH)", a "physical uplink control channel (PUCCH)", and the like.

The communication of the apparatuses described herein may be performed by, for example, spatial division multiplexing (SDM). The communication between the gNB and the terminal may be performed by, for example, SDM.

### (Summary of the Present Disclosure)

A communication apparatus according to the present disclosure is a communication apparatus including:
a transmitter that transmits request information for requesting sensing of a target;
a receiver that receives result information indicating a sensing result from a first communication apparatus in which the sensing of the target has been performed in accordance with the request information; and
a controller that determines a state of the target based on the sensing result indicated in the result information and a sensing result of sensing of the target that has been performed in the communication apparatus.

In the communication apparatus according to the present disclosure, the controller may determine at least one of a position of the target, presence or absence of the target, an outer shape of the target, and/or movement of the target.

In the communication apparatus according to the present disclosure, the receiver may receive a response to the request information from the first communication apparatus and then receive the result information.

In the communication apparatus according to the present disclosure, the transmitter may transmit a determination result of a position of the target to the first communication apparatus.

In the communication apparatus according to the present disclosure, the receiver may receive capability information on sensing capability from the first communication apparatus.

In the communication apparatus according to the present disclosure, the controller may perform the sensing of the target by using an antenna port different from an antenna port that is used in data communication.

In the communication apparatus according to the present disclosure, the transmitter may transmit the request information to the first communication apparatus via a second communication apparatus, and the receiver may receive the result information via the second communication apparatus.

In the communication apparatus according to the present disclosure, a frequency used in communication with the first communication apparatus may be higher than a frequency used in communication with the second communication apparatus.

In the communication apparatus according to the present disclosure, the transmitter may transmit, by using beamforming, a signal used in the sensing, the receiver may receive directivity information on directivity of the beamforming from the first communication apparatus, and the controller may determine a direction of the target based on the directivity information.

A sensing method according to the present disclosure is a sensing method in a communication apparatus and includes: transmitting request information for requesting sensing of a target; receiving result information indicating a sensing result from a first communication apparatus in which the sensing of the target has been performed in accordance with the request information; and determining a state of the target based on the sensing result indicated in the result information and a sensing result of sensing of the target that has been performed in the communication apparatus.

The disclosure of Japanese Patent Application No. 2020-077688, filed on April 24, 2020, including the specification, drawings and abstract, is incorporated herein by reference in its entirety.

### Industrial Applicability

The present disclosure is useful for sensing of an object in a communication system.

### Reference Signs List

X100, X200, X300 Apparatus
X101, X201, X301 Transmission apparatus
X103_1 to X103_M, X104_1 to X104_M Antenna
X106, X206, X306 Reception apparatus
X108, X208, X308 Estimator
151 Terminal
152 Base station
1101 First apparatus
1102, 1802 Second apparatus
2903 Third apparatus
2904 Fourth apparatus
5301 Tenth apparatus
1202 Base station
1103, 1203 Target

## Claims

1. A communication apparatus, comprising:
a transmitter that transmits request information for requesting sensing of a target;
a receiver that receives result information indicating a sensing result from a first communication apparatus in which the sensing of the target has been performed in accordance with the request information; and
a controller that determines a state of the target based on the sensing result indicated in the result information and a sensing result of sensing of the target that has been performed in the communication apparatus.

2. The communication apparatus according to claim 1, wherein the controller determines at least one of a position of the target, presence or absence of the target, an outer shape of the target, and/or movement of the target.

3. The communication apparatus according to claim 1, wherein the receiver receives a response to the request information from the first communication apparatus and then receives the result information.

4. The communication apparatus according to claim 1, wherein the transmitter transmits a determination result of a position of the target to the first communication apparatus.

5. The communication apparatus according to claim 1, wherein the receiver receives capability information on sensing capability from the first communication apparatus.

6. The communication apparatus according to claim 1, wherein the controller performs the sensing of the target by using an antenna port different from an antenna port that is used in data communication.

7. The communication apparatus according to claim 1, wherein:
the transmitter transmits the request information to the first communication apparatus via a second communication apparatus, and
the receiver receives the result information via the second communication apparatus.

8. The communication apparatus according to claim 7, wherein a frequency used in communication with the first communication apparatus is higher than a frequency used in communication with the second communication apparatus.

9. The communication apparatus according to claim 1, wherein:
the transmitter transmits, by using beamforming, a signal used in the sensing,
the receiver receives directivity information on directivity of the beamforming from the first communication apparatus, and
the controller determines a direction of the target based on the directivity information.

10. A sensing method in a communication apparatus, the sensing method comprising:
transmitting request information for requesting sensing of a target;
receiving result information indicating a sensing result from a first communication apparatus in which the sensing of the target has been performed in accordance with the request information; and
determining a state of the target based on the sensing result indicated in the result information and a sensing result of sensing of the target that has been performed in the communication apparatus.
